(19) Europäisches Patentamt
European Patent Office
Office européen des brevets

(11) EP 4 781 826 A1

(12) # EUROPEAN PATENT APPLICATION

(43) Date of publication:
**29.07.2026 Bulletin 2026/31**

(21) Application number: **25154417.7**

(22) Date of filing: **28.01.2025**

(51) International Patent Classification (IPC):
***A01N 43/72*** *(2006.01)* ***A01P 3/00*** *(2006.01)*
***A01N 43/54*** *(2006.01)* ***A01N 37/50*** *(2006.01)*
***A01N 43/40*** *(2006.01)* ***A01N 43/36*** *(2006.01)*
***A01N 47/38*** *(2006.01)* ***A01N 43/10*** *(2006.01)*
***A01N 43/653*** *(2006.01)* ***A01N 43/82*** *(2006.01)*

(52) Cooperative Patent Classification (CPC):
(C-Sets available)
**A01P 3/00; A01N 43/72** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
- **SEEBERGER, Philipp Georg Werner**
  **67117 Limburgerhof (DE)**
- **SELMANI, Aymane**
  **67056 Ludwigshafen am Rhein (DE)**
- **GRAMMENOS, Wassilios**
  **67056 Ludwigshafen am Rhein (DE)**
- **RIEDIGER, Nadine**
  **67117 Limburgerhof (DE)**
- **BRAHM, Lutz**
  **67117 Limburgerhof (DE)**
- **MERGET, Benjamin Juergen**
  **67056 Ludwigshafen am Rhein (DE)**
- **GERLINGER, Christa Karoline Gisela**
  **67056 Ludwigshafen am Rhein (DE)**

(74) Representative: **BASF IP Association**
**BASF SE**
**GBI - Z078**
**67056 Ludwigshafen (DE)**

(54) **FUNGICIDAL MIXTURE COMPRISING SUBSTITUTED BENZOXAZEPINE PICOLINONITRILE COMPOUNDS**

(57) The present invention relates to fungicidal mixtures comprising at least one substituted benzoxazepine picolinonitrile compounds (compound I) and at least one active compound II in a weight ratio of from 100:1 to 1:100; to a method for controlling phytopathogenic harmful fungi using mixtures of at least one compound I and at least one compound II in a weight ratio of from 100:1 to 1:100; to the use of mixtures comprising compounds I and compounds II for controlling phytopathogenic harmful fungi; to agrochemical compositions comprising these mixtures; and to agrochemical compositions further comprising seed.

EP 4 781 826 A1

(52) Cooperative Patent Classification (CPC): (Cont.)

C-Sets
**A01N 43/72, A01N 43/54, A01N 37/50,**
**A01N 43/40, A01N 43/36, A01N 47/38,**
**A01N 43/10, A01N 43/653, A01N 43/82**

## Description

The present invention relates to a fungicidal mixture, comprising as active components

at least one active compound of the formula I, or an N-oxide, or an agriculturally useful salt thereof,

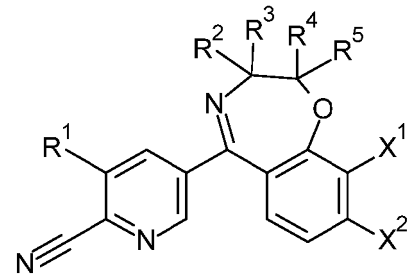

wherein

| | |
|---|---|
| $R^1$ | is selected from $C_1$-$C_6$-alkyl, O-$C_1$-$C_6$-alkyl, S-$C_1$-$C_6$-alkyl, halogen, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, $C_3$-$C_6$-cycloalkyl; |
| $R^2$ | is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics,<br>wherein the moieties are unsubstituted or substituted by one to three groups $R^{2a}$, which independently of one another are selected from:<br>halogen, CN, $C_1$-$C_6$-alkyl, $C_1$-$C_6$-halogenalkyl, O-$C_1$-$C_6$-alkyl; |
| $R^3$ | is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics,<br>wherein the moieties are unsubstituted or substituted by one to three groups $R^{3a}$, which independently of one another are selected from:<br>halogen, CN, $C_1$-$C_6$-alkyl, $C_1$-$C_6$-halogenalkyl, O-$C_1$-$C_6$-alkyl;<br>or |
| $R^2$ and $R^3$ | form together with the C atoms to which they are bound C=O;<br>or |
| $R^2$ and $R^3$ | form together with the C atoms to which they are bound a a 3-, 4-, 5- or 6-membered saturated carbocyclic ring or a 3-, 4-, 5- or 6-membered saturated heterocyclic ring containing 1, 2 or 3 heteroatoms selected from O, N and S as ring members,<br>wherein the moieties are unsubstituted or substituted by 1, 2 or 3 substituents $R^{23}$ which independently of one another are selected from: halogen, $C_1$-$C_6$-alkyl or $C_1$-$C_6$-halogenalkyl; |
| $R^4$ | is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics,<br>wherein the moieties are unsubstituted or substituted by one to three groups $R^{4a}$, which independently of one another are selected from:<br>halogen, CN, $C_1$-$C_6$-alkyl, $C_1$-$C_6$-halogenalkyl, O-$C_1$-$C_6$-alkyl; |
| $R^5$ | is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics,<br>wherein the moieties are unsubstituted or substituted by one to three groups $R^{5a}$, which independently of one another are selected from:<br>halogen, CN, $C_1$-$C_6$-alkyl, $C_1$-$C_6$-halogenalkyl, O-$C_1$-$C_6$-alkyl;<br>or |
| $R^4$ and $R^5$ | form together with the C atoms to which they are bound =O;<br>or |
| $R^4$ and $R^5$ | form together with the C atoms to which they are bound a a 3-, 4-, 5- or 6-membered saturated carbocyclic ring or a 3-, 4-, 5- or 6-membered saturated heterocyclic ring containing 1, 2 or 3 heteroatoms selected from O, N and S as ring members, wherein the moieties are unsubstituted or substi- |

tuted by 1, 2 or 3 substituents $R^{45}$ which independently of one another are selected from: halogen, $C_1$-$C_6$-alkyl or $C_1$-$C_6$-halogenalkyl;

$X^1$ is selected from H, halogen, CN, $C_1$-$C_6$-alkyl, $C_1$-$C_6$-halogenalkyl, O-$C_1$-$C_6$-alkyl, S-$C_1$-$C_6$-alkyl, O-$C_1$-$C_6$-halogenalkyl, $C_2$-$C_6$-alkenyl, $C_2$-$C_6$-alkynyl, $C_3$-$C_6$-cycloalkyl, phenyl, benzyl, O-phenyl, O-benzyl , S-phenyl, S-benzyl,
wherein the cyclic moieties are unsubstituted or substituted by one to three groups $R^{X1}$, which independently of one another are selected from:
halogen, CN, $C_1$-$C_6$-alkyl, $C_1$-$C_6$-halogenalkyl, O-$C_1$-$C_6$-alkyl;

$X^2$ is in each case independently selected from H, halogen, CN, $C_1$-$C_6$-alkyl, $C_1$-$C_6$-halogenalkyl, O-$C_1$-$C_6$-alkyl, S-$C_1$-$C_6$-alkyl, O-$C_1$-$C_6$-halogenalkyl, $C_2$-$C_6$-alkenyl, $C_2$-$C_6$-alkynyl, $C_3$-$C_6$-cycloalkyl, phenyl, benzyl, O-phenyl, O-benzyl , S-phenyl, S-benzyl;
wherein the cyclic moieties are unsubstituted or substituted by one to three groups $R^{X2}$, which independently of one another are selected from:
halogen, CN, $C_1$-$C_6$-alkyl, $C_1$-$C_6$-halogenalkyl, O-$C_1$-$C_6$-alkyl;

and the N-oxides and the agriculturally acceptable salts thereof as fungicides
and as component

2) at least one active compound II selected from groups A) to O), or an N-oxide, or an agriculturally useful salt thereof:

A) Respiration (C)

- complex III at $Q_o$ site (QoI, C3): azoxystrobin (A.1.1), bifemetstrobin (A.1.24), bifujunzhi (A.1.37), coumethoxystrobin (A.1.2), coumoxystrobin (A.1.3), dimoxystrobin (A.1.4), enestroburin (A.1.5), famoxadone (A.1.21), fenamidone (A.1.23), fenaminstrobin (A.1.6), flufenoxystrobin (A.1.7), fluoxastrobin (A.1.8), kresoxim-methyl (A.1.9), mandestrobin (A.1.10), metominostrobin (A.1.11), metyltetraprole (A.1.25; member of MoA subgroup A), orysastrobin (A.1.12), picoxystrobin (A.1.13), pyraclostrobin (A.1.14), pyrametostrobin (A.1.15), pyraoxystrobin (A.1.16), pyribencarb (A.1.19), pyriminostrobin (A.1.36), triclopyricarb (A.1.20), trifloxystrobin (A.1.17), 2-(2-(3-(2,6-dichlorophenyl)-1-methyl-allylideneaminooxymethyl)-phenyl)-2-methoxyimino-*N*-methyl-acetamide (A.1.18), methyl-*N*-[2-[(1,4-dimethyl-5-phenyl-pyrazol-3-yl)oxylmethyl]phenyl]-*N*-methoxy-carbamate (A.1.22), (*Z*,2*E*)-5-[1-(2,4-dichlorophenyl)pyrazol-3-yl]-oxy-2-methoxyimino-*N*,3-dimethyl-pent-3-enamide (A.1.34), (*Z*,2*E*)-5-[1-(4-chlorophenyl)pyrazol-3-yl]oxy-2-methoxyimino-*N*,3-dimethyl-pent-3-enamide (A.1.35), 2-(ortho-((2,5-dimethylphenyl-oxymethylen)phenyl)-3-methoxy-acrylic acid methylester (A.1.38), methyl (*Z*)-3-methoxy-2-[2-methyl-5-(3-propylpyrazol-1-yl)phenoxy]prop-2-enoate, methyl (*Z*)-2-[5-(3-isopropylpyrazol-1-yl)-2-methyl-phenoxy]-3-methoxy-prop-2-enoate, methyl (*Z*)-3-methoxy-2-[2-methyl-5-[3-(trifluoromethyl)pyrazol-1-yl]phen-oxy]prop-2-enoate, methyl (*Z*)-3-methoxy-2-[2-methyl-5-(4-propyltriazol-2-yl)phenoxy]prop-2-enoate, methyl (*Z*)-3-methoxy-2-[2-methyl-5-[4-(trifluoromethyl)triazol-2-yl]phenoxy]prop-2-enoate, methyl (*Z*)-2-[5-(4-isopropyl-triazol-2-yl)-2-methyl-phenoxy]-3-methoxy-prop-2-enoate, methyl (*Z*)-2-(5-cyclobutyl-2-methyl-phenoxy)-3-methoxy-prop-2-enoate, methyl (*Z*)-2-(5-cyclopentyl-2-methyl-phenoxy)-3-methoxy-prop-2-enoate, methyl (*Z*)-2-(5-cyclopropyl-2-methyl-phenoxy)-3-methoxy-prop-2-enoate, methyl (*Z*)-2-(5-cyclohexyl-2-methyl-phenoxy)-3-methoxy-prop-2-enoate, methyl (*E*)-3-methoxy-2-[(2-methyl-5-phenyl-phenyl) methyl]prop-2-enoate, methyl (*E*)-3-methoxy-2-[[5-[(*E*)-*N*-methoxy-C-methyl-carbonimidoyl]-2,4-dimethyl-phenyl]methyl]prop-2-enoate; methyl (*E*)-2-[[5-(2-cyclopropylethynyl)-2,4-dimethyl-phenyl]methyl]-3-methoxy-prop-2-enoate; methyl (*E*)-3-methoxy-2-(2-phenyl-1,3-benzoxazol-4-yl)prop-2-enoate; methyl (*E*)-3-methoxy-2-(2-phenyl-1,3-benzothiazol-4-yl)prop-2-enoate; methyl (*E*)-3-methoxy-2-(2-phenyl-1,3-benzoxazol-7-yl) prop-2-enoate; methyl (*Z*)-2-[6-(2-cyclopropyl-ethynyl)benzimidazol-1-yl]-3-methoxy-prop-2-enoate; methyl (*Z*)-3-methoxy-2-(6-phenylbenzimidazol-1-yl)prop-2-enoate; methyl (*Z*)-2-(3-chloro-6-phenyl-indol-1-yl)-3-methoxy-prop-2-enoate; methyl (*Z*)-2-(2,3-dichloro-6-phenyl-indol-1-yl)-3-methoxy-prop-2-enoate; methyl (Z)-3-methoxy-2-[6-[(*E*)-methoxyiminomethyl]indol-1-yl]prop-2-enoate; methyl (*Z*)-3-methoxy-2-[6-[(*E*)-*N*-methoxy-*C*-methyl-carbonimidoyl]indol-1-yl]prop-2-enoate, methyl *N*-[[5-[1-(2,6-difluoro-4-isopropyl-phenyl) pyrazol-3-yl]-2-methyl-phenyl]methyl]carbamate, methyl *N*-[[5-[1-(4-cyclopropyl-2,6-difluoro-phenyl)pyrazol-3-yl]-2-methyl-phenyl]methyl]carbamate, methyl *N*-[[5-[1-(4-chloro-2,6-difluoro-phenyl)pyrazol-3-yl]-2-methyl-phenyl]methyl]carbamate, methyl *N*-[[5-[1-[2,6-di-fluoro-4-(trifluoromethyl)phenyl]pyrazol-3-yl]-2-methyl-phenyl]methyl]carbamate;
- complex III at $Q_i$ site (QiI, C4): cyazofamid (A.2.1), amisulbrom (A.2.2), [(6*S*,7*R*,8*R*)-8-benzyl-3-[(3-hydroxy-4-methoxy-pyridine-2-carbonyl)amino]-6-methyl-4,9-dioxo-1,5-dioxonan-7-yl]-2-methylpropanoate (A.2.3), fenpicoxamid (A.2.4), florylpicoxamid (A.2.5), metarylpicoxamid (A.2.6);
- complex II (SDHI, C2): benodanil (A.3.1), benzovindiflupyr (A.3.2), bixafen (A.3.3), boscalid (A.3.4), carboxin

(A.3.5), cyclobutrifluram (A.3.24), fenfuram (A.3.6), fluopyram (A.3.7), flutolanil (A.3.8), fluxapyroxad (A.3.9), furametpyr (A.3.10), inpyrfluxam (A.3.22), isofetamid (A.3.11), isoflucypram (A.3.31), isopyrazam (A.3.12), mepronil (A.3.13), oxycarboxin (A.3.14), penflufen (A.3.15), penthiopyrad (A.3.16), pydiflumetofen (A.3.17), pyrapropoyne (A.3.23), pyraziflumid (A.3.18), sedaxane (A.3.19), tecloftalam (A.3.20), thifluzamide (A.3.21), fluindapyr (A.3.28), *N*-[2-[2-chloro-4-(trifluoromethyl)phenoxy]phenyl]-3-(difluoromethyl)-5-fluoro-1-methylpyrazole-4-carboxamide (A.3.29), methyl (*E*)-2-[2-[(5-cyano-2-methyl-phenoxy)methyl]phenyl]-3-methoxy-prop-2-enoate (A.3.30), 2-(difluoromethyl)-*N*-(1,1,3-trimethyl-indan-4-yl)pyridine-3-carboxamide (A.3.32), 2-(difluoromethyl)-*N*-[(3R)-1,1,3-trimethylindan-4-yl]pyridine-3-carboxamide (A.3.33), 2-(difluoromethyl)-*N*-(3-ethyl-1,1-dimethyl-indan-4-yl)pyridine-3-carboxamide (A.3.34), 2-(difluoromethyl)-*N*-[(3*R*)-3-ethyl-1,1-dimethyl-indan-4-yl]pyridine-3-carboxamide (A.3.35), 2-(difluoromethyl)-*N*-(1,1-dimethyl-3-propyl-indan-4-yl)-pyridine-3-carboxamide (A.3.36), 2-(difluoromethyl)-*N*-[(3*R*)-1,1-dimethyl-3-propyl-indan-4-yl]pyridine-3-carboxamide (A.3.37), 2-(difluoromethyl)-*N*-(3-isobutyl-1,1-dimethyl-indan-4-yl)pyridine-3-carboxamide (A.3.38), 2-(difluoromethyl)-*N*-[(3*R*)-3-isobutyl-1,1-dimethyl-indan-4-yl]pyridine-3-carboxamide (A.3.39);

- complex I NADH oxido-reductase (C1): diflumetorim (A.4.1);
- uncouplers (C5): binapacryl (A.4.2), dinobuton (A.4.3), dinocap (A.4.4), fluazinam (A.4.5), meptyldinocap (A.4.6), ferimzone (A.4.7);
- inhibitors of ox. phosphorylation (C6): fentin salts, e.g. fentin-acetate (A.4.8), fentin chloride (A.4.9) or fentin hydroxide (A.4.10);
- ATP transport: silthiofam (A.4.11);
- quinone inside and outside inhibitor stigmatellin binding type (QioSi; C8): ametoctradin (A.5.1);

B) Sterol biosynthesis (G)

- C14 demethylase (DMI, G1): triazoles: azaconazole (B.1.1), bitertanol (B.1.2), bromuconazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluoxytioconazole (B.1.33), fluquinconazole (B.1.10), flusilazole (B.1.11), flutriafol (B.1.12), hexaconazole (B.1.13), imibenconazole (B.1.14), ipconazole (B.1.15), ipfentrifluconazole (B.1.37), mefentrifluconazole (B.1.38), metconazole (B.1.17), myclobutanil (B.1.18), oxpoconazole (B.1.19), paclobutrazole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), 2-(2,4-difluorophenyl)-1,1-difluoro-3-(tetrazol-1-yl)-1-[5-[4-(2,2,2-trifluoroethoxy)phenyl]-2-pyridyl]propan-2-ol (B.1.31), 2-(2,4-difluorophenyl)-1,1-difluoro-3-(tetrazol-1-yl)-1-[5-[4-(trifluoromethoxy)-phenyl]-2-pyridyl]propan-2-ol (B.1.32), 2-(chloromethyl)-2-methyl-5-(*p*-tolylmethyl)-1-(1,2,4-triazol-1-ylmethyl)-cyclopentanol (B.1.43), 4-[[6-[2-(2,4-difluorophenyl)-1,1-difluoro-2-hydroxy-3-(1,2,4-triazol-1-yl)propyl]-3-pyridyl]oxy]benzonitrile (B.1.53), 2-[6-(4-bromophenoxy)-2-(trifluoromethyl)-3-pyridyl]-1-(1,2,4-triazol-1-yl)-propan-2-ol (B.1.54), 2-[6-(4-chlorophenoxy)-2-(trifluoromethyl)-3-pyridyl]-1-(1,2,4-triazol-1-yl)propan-2-ol (B.1.55), (2*R*)-2-[4-(4-chlorophenoxy)-2-(trifluoromethyl)phenyl]-1-(1,2,4-triazol-1-yl)propan-2-ol, (2*S*)-2-[4-(4-chlorophenoxy)-2-(trifluoromethyl)phenyl]-1-(1,2,4-triazol-1-yl)propan-2-ol, methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)-phenyl]-2-hydroxy-3-(1,2,4-triazol-1-yl)propanoic acid (B.1.57); imidazoles: imazalil (B.1.44), pefurazoate (B.1.45), prochloraz (B.1.46), triflumizole (B.1.47); pyrimidines, pyridines, piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52);
- delta14-reductase (G2): aldimorph (B.2.1), dodemorph (B.2.2), dodemorph-acetate (B.2.3), fenpropidin (B.2.6), fenpropimorph (B.2.4), piperalin (B.2.7), spiroxamine (B.2.8), tridemorph (B.2.5);
- 3-keto reductase (G3): fenhexamid (B.3.1), fenpyrazamine (B.3.2);
- other: chlorphenomizole (B.4.1);

C) Nucleic acids metabolism (A)

- RNA polymerase I (A1): benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
- adenosine deaminase (A2): bupirimate (C.2.4), 5-fluoro-2-(p-tolylmethoxy)pyrimidin-4-amine (C.2.6), 5-fluoro-2-(4-fluorophenylmethoxy)pyrimidin-4-amine (C.2.7), 5-fluoro-2-(4-chlorophenylmethoxy)pyrimidin-4-amine (C.2.8);
- DNA/RNA synthesis (A3): 5-fluorocytosine (C.2.5), hymexazole (C.2.1), octhilinone (C.2.2),
- gyrase (A4): oxolinic acid (C.2.3);
- dihydroorotate dehydrogenase (DHODH; A5): ipflufenoquin (C.5.1), quinofumelin (C.5.2), feneptamidoquin

(C.5.3);

D) Cytoskeleton and motor protein (B)

- tubulin polymerization (MBC; B1): benomyl (D.1.1), carbendazim (D.1.2), fuberidazole (D.1.3), pyridachlometyl (D.1.6), thiabendazole (D.1.4), thiophanate-methyl (D.1.5), *N*-ethyl-2-[(3-ethynyl-8-methyl-6-quinolyl)oxy]butanamide (D.1.8), *N*-ethyl-2-[(3-ethynyl-8-methyl-6-quinolyl)oxy]-2-methylsulfanyl-acetamide (D.1.9), 2-[(3-ethynyl-8-methyl-6-quinolyl)oxy]-*N*-(2-fluoroethyl)butanamide (D.1.10), 2-[(3-ethynyl-8-methyl-6-quinolyl) oxy]-*N*-(2-fluoroethyl)-2-methoxy-acetamide (D.1.11), 2-[(3-ethynyl-8-methyl-6-quinolyl)oxy]-*N*-propyl-butanamide (D.1.12), 2-[(3-ethynyl-8-methyl-6-quinolyl)oxy]-2-methoxy-*N*-propyl-acetamide (D.1.13), 2-[(3-ethynyl-8-methyl-6-quinolyl)-oxy]-2-methylsulfanyl-*N*-propyl-acetamide (D.1.14), 2-[(3-ethynyl-8-methyl-6-quinolyl) oxy]-*N*-(2-fluoroethyl)-2-methylsulfanyl-acetamide (D.1.15), 4-(2-bromo-4-fluoro-phenyl)-*N*-(2-chloro-6-fluoro-phenyl)-2,5-dimethylpyrazol-3-amine (D.1.16), 4-(2-bromo-4-fluorophenyl)-*N*-(2-fluoro-6-nitrophenyl)-1,3-dimethyl-1H-pyrazol-5-amine, 4-(2-chloro-4,6-difluorophenyl)-N-(2-fluoro-6-nitrophenyl)-1,3-dimethyl-1*H*-pyrazol-5-amine, 4-(2-chloro-4-fluorophenyl)-*N*-(2-fluoro-6-nitrophenyl)-3-ethyl-1-methyl-1*H*-pyrazol-5-amine, 4-(2-chloro-4-fluorophenyl)-*N*-(2-fluoro-4-methyl-6-nitrophenyl)-1,3-dimethyl-1*H*-pyrazol-5-amine, 4-(2-chloro-4-fluorophenyl)-*N*-(2-fluoro-6-nitrophenyl)-1,3-dimethyl-1*H*-pyrazol-5-amine, 4-(2,4-difluorophenyl)-*N*-(2-fluoro-6-nitrophenyl)-1,3-dimethyl-1*H*-pyrazol-5-amine;
- tubulin polymerization (B2): diethofencarb (D.2.1),
- tubulin polymersation (B3): ethaboxam (D.2.2), zoxamide (D.2.5);
- cell division (B4): pencycuron (D.2.3);
- spectrin-like proteins (B5): fluopicolide (D.2.4), fluopimomide (D.2.9);
- actin/myosin/fimbrin function (B6): metrafenone (D.2.6), phenamacril (D.2.8), pyriofenone (D.2.7);

E) Amino acids and protein synthesis (D)

- methionine synthesis (D1): cyprodinil (E.1.1), mepanipyrim (E.1.2), pyrimethanil (E.1.3);
- ribosome, termination step (D2): blasticidin-S (E.2.1);
- ribosome initiation step (D3): kasugamycin (E.2.2), kasugamycin hydrochloride-hydrate (E.2.3);
- ribosome initiation step (D4): streptomycin (E.2.5);
- ribosome elongation step (D5): mildiomycin (E.2.4), oxytetracyclin (E.2.6);

F) Signal transduction

- mechanism unknown (E1): proquinazid (F.2.2), quinoxyfen (F.2.1);
- MAP/histidine kinase os-2 (E2): fludioxonil (F.1.5);
- MAP/histidine kinase os-1 (E3): iprodione (F.1.2), procymidone (F.1.3), vinclozolin (F.1.4);

G) Lipid synthesis or transport / membrane (F)

- methyl transferase (F2): edifenphos (G.1.1), iprobenfos (G.1.2), isoprothiolane (G.1.4); pyrazophos (G.1.3);
- cell peroxidation (F3): biphenyl (G.2.5), chloroneb (G.2.6), dicloran (G.2.1), etridiazole (G.2.7), quintozene (G.2.2), tecnazene (G.2.3), tolclofos-methyl (G.2.4);
- cell membrane permeability (F4): propamocarb (G.4.1);
- ergosterol binding (F8): natamycin;
- oxysterol binding protein (F9): fluoxapiprolin (G.5.3), oxathiapiprolin (G.5.1), 4-[1-[2-[3-(difluoromethyl)-5-methyl-pyrazol-1-yl]acetyl]-4-piperidyl]-*N*-tetralin-1-yl-pyridine-2-carboxamide (G.5.4), 4-[1-[2-[3,5-bis(difluoromethyl)-pyrazol-1-yl]acetyl]-4-piperidyl]-*N*-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-*N*-tetralin-1-yl-pyridine-2-carboxamide (G.5.6), 4-[1-[2-[5-cyclopropyl-3-(difluoromethyl)pyrazol-1-yl]acetyl]-4-piperidyl]-*N*-tetralin-1-yl-pyridine-2-carboxamide (G.5.7), 4-[1-[2-[5-methyl-3-(trifluoromethyl)pyrazol-1-yl]acetyl]-4-piperidyl]-*N*-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-*N*-tetralin-1-yl-pyridine-2-carboxamide (G.5.9), 4-[1-[2-[3,5-bis(trifluoromethyl)pyrazol-1-yl]acetyl]-4-piperidyl]-*N*-tetralin-1-yl-pyridine-2-carboxamide (G.5.10), (4-[1-[2-[5-cyclopropyl-3-(trifluoromethyl)pyrazol-1-yl]acetyl]-4-piperidyl]-*N*-tetralin-1-yl-pyridine-2-carboxamide (G.5.11), (1-(4-(4-(5-(2,6-dichlorophenyl)-4,5-dihydroisoxazol-3-yl)thiazol-2-yl)piperidin-1-yl)-2-((3-trifluoromethyl)pyrazin-2-yl)oxy)ethan-1-one, 1-(4-(4-(5-(2-chloro-6-fluorophenyl)-4,5-dihydroisoxazol-3-yl)thiazol-2-yl)piperidin-1-yl)-2-((3-trifluoromethyl)pyridin-2-yl)oxy)ethan-1-one, *tert*-butyl 4-(4-(5-(2-bromo-6-fluorophenyl)-4,5-dihydroisoxazol-3-yl)thiazol-2-yl)piperidin-1-carboxylate,

((2-(3-(2-(1-(2-(3,5-bis(trifluoromethyl)-1*H*-pyrazol-1-yl)acetyl)piperidin-4-yl)thiazol-4-yl)-4,5-dihydroisoxazo-5-yl)-3-fluorophenyl)imino)dimethyl-λ6-sulfanone, ((2-(3-(2-(1-(2-(3,5-bis(difluoromethyl)-1*H*-pyrazol-1-yl)acetyl)piperidin-4-yl)thiazol-4-yl)-4,5-di-hydroisoxazo-5-yl)-3-fluorophenyl)imino)dimethyl-λ6-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-chorophenyl)imino)(isopropyl)(methyl)-λ6-sulfanone, ((2-(3-(2-(1-(2-(3,5-bis(trifluoromethyl)-1*H*-pyrazol-1-yl)acetyl)piperidin-4-yl)thiazol-4-yl)-4,5-di-hydroisoxazo-5-yl)-3-fluorophenyl)imino)(isopropyl)(methyl)-λ6-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-(trifluoromethyl)phenyl)imino)dimethyl-λ6-sulfanone, ((3-fluoro-2-(3-(2-(1-(2-(5-methyl-3-(trifluoromethyl)-1*H*-pyrazol-1-yl)acetyl)piperidin-4-yl)thi-azol-4-yl)-4,5-dihydroisoxazo-5-yl)-phenyl)imino)dimethyl-λ6-sulfanone;

H) Multi Site Activity (M)

- inorganics (M01): Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
- dithiocarbamates and relatives: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9), zinc thiazole (H.2.10);
- organochlorine compounds (M04, M05, M06, M08): anilazine (H.3.1), captafol (H.3.3), captan (H.3.4), chlorothalonil (H.3.2), dichlofluanid (H.3.6), dichlorophen (H.3.7), folpet (H.3.5), hexachlorobenzene (H.3.8), pentachlorphenole (H.3.9) and its salts, phthalide (H.3.10), tolylfluanid (H.3.11);
- guanidines, quinones, quinoxalines, maleimides, thiocarbamates (M07, M09, M10, M11, M12): chinomethionat (H.4.13), dithianon (H.4.9), fluoroimide (H.4.11), guanidine (H.4.1), guazatine (H.4.4), guazatine-acetate (H.4.5), iminoctadine (H.4.6), iminoctadine-triacetate (H.4.7), iminoctadine-tris(albesilate) (H.4.8), methasulfocarb (H.4.12), 2,6-dimethyl-1*H*,5*H*-[1,4]dithiino[2,3-c:5,6-c']dipyrrole-1,3,5,7(2*H*,6*H*)-tetraone (H.4.10),

I) Cell wall biosynthesis (H) and melanin synthesis in cell wall (I)

- chitin synthase (H4): polyoxin B (I.1.2);
- cellulose synthase (H5): benthiavalicarb (I.3.5), dimethomorph (I.3.1), flumorph (I.3.2), iprovalicarb (I.3.6), mandipropamid (I.3.3), pyrimorph (I.3.4), valifenalate (I.3.7);
- reductase in melanin synthesis (MBI-R; I1) pyroquilon (I.2.1), tricyclazole (i.2.2);
- dehydratase in melanin synthesis (MBI-D, I2); carpropamid (I.2.3), dicyclomet (I.2.4), fenoxanil (I.2.5);
- polyketide synthase in melanin synthesis (MBI-P, I3): tolprocarb (i.2.6);

J) Plant defence induction (P1 to P8)

- salicylate-related (P01-P03, P08): acibenzolar-S-methyl (J.1.1), probenazole (J.1.2), isotianil (J.1.3), tiadinil (J.1.4), dichlobentiazox (J.1.13); phosphonates (P07): fosetyl (J.1.6), fosetyl-aluminum (J.1.7), phosphorous acid and its salts (J.1.8), calcium phosphonate (J.1.11), potassium phosphonate (J.1.12); others: potassium or sodium bicarbonate (J.1.9), 4-cyclopropyl-*N*-(2,4-di¬methoxy¬phenyl)thiadiazole-5-carboxamide (J.1.10);

K) Unknown mode of action (U)

- aminopyrifen (K.1.54), benziothiazolinone (K.1.48), bromothalonil (K.1.49), bronopol (K.1.1), cyflufenamid (K.1.3), cymoxanil (K.1.4), dazomet (K.1.5), debacarb (K.1.6), diclomezine (K.1.8), difenzoquat (K.1.9), difenzoquat-methylsulfate (K.1.10), diphenylamin (K.1.11), dodine, dodine free base (K.1.18), fenitropan (K.1.12), flufenoxadiazam (K.1.58) [MoA proposed: class II histone deacetylase inhibitor], flumetover (K.1.14), flumetylsulforim (K.1.60), flusulfamide (K.1.15), flutianil (K.1.16), harpin (K.1.17), nitrapyrin (K.1.19), nitrothal-isopropyl (K.1.20), oxine-copper (K.1.22), picarbutrazox (K.1.41), pyrisoxazole (K.1.37), seboctylamine (K.1.61), tebufloquin (K.1.24), tecloftalam (K.1.25), triazoxide (K.1.26), validamycin (K.1.2); *N*'-(4-(4-chloro-3-trifluoromethylphenoxy)-2,5-dimethyl-phenyl)-*N*-ethyl-*N*-methyl formamidine (K.1.27), N'-(4-(4-fluoro-3-trifluoromethyl-phenoxy)-2,5-dimethyl-phenyl)-*N*-ethyl-*N*-methyl formamidine (K.1.28), *N*'-[4-[[3-[(4-chlorophenyl)methyl]-1,2,4-thiadiazol-5-yl]oxy]-2,5-dimethyl-phenyl]-*N*-ethyl-*N*-methyl-formamidine (K.1.29), *N*'-(5-bromo-6-indan-2-yloxy-2-methyl-3-pyridyl)-N-ethyl-N-methyl-formamidine (K.1.30), *N*'-[5-bromo-6-[1-(3,5-difluorophenyl)ethoxy]-2-methyl-3-pyridyl]-*N*-ethyl-*N*-methyl-formamidine (K.1.31), *N*'-[5-bromo-6-(4-isopropylcyclohexoxy)-2-methyl-3-pyridyl]-*N*-ethyl-*N*-methyl-formamidine (K.1.32), *N*'-[5-bromo-2-methyl-6-(1-phenylethoxy)-3-pyridyl]-*N*-ethyl-*N*-methyl-formamidine (K.1.33), *N*'-(2-methyl-5-trifluoromethyl-4-(3-trimethylsilanyl-propoxy)-phenyl)-*N*-ethyl-*N*-methyl formamidine (K.1.34), *N*'-(5-difluoromethyl-2-methyl-4-(3-trimethylsilanyl-propoxy)-phenyl)-*N*-ethyl-*N*-methyl formamidine (K.1.35), 2-(4-chloro-phenyl)-*N*-[4-(3,4-dimethoxy-phenyl)-isoxazol-5-yl]-2-prop-2-ynyloxy-acetamide (K.1.36), 3-[5-(4-methylphenyl)-2,3-dimethyl-isoxazolidin-3-yl]-pyridine (K.1.38), 5-chloro-1-(4,6-dimethoxy-pyrimidin-2-yl)-2-methyl-1*H*-benzoimidazole (K.1.39), ethyl (Z)-3-amino-2-cyano-3-phenyl-prop-2-enoate (K.1.40), pentyl *N*-[6-[[(Z)-[(1-methyltetrazol-5-yl)-phenyl-methylene]amino]oxymethyl]-2-pyridyl]carbamate (K.1.42), but-3-ynyl *N*-[6-[[(Z)-[(1-methyltetrazol-5-yl)-phenyl-methylene]amino]oxymethyl]-2-pyridyl]carbamate (K.1.43), 2-(6-benzyl-2-pyridyl)quinazoline (K.1.50), 2-[6-(3-fluoro-4-methoxy-phenyl)-5-methyl-2-pyridyl]-quinazoline (K.1.51), *N*'-(2,5-dimethyl-4-phenoxy-phenyl)-*N*-ethyl-*N*-methyl-formamidine (K.1.53), *N*'-[5-bromo-2-methyl-6-(1-methyl-2-propoxy-ethoxy)-3-pyridyl]-*N*-ethyl-*N*-methyl-formamidine (K.1.56), *N*'-[4-(4,5-dichlorothi-azol-2-yl)oxy-2,5-dimethyl-phenyl]-*N*-ethyl-*N*-methyl-formamidine (K.1.57), *N*-methyl-4-[5-(trifluoromethyl)-1,2,4-oxadiazol-3-yl]benzenecarbothioamide (K.1.59), *N*-methoxy-N-[[4-[5-(trifluoromethyl)-1,2,4-oxadiazol-3-yl]phenyl]methyl]cyclopropanecarboxamide (K.1.61), *N*-((4-[5-(trifluoromethyl)-1,2,4-oxadiazol-3-yl]phenyl)-methyl)propanamide (K.1.62), 3,3,3-trifluoro-*N*-[[3-fluoro-4-[5-(trifluoromethyl)-1,2,4-oxadiazol-3-yl]phenyl]methyl]propanamide (K.1.63), 3,3,3-trifluoro-*N*-[[2-fluoro-4-[5-(trifluoromethyl)-1,2,4-oxadiazol-3-yl]phenyl]methyl]-propanamide (K.1.64), *N*-[2,3-difluoro-4-[5-(trifluoromethyl)-1,2,4-oxadiazol-3-yl]benzyl]butanamide (K.1.65), *N*-[[2,3-difluoro-4-[5-(trifluoromethyl)-1,2,4-oxadiazol-3-yl]phenyl]methyl]-3,3,3-trifluoro-propanamide (K.1.66), 1-methoxy-1-methyl-3-[[4-[5-(trifluoromethyl)-1,2,4-oxadiazol-3-yl]phenyl]methyl]urea (K.1.67), 1,1-diethyl-3-[[4-[5-[trifluoromethyl]-1,2,4-oxadiazol-3-yl]phenyl]methyl]urea (K.1.68), *N*,2-dimethoxy-*N*-[[4-[5-(trifluoromethyl)-1,2,4-oxadiazol-3-yl]phenyl]methyl]propanamide (K.1.69), *N*-ethyl-2-methyl-*N*-[[4-[5-(trifluoromethyl)-1,2,4-oxadiazol-3-yl]phenyl]methyl]propanamide (K.1.70), 1-methoxy-3-methyl-1-[[4-[5-(trifluoromethyl)-1,2,4-oxadiazol-3-yl]phenyl]methyl]urea (K.1.71), 1-[[4-[5-(trifluoromethyl)-1,2,4-oxadiazol-3-yl]phenyl]methyl]pyr-rolidin-2-one (K.1.72), 1-[[4-[5-(trifluoromethyl)-1,2,4-oxadiazol-3-yl]phenyl]methyl]piperidin-2-one (K.1.73), 4-[[4-[5-(trifluoromethyl)-1,2,4-oxadiazol-3-yl]phenyl]methyl]morpholin-3-one (K.1.74), 4,4-dimethyl-2-[[4-[5-(trifluoromethyl)-1,2,4-oxadiazol-3-yl]phenyl]methyl]isoxazolidin-3-one (K.1.75), 2-[[4-[5-(trifluoromethyl)-1,2,4-oxadiazol-3-yl]phenyl]methyl]isoxazolidin-3-one (K.1.76), 5,5-dimethyl-2-[[4-[5-(trifluoromethyl)-1,2,4-oxa-diazol-3-yl]phenyl]methyl]isoxazolidin-3-one (K.1.77), 3,3-dimethyl-1-[[4-[5-(trifluoromethyl)-1,2,4-oxadiazol-3-yl]phenyl]methyl]piperidin-2-one (K.1.78), 2-[[4-[5-(trifluoromethyl)-1,2,4-oxadiazol-3-yl]phenyl]methyl]oxazinan-3-one (K.1.79), 1-[[3-fluoro-4-[5-(trifluoromethyl)-1,2,4-oxadiazol-3-yl]phenyl]methyl]azepan-2-one (K.1.80), 4,4-dimethyl-1-[[4-[5-(trifluoromethyl)-1,2,4-oxadiazol-3-yl]phenyl]methyl]pyrrolidin-2-one (K.1.81), 5-methyl-1-[[4-[5-(trifluoromethyl)-1,2,4-oxadiazol-3-yl]phenyl]methyl]pyrrolidin-2-one (K.1.82), ethyl 1-[[4-[5-(trifluoromethyl)-1,2,4-oxadiazol-3-yl]phenyl]methyl]pyrazole-4-carboxylate (K.1.83), *N*-methyl-1-[[4-[5-(trifluoromethyl)-1,2,4-oxadiazol-3-yl]phenyl]methyl]pyrazole-4-carboxamide (K.1.84), *N*,*N*-dimethyl-1-[4-[5-(trifluoromethyl)-1,2,4-oxadiazol-3-yl]benzyl]-1*H*-1,2,4-triazol-3-amine (K.1.85), *N*-methoxy-*N*-methyl-1-[[4-[5-(trifluoromethyl)-1,2,4-oxadiazol-3-yl]phenyl]methyl]pyrazole-4-carboxamide (K.1.86), propyl-1-[[4-[5-(trifluoromethyl)-1,2,4-oxa-diazol-3-yl]phenyl]methyl]pyrazole-4-carboxamide (K.1.87), *N*-methoxy-1-[[4-[5-(trifluoromethyl)-1,2,4-oxadiazol-3-yl]phenyl]methyl]pyrazole-4-carboxamide (K.1.88), *N*-allyl-*N*-[[4-[5-(trifluoromethyl)-1,2,4-oxadiazol-3-yl]phenyl]methyl]propanamide (K.1.89), 3-ethyl-1-methoxy-1-[[4-[5-(trifluoromethyl)-1,2,4-oxadiazol-3-yl]phenyl]methyl]-urea (K.1.90), 1,3-dimethoxy-1-[[4-[5-(trifluoromethyl)-1,2,4-oxadiazol-3-yl]phenyl]methyl]urea (K.1.91), *N*-allyl-*N*-[[4-[5-(trifluoromethyl)-1,2,4-oxadiazol-3-yl]phenyl]methyl]acetamide (K.1.92), *N*-[4-[5-(trifluoromethyl)-1,2,4-oxadiazol-3-yl]benzyl]cyclopropanecarboxamide (K.1.93), 1-methyl-3-[[4-[5-(trifluoromethyl)-1,2,4-oxadi-azol-3-yl]phenyl]methyl]urea (K.1.94), *N*'-[2-chloro-4-(2-fluorophenoxy)-5-methyl-phenyl]-*N*-ethyl-*N*-methyl-formamidine (K.1.95), *N*'-[2-chloro-4-[(4-methoxy-phenyl)methyl]-5-methyl-phenyl]-*N*-ethyl-*N*-methyl-formamidine (K.1.96), *N*'-[2-chloro-4-[(4-cyano-phenyl)methyl]-5-methyl-phenyl]-*N*-ethyl-*N*-methyl-formamidine (K.1.97), *N*'-[2,5-dimethyl-4-(o-tolylmethyl)phenyl]-N-ethyl-N-methyl-formamidine (K.1.98), 6-chloro-3-(3-cyclopropyl-2-fluoro-phenoxy)-*N*-[2-(2,4-dimethylphenyl)-2,2-difluoro-ethyl]-5-methyl-pyridazine-4-carboxamide (K.1.99), 3-(3-bromo-2-fluoro-phenoxy)-6-chloro-*N*-[2-(2-chloro-4-methyl-phenyl)-2,2-difluoro-ethyl]-5-methylpyridazine-4-carboxamide (K.1.100), 6-chloro-*N*-[2-(2-chloro-4-methyl-phenyl)-2,2-difluoro-ethyl]-3-(3-cyclopropyl-2-fluoro-phenoxy)-5-methyl-pyridazine-4-carboxamide (K.1.101), 6-chloro-3-(3-cyclopropyl-2-fluoro-phen-oxy)-*N*-[2-(3,4-dimethylphenyl)-2,2-difluoro-ethyl]-5-methyl-pyridazine-4-carboxamide (K.1.102), 6-chloro-3-(3-chloro-2-fluoro-phenoxy)-*N*-[2-(2,4-dimethylphenyl)-2,2-difluoro-ethyl]-5-methyl-pyridazine-4-carboxamide (K.1.103), *N*-[2-(2-bromo-4-methyl-phenyl)-2,2-difluoro-ethyl]-6-chloro-3-(3-cyclopropyl-2-fluoro-phenoxy)-5-methyl-pyridazine-4-carboxamide (K.1.104), 2-[cyano-(2,6-difluoro-4-pyridyl)amino]-5-methyl-*N*-spiro[3.4]octan-3-yl-thiazole-4-carboxamide, 2-[acetyl-(2,6-difluoro-4-pyridyl)amino]-*N*-(2,2-dimethylcyclobutyl)-5-methyl-thiazole-4-carboxamide, 2-[(2,6-difluoro-4-pyridyl)-(2-methoxyacetyl)amino]-*N*-(2,2-dimethylcyclobutyl)-5-methyl-thiazole-4-carboxamide, 2-[cyano-(2,6-difluoro-4-pyridyl)amino]-*N*-(2,2-dimethylcyclobutyl)-5-methyl-thiazole-4-carboxamide, *N*-[1-[[3-[2-(5-fluoro-2-methoxy-phenyl)-2-hydroxy-ethyl]-5-[(*Z*)-*N*-isopropoxy-*C*-methyl-carbon-imidoyl]-2,6-dioxo-pyrimidin-1-yl]methyl]-2-methyl-propyl]-2-methyl-propanamide, *N*-[1-[[3-[2-(5-fluoro-2-methoxyphenyl)-2-hydroxy-ethyl]-5-[(*Z*)-*N*-isopropoxy-C-methyl-carbonimidoyl]-2,6-dioxo-pyrimidin-1-yl]methyl]-2-methylpropyl]-2,2-dimethyl-propanamide, N-[2-[3-[2-(5-fluoro-2-methoxy-phenyl)-2-hydroxy-ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, *N*-[2-[3-[2-hydroxy-2-(2-methoxyphenyl)ethyl]-5-[(*Z*)-*N*-isopropoxy-*C*-methyl-carbonimidoyl]-2,6-dioxo-pyrimidin-1-yl]-1-methyl-ethyl]-2-methylpropanamide, N-[2-[3-[2-(2-cyanoethoxy)-2-(5-fluoro-2-methoxy-phenyl)ethyl]-5-[(*Z*)-*N*-isopropoxy-C-methyl-carbonimidoyl]-2,6-dioxo-pyrimidin-1-yl]-1-methyl-ethyl]-2-methyl-propanamide, rac-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5S)-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*R*)-3-[3-(3-chloro-2-fluoro-phenoxy)-6-methyl-pyridazin-4-yl]-5-[(2-chloro-4-methylphenyl)methyl]-5,6-dihydro-4*H*-1,2,4-oxadiazine, 2-(4-fluorophenoxy)-1-[4-[5-(trifluoromethyl)-1,2,4-oxadiazol-3-yl]phenyl]ethanone, 2-[(6-fluoro-3-pyridyl)oxy]-1-[4-[5-(trifluoromethyl)-1,2,4-oxadiazol-3-yl]phenyl]ethanone, 2-(4-fluoroanilino)-1-[4-[5-(trifluoromethyl)-1,2,4-oxadiazol-3-yl]phenyl]ethenone, ethyl 1-[[4-[[2-(trifluoromethyl)-1,3-dioxolan-2-yl]methoxy]phenyl]methyl]-1*H*-pyrazole-4-carboxylate, ethyl 1-[[4-[[(1Z)-2-ethoxy-3,3,3-trifluoro-1-propen-1-yl]oxy]phenyl]methyl]-1*H*-pyrazole-4-carboxylate;

L) Biopesticides

L1) Microbial pesticides with fungicidal, bactericidal, viricidal and/or plant defense activator activity: *Ampelomyces quisqualis, Aspergillus flavus, Aureobasidium pullulans, Bacillus altitudinis, B. amyloliquefaciens, B. amyloliquefaciens* ssp. *plantarum* (also referred to as *B. velezensis*), *B. megaterium, B. moja-vensis, B. mycoides, B. pumilus, B. simplex, B. solisalsi, B. subtilis, B. subtilis* var. *amyloliquefaciens, B. velezensis, Candida oleophila, C. saitoana, Clavibacter michiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum), Gliocladium roseum, Lysobacter antibioticus, L. enzymogenes, Metschnikowia fructicola, Microdochium dimerum, Microsphaeropsis ochra*-cea, *Muscodor albus, Paenibacillus alvei, Paenibacillus epiphyticus, P. polymyxa, Pantoea vagans, Penicillium bilaiae, Phlebiopsis gigantea, Pseudomonas* sp., *Pseudomonas chloraphis, Pseudozyma floccu-losa, Pichia anomala, Pythium oligandrum, Sphaerodes mycoparasitica, Streptomyces griseoviridis, S. lydicus, S. violaceusniger, Talaromyces flavus, Trichoderma asperelloides, T. asperellum, T. atroviride, T. fertile, T. gamsii, T. harmafum, T. harzianum, T. polysporum, T. stromaticum, T. virens, T. viride, Typhula phacorrhiza, Ulocladium oudemansii, Verticillium dahliae,* zucchini yellow mosaic virus (avirulent strain);

L2) Biochemical pesticides with fungicidal, bactericidal, viricidal and/or plant defense activator activity: harpin protein, plant oils (BM3): tea tree oil, orange oil (L.2.1), eugenol, limonene (L.2.2), geraniol (L.2.3), thymol (L.2.4); Reynoutria sachalinensis extract, aureobasidin (in particular aureobasidin A (L.2.5)), ambruticin (L.2.6), bafilomycin (L.2.7) (in particular bafilomycin A1, B1 and C1), chlorflavonin (L.2.8), cinnamaldehyde (L.2.9), natamycin (L.2.10; F8);

L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *fenebrionis, Beauveria bassiana, B. brongniartii, Burkhol-deria* spp., *Chromobacterium subtsugae, Cydia pomonella* granulovirus (CpGV), *Cryptophlebia leucotreta* granulovirus (CrIeGV), *Flavobacterium* spp., *Helicoverpa armigera* nucleopolyhedrovirus (HearNPV), *Helicoverpa* zea nucleopolyhedrovirus (HzNPV), *Helicoverpa* zea single capsid nucleopolyhedrovirus (HzSNPV), *Heterorhabditis bacteriophora, Isaria fumosorosea, Lecanicillium longisporum, L. muscarium, Metarhizium anisopliae, M. anisopliae* var. *anisopliae, M. anisopliae* var. *acridum, Nomuraea rileyi, Paecilomyces fumosoroseus, P. lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus;*

L4) Biochemical pesticides with insecticidal, acaricidal, molluscidal, pheromone and/or nematicidal activity: L-carvone, citral, (*E*,*Z*)-7,9-dodecadien-1-yl acetate, ethyl formate, (*E*,*Z*)-2,4-ethyl decadienoate (pear ester), (*Z*,*Z*,*E*)-7,11,13-hexadecatrienal, heptyl butyrate, isopropyl myristate, lavanulyl senecioate, cis-jasmone, 2-methyl-1-butanol, methyl eugenol, methyl jasmonate, (*E*,*Z*)-2,13-octadecadien-1-ol, (*E*,*Z*)-2,13-octadecadien-1-ol acetate, (*E*,*Z*)-3,13-octadecadien-1-ol, (*R*)-1-octen-3-ol, pentatermanone, (*E*,*Z*,*Z*)-3,8,11-tetradecatrienyl acetate, (*Z*,*E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract;

L5) Microbial pesticides with plant stress reducing, plant growth regulator, plant growth promoting and/or yield enhancing activity: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. I.* bv. *trifolii, R. I.* bv. *viciae, R. tropici,*

*Sinorhizobium meliloti*;

O) Insecticides from classes O.1 to O.29, and O.UN (IRAC classes 1 to 37, and UN (incl. UNA to UNV)):

O.1 Acetylcholine esterase (AChE) inhibitors: carbamates (1A): aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb; organophosphates (1B): acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
O.2 GABA-gated chloride channel blockers: (2A): chlordane, endosulfan; (2B): ethiprole, fipronil, flufiprole, nicofluprole, pyrafluprole, pyriprole;
O.3 Sodium channel modulators: pyrethroids (3A): acrinathrin, allethrin, d-cis-trans allethrin, d-*trans* allethrin, bifenthrin, *kappa*-bifenthrin, bioallethrin, bioallethrin S-cylclopentenyl, bioresmethrin, cycloprothrin, cyfluthrin, *beta*-cyfluthrin, cyhalothrin, *lambda*-cyhalothrin, *gamma*-cyhalothrin, cypermethrin, *alpha*-cypermethrin, *beta*-cypermethrin, *theta*-cypermethrin, zeta-cypermethrin, cyphenothrin, deltamethrin, empenthrin, esfenvalerate, etofenprox, fenpropathrin, fenvalerate, flucythrinate, flumethrin, *tau*-fluvalinate, halfenprox, heptafluthrin, imiprothrin, meperfluthrin, metofluthrin, momfluorothrin, *epsilon*-momfluorothrin, permethrin, phenothrin, prallethrin, profluthrin, pyrethrins (pyrethrum), resmethrin, silafluofen, tefluthrin, kappa-tefluthrin, tetramethylfluthrin, tetramethrin, tralomethrin, transfluthrin; (3B): DDT, methoxychlor;
O.4 Nicotinic acetylcholine receptor (nAChR) competitive modulators: neonicotinoids (4A): acetamiprid, clothianidin, cycloxaprid, dinotefuran, imidacloprid, nitenpyram, thiacloprid, thiamethoxam; 4,5-dihydro-*N*-nitro-1-(2-oxiranyl-methyl)-1*H*-imidazol-2-amine, (2*E*)-1-[(6-chloropyridin-3-yl)methyl]-*N*'-nitro-2-pentylidenehydrazinecarboximid-amide; 1-[(6-chloropyridin-3-yl)methyl]-7-methyl-8-nitro-5-propoxy-1,2,3,5,6,7-hexahydroimidazo [1,2-a]pyridine; (4B) nicotine; sufoximines (4C): sulfoxaflor; butenolindes (4D): flupyradifurone; mesionics (4E): dicloromezotiaz, fenmezoditiaz, triflumezopyrim, pyridylidenes (4F): flupyrimin, 1-[(2-chlorothiazol-5-yl) methyl]-3-(3,5-dimethyl-isoxazol-4-yl)pyrido[1,2-a]pyrimidine-2,4-dione;
O.5 nAChR allosteric modulators: spinetoram, spinosad;
O.6 Glutamate gated chloride channel allosteric modulators: abamectin, emamectin benzoate, ivermectin, lepimectin, milbemectin;
O.7 Juvenile hormone receptor modulators: hormone analogs (7A): hydroprene, kinoprene, methoprene; fenoxycarb (7B), pyriproxyfen (7C);
O.8 miscellaneous non-specific (multi-site) inhibitors: methyl bromide and other alkyl halides; chloropicrin, cryolite, sulfuryl fluoride, borax, tartar emetic;
O.9 Chordotonal organ TRPV channel modulators: afidopyropen, pymetrozine, pyrifluquinazon;
O.10 Mite growth inhibitors: clofentezine, diflovidazin, hexythiazox; etoxazole;
O.11 Microbial disruptors of midgut membranes: *Bacillus thuringiensis* subsp. *israelensis, B. t.* subsp. *aizawai, B. t.* subsp. *kurstaki, B. t.* subsp. *tenebrionis, B. sphaericus; B.t.* crop proteins: Cry1Ab, Cry1Ac, Cry1Fa, Cry2Ab, mCry3A, Cry3Ab, Cry3Bb, Cry34/35Ab1;
O.12 Inhibitors of mitochondrial ATP synthase: diafenthiuron; azocyclotin, cyhexatin, fenbutatin oxide, propargite, tetradifon;
O.13 Uncouplers of oxidative phosphorylation via disruption of the proton gradient: chlorfenapyr, DNOC, sulfluramid;
O.14 nAChR channel blockers: bensultap, cartap hydrochloride, thiocyclam, thiosultap-sodium;
O.15 Inhibitors of the chitin biosynthesis CHS1: bistrifluron, chlorfluazuron, diflubenzuron, flucycloxuron, flufenoxuron, hexaflumuron, lufenuron, novaluron, noviflumuron, teflubenzuron, triflumuron;
O.16 Inhibitors of the chitin biosynthesis type 1: buprofezin;
O.17 Moulting disruptors: cyromazine;
O.18 Ecdyson receptor agonists: methoxyfenozide, tebufenozide, halofenozide, fufenozide, chromafenozide;
O.19 Octopamin receptor agonists: amitraz;
O.20 Mitochondrial complex III electron transport inhibitors - Qo site: hydramethylnon, acequinocyl, fluacrypyrim, flupyroxystrobin, bifenazate;

O.21 Mitochondrial complex I electron transport inhibitors: fenazaquin, fenpyroximate, pyrimidifen, pyridaben, tebufenpyrad, tolfenpyrad; rotenone;

O.22 Voltage-dependent sodium channel blockers: indoxacarb, metaflumizone, *N*-(3-chloro-2-methylphenyl)-2-[(4-chlorophenyl)-[4-[methyl(methylsulfonyl)amino]phenyl]methylene]-hydrazinecarboxamide, *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide, 2-[2-(4-cyanophenyl)-1-[3-(trifluoromethyl)phenyl]ethylidene]-*N*-[4-(difluoromethoxy)phenyl]-hydrazinecarboxamide;

O.23 Inhibitors of the of acetyl CoA carboxylase: spidoxamat, spirodiclofen, spiromesifen, spirotetramat, spiropidion, spirobudifen, 11-(4-chloro-2,6-dimethylphenyl)-12-hydroxy-1,4-dioxa-9-azadispiro[4.2.4.2]tetradec-11-en-10-one;

O.24 Mitochondrial complex IV electron transport inhibitors: aluminium phosphide, calcium phosphide, phosphine, zinc phosphide, cyanide;

O.25 Mitochondrial complex II electron transport inhibitors: cyclobutrifluram, cyenopyrafen, cyflumetofen, cyetpyrafen, pyflubumide;

O.28 Ryanodine receptor-modulators: chlorantraniliprole, cyantraniliprole, cyclaniliprole, cyhalodiamide, flubendiamide, pixoaniliprole, fluchlodiniliprole, tetrachlorantraniliprole, tetraniliprole, tiorantraniliprole, (*R*)-3-chloro-$N^1$-{2-methyl-4-[1,2,2,2 -tetrafluoro-1-(trifluoromethyl)ethyl]phenyl}-$N^2$-(1-methyl-2-methylsulfonylethyl)phthalamide, (*S*)-3-chloro-$N^1$-{2-methyl-4-[1,2,2,2-tetrafluoro-1-(trifluoromethyl)ethyl]phenyl}-$N^2$-(1-methyl-2-methylsulfonylethyl)phthalamide, methyl-2-[3,5-dibromo-2-({[3-bromo-1-(3-chloropyridin-2-yl)-1*H*-pyrazol-5-yl]-carbonyl}amino)benzoyl]-1,2-dimethylhydrazinecarboxylate; *N*-[4,6-dichloro-2-[(diethyl-lambda-4-sulfanylidene)-carbamoyl]-phenyl]-2-(3-chloro-2-pyridyl)-5-(trifluoromethyl)pyrazole-3-carboxamide; *N*-[4-chloro-2-[(diethyl-*lambda*-4-sulfanylidene)carbamoyl]-6-methyl-phenyl]-2-(3-chloro-2-pyridyl)-5-(trifluoromethyl)pyrazole-3-carboxamide; N-[2-(5-amino-1,3,4-thiadiazol-2-yl)-4-chloro-6-methylphenyl]-3-bromo-1-(3-chloro-2-pyridinyl)-1*H*-pyrazole-5-carboxamide; 3-chloro-1-(3-chloro-2-pyridinyl)-*N*-[2,4-dichloro-6-[[(1-cyano-1-methylethyl)amino]-carbonyl]phenyl]-1H-pyrazole-5-carboxamide; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide;

O.29 Chordotonal organ modulators: flonicamid, flumetnicam;

O.30 GABA-gated chloride channel allosteric modulators: broflanilide, cyproflanilide, fluralaner, fluxametamide, isocycloseram, lotilaner, piperflanilide, sarolaner, tigolaner, umifoxolaner;

O.33 Calcium-activated potassium channel modulators: acynonapyr;

O.34 Mitochondrial complex III electron transport inhibitors - Qi site: flometoquin;

O.35 RNA interference mediated target suppressors: ledprona, vadescana;

O.36: Chordotonal organ modulators: dimpropyridaz;

O.37: Vesicular AchT inhibitors: cybenzoxasuflyl, oxazosulfyl;

O.UN Unknown or uncertain mode of action: afoxolaner, azadirachtin, amidoflumet, bentioflumin, benzoximate, benzpyrimoxan, bromopropylate, bisulfufen, chinomethionat, dicofol, fluazaindolizine, flufenerim, fluensulfone, fluhexafon, flupentiofenox, galquin, indazapyroxamet, isoflualanam, metaldehyde, metoxadiazone, piperonyl butoxide, pyridalyl, sulfiflumin, tiapyrachlor, tioxazafen, trifluenfuronate, tyclopyrazoflor; 11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-azaspiro[4.5]dec-3-en-2-one, 1-[2-fluoro-4-methyl-5-[(2,2,2-trifluoroethyl)sulfinyl]phenyl]-3-(trifluoromethyl)-1*H*-1,2,4-triazole-5-amine, *N*-[5-[[2-bromo-6-chloro-4-[1,2,2,3,3,3-hexafluoro-1-(trifluoromethyl)-propyl]phenyl]carbamoyl]-2-cyano-phenyl]-4-cyano-2-methyl-benzamide; 4-cyano-*N*-[2-cyano-5-[[2,6-dichloro-4-[1,2,2,3,3,3-hexafluoro-1-(trifluoromethyl)-propyl]phenyl]carbamoyl]phenyl]-2-methyl-benzamide; 4-cyano-*N*-[2-cyano-5-[[2,6-dichloro-4-[1,2,2,2-tetrafluoro-1-(trifluoromethyl)ethyl]phenyl]carbamoyl]¬phenyl]-2-methyl-benzamide; *N*-[5-[[2-bromo-6-chloro-4-[1,2,2,2-tetrafluoro-1-(trifluoromethyl)ethyl]phenyl]carba¬moyl]-2-cyanophenyl]-4-cyano-2-methyl-benzamide; 1-[(6-chloro-3-pyridinyl)methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimid-azo[1,2-a]pyridin-5-ol; 1-[(6-chloro-3-pyridinyl)methyl]-1,2,3,5,6,7-hexahydro-5-methoxy-7-methyl-8-nitro-imid-azo[1,2-a]pyridine; 2-(3-pyridinyl)-*N*-(2-pyrimidinylmethyl)-2*H*-indazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; 2-(3-ethylsulfonyl-2-pyridyl)-3-methyl-6-(trifluoromethyl)imid-azo[4,5-b]pyridine, 2-[3-ethylsulfonyl-5-(trifluoromethyl)-2-pyridyl]-3-methyl-6-(trifluoromethyl)imidazo[4,5-b]pyridine; *N*-[4-chloro-3-(cyclopropylcarbamoyl)phenyl]-2-methyl-5-(1,1,2,2,2-pentafluoroethyl)-4-(trifluoromethyl)-pyrazole-3-carboxamide, *N*-[4-chloro-3-[(1-cyanocyclopropyl)carbamoyl]phenyl]-2-methyl-5-(1,1,2,2,2-pentafluoroethyl)-4-(trifluoromethyl)pyrazole-3-carboxamide; [(2*S*,3*R*,4*R*,5*S*,6*S*)-3,5-dimethoxy-6-methyl-4-propoxy-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,4,5-trimethoxy-6-methyl-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,5-dimethoxy-6-methyl-4-propoxy-tetrahydropyran-2-yl]-*N*-[4-[1-[4-(1,1,2,2,2-pentafluoroethoxy)phenyl]-1,2,4-triazol-3-yl]phenyl]carbamate; [(2*S*,3*R*,4*R*,5*S*,6*S*)-3,4,5-tri-methoxy-6-methyl-tetrahydropyran-2-yl]-*N*-[4-[1-[4-(1,1,2,2,2-pentafluoroethoxy)phenyl]-1,2,4-triazol-3-yl]phenyl]-carbamate; (2*Z*)-3-(2-isopropylphenyl)-2-[(*E*)-[4-[1-[4-(trifluoromethoxy)phenyl]-1,2,4-triazol-3-yl]phenyl]-methylenehydrazono]thiazolidin-4-one, (2*Z*)-3-(2-isopropylphenyl)-2-[(*E*)-[4-[1-[4-(1,1,2,2,2-pentafluoroethoxy)-phenyl]-1,2,4-triazol-3-yl]phenyl]methylenehydrazono]thiazolidin-4-one, (2*Z*)-3-(2-isopro¬pyl¬phenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(3-ethylsulfonyl-7-iodo-imidazo[1,2-a]pyridin-2-yl)-3-methyl-6-(trifluoromethyl)imidazo[4,5-b]pyridine, 3-ethylsulfonyl-6-iodo-2-[3-methyl-6-(trifluoromethyl)imidazo[4,5-b]pyridin-2-yl]imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo [4,5-b]pyridine, 2-[3-ethylsulfonyl-7-(trifluoromethyl)imidazo[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo[4,5-c]pyridine, 2-(6-bromo-3-ethylsulfonyl-imidazo[1,2-a]pyridin-2-yl)-6-(trifluoromethyl)pyrazolo[4,3-c]pyridine; *N*-[[2-fluoro-4-[(2S,3S)-2-hydroxy-3-(3,4,5-trichlorophenyl)-3-(trifluoromethyl)pyrrolidin-1-yl]phenyl]methyl]cyclopropanecarboxamide, *N*-[3-chloro-1-(3-pyridyl)pyrazol-4-yl]-2-methylsulfonyl-propanamide, *N*-[4-chloro-3-[(1-cyano-cyclopropyl)carbamoyl]phenyl]-2-methyl-4-methylsulfonyl-5-(1,1,2,2,2-pentafluoroethyl)pyrazole-3-carboxamide, 1,4-dimethyl-2-[2-(pyridin-3-yl)-2*H*-indazol-5-yl]-1,2,4-triazolidine-3,5-dione, *N*-[4-chloro-2-(3-pyridyl)thiazol-5-yl]-*N*-ethyl-3-methylsulfonyl-propanamide, *N*-cyclopropyl-5-[(5*S*)-5-(3,5-dichloro-4-fluoro-phenyl)-5-(trifluoromethyl)-4H-isoxazol-3-yl]isoquinoline-8-carboxamide, 5-[(5*S*)-5-(3,5-dichloro-4-fluoro-phenyl)-5-(trifluoromethyl)-4*H*-isoxazol-3-yl]-*N*-(pyrimidin-2-ylmethyl)isoquinoline-8-carboxamide, *N*-[1-(2,6-difluorophenyl)pyrazol-3-yl]-2-(trifluoromethyl)benzamide, 5-((1*R*,3*R*)-3-(3,5-bis(trifluoromethyl)phenyl)-2,2-dichlorocyclopropane-1-carboxamido)-2-chloro-*N*-(3-(2,2-difluoroacetamido)-2,4-difluorophenyl)benzamide, 1-[6-(2,2-difluoro-7-methyl-[1,3]di-oxolo[4,5-f]benzimidazol-6-yl)-5-ethylsulfonyl-3-pyridyl]cyclopropanecarbonitrile, 6-(5-cyclopropyl-3-ethylsulfonyl-2-pyridyl)-2,2-difluoro-7-methyl-[1,3]dioxolo[4,5-f]benzimidazole, 3,5-bis(trifluoromethyl)-*N*-[(1*S*)-1-[1-[6-(trifluoromethyl)-4-pyrimidinyl]-1*H*-1,2,4-triazol-5-yl]ethyl]-benzamide, 2-(3-ethylsulfonyl-2-pyridyl)-5-(2,2,3,3,3-penta-fluoropropoxy)pyrazine, 2-[3-ethylsulfonyl-6-(trifluoromethyl)pyrazolo[1,5-a]pyridin-2-yl]-3-methyl-6-(trifluoromethyl)imidazo [4,5-b]pyridine, 9-(methoxymethyl)-5-(3-pyridyl)-2-oxa-5,6,9,14-tetrazatricyclo[8.4.0.0^{3,7}]tetradeca-1(10),3,6,11,13-pentaen-8-one, 2-[5-[(*E*)-2-chloro-3,3,3-trifluoro-prop-1-enyl]-1-methyl-imidazol-2-yl] - 5-cyclopropyl-3-ethylsulfonyl-pyridine, 3Z)-1-[2-fluoro-4-[1-[4-(trifluoromethoxy)phenyl]-1,2,4-triazol-3-yl]phenyl]-3-[3-[5-methyl-2-(2,2,2-trifluoroethoxymethyl)phenyl]-4-oxo-thiazolidin-2-ylidene]urea, 1-[6-(2,2-difluoro-8-oxo-[1,3]dioxolo[4,5-g]chromen-7-yl)-5-ethylsulfonyl-3-pyridyl]cyclopropanecarbonitrile, 2-chloro-*N*-[(1*S*)-2-ethyl-1-methyl-butyl]furan-3-carboxamide, [5-cyclopropyl-2-[3-methyl-6-(trifluoromethyl)imidazo [4,5-b]pyridin-2-yl]-3-pyridyl]-ethyl-hydroxy-oxo-$\lambda^6$-sulfane, 4-[5-(3,5-dichloro-4-fluoro-phenyl)-5-(trifluoromethyl)-4*H*-isoxazol-3-yl]-2-methyl-*N*-[1-(2,2,2-trifluoroethylcarbamoyl)cyclopropyl]benzamide, 3-[3-ethylsulfonyl-7-(trifluoromethyl)imid-azo[1,2-a]pyridin-2-yl]-7-(trifluoromethyl)chromen-4-one

in a weight ratio of from 100:1 to 1:100

The invention also relates to a method for controlling phytopathogenic harmful fungi using mixtures of at least one compound I and at least one compound II in a weight ratio of from 100:1 to 1:100; to the use of mixtures comprising compounds I and compounds II for controlling phytopathogenic harmful fungi; to agrochemical compositions comprising these mixtures; and to agrochemical compositions further comprising seed.

Practical agricultural experience has shown that the repeated and exclusive application of an individual active compound in the control of harmful fungi leads in many cases to a rapid selection of those fungus strains which have developed natural or adapted resistance against the active compound in question. Effective control of these fungi with the active compound in question is then no longer possible.

To reduce the risk of the selection of resistant fungus strains, mixtures of different active compounds are conventionally employed for controlling harmful fungi. By combining active compounds having different mechanisms of action, it is possible to ensure successful control over a relatively long period of time.

It is an object of the present invention to provide, with a view to effective resistance management and effective

control of phytopathogenic harmful fungi, at application rates which are as low as possible, compositions which, at a reduced total amount of active compounds applied, have improved activity against the harmful fungi (synergistic mixtures) and a broadened activity spectrum, in particular for certain indications.

We have accordingly found that this object is achieved by the compositions, defined herein, comprising at least one compound I and at least one compound II.

Moreover, we have found that simultaneous, that is joint or separate, application of a compound I and a compound II or successive application of a compound I and of compound II allows better control of harmful fungi than is possible with the individual compounds alone (synergistic mixtures). Compounds I and/or the compounds II can be present in different crystal modifications, which may differ in biological activity.

The term "compounds I" refers to compounds of formula I.

In the definitions of the variables given above, collective terms are used which are generally representative for the substituents in question. The term "$C_n$-$C_m$" indicates the number of carbon atoms possible in each case in the substituent or substituent moiety in question.

The term "halogen" refers to fluorine, chlorine, bromine and iodine.

The term "$C_1$-$C_6$-alkyl" refers to a straight-chained or branched saturated hydrocarbon group having 1 to 6 carbon atoms, for example methyl, ethyl, propyl, 1-methylethyl, butyl, 1-methylpropyl, 2-methylpropyl, and 1,1-dimethylethyl.

The term "$C_2$-$C_6$-alkenyl" refers to a straight-chain or branched unsaturated hydrocarbon radical having 2 to 6 carbon atoms and a double bond in any position, such as ethenyl, 1-propenyl, 2-propenyl (allyl), 1-methylethenyl, 1-butenyl, 2-butenyl, 3-butenyl, 1-methyl-1-propenyl, 2-methyl-1-propenyl, 1-methyl-2-propenyl, 2-methyl-2-propenyl.

The term "$C_2$-$C_6$-alkynyl" refers to a straight-chain or branched unsaturated hydrocarbon radical having 2 to 6 carbon atoms and containing at least one triple bond, such as ethynyl, 1-propynyl, 2-propynyl (propargyl), 1-butynyl, 2-butynyl, 3-butynyl, 1-methyl-2-propynyl.

The term "$C_1$-$C_6$-haloalkyl" refers to a straight-chained or branched alkyl group having 1 to 6 carbon atoms (as defined above), wherein some or all of the hydrogen atoms in these groups may be replaced by halogen atoms as mentioned above, for example chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl and pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, $CH_2$-$C_2F_5$, $CF_2$-$C_2F_5$, $CF(CF_3)_2$, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl or nonafluorobutyl.

The term "$C_1$-$C_6$-alkoxy" refers to a straight-chain or branched alkyl group having 1 to 6 carbon atoms (as defined above) which is bonded via an oxygen, at any position in the alkyl group, for example methoxy, ethoxy, n-propoxy, 1-methylethoxy, butoxy, 1-methylpropoxy, 2-methylpropoxy or 1,1-dimethylethoxy.

The term "aliphatic" refers to compounds or radicals composed of and hydrogen and which are non-aromatic compounds. An "alicyclic" compound or radical is an organic compound that is both aliphatic and cyclic. They contain one or more all-carbon rings which may be either saturated or unsaturated, but do not have aromatic character.

The terms "cyclic moiety" or "cyclic group"refer to a radical which is an alicyclic ring or an aromatic ring, such as, for example, phenyl or heteroaryl.

The term "and wherein any of the aliphatic or cyclic groups are unsubstituted or substituted with..." refers to aliphatic groups, cyclic groups and groups, which contain an aliphatic and a cyclic moiety in one group, such as in, for example, $C_3$-$C_8$-cycloalkyl-$C_1$-$C_4$-alkyl; therefore a group which contains an aliphatic and a cyclic moiety both of these moieties may be substituted or unsubstituted independently of each other.

The term "phenyl" refers to an aromatic ring systems incuding six carbon atoms (commonly referred to as benzene ring).

The term "benzyl" refers to an aromatic ring systems incuding six carbon atoms and $CH_2$ group.

Agriculturally acceptable salts of the active compounds I, II and III encompass especially the salts of those cations or the acid addition salts of those acids whose cations and anions, respectively, have no adverse effect on the fungicidal action of the active compounds. Suitable cations are thus in particular the ions of the alkali metals, preferably sodium and potassium, of the alkaline earth metals, preferably calcium, magnesium and barium, of the transition metals, preferably manganese, copper, zinc and iron, and also the ammonium ion which, if desired, may carry 1 to 4 $C_1$-$C_4$-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri($C_1$-$C_4$-alkyl) sulfonium, and sulfoxonium ions, preferably tri($C_1$-$C_4$-alkyl)sulfoxonium. Anions of useful acid addition salts are primarily chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of $C_1$-$C_4$-alkanoic acids, preferably formate, acetate, propionate and butyrate. They can be formed by reacting a compound I with an acid of the corresponding anion, preferably of hydrochloric acid, hydrobromic acid, sulfuric acid, phosphoric acid or nitric acid.

The scope of the present invention includes mixtures of the (R)- and (S)-isomers and the racemates of compounds I and/or II and /or III having one or more chiral centers. As a result of hindered rotation of asymmetrically substituted groups, atropisomers of active compounds I and/or II and/or III may be present. They also form part of the subject matter of the invention.

Compounds I and their preparation and their use as fungicidally active compounds have been described in PCT/EP2024/071402.

Compounds of the present invention can be made as shown in the following schemes, in which, unless otherwise stated, the definition of each variable is as defined above for a compound of formula I. The compounds of the formula I can be prepared according to methods or in analogy to methods that are described in the prior art. The synthesis takes advantage of starting materials that are commercially available or may be prepared according to conventional procedures starting from readily available compounds. Enantiopure compounds may be obtained by racemic synthesis and subsequent sepaaration of the stereoisomers using chiral column chromatography, e.g. *via* chiral HPLC, LC/MS and/or SFC separation, or synthesis using enantiomerically pure starting materials and/or reagents.

For example, compounds I can be prepared a by palladium-catalyzed Suzuki coupling reaction between a boronic acid or pinacol borane derivative represented by formula (2) and an imidoyl halide derivative represented by formula (6) using a palladium complex in an organic solvent. It is preferred to conduct the reaction at elevated temperature, preferably between 60 and 160 °C, and using 1-3 equivalents of boronic acid or pinacol borane derivative represented by formula (2) per 1 imidoyl halide derivative (6), as described in WO2009119089A1 and WO2022243111.

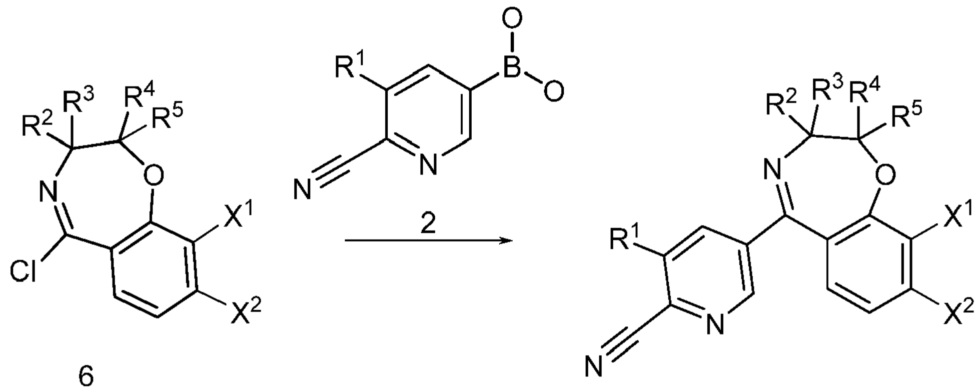
6 2 I

An imidoyl compound represented by formula (6) can be prepared by a method in which a cyclic amide represented by formula (7) is reacting in the presence of a suitable halogenating agent such as triphenylphosphine and a carbon tetrahalide, triphenylphosphine dichloride, phosgene, oxalyl chloride or thionyl chloride as described in US 2011/0136782 A1.

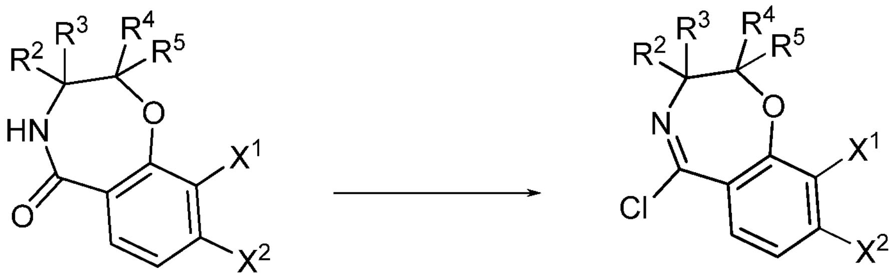
7 6

A compound represented by formula (7) can be prepared as described in literature, e.g. WO2022243111.

Alternatively, compounds I can be prepared *via* a palladium-catalyzed Liebeskind-Srogl coupling between a boronic acid or pinacol borane derivative represented by formula (2) and a thiolactame (10) or an alkyl imidothiodate represented by the general formula (11) in the presence of a palladium complex and a copper salt in organic solvents. In general, the reaction should be carried out at elevated temperatures up to reflux, with 1 to 3 equivalents of boronic acid or pinacol borane (2) with respect to thiolactame (10) or alkyl imidothiodate (11), as described in *Org. Lett.* 2004, **6**, 771-774 or *J. Heterocycl. Chem.* 2013, **50**, 1368-1373.

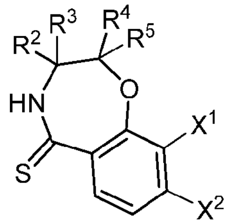

or

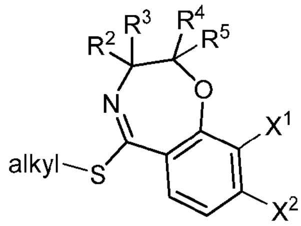

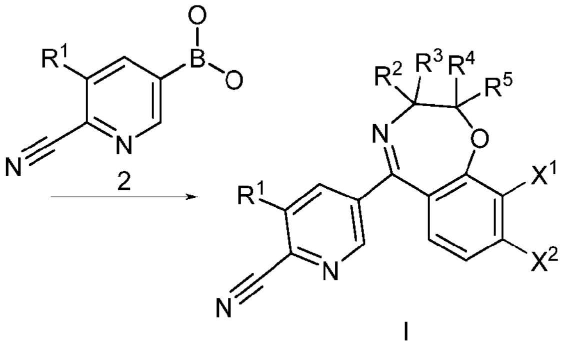

2

10 11 I

Compounds (10) may be prepared by thionation of lactam (7) with a suitable thionating reagent such as $P_2S_5$ or Lawesson's reagent, as described in US2019/375728 or Org. Lett., 2012, **14**, 440-443. Alkyl imidothiodates (11) may be prepared using a suitable alkylating agent, e.g. alkyl halides, in the presence of base, such as potassium carbonate, as described in J. Med. Chem. 1998, 41, 1, 96-101.

In one embodiment the present invention relates to mixtures comprising as component 1) at least one active compound of the formula I, or an N-oxide, or an agriculturally useful salt thereof, wherein:

| | |
|---|---|
| $R^1$ | is $C_1$-$C_6$-alkyl; |
| $R^2$ | is H or $C_1$-$C_6$-alkyl; |
| $R^3$ | is H or $C_1$-$C_6$-alkyl; |
| $R^4$ | is H or $C_1$-$C_6$-alkyl; |
| $R^5$ | is $C_1$-$C_6$-alkyl; |
| $R^4$ and $R^5$ | form together with the C atoms to which they are bound a $C_3$-$C_6$-cycloalkyl |
| $X^1$ | is H or halogen, |
| $X^2$ | is H or halogen. |

In one embodiment the present invention relates to mixtures comprising as component 1) at least one active compound of the formula I, or an N-oxide, or an agriculturally useful salt thereof, wherein:

| | |
|---|---|
| $R^1$ | is $CH_3$; |
| $R^2$ | is H, $CH_3$ or $CH_2CH_3$; |
| $R^3$ | is H or $CH_3$; |
| $R^4$ | is H or $CH_3$; |
| $R^5$ | is $CH_3$ or $CH_2CH_3$; |
| $R^4$ and $R^5$ | form together with the C atoms to which they are bound a $C_3$-$C_6$-cycloalkyl, |
| $X^1$ | is H or F, |
| $X^2$ | is H or F. |

Particularly preferred active compounds I are selected from the group consisting of compounds I-1 to I-19

(I-1): 5-((2R,3R)-2-ethyl-9-fluoro-3-methyl-2,3-dihydrobenzo[f][1,4]oxazepin-5-yl)-3-methylpicolinonitrile

(I-2): (S)-5-(9-fluoro-2,2,3-trimethyl-2,3-dihydrobenzo[f][1,4]oxazepin-5-yl)-3-methylpicolinonitrile

(I-3): 5-((2S,3S)-9-fluoro-2,3-dimethyl-2,3-dihydrobenzo[f][1,4]oxazepin-5-yl)-3-methylpicolinonitrile

(I-4): 5-((2R,3R)-3-ethyl-8,9-difluoro-2-methyl-2,3-dihydrobenzo[f][1,4]oxazepin-5-yl)-3-methylpicolinonitrile

(I-5): 5-((2S,3S)-8,9-difluoro-2,3-dimethyl-2,3-dihydrobenzo[f][1,4]oxazepin-5-yl)-3-methylpicolinonitrile

(I-6): 5-((2R,3R)-3-ethyl-9-fluoro-2-methyl-2,3-dihydrobenzo[f][1,4]oxazepin-5-yl)-3-methylpicolinonitrile

(I-7): (S)-5-(9-chloro-2,2,3-trimethyl-2,3-dihydrobenzo[f][1,4]oxazepin-5-yl)-3-methylpicolinonitrile

(I-8): (S)-5-(8,9-difluoro-2,2,3-trimethyl-2,3-dihydrobenzo[f][1,4]oxazepin-5-yl)-3-methylpicolinonitrile

(I-9): (S)-5-(9-chloro-3-methyl-3H-spiro[benzo[f][1,+4]oxazepine-2,1'-cyclopropan]-5-yl)-3-methylpicolinonitrile

(I-10): (S)-5-(9-fluoro-2,2,3-trimethyl-2,3-dihydrobenzo[f][1,4]oxazepin-5-yl)-3-methoxypicolinonitrile

(I-11): (S)-5-(9-fluoro-3-methyl-3H-spiro[benzo[f][1,4]oxazepine-2,1'-cyclopropan]-5-yl)-3-methylpicolinonitrile

(I-12): 5-(9-chloro-2H-spiro[benzo[f][1,4]oxazepine-3,1'-cyclopropan]-5-yl)-3-methylpicolinonitrile

(I-13): (S)-3-ethyl-5-(9-fluoro-2,2,3-trimethyl-2,3-dihydrobenzo[f][1,4]oxazepin-5-yl)picolinonitrile

(I-14): 5-((2R,3R)-2-ethyl-8,9-difluoro-3-methyl-2,3-dihydrobenzo[f][1,4]oxazepin-5-yl)-3-methylpicolinonitrile

(I-15): 5-((2S,3S)-2-ethyl-9-fluoro-3-methyl-2,3-dihydrobenzo[f][1,4]oxazepin-5-yl)-3-methylpicolinonitrile

(I-16): 5-((2S,3S)-3-ethyl-8,9-difluoro-2-methyl-2,3-dihydrobenzo[f][1,4]oxazepin-5-yl)-3-methylpicolinonitrile

(I-17): 5-((2S,3S)-3-ethyl-9-fluoro-2-methyl-2,3-dihydrobenzo[f][1,4]oxazepin-5-yl)-3-methylpicolinonitrile

(I-18): 5-((2S,3S)-2-ethyl-8,9-difluoro-3-methyl-2,3-dihydrobenzo[f][1,4]oxazepin-5-yl)-3-methylpicolinonitrile

Preference is also given to mixtures comprising as component 2) at least one active compound selected from inhibitors of complex III at $Q_o$ site in group A), more preferably selected from compounds (A.1.1), (A.1.4), (A.1.8), (A.1.10), (A. 1.11), (A.1.12), (A. 1.14), (A.1.17), (A.1.19), (A.1.25), (A.1.34), (A. 1.35), and (A.1.39).

Preference is also given to mixtures comprising as component 2) at least one active compound selected from inhibitors of complex III at $Q_o$ site in group A), more preferably selected from compounds (A.1.1), (A.1.4), (A.1.8), (A.1.9), (A.1.10), (A.1.11), (A.1.12), (A.1.14), (A.1.16), (A.1.17).

Preference is also given to mixtures comprising as component 2) at least one active compound selected from inhibitors of complex III at $Q_i$ site in group A), more preferably selected from compounds (A.2.1), (A.2.3), (A.2.4) and (A.2.5); particularly selected from (A.2.3), (A.2.4), (A.2.5) and (A.2.6).

Preference is also given to mixtures comprising as component 2) at least one active compound selected from inhibitors of complex II in group A), more preferably selected from compounds (A.3.2), (A.3.3), (A.3.4), (A.3.7), (A.3.8), (A.3.9), (A.3.10), (A.3.11), (A.3.12), (A.3.15), (A.3.16), (A.3.17), (A.3.19), (A.3.21), (A.3.22), (A.3.23), (A.3.28), (A.3.29) and (A.3.31).

Preference is also given to mixtures comprising as component 2) at least one active compound selected from other respiration inhibitors in group A), more preferably selected from compounds (A.4.5).

Preference is also given to mixtures comprising as component 2) at least one active compound selected from C14 demethylase inhibitors in group B), more preferably selected from compounds (B.1.4), (B.1.5), (B.1.8), (B.1.10), (B.1.12), (B.1.15), (B.1.17), (B.1.18), (B.1.21), (B.1.22), (B.1.23), (B.1.25), (B.1.26), (B.1.29), ((B.1.38), (B.1.44) and (B.1.46).

Preference is also given to mixtures comprising as component 2) at least one active compound selected from delta14-reductase inhibitors in group B), more preferably (B.2.4).

Preference is also given to mixtures comprising as component 2) at least one active compound selected from inhibitors of 3-keto reductase in group B), more preferably (B.3.1).

Preference is also given to mixtures comprising as component 2) at least one active compound selected from

phenylamides and acyl amino acid fungicides in group C), more preferably selected from compounds (C.1.4), (C.1.5), (C.2.1), (C.5.1), (C.5.3); particularly (C.1.4).

Preference is also given to mixtures comprising as component 2) at least one active compound selected from group D), more preferably selected from compounds (D.1.4), (D.1.5), (D.2.3), (D.2.5) and (D.2.6).

Preference is also given to mixtures comprising as component 2) at least one active compound selected from group E), more preferably selected from compounds (E.1.1), (E.1.3), (E.2.2) and (E.2.3).

Preference is also given to mixtures comprising as component 2) at least one active compound selected from group F), more preferably selected from compounds (F.1.2), (F.1.3) and (F.1.5).

Preference is also given to mixtures comprising as component 2) at least one active compound selected from group G), more preferably selected from compounds (G.1.4), (G.3.1) and (G.5.1).

Preference is also given to mixtures comprising as component 2) at least one active compound selected from group H), more preferably selected from compounds (H.1.2), (H.1.4), (H.1.5), (H.1.6), (H.1.7), (H.2.2), (H.2.3), (H.2.5), (H.2.7), (H.3.2), (H.3.4), (H.3.5), (H.3.10), (H.4.2), (H.4.9)); particularly selected from (H.1.5), (H.2.2), (H.2.5), (H.3.2), (H.4.9).

Preference is also given to mixtures comprising as component 2) at least one active compound selected from group I), more preferably selected from compounds (i.1.1), (I.2.1), (I.2.2) ,(I.2.3) and (I.2.4).

Preference is also given to mixtures comprising as component 2) at least one active compound selected from group J), more preferably selected from compounds (J.1.2), (J.1.3), (J.1.4), (J.1.5), (J.1.8), (J.1.12), (J.13).

Preference is also given to mixtures comprising as component 2) at least one active compound selected from group K), more preferably selected from compounds (K.1.13), (K.1.24), (K.1.47) and (K.1.54), (K.1.60).

Preference is also given to mixtures comprising as pesticide II (component 2) a biopesticide selected from the groups L1), L3) to L5), preferably selected from strains denoted above as (L.1.2), (L.1.3), (L.1.4), (L.1.5), (L.1.6), (L.1.7), (L.1.8), (L.1.10), (L.1.11), (L.1.12), (L.1.13), (L.1.14), (L.1.15), (L.1.17), (L.1.18), (L.1.19), (L.1.20), (L.1.21), (L.1.25), (L.1.26), (L.1.27), (L.1.32), (L.1.46-L.1.56) (L.3.1); (L.3.9), (L.3.16), (L.3.17), (L.5.1), (L.5.2), (L.5.3), (L.5.4), (L.5.5), (L.5.6), (L.5.7), (L.5.8); (L.4.2), and (L.4.1); even more preferably selected from (L.1.2), (L.1.6), (L.1.7), (L.1.8), (L.1.11), (L.1.12), (L.1.13), (L.1.14), (L.1.15), (L.1.18), (L.1.19), (L.1.20), (L.1.21), (L.3.1); (L.3.9), (L.3.16), (L.3.17), (L.5.1), (L.5.2), (L.5.5), (L.5.6); (L.4.2), and (L.4.1). These mixtures are particularly suitable for treatment of propagation materials, i. e. seed treatment purposes and likewise for soil treatment. These seed treatment mixtures are particularly suitable for crops such as monocotyles (e.g. cereals, corn) as well as dicotyles (e.g. vegetables and leguminous plants such as soybean).

Preference is also given to mixtures comprising as pesticide II (component 2) a biopesticide selected from the groups L1), L3) and L4), preferably selected from strains denoted above as (L1.1), (L.1.2), (L.1.3), (L.1.6), (L.1.7), (L.1.9), (L.1.11), (L.1.12), (L.1.13), (L.1.14), (L.1.15), (L.1.17), (L.1.18), (L.1.22), (L.1.23), (L.1.24), (L.1.25), (L.1.26), (L.1.27), (L.1.46), (L.1.47), (L.1.48), (L.1.49), (L.1.50), (L.1.51), (L.1.52), (L.1.53), (L.1.54), (L.1.55), (L.1.56), (L.2.2); (L.3.2), (L.3.3), (L.3.4), (L.3.5), (L.3.6), (L.3.7), (L.3.8), (L.3.10), (L.3.11), (L.3.12), (L.3.13), (L.3.14), (L.3.15), (L.3.18), (L.3.19); (L.4.2), even more preferably selected from (L.1.2), (L.1.7), (L.1.11), (L.1.13), (L.1.14), (L.1.15), (L.1.18), (L.1.23), (L.3.3), (L.3.4), (L.3.6), (L.3.7), (L.3.8), (L.3.10), (L.3.11), (L.3.12), (L.3.15), and (L.4.2). These mixtures are particularly suitable for foliar and seed treatment.

Preference is also given to mixtures comprising as component 2) at least one active compound selected from group M), more preferably selected from compounds (M.1.6), (M.1.24), (M.1.25), (M.1.28), (M.1.29), (M.1.30).

Preference is also given to mixtures comprising as component 2) at least one active compound selected from group N), more preferably selected from compounds (N.7.3), (N.7.4), (N.7.5), (N.13.13).

Preference is also given to mixtures comprising as component 2) at least one active compound selected from group O), more preferably selected from compounds (O.2.4), (O.4.5), (O.4.7), (O.4.8), (O.5.1), (O.26.2), (0.27.17), (O.27.101), (O.27.102).

Particularly preferred are the following binary mixtures A1-1 to A1-805 listed in Table A1, wherein compounds I (component 1, a group represented by the expression "(I)" consisting of compounds (I-1) to (I-23) and one pesticide II selected from the groups A) to O) as defined herein (component 2, for example, (A.1.1) or azoxystrobin, in mixture A-1).

Table A1I:

| Mixture | I | Compound 2 |
|---|---|---|
| A1-1 | (I-1) | A.1.1 |
| A1-2 | (I-1) | A. 1.2 |
| A1-3 | (I-1) | A.1.3 |
| A1-4 | (I-1) | A.1.4 |
| A1-5 | (I-1) | A.1.5 |

(continued)

| Mixture | I | Compound 2 |
|---|---|---|
| A1-6 | (I-1) | A.1.6 |
| A1-7 | (I-1) | A. 1.7 |
| A1-8 | (I-1) | A.1.8 |
| A1-9 | (I-1) | A.1.9 |
| A1-10 | (I-1) | A.1.10 |
| A1-11 | (I-1) | A.1.11 |
| A1-12 | (I-1) | A.1.12 |
| A1-13 | (I-1) | A.1.13 |
| A1-14 | (I-1) | A.1.14 |
| A1-15 | (I-1) | A.1.15 |
| A1-16 | (I-1) | A.1.16 |
| A1-17 | (I-1) | A.1.17 |
| A1-18 | (I-1) | A.1.18 |
| A1-19 | (I-1) | A.1.19 |
| A1-20 | (I-1) | A.1.20 |
| A1-21 | (I-1) | A.1.21 |
| A1-22 | (I-1) | A.1.21a |
| A1-23 | (I-1) | A. 1.22 |
| A1-24 | (I-1) | A.1.23 |
| A1-25 | (I-1) | A. 1.24 |
| A1-26 | (I-1) | A.1.25 |
| A1-27 | (I-1) | A.1.26 |
| A1-28 | (I-1) | A.1.27 |
| A1-29 | (I-1) | A.1.28 |
| A1-30 | (I-1) | A.1.29 |
| A1-31 | (I-1) | A.1.30 |
| A1-32 | (I-1) | A.1.31 |
| A1-33 | (I-1) | A.1.32 |
| A1-34 | (I-1) | A.1.33 |
| A1-35 | (I-1) | A.1.34 |
| A1-36 | (I-1) | A.1.35 |
| A1-37 | (I-1) | A.1.36 |
| A1-38 | (I-1) | A.1.37 |
| A1-39 | (I-1) | A.1.38 |
| A1-40 | (I-1) | A.1.38 |
| A1-41 | (I-1) | A.1.39 |
| A1-42 | (I-1) | A.2.1 |
| A1-43 | (I-1) | A.2.2 |
| A1-44 | (I-1) | A.2.3 |

(continued)

| Mixture | I | Compound 2 |
|---|---|---|
| A1-45 | (I-1) | A.2.4 |
| A1-46 | (I-1) | A.2.5 |
| A1-47 | (I-1) | A.3.1 |
| A1-48 | (I-1) | A.3.2 |
| A1-49 | (I-1) | A.3.3 |
| A1-50 | (I-1) | A.3.4 |
| A1-51 | (I-1) | A.3.5 |
| A1-52 | (I-1) | A.3.6 |
| A1-53 | (I-1) | A.3.7 |
| A1-54 | (I-1) | A.3.8 |
| A1-55 | (I-1) | A.3.9 |
| A1-56 | (I-1) | A.3.10 |
| A1-57 | (I-1) | A.3.11 |
| A1-58 | (I-1) | A.3.12 |
| A1-59 | (I-1) | A.3.13 |
| A1-60 | (I-1) | A.3.14 |
| A1-61 | (I-1) | A.3.15 |
| A1-62 | (I-1) | A.3.16 |
| A1-63 | (I-1) | A.3.17 |
| A1-64 | (I-1) | A.3.18 |
| A1-65 | (I-1) | A.3.19 |
| A1-66 | (I-1) | A.3.20 |
| A1-67 | (I-1) | A.3.21 |
| A1-68 | (I-1) | A.3.22 |
| A1-69 | (I-1) | A.3.23 |
| A1-70 | (I-1) | A.3.24 |
| A1-71 | (I-1) | A.3.25 |
| A1-72 | (I-1) | A.3.26 |
| A1-73 | (I-1) | A.3.27 |
| A1-74 | (I-1) | A.3.28 |
| A1-75 | (I-1) | A.3.29 |
| A1-76 | (I-1) | A.3.30 |
| A1-77 | (I-1) | A.3.31 |
| A1-78 | (I-1) | A.3.32 |
| A1-79 | (I-1) | A.3.33 |
| A1-80 | (I-1) | A.3.34 |
| A1-81 | (I-1) | A.3.35 |
| A1-82 | (I-1) | A.3.36 |
| A1-83 | (I-1) | A.3.37 |

(continued)

| Mixture | I | Compound 2 |
|---|---|---|
| A1-84 | (I-1) | A.3.38 |
| A1-85 | (I-1) | A.3.39 |
| A1-86 | (I-1) | A.4.1 |
| A1-87 | (I-1) | A.4.2 |
| A1-88 | (I-1) | A.4.3 |
| A1-89 | (I-1) | A.4.4 |
| A1-90 | (I-1) | A.4.5 |
| A1-91 | (I-1) | A.4.6 |
| A1-92 | (I-1) | A.4.7 |
| A1-93 | (I-1) | A.4.8 |
| A1-94 | (I-1) | A.4.9 |
| A1-95 | (I-1) | A.4.10 |
| A1-96 | (I-1) | A.4.11 |
| A1-97 | (I-1) | A.4.12 |
| A1-98 | (I-1) | B.1.1 |
| A1-99 | (I-1) | B.1.2 |
| A1-100 | (I-1) | B.1.3 |
| A1-101 | (I-1) | B.1.4 |
| A1-102 | (I-1) | B.1.5 |
| A1-103 | (I-1) | B.1.6 |
| A1-104 | (I-1) | B.1.7 |
| A1-105 | (I-1) | B.1.8 |
| A1-106 | (I-1) | B.1.9 |
| A1-107 | (I-1) | B.1.10 |
| A1-108 | (I-1) | B.1.11 |
| A1-109 | (I-1) | B.1.12 |
| A1-110 | (I-1) | B.1.13 |
| A1-111 | (I-1) | B.1.14 |
| A1-112 | (I-1) | B.1.15 |
| A1-113 | (I-1) | B.1.16 |
| A1-114 | (I-1) | B.1.17 |
| A1-115 | (I-1) | B.1.18 |
| A1-116 | (I-1) | B.1.19 |
| A1-117 | (I-1) | B.1.20 |
| A1-118 | (I-1) | B.1.21 |
| A1-119 | (I-1) | B.1.22 |
| A1-120 | (I-1) | B.1.23 |
| A1-121 | (I-1) | B.1.24 |
| A1-122 | (I-1) | B.1.25 |

(continued)

| Mixture | I | Compound 2 |
|---|---|---|
| A1-123 | (I-1) | B.1.26 |
| A1-124 | (I-1) | B.1.27 |
| A1-125 | (I-1) | B.1.28 |
| A1-126 | (I-1) | B.1.29 |
| A1-127 | (I-1) | B.1.30 |
| A1-128 | (I-1) | B.1.31 |
| A1-129 | (I-1) | B.1.32 |
| A1-130 | (I-1) | B.1.33 |
| A1-131 | (I-1) | B.1.34 |
| A1-132 | (I-1) | B.1.35 |
| A1-133 | (I-1) | B.1.36 |
| A1-134 | (I-1) | B.1.37 |
| A1-135 | (I-1) | B.1.38 |
| A1-136 | (I-1) | B.1.39 |
| A1-137 | (I-1) | B.1.40 |
| A1-138 | (I-1) | B.1.41 |
| A1-139 | (I-1) | B.1.42 |
| A1-140 | (I-1) | B.1.43 |
| A1-141 | (I-1) | B.1.44 |
| A1-142 | (I-1) | B.1.45 |
| A1-143 | (I-1) | B.1.46 |
| A1-144 | (I-1) | B.1.47 |
| A1-145 | (I-1) | B.1.48 |
| A1-146 | (I-1) | B.1.49 |
| A1-147 | (I-1) | B.1.50 |
| A1-148 | (I-1) | B.1.51 |
| A1-149 | (I-1) | B.1.52 |
| A1-150 | (I-1) | B.2.1 |
| A1-151 | (I-1) | B.2.2 |
| A1-152 | (I-1) | B.2.3 |
| A1-153 | (I-1) | B.2.4 |
| A1-154 | (I-1) | B.2.5 |
| A1-155 | (I-1) | B.2.6 |
| A1-156 | (I-1) | B.2.7 |
| A1-157 | (I-1) | B.2.8 |
| A1-158 | (I-1) | B.3.1 |
| A1-159 | (I-1) | B.4.1 |
| A1-160 | (I-1) | C.1.1 |
| A1-161 | (I-1) | C.1.2 |

(continued)

| Mixture | I | Compound 2 |
|---|---|---|
| A1-162 | (I-1) | C.1.3 |
| A1-163 | (I-1) | C.1.4 |
| A1-164 | (I-1) | C.1.5 |
| A1-165 | (I-1) | C.1.6 |
| A1-166 | (I-1) | C.1.7 |
| A1-167 | (I-1) | C.2.1 |
| A1-168 | (I-1) | C.2.2 |
| A1-169 | (I-1) | C.2.3 |
| A1-170 | (I-1) | C.2.4 |
| A1-171 | (I-1) | C.2.5 |
| A1-172 | (I-1) | C.2.6 |
| A1-173 | (I-1) | C.2.7 |
| A1-174 | (I-1) | C.2.8 |
| A1-175 | (I-1) | D.1.1 |
| A1-176 | (I-1) | D.1.2 |
| A1-177 | (I-1) | D.1.3 |
| A1-178 | (I-1) | D.1.4 |
| A1-179 | (I-1) | D.1.5 |
| A1-180 | (I-1) | D.1.6 |
| A1-181 | (I-1) | D.1.7 |
| A1-182 | (I-1) | D.1.8 |
| A1-183 | (I-1) | D.1.9 |
| A1-184 | (I-1) | D.1.10 |
| A1-185 | (I-1) | D.1.11 |
| A1-186 | (I-1) | D.1.12 |
| A1-187 | (I-1) | D.1.13 |
| A1-188 | (I-1) | D.1.14 |
| A1-189 | (I-1) | D.1.15 |
| A1-190 | (I-1) | D.1.16 |
| A1-191 | (I-1) | D.2.1 |
| A1-192 | (I-1) | D.2.2 |
| A1-193 | (I-1) | D.2.3 |
| A1-194 | (I-1) | D.2.4 |
| A1-195 | (I-1) | D.2.5 |
| A1-196 | (I-1) | D.2.6 |
| A1-197 | (I-1) | D.2.7 |
| A1-198 | (I-1) | E.1.1 |
| A1-199 | (I-1) | E.1.2 |
| A1-200 | (I-1) | E.1.3 |

(continued)

| Mixture | I | Compound 2 |
|---|---|---|
| A1-201 | (I-1) | E.2.1 |
| A1-202 | (I-1) | E.2.2 |
| A1-203 | (I-1) | E.2.3 |
| A1-204 | (I-1) | E.2.4 |
| A1-205 | (I-1) | E.2.5 |
| A1-206 | (I-1) | E.2.6 |
| A1-207 | (I-1) | F.1.1 |
| A1-208 | (I-1) | F.1.2 |
| A1-209 | (I-1) | F.1.3 |
| A1-210 | (I-1) | F.1.4 |
| A1-211 | (I-1) | F.1.5 |
| A1-212 | (I-1) | F.2.1 |
| A1-213 | (I-1) | G.1.1 |
| A1-214 | (I-1) | G.1.2 |
| A1-215 | (I-1) | G.1.3 |
| A1-216 | (I-1) | G.1.4 |
| A1-217 | (I-1) | G.2.1 |
| A1-218 | (I-1) | G.2.2 |
| A1-219 | (I-1) | G.2.3 |
| A1-220 | (I-1) | G.2.4 |
| A1-221 | (I-1) | G.2.5 |
| A1-222 | (I-1) | G.2.6 |
| A1-223 | (I-1) | G.2.7 |
| A1-224 | (I-1) | G.3.1 |
| A1-225 | (I-1) | G.3.2 |
| A1-226 | (I-1) | G.3.3 |
| A1-227 | (I-1) | G.3.4 |
| A1-228 | (I-1) | G.3.5 |
| A1-229 | (I-1) | G.3.6 |
| A1-230 | (I-1) | G.3.7 |
| A1-231 | (I-1) | G.4.1 |
| A1-232 | (I-1) | G.5.1 |
| A1-233 | (I-1) | G.5.2 |
| A1-234 | (I-1) | G.5.3 |
| A1-235 | (I-1) | G.5.4 |
| A1-236 | (I-1) | G.5.5 |
| A1-237 | (I-1) | G.5.6 |
| A1-238 | (I-1) | G.5.7 |
| A1-239 | (I-1) | G.5.8 |

(continued)

| Mixture | I | Compound 2 |
|---|---|---|
| A1-240 | (I-1) | G.5.9 |
| A1-241 | (I-1) | G.5.10 |
| A1-242 | (I-1) | G.5.11 |
| A1-243 | (I-1) | H.1.1 |
| A1-244 | (I-1) | H.1.2 |
| A1-245 | (I-1) | H.1.3 |
| A1-246 | (I-1) | H.1.4 |
| A1-247 | (I-1) | H.1.5 |
| A1-248 | (I-1) | H.1.6 |
| A1-249 | (I-1) | H.1.7 |
| A1-250 | (I-1) | H.2.1 |
| A1-251 | (I-1) | H.2.2 |
| A1-252 | (I-1) | H.2.3 |
| A1-253 | (I-1) | H.2.4 |
| A1-254 | (I-1) | H.2.5 |
| A1-255 | (I-1) | H.2.6 |
| A1-256 | (I-1) | H.2.7 |
| A1-257 | (I-1) | H.2.8 |
| A1-258 | (I-1) | H.2.9 |
| A1-259 | (I-1) | H.3.1 |
| A1-260 | (I-1) | H.3.2 |
| A1-261 | (I-1) | H.3.3 |
| A1-262 | (I-1) | H.3.4 |
| A1-263 | (I-1) | H.3.5 |
| A1-264 | (I-1) | H.3.6 |
| A1-265 | (I-1) | H.3.7 |
| A1-266 | (I-1) | H.3.8 |
| A1-267 | (I-1) | H.3.9 |
| A1-268 | (I-1) | H.3.10 |
| A1-269 | (I-1) | H.3.11 |
| A1-270 | (I-1) | H.4.1 |
| A1-271 | (I-1) | H.4.2 |
| A1-272 | (I-1) | H.4.3 |
| A1-273 | (I-1) | H.4.4 |
| A1-274 | (I-1) | H.4.5 |
| A1-275 | (I-1) | H.4.6 |
| A1-276 | (I-1) | H.4.7 |
| A1-277 | (I-1) | H.4.8 |
| A1-278 | (I-1) | H.4.9 |

(continued)

| Mixture | I | Compound 2 |
|---|---|---|
| A1-279 | (I-1) | H.4.10 |
| A1-280 | (I-1) | I.1.1 |
| A1-281 | (I-1) | I.1.2 |
| A1-282 | (I-1) | I.2.1 |
| A1-283 | (I-1) | I.2.2 |
| A1-284 | (I-1) | I.2.3 |
| A1-285 | (I-1) | I.2.4 |
| A1-286 | (I-1) | I.2.5 |
| A1-287 | (I-1) | J.1.1 |
| A1-288 | (I-1) | J.1.2 |
| A1-289 | (I-1) | J.1.3 |
| A1-290 | (I-1) | J.1.4 |
| A1-291 | (I-1) | J.1.5 |
| A1-292 | (I-1) | J.1.6 |
| A1-293 | (I-1) | J.1.7 |
| A1-294 | (I-1) | J.1.8 |
| A1-295 | (I-1) | J.1.9 |
| A1-296 | (I-1) | J.1.10 |
| A1-297 | (I-1) | J.1.11 |
| A1-298 | (I-1) | J.1.12 |
| A1-299 | (I-1) | K.1.1 |
| A1-300 | (I-1) | K.1.2 |
| A1-301 | (I-1) | K.1.3 |
| A1-302 | (I-1) | K.1.4 |
| A1-303 | (I-1) | K.1.5 |
| A1-304 | (I-1) | K.1.6 |
| A1-305 | (I-1) | K.1.7 |
| A1-306 | (I-1) | K.1.8 |
| A1-307 | (I-1) | K.1.9 |
| A1-308 | (I-1) | K.1.10 |
| A1-309 | (I-1) | K.1.11 |
| A1-310 | (I-1) | K.1.12 |
| A1-311 | (I-1) | K.1.13 |
| A1-312 | (I-1) | K.1.14 |
| A1-313 | (I-1) | K.1.15 |
| A1-314 | (I-1) | K.1.16 |
| A1-315 | (I-1) | K.1.17 |
| A1-316 | (I-1) | K.1.18 |
| A1-317 | (I-1) | K.1.19 |

(continued)

| Mixture | I | Compound 2 |
|---|---|---|
| A1-318 | (I-1) | K.1.20 |
| A1-319 | (I-1) | K.1.21 |
| A1-320 | (I-1) | K.1.22 |
| A1-321 | (I-1) | K.1.23 |
| A1-322 | (I-1) | K.1.24 |
| A1-323 | (I-1) | K.1.25 |
| A1-324 | (I-1) | K.1.26 |
| A1-325 | (I-1) | K.1.27 |
| A1-326 | (I-1) | K.1.28 |
| A1-327 | (I-1) | K.1.29 |
| A1-328 | (I-1) | K.1.30 |
| A1-329 | (I-1) | K.1.31 |
| A1-330 | (I-1) | K.1.32 |
| A1-331 | (I-1) | K.1.33 |
| A1-332 | (I-1) | K.1.34 |
| A1-333 | (I-1) | K.1.35 |
| A1-334 | (I-1) | K.1.36 |
| A1-335 | (I-1) | K.1.37 |
| A1-336 | (I-1) | K.1.38 |
| A1-337 | (I-1) | K.1.39 |
| A1-338 | (I-1) | K.1.40 |
| A1-339 | (I-1) | K.1.41 |
| A1-340 | (I-1) | K.1.42 |
| A1-341 | (I-1) | K.1.43 |
| A1-342 | (I-1) | K.1.44 |
| A1-343 | (I-1) | K.1.45 |
| A1-344 | (I-1) | K.1.46 |
| A1-345 | (I-1) | K.1.47 |
| A1-346 | (I-1) | K.1.48 |
| A1-347 | (I-1) | K.1.49 |
| A1-348 | (I-1) | K.1.50 |
| A1-349 | (I-1) | K.1.51 |
| A1-350 | (I-1) | K.1.52 |
| A1-351 | (I-1) | K.1.53 |
| A1-352 | (I-1) | K.1.54 |
| A1-353 | (I-1) | L.1.1 |
| A1-354 | (I-1) | L.1.2 |
| A1-355 | (I-1) | L.1.3 |
| A1-356 | (I-1) | L.1.4 |

(continued)

| Mixture | I | Compound 2 |
|---|---|---|
| A1-357 | (I-1) | L.1.5 |
| A1-358 | (I-1) | L.1.6 |
| A1-359 | (I-1) | L.1.7 |
| A1-360 | (I-1) | L.1.8 |
| A1-361 | (I-1) | L.1.9 |
| A1-362 | (I-1) | L.1.10 |
| A1-363 | (I-1) | L.1.11 |
| A1-364 | (I-1) | L.1.12 |
| A1-365 | (I-1) | L.1.13 |
| A1-366 | (I-1) | L.1.14 |
| A1-367 | (I-1) | L.1.15 |
| A1-368 | (I-1) | L.1.16 |
| A1-369 | (I-1) | L.1.17 |
| A1-370 | (I-1) | L.1.18 |
| A1-371 | (I-1) | L.1.19 |
| A1-372 | (I-1) | L.1.20 |
| A1-373 | (I-1) | L.1.21 |
| A1-374 | (I-1) | L.1.22 |
| A1-375 | (I-1) | L.1.23 |
| A1-376 | (I-1) | L.1.24 |
| A1-377 | (I-1) | L.1.25 |
| A1-378 | (I-1) | L.1.26 |
| A1-379 | (I-1) | L.1.27 |
| A1-380 | (I-1) | L.1.28 |
| A1-381 | (I-1) | L.1.29 |
| A1-382 | (I-1) | L.1.30 |
| A1-383 | (I-1) | L.1.31 |
| A1-384 | (I-1) | L.1.32 |
| A1-385 | (I-1) | L.1.33 |
| A1-386 | (I-1) | L.1.34 |
| A1-387 | (I-1) | L.1.35 |
| A1-388 | (I-1) | L.1.36 |
| A1-389 | (I-1) | L.1.37 |
| A1-390 | (I-1) | L.1.38 |
| A1-391 | (I-1) | L.1.39 |
| A1-392 | (I-1) | L.1.40 |
| A1-393 | (I-1) | L.1.41 |
| A1-394 | (I-1) | L.1.42 |
| A1-395 | (I-1) | L.1.43 |

(continued)

| Mixture | I | Compound 2 |
|---|---|---|
| A1-396 | (I-1) | L.1.44 |
| A1-397 | (I-1) | L.1.45 |
| A1-398 | (I-1) | L.1.46 |
| A1-399 | (I-1) | L.1.47 |
| A1-400 | (I-1) | L.1.48 |
| A1-401 | (I-1) | L.1.49 |
| A1-402 | (I-1) | L.1.50 |
| A1-403 | (I-1) | L.1.51 |
| A1-404 | (I-1) | L.1.52 |
| A1-405 | (I-1) | L.1.53 |
| A1-406 | (I-1) | L.1.54 |
| A1-407 | (I-1) | L.1.55 |
| A1-408 | (I-1) | L.1.56 |
| A1-409 | (I-1) | L.1.57 |
| A1-410 | (I-1) | L.1.58 |
| A1-411 | (I-1) | L.1.59 |
| A1-412 | (I-1) | M.1.1 |
| A1-413 | (I-1) | M.1.2 |
| A1-414 | (I-1) | M.1.3 |
| A1-415 | (I-1) | M.1.4 |
| A1-416 | (I-1) | M.1.5 |
| A1-417 | (I-1) | M.1.6 |
| A1-418 | (I-1) | M.1.7 |
| A1-419 | (I-1) | M.1.8 |
| A1-420 | (I-1) | M.1.9 |
| A1-421 | (I-1) | M.1.10 |
| A1-422 | (I-1) | M.1.11 |
| A1-423 | (I-1) | M.1.12 |
| A1-424 | (I-1) | M.1.13 |
| A1-425 | (I-1) | M.1.14 |
| A1-426 | (I-1) | M.1.15 |
| A1-427 | (I-1) | M.1.16 |
| A1-428 | (I-1) | M.1.17 |
| A1-429 | (I-1) | M.1.18 |
| A1-430 | (I-1) | M.1.19 |
| A1-431 | (I-1) | M.1.20 |
| A1-432 | (I-1) | M.1.21 |
| A1-433 | (I-1) | M.1.22 |
| A1-434 | (I-1) | M.1.23 |

(continued)

| Mixture | I | Compound 2 |
|---|---|---|
| A1-435 | (I-1) | M.1.24 |
| A1-436 | (I-1) | M.1.25 |
| A1-437 | (I-1) | M.1.26 |
| A1-438 | (I-1) | M.1.27 |
| A1-439 | (I-1) | M.1.28 |
| A1-440 | (I-1) | M.1.29 |
| A1-441 | (I-1) | M.1.30 |
| A1-442 | (I-1) | M.1.31 |
| A1-443 | (I-1) | M.1.32 |
| A1-444 | (I-1) | M.1.33 |
| A1-445 | (I-1) | M.1.34 |
| A1-446 | (I-1) | M.1.35 |
| A1-447 | (I-1) | M.1.36 |
| A1-448 | (I-1) | O.1.1 |
| A1-449 | (I-1) | O.1.2 |
| A1-450 | (I-1) | O.1.3 |
| A1-451 | (I-1) | O.1.4 |
| A1-452 | (I-1) | O.1.5 |
| A1-453 | (I-1) | O.1.6 |
| A1-454 | (I-1) | O.1.7 |
| A1-455 | (I-1) | O.1.8 |
| A1-456 | (I-1) | O.1.9 |
| A1-457 | (I-1) | O.1.10 |
| A1-458 | (I-1) | O.1.11 |
| A1-459 | (I-1) | O.1.12 |
| A1-460 | (I-1) | O.1.13 |
| A1-461 | (I-1) | O.1.14 |
| A1-462 | (I-1) | O.1.15 |
| A1-463 | (I-1) | O.1.16 |
| A1-464 | (I-1) | O.1.17 |
| A1-465 | (I-1) | O.1.18 |
| A1-466 | (I-1) | O.1.19 |
| A1-467 | (I-1) | O.1.20 |
| A1-468 | (I-1) | O.1.21 |
| A1-469 | (I-1) | O.1.22 |
| A1-470 | (I-1) | O.1.23 |
| A1-471 | (I-1) | O.1.24 |
| A1-472 | (I-1) | O.1.25 |
| A1-473 | (I-1) | O.1.26 |

(continued)

| Mixture | I | Compound 2 |
|---|---|---|
| A1-474 | (I-1) | O.1.27 |
| A1-475 | (I-1) | O.1.28 |
| A1-476 | (I-1) | O.1.29 |
| A1-477 | (I-1) | O.1.30 |
| A1-478 | (I-1) | O.1.31 |
| A1-479 | (I-1) | O.1.32 |
| A1-480 | (I-1) | O.1.33 |
| A1-481 | (I-1) | O.1.34 |
| A1-482 | (I-1) | O.1.35 |
| A1-483 | (I-1) | O.1.36 |
| A1-484 | (I-1) | O.1.37 |
| A1-485 | (I-1) | O.1.38 |
| A1-486 | (I-1) | O.1.39 |
| A1-487 | (I-1) | O.1.40 |
| A1-488 | (I-1) | O.1.41 |
| A1-489 | (I-1) | O.1.42 |
| A1-490 | (I-1) | O.1.43 |
| A1-491 | (I-1) | O.1.44 |
| A1-492 | (I-1) | O.1.45 |
| A1-493 | (I-1) | O.1.46 |
| A1-494 | (I-1) | O.1.47 |
| A1-495 | (I-1) | O.1.48 |
| A1-496 | (I-1) | O.1.49 |
| A1-497 | (I-1) | O.1.50 |
| A1-498 | (I-1) | O.1.51 |
| A1-499 | (I-1) | O.1.52 |
| A1-500 | (I-1) | O.1.53 |
| A1-501 | (I-1) | O.1.54 |
| A1-502 | (I-1) | O.1.55 |
| A1-503 | (I-1) | O.1.56 |
| A1-504 | (I-1) | O.1.57 |
| A1-505 | (I-1) | O.1.58 |
| A1-506 | (I-1) | O.1.59 |
| A1-507 | (I-1) | O.1.60 |
| A1-508 | (I-1) | O.1.61 |
| A1-509 | (I-1) | O.1.62 |
| A1-510 | (I-1) | O.1.63 |
| A1-511 | (I-1) | O.1.64 |
| A1-512 | (I-1) | O.1.65 |

(continued)

| Mixture | I | Compound 2 |
|---|---|---|
| A1-513 | (I-1) | O.1.66 |
| A1-514 | (I-1) | O.1.67 |
| A1-515 | (I-1) | O.1.68 |
| A1-516 | (I-1) | O.1.69 |
| A1-517 | (I-1) | O.1.70 |
| A1-518 | (I-1) | O.1.71 |
| A1-519 | (I-1) | O.1.72 |
| A1-520 | (I-1) | O.1.73 |
| A1-521 | (I-1) | O.1.74 |
| A1-522 | (I-1) | O.1.75 |
| A1-523 | (I-1) | O.1.76 |
| A1-524 | (I-1) | O.1.77 |
| A1-525 | (I-1) | O.1.78 |
| A1-526 | (I-1) | O.1.79 |
| A1-527 | (I-1) | O.1.80 |
| A1-528 | (I-1) | O.1.81 |
| A1-529 | (I-1) | O.1.82 |
| A1-530 | (I-1) | O.1.83 |
| A1-531 | (I-1) | O.1.84 |
| A1-532 | (I-1) | O.1.85 |
| A1-533 | (I-1) | O.1.86 |
| A1-534 | (I-1) | O.1.87 |
| A1-535 | (I-1) | O.1.88 |
| A1-536 | (I-1) | O.1.89 |
| A1-537 | (I-1) | O.1.90 |
| A1-538 | (I-1) | O.1.91 |
| A1-539 | (I-1) | O.2.1 |
| A1-540 | (I-1) | O.2.2 |
| A1-541 | (I-1) | O.2.3 |
| A1-542 | (I-1) | O.2.4 |
| A1-543 | (I-1) | O.2.5 |
| A1-544 | (I-1) | O.2.6 |
| A1-545 | (I-1) | O.2.7 |
| A1-546 | (I-1) | O.3.1 |
| A1-547 | (I-1) | O.3.2 |
| A1-548 | (I-1) | O.3.3 |
| A1-549 | (I-1) | O.3.4 |
| A1-550 | (I-1) | O.3.5 |
| A1-551 | (I-1) | O.3.6 |

(continued)

| Mixture | I | Compound 2 |
|---|---|---|
| A1-552 | (I-1) | O.3.7 |
| A1-553 | (I-1) | O.3.8 |
| A1-554 | (I-1) | O.3.9 |
| A1-555 | (I-1) | O.3.10 |
| A1-556 | (I-1) | O.3.11 |
| A1-557 | (I-1) | O.3.12 |
| A1-558 | (I-1) | O.3.13 |
| A1-559 | (I-1) | O.3.14 |
| A1-560 | (I-1) | O.3.15 |
| A1-561 | (I-1) | O.3.16 |
| A1-562 | (I-1) | O.3.17 |
| A1-563 | (I-1) | O.3.18 |
| A1-564 | (I-1) | O.3.19 |
| A1-565 | (I-1) | O.3.20 |
| A1-566 | (I-1) | O.3.21 |
| A1-567 | (I-1) | O.3.22 |
| A1-568 | (I-1) | O.3.23 |
| A1-569 | (I-1) | O.3.24 |
| A1-570 | (I-1) | O.3.25 |
| A1-571 | (I-1) | O.3.26 |
| A1-572 | (I-1) | O.3.27 |
| A1-573 | (I-1) | O.3.28 |
| A1-574 | (I-1) | O.3.29 |
| A1-575 | (I-1) | O.3.30 |
| A1-576 | (I-1) | O.3.31 |
| A1-577 | (I-1) | O.3.32 |
| A1-578 | (I-1) | O.3.33 |
| A1-579 | (I-1) | O.3.34 |
| A1-580 | (I-1) | O.3.35 |
| A1-581 | (I-1) | O.3.36 |
| A1-582 | (I-1) | O.3.37 |
| A1-583 | (I-1) | O.3.38 |
| A1-584 | (I-1) | O.3.39 |
| A1-585 | (I-1) | O.3.40 |
| A1-586 | (I-1) | O.3.41 |
| A1-587 | (I-1) | O.3.42 |
| A1-588 | (I-1) | O.3.43 |
| A1-589 | (I-1) | O.3.44 |
| A1-590 | (I-1) | O.3.45 |

(continued)

| Mixture | I | Compound 2 |
|---|---|---|
| A1-591 | (I-1) | O.3.46 |
| A1-592 | (I-1) | O.3.47 |
| A1-593 | (I-1) | O.3.48 |
| A1-594 | (I-1) | O.4.1 |
| A1-595 | (I-1) | O.4.2 |
| A1-596 | (I-1) | O.4.3 |
| A1-597 | (I-1) | O.4.4 |
| A1-598 | (I-1) | O.4.5 |
| A1-599 | (I-1) | O.4.6 |
| A1-600 | (I-1) | O.4.7 |
| A1-601 | (I-1) | O.4.8 |
| A1-602 | (I-1) | O.4.9 |
| A1-603 | (I-1) | 0.4.10 |
| A1-604 | (I-1) | 0.4.11 |
| A1-605 | (I-1) | 0.5.1 |
| A1-606 | (I-1) | O.5.2 |
| A1-607 | (I-1) | 0.6.1 |
| A1-608 | (I-1) | O.6.2 |
| A1-609 | (I-1) | O.6.3 |
| A1-610 | (I-1) | O.6.4 |
| A1-611 | (I-1) | O.6.5 |
| A1-612 | (I-1) | 0.7.1 |
| A1-613 | (I-1) | O.7.2 |
| A1-614 | (I-1) | O.7.3 |
| A1-615 | (I-1) | O.7.4 |
| A1-616 | (I-1) | O.7.5 |
| A1-617 | (I-1) | 0.8.1 |
| A1-618 | (I-1) | O.8.2 |
| A1-619 | (I-1) | O.8.3 |
| A1-620 | (I-1) | O.8.4 |
| A1-621 | (I-1) | O.8.5 |
| A1-622 | (I-1) | 0.9.1 |
| A1-623 | (I-1) | O.9.2 |
| A1-624 | (I-1) | O.10.1 |
| A1-625 | (I-1) | 0.10.2 |
| A1-626 | (I-1) | 0.10.3 |
| A1-627 | (I-1) | 0.10.4 |
| A1-628 | (I-1) | 0.12.1 |
| A1-629 | (I-1) | 0.12.2 |

(continued)

| Mixture | I | Compound 2 |
|---|---|---|
| A1-630 | (I-1) | 0.12.3 |
| A1-631 | (I-1) | 0.12.4 |
| A1-632 | (I-1) | 0.12.5 |
| A1-633 | (I-1) | 0.12.6 |
| A1-634 | (I-1) | 0.13.1 |
| A1-635 | (I-1) | 0.13.2 |
| A1-636 | (I-1) | 0.13.3 |
| A1-637 | (I-1) | 0.14.1 |
| A1-638 | (I-1) | 0.14.2 |
| A1-639 | (I-1) | 0.14.3 |
| A1-640 | (I-1) | 0.14.4 |
| A1-641 | (I-1) | 0.15.1 |
| A1-642 | (I-1) | 0.15.2 |
| A1-643 | (I-1) | 0.15.3 |
| A1-644 | (I-1) | 0.15.4 |
| A1-645 | (I-1) | 0.15.5 |
| A1-646 | (I-1) | 0.15.6 |
| A1-647 | (I-1) | 0.15.7 |
| A1-648 | (I-1) | 0.15.8 |
| A1-649 | (I-1) | 0.15.9 |
| A1-650 | (I-1) | 0.15.10 |
| A1-651 | (I-1) | 0.15.11 |
| A1-652 | (I-1) | 0.16.1 |
| A1-653 | (I-1) | 0.17.1 |
| A1-654 | (I-1) | 0.18.1 |
| A1-655 | (I-1) | 0.18.2 |
| A1-656 | (I-1) | 0.18.3 |
| A1-657 | (I-1) | 0.18.4 |
| A1-658 | (I-1) | 0.18.5 |
| A1-659 | (I-1) | 0.19.1 |
| A1-660 | (I-1) | 0.20.1 |
| A1-661 | (I-1) | O.20.2 |
| A1-662 | (I-1) | O.20.3 |
| A1-663 | (I-1) | 0.21.1 |
| A1-664 | (I-1) | 0.21.2 |
| A1-665 | (I-1) | 0.21.3 |
| A1-666 | (I-1) | 0.21.4 |
| A1-667 | (I-1) | 0.21.5 |
| A1-668 | (I-1) | 0.21.6 |

(continued)

| Mixture | I | Compound 2 |
|---|---|---|
| A1-669 | (I-1) | 0.21.7 |
| A1-670 | (I-1) | 0.22.1 |
| A1-671 | (I-1) | O.22.2 |
| A1-672 | (I-1) | O.22.3 |
| A1-673 | (I-1) | O.22.4 |
| A1-674 | (I-1) | 0.23.1 |
| A1-675 | (I-1) | O.23.2 |
| A1-676 | (I-1) | O.23.3 |
| A1-677 | (I-1) | 0.24.1 |
| A1-678 | (I-1) | O.24.2 |
| A1-679 | (I-1) | O.24.3 |
| A1-680 | (I-1) | O.24.4 |
| A1-681 | (I-1) | O.24.5 |
| A1-682 | (I-1) | 0.25.1 |
| A1-683 | (I-1) | O.25.2 |
| A1-684 | (I-1) | 0.26.1 |
| A1-685 | (I-1) | O.26.2 |
| A1-686 | (I-1) | O.26.3 |
| A1-687 | (I-1) | O.26.4 |
| A1-688 | (I-1) | O.26.5 |
| A1-689 | (I-1) | O.26.6 |
| A1-690 | (I-1) | O.26.7 |
| A1-691 | (I-1) | O.26.8 |
| A1-692 | (I-1) | O.26.9 |
| A1-693 | (I-1) | 0.26.10 |
| A1-694 | (I-1) | 0.26.11 |
| A1-695 | (I-1) | 0.26.12 |
| A1-696 | (I-1) | 0.26.13 |
| A1-697 | (I-1) | 0.26.14 |
| A1-698 | (I-1) | 0.26.15 |
| A1-699 | (I-1) | 0.26.16 |
| A1-700 | (I-1) | 0.26.17 |
| A1-701 | (I-1) | 0.26.18 |
| A1-702 | (I-1) | 0.27.1 |
| A1-703 | (I-1) | O.27.2 |
| A1-704 | (I-1) | O.27.3 |
| A1-705 | (I-1) | O.27.4 |
| A1-706 | (I-1) | O.27.5 |
| A1-707 | (I-1) | O.27.6 |

(continued)

| Mixture | I | Compound 2 |
|---|---|---|
| A1-708 | (I-1) | O.27.7 |
| A1-709 | (I-1) | O.27.8 |
| A1-710 | (I-1) | O.27.9 |
| A1-711 | (I-1) | 0.27.10 |
| A1-712 | (I-1) | 0.27.11 |
| A1-713 | (I-1) | 0.27.12 |
| A1-714 | (I-1) | 0.27.13 |
| A1-715 | (I-1) | 0.27.14 |
| A1-716 | (I-1) | 0.27.15 |
| A1-717 | (I-1) | 0.27.16 |
| A1-718 | (I-1) | 0.27.17 |
| A1-719 | (I-1) | 0.27.18 |
| A1-720 | (I-1) | 0.27.19 |
| A1-721 | (I-1) | O.27.20 |
| A1-722 | (I-1) | 0.27.21 |
| A1-723 | (I-1) | O.27.22 |
| A1-724 | (I-1) | O.27.23 |
| A1-725 | (I-1) | O.27.24 |
| A1-726 | (I-1) | O.27.25 |
| A1-727 | (I-1) | O.27.26 |
| A1-728 | (I-1) | O.27.27 |
| A1-729 | (I-1) | O.27.28 |
| A1-730 | (I-1) | O.27.29 |
| A1-731 | (I-1) | O.27.30 |
| A1-732 | (I-1) | 0.27.31 |
| A1-733 | (I-1) | O.27.32 |
| A1-734 | (I-1) | O.27.33 |
| A1-735 | (I-1) | O.27.34 |
| A1-736 | (I-1) | O.27.35 |
| A1-737 | (I-1) | O.27.36 |
| A1-738 | (I-1) | O.27.37 |
| A1-739 | (I-1) | O.27.38 |
| A1-740 | (I-1) | O.27.39 |
| A1-741 | (I-1) | O.27.40 |
| A1-742 | (I-1) | 0.27.41 |
| A1-743 | (I-1) | O.27.42 |
| A1-744 | (I-1) | O.27.43 |
| A1-745 | (I-1) | O.27.44 |
| A1-746 | (I-1) | O.27.45 |

(continued)

| Mixture | I | Compound 2 |
|---|---|---|
| A1-747 | (I-1) | O.27.46 |
| A1-748 | (I-1) | O.27.47 |
| A1-749 | (I-1) | O.27.48 |
| A1-750 | (I-1) | O.27.49 |
| A1-751 | (I-1) | O.27.50 |
| A1-752 | (I-1) | 0.27.51 |
| A1-753 | (I-1) | O.27.52 |
| A1-754 | (I-1) | O.27.53 |
| A1-755 | (I-1) | O.27.54 |
| A1-756 | (I-1) | O.27.55 |
| A1-757 | (I-1) | O.27.56 |
| A1-758 | (I-1) | O.27.57 |
| A1-759 | (I-1) | O.27.58 |
| A1-760 | (I-1) | O.27.59 |
| A1-761 | (I-1) | O.27.60 |
| A1-762 | (I-1) | 0.27.61 |
| A1-763 | (I-1) | O.27.62 |
| A1-764 | (I-1) | O.27.63 |
| A1-765 | (I-1) | O.27.64 |
| A1-766 | (I-1) | O.27.65 |
| A1-767 | (I-1) | O.27.66 |
| A1-768 | (I-1) | O.27.67 |
| A1-769 | (I-1) | O.27.68 |
| A1-770 | (I-1) | O.27.69 |
| A1-771 | (I-1) | O.27.70 |
| A1-772 | (I-1) | O.27.71 |
| A1-773 | (I-1) | O.27.72 |
| A1-774 | (I-1) | O.27.73 |
| A1-775 | (I-1) | O.27.74 |
| A1-776 | (I-1) | O.27.75 |
| A1-777 | (I-1) | O.27.76 |
| A1-778 | (I-1) | O.27.77 |
| A1-779 | (I-1) | O.27.78 |
| A1-780 | (I-1) | O.27.79 |
| A1-781 | (I-1) | O.27.80 |
| A1-782 | (I-1) | O.27.81 |
| A1-783 | (I-1) | O.27.82 |
| A1-784 | (I-1) | O.27.83 |
| A1-785 | (I-1) | O.27.84 |

(continued)

| Mixture | I | Compound 2 |
|---|---|---|
| A1-786 | (I-1) | O.27.85 |
| A1-787 | (I-1) | O.27.86 |
| A1-788 | (I-1) | O.27.87 |
| A1-789 | (I-1) | O.27.88 |
| A1-790 | (I-1) | O.27.89 |
| A1-791 | (I-1) | O.27.90 |
| A1-792 | (I-1) | O.27.91 |
| A1-793 | (I-1) | O.27.92 |
| A1-794 | (I-1) | O.27.93 |
| A1-795 | (I-1) | O.27.94 |
| A1-796 | (I-1) | O.27.95 |
| A1-797 | (I-1) | O.27.96 |
| A1-798 | (I-1) | O.27.97 |
| A1-799 | (I-1) | O.27.98 |
| A1-800 | (I-1) | O.27.99 |
| A1-801 | (I-1) | 0.27.100 |
| A1-802 | (I-1) | 0.27.101 |
| A1-803 | (I-1) | 0.27.102 |
| A1-804 | (I-1) | 0.27.103 |
| A1-805 | (I-1) | 0.27.104 |
| A1-806 | (I-1) | 0.27.105 |
| A1-807 | (I-1) | 0.27.106 |

In one embodiment the compound I in mixtures A1-1 to A1-807 of Table A is the compound (I-2).
In one embodiment the compound I in mixtures A1-1 to A1-807 of Table A is the compound (I-3).
In one embodiment the compound I in mixtures A1-1 to A1-807 of Table A is the compound (I-4).
In one embodiment the compound I in mixtures A1-1 to A1-807 of Table A is the compound (I-5).
In one embodiment the compound I in mixtures A1-1 to A1-807 of Table A is the compound (I-6).
In one embodiment the compound I in mixtures A1-1 to A1-807 of Table A is the compound (I-7).
In one embodiment the compound I in mixtures A1-1 to A1-807 of Table A is the compound (I-8).
In one embodiment the compound I in mixtures A1-1 to A1-807 of Table A is the compound (I-9).
In one embodiment the compound I in mixtures A1-1 to A1-807 of Table A is the compound (I-10).
In one embodiment the compound I in mixtures A1-1 to A1-807 of Table A is the compound (I-11).
In one embodiment the compound I in mixtures A1-1 to A1-807 of Table A is the compound (I-12).
In one embodiment the compound I in mixtures A1-1 to A1-807 of Table A is the compound (I-13).
In one embodiment the compound I in mixtures A1-1 to A1-807 of Table A is the compound (I-14).
In one embodiment the compound I in mixtures A1-1 to A1-807 of Table A is the compound (I-15).
In one embodiment the compound I in mixtures A1-1 to A1-807 of Table A is the compound (I-16).
In one embodiment the compound I in mixtures A1-1 to A1-807 of Table A is the compound (I-17).
In one embodiment the compound I in mixtures A1-1 to A1-807 of Table A is the compound (I-18).
In one embodiment the compound I in mixtures A1-1 to A1-807 of Table A is the compound (I-19).

In one embodiment the weight ratio of a compound I to compound II in mixtures A1-1 to A1-807 of Table A is between 100:1 and 1:100, preferably between 50:1 and 1:50, more preferably between 20:1 and 1:20, particularly between 5:1 and 1:5; for example 3:1, 1:1 or 1:3.

Table A2: Mixtures A2-1 to A2-807 are defined as mixtures A1-1 to A1-807 of Table A1, wherein compound I.A in each mixture is replaced with compound I.B; and wherein the weight ratio of compound I.B to compound II is between 100:1

and 1:100, preferably between 50:1 and 1:50, more preferably between 20:1 and 1:20, particularly between 5:1 and 1:5; for example 3:1, 1:1 or 1:3.

Table A3: Mixtures A3-1 to A3-807 are defined as mixtures A1-1 to A1-807 of Table A1, wherein compound I.A in each mixture is replaced with compound I.C; and wherein the weight ratio of compound I.C to compound II is between 100:1 and 1:100, preferably between 50:1 and 1:50, more preferably between 20:1 and 1:20, particularly between 5:1 and 1:5; for example 3:1, 1:1 or 1:3.

For the use in seed treatment particularly preferred are the following binary mixtures A5-1 to A5-93 listed in Table A5, wherein compounds I (component 1, a group represented by the expression "(I)" consisting of compounds I-1 to I-23) and one pesticide II selected from the groups A) to O) as defined herein (component 2, for example, (A.1.1) or azoxystrobin, in mixture A-1).

Table A5

| Mixture | (I) | Compound 2 |
|---|---|---|
| A5-1 | (I-1) | (A.1.1) |
| A5-2 | (I-1) | (A.1.17) |
| A5-3 | (I-1) | (A.1.13) |
| A5-4 | (I-1) | (A.1.14) |
| A5-5 | (I-1) | (A.1.10) |
| A5-6 | (I-1) | (A. 1.25) |
| A5-7 | (I-1) | (A.3.19) |
| A5-8 | (I-1) | (A.3.16) |
| A5-9 | (I-1) | (A.3.15) |
| A5-10 | (I-1) | (A.3.7) |
| A5-11 | (I-1) | (A.3.9) |
| A5-12 | (I-1) | (A.3.4) |
| A5-13 | (I-1) | (A.3.28) |
| A5-14 | (I-1) | (A.3.22) |
| A5-15 | (I-1) | (A.3.23) |
| A5-16 | (I-1) | (A.3.31) |
| A5-17 | (I-1) | (G.5.1) |
| A5-18 | (I-1) | (C.1.4) |
| A5-19 | (I-1) | (C.1.5) |
| A5-20 | (I-1) | (K.1.43) |
| A5-21 | (I-1) | (K.1.41) |
| A5-22 | (I-1) | (D.2.2) |
| A5-23 | (I-1) | (G.3.1) |
| A5-24 | (I-1) | (G.5.2) |
| A5-25 | (I-1) | (G.5.3) |
| A5-26 | (I-1) | (B.1.4) |
| A5-27 | (I-1) | (B.1.5) |
| A5-28 | (I-1) | (B.1.23) |
| A5-29 | (I-1) | (B.1.12) |
| A5-30 | (I-1) | (D.1.4) |
| A5-31 | (I-1) | (B.1.15) |

(continued)

| Mixture | (I) | Compound 2 |
|---|---|---|
| A5-32 | (I-1) | (B.1.25) |
| A5-33 | (I-1) | (B.1.38) |
| A5-34 | (I-1) | (B.1.28) |
| A5-35 | (I-1) | (B.1.46) |
| A5-36 | (I-1) | (B.1.10) |
| A5-37 | (I-1) | (B.1.26) |
| A5-38 | (I-1) | (F.1.5) |
| A5-39 | (I-1) | (A.3.5) |
| A5-40 | (I-1) | (A.4.12) |
| A5-41 | (I-1) | (A.4.5) |
| A5-42 | (I-1) | (H.2.9) |
| A5-43 | (I-1) | (H.2.7) |
| A5-44 | (I-1) | (D.1.2) |
| A5-45 | (I-1) | (D.1.5) |
| A5-46 | (I-1) | (G.3.7) |
| A5-47 | (I-1) | (A.3.17) |
| A5-48 | (I-1) | (B.1.44) |
| A5-49 | (I-1) | (K.1.52) |
| A5-50 | (I-1) | (O.2.4) |
| A5-51 | (I-1) | (O.27.7) |
| A5-52 | (I-1) | (O.27.76) |
| A5-53 | (I-1) | (O.4.2) |
| A5-54 | (I-1) | (O.4.8) |
| A5-55 | (I-1) | (O.4.1) |
| A5-56 | (I-1) | (O.4.4) |
| A5-57 | (I-1) | (O.4.5) |
| A5-58 | (I-1) | (O.4.7) |
| A5-59 | (I-1) | (O.27.25) |
| A5-60 | (I-1) | (O.27.18) |
| A5-61 | (I-1) | (O.27.11) |
| A5-62 | (I-1) | (O.27.27) |
| A5-63 | (I-1) | (O.3.43) |
| A5-64 | (I-1) | (O.3.5) |
| A5-65 | (I-1) | (O.3.15) |
| A5-66 | (I-1) | (O.26.4) |
| A5-67 | (I-1) | (O.26.5) |
| A5-68 | (I-1) | (0.1.21) |
| A5-69 | (I-1) | (0.1.15) |
| A5-70 | (I-1) | (0.27.41) |

(continued)

| Mixture | (I) | Compound 2 |
|---|---|---|
| A5-71 | (I-1) | (0.1.27) |
| A5-72 | (I-1) | (0.27.101) |
| A5-73 | (I-1) | (0.27.103) |
| A5-74 | (I-1) | (O.27.44) |
| A5-75 | (I-1) | (0.27.104) |
| A5-76 | (I-1) | (O.27.63) |
| A5-77 | (I-1) | (O.27.64) |
| A5-78 | (I-1) | (O.27.43) |
| A5-79 | (I-1) | (O.27.95) |
| A5-80 | (I-1) | (L.3.10) |
| A5-81 | (I-1) | (0.27.105) |
| A5-82 | (I-1) | (0.27.106) |
| A5-83 | (I-1) | (0.1.21) |
| A5-84 | (I-1) | (O.6.1) |
| A5-85 | (I-1) | (O.27.26) |
| A5-86 | (I-1) | (L.3.32) |
| A5-87 | (I-1) | (L.3.12) |
| A5-88 | (I-1) | (L.3.3) |
| A5-89 | (I-1) | (L.1.5) |
| A5-90 | (I-1) | (0.27.17) |
| A5-91 | (I-1) | L.3.16) |
| A5-92 | (I-1) | mixture of Bacillus licheniformis and (L.1.12) |
| A5-93 | (I-1) | mixture of (L.1.5) and (L.4.8) |

In one embodiment the compound I in mixtures A5-1 to A5-93 of Table A is the compound (I-2).
In one embodiment the compound I in mixtures A5-1 to A5-93 of Table A is the compound (I-3).
In one embodiment the compound I in mixtures A5-1 to A5-93 of Table A is the compound (I-4).
In one embodiment the compound I in mixtures A5-1 to A5-93 of Table A is the compound (I-5).
In one embodiment the compound I in mixtures A5-1 to A5-93 of Table A is the compound (I-6).
In one embodiment the compound I in mixtures A5-1 to A5-93 of Table A is the compound (I-7).
In one embodiment the compound I in mixtures A5-1 to A5-93 of Table A is the compound (I-8).
In one embodiment the compound I in mixtures A5-1 to A5-93 of Table A is the compound (I-9).
In one embodiment the compound I in mixtures A5-1 to A5-93 of Table A is the compound (I-10).
In one embodiment the compound I in mixtures A5-1 to A5-93 of Table A is the compound (I-11).
In one embodiment the compound I in mixtures A5-1 to A5-93 of Table A is the compound (I-12).
In one embodiment the compound I in mixtures A5-1 to A5-93 of Table A is the compound (I-13).
In one embodiment the compound I in mixtures A5-1 to A5-93 of Table A is the compound (I-14).
In one embodiment the compound I in mixtures A5-1 to A5-93 of Table A is the compound (I-15).
In one embodiment the compound I in mixtures A5-1 to A5-93 of Table A is the compound (I-16).
In one embodiment the compound I in mixtures A5-1 to A5-93 of Table A is the compound (I-17).
In one embodiment the compound I in mixtures A5-1 to A5-93 of Table A is the compound (I-18).
In one embodiment the compound I in mixtures A5-1 to A5-93 of Table A is the compound (I-19).
In one embodiment the weight ratio of a compound I to compound II in mixtures A5-1 to A5-93 of Table A5 is between 100:1 and 1:100, preferably between 50:1 and 1:50, more preferably between 20:1 and 1:20, particularly between 5:1 and 1:5; for example 3:1, 1:1 or 1:3.
It may be preferred that the binary mixtures above comprise besides at least one compound I and at least one

compound II as component 3) at least one further active compound III, resulting in a ternary mixture. Preferably, the components 1) and 2), or, all three components 1), 2) and 3), in these mixtures are present in a synergistically effective amount.

Accordingly, one embodiment relates to ternary mixtures comprising, as active components

1) at least one active compound I as defined or preferably defined herein, or an N-oxide, or an agriculturally useful salt thereof;
and as component

2) at least one active compound II selected from groups A) to O) as defined for component 2) in binary mixtures above, or an N-oxide, or an agriculturally useful salt thereof;
and as component

3) at least one active compound III selected from groups A) to O) as defined for component 2) in binary mixtures above, or an N-oxide, or an agriculturally useful salt thereof;

wherein the at least one active compound III of component 3) is not identical with the at least one active compound II of component 2).

The invention also relates to a method for controlling phytopathogenic harmful fungi using the abovementioned ternary mixtures; to agrochemical compositions comprising these ternary mixtures; and to agrochemical compositions further comprising seed comprising these mixtures.

The active substances referred to as compounds II or III, their preparation and their activity e. g. against harmful fungi is known (cf.: http://www.alanwood.net/pesticides/); these substances are commercially available. The compounds described by IUPAC nomenclature, their preparation and their pesticidal activity are also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 10/139271, WO 11/028657, WO 12/168188, WO 07/006670, WO 11/77514; WO 13/047749, WO 10/069882, WO 13/047441, WO 03/16303, WO 09/90181, WO 13/007767, WO 13/010862, WO 13/127704, WO 13/024009, WO 13/24010, WO 13/047441, WO 13/162072, WO 13/092224, WO 11/135833, ON 1907024, ON 1456054, ON 103387541, ON 1309897, WO 12/84812, ON 1907024, WO 09094442, WO 14/60177, WO 13/116251, WO 08/013622, WO 15/65922, WO 94/01546, EP 2865265, WO 07/129454, WO 12/165511, WO 11/081174, WO 13/47441).

It is preferred that the ternary mixtures comprise as compounds III fungicidal compounds that are independently of each other selected from the groups A), B), C), D), E), F), G), H), I), J), K) and O).

Preference is also given to ternary mixtures based on binary mixtures disclosed herein, comprising as further component 3) at least one active compound selected from inhibitors of complex II in group A), more preferably selected from compounds (A.1.1), (A.1.4), (A.1.8), (A.1.10), (A.1.11), (A.1.12), (A.1.14), (A.1.17), (A.1.19), (A.1.25), ( (A.1.34), (A. 1.35), and (A.1.35); particularly selected from (A.1.1), (A.1.4), (A.1.8), (A.1.9), (A.1.13), (A.1.14), (A.1.17), (A.1.24), (A.1.25), (A.1.26), (A.1.27), (A.1.30), (A.1.31), (A.1.32), (A.1.34), (A.1.35) and (A.1.38).

Preference is also given to ternary mixtures based on binary mixtures disclosed herein, comprising as further component 3) at least one active compound selected from inhibitors of complex III at $Q_o$ site in group A), more preferably selected from compounds (A.1.1), (A.1.4), (A.1.8), (A.1.9), (A.1.10), (A.1.11), (A.1.12), (A.1.14), (A.1.16), (A.1.17), A. 1.19, A.1.25, A. 1.34, A. 1.35, A.1.38

Preference is also given to ternary mixtures based on binary mixtures disclosed herein, comprising as further component 3) at least one active compound selected from inhibitors of complex III at $Q_i$ site in group A), more preferably selected from compounds (A.2.1), (A.2.3), (A.2.4) and (A.2.5); particularly selected from (A.2.3) (A.2.4) and (A.2.5). (A.2.6)

Preference is also given to ternary mixtures based on binary mixtures disclosed herein, comprising as further component 3) at least one active compound selected from inhibitors of complex II in group A), more preferably selected from compounds (A.3.2), (A.3.3), (A.3.4), (A.3.7), (A.3.8), (A.3.9), (A.3.10), (A.3.11), (A.3.12), (A.3.15), (A.3.16), (A.3.17), (A.3.19), (A.3.21), (A.3.22), (A.3.23), (A.3.28), (A.3.29) and (A.3.31).

Preference is also given to ternary mixtures based on binary mixtures disclosed herein, comprising as further component 3) at least one active compound selected from other respiration inhibitors in group A), more preferably selected from compounds (A.4.5) and (A.4.7).

Preference is also given to ternary mixtures based on binary mixtures disclosed herein, comprising as further component 3) at least one active compound selected from C14 demethylase inhibitors in group B), more preferably selected from compounds (B.1.4), (B.1.5), (B.1.8), (B.1.10), (B.1.12), (B.1.15), (B.1.17), (B.1.18), (B.1.21), (B.1.22), (B.1.23), (B.1.25), (B.1.26), (B.1.29), (B.1.38), (B.1.44) and (B.1.46).

Preference is also given to ternary mixtures based on binary mixtures disclosed herein, comprising as further component 3) at least one active compound selected from delta14-reductase inhibitors in group B), more preferably (B.2.4).

Preference is also given to ternary mixtures based on binary mixtures disclosed herein, comprising as further component 3) at least one active compound selected from inhibitors of 3-keto reductase in group B), more preferably (B.3.1).

Preference is also given to ternary mixtures based on binary mixtures disclosed herein, comprising as further component 3) at least one active compound selected from phenylamides and acyl amino acid fungicides in group C), more preferably selected from compounds (C.1.4), (C.1.5) and (C.2.1); particularly (C.2.1).

Preference is also given to ternary mixtures based on binary mixtures disclosed herein, comprising as further component 3) at least one active compound selected from group D), more preferably selected from compounds (D.1.4), (D.1.5), (D.2.3), (D.2.5) and (D.2.6).

Preference is also given to ternary mixtures based on binary mixtures disclosed herein, comprising as further component 3) at least one active compound selected from group E), more preferably selected from compounds (E.1.1), (E.1.3), (E.2.2) and (E.2.3).

Preference is also given to ternary mixtures based on binary mixtures disclosed herein, comprising as further component 3) at least one active compound selected from group F), more preferably selected from compounds (F.1.2), (F.1.3) and (F.1.5).

Preference is also given to ternary mixtures based on binary mixtures disclosed herein, comprising as further component 3) at least one active compound selected from group G), more preferably selected from compounds (G.1.4), (G.3.1) and (G.5.1).

Preference is also given to ternary mixtures based on binary mixtures disclosed herein, comprising as further component 3) at least one active compound selected from group H), more preferably selected from compounds (H.1.2), (H.1.4), (H.1.5), (H.1.6), (H.1.7), (H.2.2), (H.2.3), (H.2.5), (H.2.7), (H.3.2), (H.3.4), (H.3.5), (H.3.10), (H.4.2), (H.4.9) and (H.4.10); particularly selected from (H.1.5), (H.2.2), (H.2.5), (H.3.2), (H.4.9).

Preference is also given to ternary mixtures based on binary mixtures disclosed herein, comprising as further component 3) at least one active compound selected from group I), more preferably selected from compounds (I.1.1), (I.1.2), (1.2.1), (I.2.2) (I.2.3) and (I.2.4).

Preference is also given to ternary mixtures based on binary mixtures disclosed herein, comprising as further component 3) at least one active compound selected from group J), more preferably selected from compounds (J.1.2), (J.1.3), (J.1.4), (J.1.5), (J.1.8), (J.1.12).

Preference is also given to ternary mixtures based on binary mixtures disclosed herein, comprising as further component 3) at least one active compound selected from group K), more preferably selected from compounds (K.1.13), (K.1.47) and (K.1.54).

Preference is also given to ternary mixtures based on binary mixtures disclosed herein, comprising as further component 3) a biopesticide selected from the groups L1), L3) to L5), preferably selected from strains denoted above as (L.1.2), (L.1.3), (L.1.4), (L.1.5), (L.1.6), (L.1.7), (L.1.8), (L.1.10), (L.1.11), (L.1.12), (L.1.13), (L.1.14), (L.1.15), (L.1.17), (L.1.18), (L.1.19), (L.1.20), (L.1.21), (L.1.25), (L.1.26), (L.1.27), (L.1.32)?, (L.3.1); (L.3.9), (L.3.16), (L.3.17), (L.5.1), (L.5.2), (L.5.3), (L.5.4), (L.5.5), (L.5.6), (L.5.7), (L.5.8); (L.4.2), and (L.4.1); even more preferably selected from (L.1.2), (L.1.6), (L.1.7), (L.1.8), (L.1.11), (L.1.12), (L.1.13), (L.1.14), (L.1.15), (L.1.18), (L.1.19), (L.1.20), (L.1.21), (L.3.1); (L.3.9), (L.3.16), (L.3.17), (L.5.1), (L.5.2), (L.5.5), (L.5.6); (L.4.2), and (L.4.1). These mixtures are particularly suitable for treatment of propagation materials, i. e. seed treatment purposes and likewise for soil treatment. These seed treatment mixtures are particularly suitable for crops such as monocotyles (e.g. cereals, corn) as well as dicotyles (e.g. vegetables and leguminous plants such as soybean).

Preference is also given to ternary mixtures based on binary mixtures disclosed herein, comprising as further component 3) a biopesticide selected from the groups L1), L3) and L4), preferably selected from strains denoted above as (L1.1), (L.1.2), (L.1.3), (L.1.6), (L.1.7), (L.1.9), (L.1.11), (L.1.12), (L.1.13), (L.1.14), (L.1.15), (L.1.17), (L.1.18), (L.1.22), (L.1.23), (L.1.24), (L.1.25), (L.1.26), (L.1.27), (L.2.2); (L.3.2), (L.3.3), (L.3.4), (L.3.5), (L.3.6), (L.3.7), (L.3.8), (L.3.10), (L.3.11), (L.3.12), (L.3.13), (L.3.14), (L.3.15), (L.3.18), (L.3.19); (L.4.2), even more preferably selected from (L.1.2), (L.1.7), (L.1.11), (L.1.13), (L.1.14), (L.1.15), (L.1.18), (L.1.23), (L.3.3), (L.3.4), (L.3.6), (L.3.7), (L.3.8), (L.3.10), (L.3.11), (L.3.12), (L.3.15), and (L.4.2). These mixtures are particularly suitable for foliar treatment.

Preference is also given to ternary mixtures based on binary mixtures disclosed herein, comprising as further component 3) at least one active compound selected from group M), more preferably selected from compounds (M.1.6), (M.1.24), (M.1.25), (M.1.28), (M.1.29), (M.1.30).

Preference is also given to ternary mixtures based on binary mixtures disclosed herein, comprising as further component 3) at least one active compound selected from group N), more preferably selected from compounds (N.7.3), (N.7.4), (N.7.5), (N.13.13).

Preference is also given to ternary mixtures based on binary mixtures disclosed herein, comprising as further component 3) at least one active compound selected from group O), more preferably selected from compounds (O.2.4), (O.4.5), (O.4.7), (O.4.8), (0.5.1), (O.26.2, (0.27.17), (0.27.101), (0.27.102).

The present invention relates furthermore to ternary mixtures comprising mixtures A-1 to A-807 as listed in Table A above and as component 3) a compound III from groups A) to O) as defined above.

Preferred are the following ternary mixtures listed in Tables B1 to B3:

Table C

| Component 2 | |
|---|---|
| azoxystrobin | (A.1.1) |
| dimoxystrobin | (A.1.4) |
| fluoxastrobin | (A.1.8) |
| mandestrobin | (A.1.10) |
| metominostrobin | (A.1.11) |
| orysastrobin | (A.1.12) |
| pyraclostrobin | (A.1.14) |
| trifloxystrobin | (A.1.17) |
| pyribencarb | (A.1.19) |
| 1-[2-[[1-(4-chlorophenyl)pyrazol-3-yl]oxymethyl]-3-methylphenyl]-4-methyl-tetrazol-5-one | (A.1.25) |
| (Z,2E)-5-[1-(2,4-dichloro¬phenyl)pyrazol-3-yl]oxy-2-methoxyimino-N,3-dimethyl-pent-3-enamide | (A.1.34) |
| (Z,2E) 5 [1 (4-chlorophenyl)pyrazol-3-yl]oxy-2-methoxyimino-N,3-dimethyl-pent-3-enamide | (A.1.35) |
| 2-(ortho-((2,5-dimethylphenyl-oxy¬methylen)phenyl)-3-methoxy-acrylic acid methylester | (A.1. 38) |
| florylpicoxamid | (A.2.6) |
| benzovindiflupyr | (A.3.2) |
| bixafen | (A.3.3) |
| boscalid | (A.3.4) |
| fluopyram | (A.3.7) |
| flutolanil | (A.3.8) |
| fluxapyroxad | (A.3.9) |
| furametpyr | (A.3.10) |
| isofetamid | (A.3.11) |
| isopyrazam | (A.3.12) |
| penflufen | (A.3.15) |
| penthiopyrad | (A.3.16) |
| pydiflumetofen | (A.3.17) |
| sedaxane | (A.3.19) |
| thifluzamide | (A.3.21) |
| inpyrfluxam | (A.3.22) |
| pyrapropoyne | (A.3.23) |
| fluindapyr | (A.3.28) |
| isoflucypram | (A.3.31) |

(continued)

| Component 2 | |
|---|---|
| fluazinam | (A.4.5) |
| cyproconazole | (B.1.4) |
| difenoconazole | (B.1.5) |
| epoxiconazole | (B.1.8) |
| fluquinconazole | (B.1.10) |
| flutriafol | (B.1.12) |
| ipconazole | (B.1.15) |
| metconazole | (B.1.17) |
| myclobutanil | (B.1.18) |
| penconazole | (B.1.21) |
| propiconazole | (B.1.22) |
| prothioconazole | (B.1.23) |
| tebuconazole | (B.1.25) |
| tetraconazole | (B.1.26) |
| triticonazole | (B.1.29) |
| mefentrifluconazole | (B.1.38) |
| imazalil | (B.1.44) |
| prochloraz | (B.1.46) |
| fenpropimorph | (B.2.4) |
| fenhexamid | (B.3.1) |
| metalaxyl | (C.1.4) |
| metalaxyl-M | (C.1.5) |
| hymexazole | (C.2.1) |
| fenepatmidoquin | (C 5.3) |
| thiabendazole | (D.1.4) |
| thiophanate-methyl | (D.1.5) |
| pencycuron | (D.2.3) |
| zoxamide | (D.2.5) |
| metrafenone | (D.2.6) |
| cyprodinil | (E.1.1) |
| pyrimethanil | (E.1.3) |
| kasugamycin | (E.2.2) |
| kasugamycin hydrochloride-hydrate | (E.2.3), |
| iprodione | (F.1.2) |
| procymidone | (F.1.3) |
| fludioxonil | (F.1.5) |
| isoprothiolane | (G.1.4) |
| dimethomorph | (G.3.1) |
| oxathiapiprolin | (G.5.1) |

(continued)

| Component 2 | |
|---|---|
| copper | (H.1.2) |
| copper acetate | (H.1.3) |
| copper hydroxide | (H.1.4) |
| copper oxychloride | (H.1.5) |
| basic copper sulfate | (H.1.6) |
| sulfur | (H.1.7) |
| mancozeb | (H.2.2) |
| maneb | (H.2.3) |
| metiram | (H.2.5) |
| thiram | (H.2.7) |
| chlorothalonil | (H.3.2) |
| captan | (H.3.4) |
| folpet | (H.3.5) |
| phthalide | (H.3.10) |
| dodine | (H.4.2) |
| dithianon | (H.4.9) |
| validamycin | (I.1.1) |
| pyroquilon | (I.2.1) |
| tricyclazole | (I.2.2) |
| probenazole | (J.1.2) |
| isotianil | (J.1.3) |
| tiadinil | (J.1.4) |
| prohexadione-calcium | (J.1.5) |
| phosphorous acid and its salts | (J.1.8) |
| potassium phosphonate | (J.1.12) |
| fenpyrazamine | (K.1.13) |
| quinofumelin | (K.1.47) |
| aminopyrifen | (K.1.54) |
| B. amyloliquefaciens | (L.1.5) |
| B. pumilus | (L.1.9) |
| B. subtilis | (L.1.12) |
| B. subtilis var. amyloliquefaciens | (L.1.13) |
| Coniothyrium minitans | (L.1.17) |
| Gliocladium roseum | (L.1.23) |
| P. polymyxa | (L.1.32), |
| Trichoderma asperelloides (L.1.46) | (L.1.46) |
| chlormequat | (M.1.6) |
| mepiquat | (M.1.24) |
| mepiquat chloride | (M.1.25) |

(continued)

| Component 2 | |
|---|---|
| paclobutrazol | (M.1.28) |
| prohexadione | (M.1.29) |
| prohexadione-calcium | (M.1.30) |
| glufosinate | (N.7.3) |
| glufosinate-P | (N.7.4) |
| glufosinate-ammonium | (N.7.5) |
| dicamba | (N.13.13) |
| fipronil | (O.2.4), |
| imidacloprid | (O.4.5) |
| thiacloprid | (O.4.7) |
| thiamethoxam | (O.4.8) |
| spinosad | (O.5.1) |
| chlorantraniliprole | (O.26.2) |
| fluopyram | (0.27.17) |

Table B1: Ternary mixtures B1-1 to B1-7626 comprising as component 1) compound (I-1) as defined herein and as component 2) and component 3) compounds II and III as defined in each row of the Table B1 (e.g. mixture B1-15 comprises: (I-1) as component 1), A.3.2 = benzovindiflupyr (see Table C above) as Component 2), and A.1.1 = azoxystrobin (see Table C below) as Component 3).

In mixtures B1-1 to B1-7626 of Table B1 according to one embodiment the weight ratio of compound (I-1) to compound II is between 100:1 and 1:100; and the weight ratio of compound (I-1) to compound III, is between 100:1 and 1:100.

In mixtures B1-1 to B1-7626 of Table B1 according to one embodiment the weight ratio of compound (I-1) to compound II is between 100:1 and 1:100; and the weight ratio of compound (I-1) to compound III, is between 50:1 and 1:50.

In mixtures B1-1 to B1-7626 of Table B1 according to one embodiment the weight ratio of compound (I-1) to compound II is between 100:1 and 1:100; and the weight ratio of compound (I-1) to compound III, is between 20:1 and 1:20.

In mixtures B1-1 to B1-7626 of Table B1 according to one embodiment the weight ratio of compound (I-1) to compound II is between 100:1 and 1:100; and the weight ratio of compound (I-1) to compound III, is between 5:1 and 1:5.

In mixtures B1-1 to B1-7626 of Table B1 according to one embodiment the weight ratio of compound (I-1) to compound II is between 100:1 and 1:100; and the weight ratio of compound (I-1) to compound III is, for example, 3:1, 1:1 or 1:3.

Table B2: Ternary mixtures B2-1 to B2-7626 are defined as mixtures B1-1 to B1-7626 of Table B1 wherein compound (I-1) in each mixture is replaced with compound (I-2).

In mixtures B2-1 to B2-7626 of Table B2 according to one embodiment the weight ratio of compound (I-2) to compound II is between 100:1 and 1:100; and the weight ratio of compound (I-2) to compound III, is between 100:1 and 1:100.

In mixtures B2-1 to B2-7626 of Table B2 according to one embodiment the weight ratio of compound (I-2) to compound II is between 100:1 and 1:100; and the weight ratio of compound (I-2) to compound III, is between 50:1 and 1:50.

In mixtures B2-1 to B2-7626 of Table B2 according to one embodiment the weight ratio of compound (I-2) to compound II is between 100:1 and 1:100; and the weight ratio of compound (I-2) to compound III, is between 20:1 and 1:20.

In mixtures B2-1 to B2-7626 of Table B2 according to one embodiment the weight ratio of compound (I-2) to compound II is between 100:1 and 1:100; and the weight ratio of compound (I-2) to compound III, is between 5:1 and 1:5.

In mixtures B2-1 to B2-7626 of Table B2 according to one embodiment the weight ratio of compound (I-2) to compound II is between 100:1 and 1:100; and the weight ratio of compound (I-2) to compound III is, for example, 3:1, 1:1 or 1:3.

Table B3: Mixtures B3-1 to B3-7626 are defined as mixtures B1-1 to B1-7626 of Table B1, wherein compound (I-1) in each mixture is replaced with compound (I-3).

In mixtures B3-1 to B3-7626 of Table B3 according to one embodiment the weight ratio of compound (I-3) to compound II is between 100:1 and 1:100; and the weight ratio of compound (I-3) to compound III, is between 100:1 and

1:100.

In mixtures B3-1 to B3-7626 of Table B3 according to one embodiment the weight ratio of compound (I-3) to compound II is between 100:1 and 1:100; and the weight ratio of compound (I-3) to compound III, is between 50:1 and 1:50.

In mixtures B3-1 to B3-7626 of Table B3 according to one embodiment the weight ratio of compound (I-3) to compound II is between 100:1 and 1:100; and the weight ratio of compound (I-3) to compound III, is between 20:1 and 1:20.

In mixtures B3-1 to B3-7626 of Table B3 according to one embodiment the weight ratio of compound (I-3) to compound II is between 100:1 and 1:100; and the weight ratio of compound (I-3) to compound III, is between 5:1 and 1:5.

In mixtures B3-1 to B3-7626 of Table B3 according to one embodiment the weight ratio of compound (I-3) to compound II is between 100:1 and 1:100; and the weight ratio of compound (I-3) to compound III is, for example, 3:1, 1:1 or 1:3.

Table B4: Mixtures B3-1 to B3-7626 are defined as mixtures B1-1 to B1-7626 of Table B1, wherein compound (I-1) in each mixture is replaced with compound (I-4).

In mixtures B3-1 to B3-7626 of Table B3 according to one embodiment the weight ratio of compound (I-4) to compound II is between 100:1 and 1:100; and the weight ratio of compound (I-4) to compound III, is between 100:1 and 1:100.

In mixtures B3-1 to B3-7626 of Table B3 according to one embodiment the weight ratio of compound (I-4) to compound II is between 100:1 and 1:100; and the weight ratio of compound (I-4) to compound III, is between 50:1 and 1:50.

In mixtures B3-1 to B3-7626 of Table B3 according to one embodiment the weight ratio of compound (I-4) to compound II is between 100:1 and 1:100; and the weight ratio of compound (I-4) to compound III, is between 20:1 and 1:20.

In mixtures B3-1 to B3-7626 of Table B3 according to one embodiment the weight ratio of compound (I-4) to compound II is between 100:1 and 1:100; and the weight ratio of compound (I-4) to compound III, is between 5:1 and 1:5.

In mixtures B3-1 to B3-7626 of Table B3 according to one embodiment the weight ratio of compound (I-4) to compound II is between 100:1 and 1:100; and the weight ratio of compound (I-4) to compound III is, for example, 3:1, 1:1 or 1:3.

Table B5: Mixtures B3-1 to B3-7626 are defined as mixtures B1-1 to B1-7626 of Table B1, wherein compound (I-1) in each mixture is replaced with compound (I-5).

In mixtures B3-1 to B3-7626 of Table B3 according to one embodiment the weight ratio of compound (I-5) to compound II is between 100:1 and 1:100; and the weight ratio of compound (I-5) to compound III, is between 100:1 and 1:100.

In mixtures B3-1 to B3-7626 of Table B3 according to one embodiment the weight ratio of compound (I-5) to compound II is between 100:1 and 1:100; and the weight ratio of compound (I-5) to compound III, is between 50:1 and 1:50.

In mixtures B3-1 to B3-7626 of Table B3 according to one embodiment the weight ratio of compound (I-5) to compound II is between 100:1 and 1:100; and the weight ratio of compound (I-5) to compound III, is between 20:1 and 1:20.

In mixtures B3-1 to B3-7626 of Table B3 according to one embodiment the weight ratio of compound (I-5) to compound II is between 100:1 and 1:100; and the weight ratio of compound (I-5) to compound III, is between 5:1 and 1:5.

In mixtures B3-1 to B3-7626 of Table B3 according to one embodiment the weight ratio of compound (I-5) to compound II is between 100:1 and 1:100; and the weight ratio of compound (I-5) to compound III is, for example, 3:1, 1:1 or 1:3.

Table B6: Mixtures B3-1 to B3-7626 are defined as mixtures B1-1 to B1-7626 of Table B1, wherein compound (I-1) in each mixture is replaced with compound (I-6).

In mixtures B3-1 to B3-7626 of Table B3 according to one embodiment the weight ratio of compound (I-6) to compound II is between 100:1 and 1:100; and the weight ratio of compound (I-6) to compound III, is between 100:1 and 1:100.

In mixtures B3-1 to B3-7626 of Table B3 according to one embodiment the weight ratio of compound (I-6) to compound II is between 100:1 and 1:100; and the weight ratio of compound (I-6) to compound III, is between 50:1 and 1:50.

In mixtures B3-1 to B3-7626 of Table B3 according to one embodiment the weight ratio of compound (I-6) to compound II is between 100:1 and 1:100; and the weight ratio of compound (I-6) to compound III, is between 20:1 and 1:20.

In mixtures B3-1 to B3-7626 of Table B3 according to one embodiment the weight ratio of compound (I-6) to compound II is between 100:1 and 1:100; and the weight ratio of compound (I-6) to compound III, is between 5:1 and 1:5.

In mixtures B3-1 to B3-7626 of Table B3 according to one embodiment the weight ratio of compound (I-6) to compound II is between 100:1 and 1:100; and the weight ratio of compound (I-6) to compound III is, for example, 3:1, 1:1 or 1:3.

Table B7: Mixtures B3-1 to B3-7626 are defined as mixtures B1-1 to B1-7626 of Table B1, wherein compound (I-1) in each mixture is replaced with compound (I-7).

In mixtures B3-1 to B3-7626 of Table B3 according to one embodiment the weight ratio of compound (I-7) to compound II is between 100:1 and 1:100; and the weight ratio of compound (I-7) to compound III, is between 100:1 and 1:100.

In mixtures B3-1 to B3-7626 of Table B3 according to one embodiment the weight ratio of compound (I-7) to

compound II is between 100:1 and 1:100; and the weight ratio of compound (I-7) to compound III, is between 50:1 and 1:50.

In mixtures B3-1 to B3-7626 of Table B3 according to one embodiment the weight ratio of compound (I-7) to compound II is between 100:1 and 1:100; and the weight ratio of compound (I-7) to compound III, is between 20:1 and 1:20.

In mixtures B3-1 to B3-7626 of Table B3 according to one embodiment the weight ratio of compound (I-7) to compound II is between 100:1 and 1:100; and the weight ratio of compound (I-7) to compound III, is between 5:1 and 1:5.

In mixtures B3-1 to B3-7626 of Table B3 according to one embodiment the weight ratio of compound (I-7) to compound II is between 100:1 and 1:100; and the weight ratio of compound (I-7) to compound III is, for example, 3:1, 1:1 or 1:3.

Table B8: Mixtures B3-1 to B3-7626 are defined as mixtures B1-1 to B1-7626 of Table B1, wherein compound (I-1) in each mixture is replaced with compound (I-8).

In mixtures B3-1 to B3-7626 of Table B3 according to one embodiment the weight ratio of compound (I-8) to compound II is between 100:1 and 1:100; and the weight ratio of compound (I-8) to compound III, is between 100:1 and 1:100.

In mixtures B3-1 to B3-7626 of Table B3 according to one embodiment the weight ratio of compound (I-8) to compound II is between 100:1 and 1:100; and the weight ratio of compound (I-8) to compound III, is between 50:1 and 1:50.

In mixtures B3-1 to B3-7626 of Table B3 according to one embodiment the weight ratio of compound (I-8) to compound II is between 100:1 and 1:100; and the weight ratio of compound (I-8) to compound III, is between 20:1 and 1:20.

In mixtures B3-1 to B3-7626 of Table B3 according to one embodiment the weight ratio of compound (I-8) to compound II is between 100:1 and 1:100; and the weight ratio of compound (I-8) to compound III, is between 5:1 and 1:5.

In mixtures B3-1 to B3-7626 of Table B3 according to one embodiment the weight ratio of compound (I-8) to compound II is between 100:1 and 1:100; and the weight ratio of compound (I-8) to compound III is, for example, 3:1, 1:1 or 1:3.

Table B9: Mixtures B3-1 to B3-7626 are defined as mixtures B1-1 to B1-7626 of Table B1, wherein compound (I-1) in each mixture is replaced with compound (I-9).

In mixtures B3-1 to B3-7626 of Table B3 according to one embodiment the weight ratio of compound (I-9) to compound II is between 100:1 and 1:100; and the weight ratio of compound (I-9) to compound III, is between 100:1 and 1:100.

In mixtures B3-1 to B3-7626 of Table B3 according to one embodiment the weight ratio of compound (I-9) to compound II is between 100:1 and 1:100; and the weight ratio of compound (I-9) to compound III, is between 50:1 and 1:50.

In mixtures B3-1 to B3-7626 of Table B3 according to one embodiment the weight ratio of compound (I-9) to compound II is between 100:1 and 1:100; and the weight ratio of compound (I-9) to compound III, is between 20:1 and 1:20.

In mixtures B3-1 to B3-7626 of Table B3 according to one embodiment the weight ratio of compound (I-9) to compound II is between 100:1 and 1:100; and the weight ratio of compound (I-9) to compound III, is between 5:1 and 1:5.

In mixtures B3-1 to B3-7626 of Table B3 according to one embodiment the weight ratio of compound (I-9) to compound II is between 100:1 and 1:100; and the weight ratio of compound (I-9) to compound III is, for example, 3:1, 1:1 or 1:3.

Table B10: Mixtures B3-1 to B3-7626 are defined as mixtures B1-1 to B1-7626 of Table B1, wherein compound (I-1) in each mixture is replaced with compound (I-10).

In mixtures B3-1 to B3-7626 of Table B3 according to one embodiment the weight ratio of compound (I-10) to compound II is between 100:1 and 1:100; and the weight ratio of compound (I-10) to compound III, is between 100:1 and 1:100.

In mixtures B3-1 to B3-7626 of Table B3 according to one embodiment the weight ratio of compound (I-10) to compound II is between 100:1 and 1:100; and the weight ratio of compound (I-10) to compound III, is between 50:1 and 1:50.

In mixtures B3-1 to B3-7626 of Table B3 according to one embodiment the weight ratio of compound (I-10) to compound II is between 100:1 and 1:100; and the weight ratio of compound (I-10) to compound III, is between 20:1 and 1:20.

In mixtures B3-1 to B3-7626 of Table B3 according to one embodiment the weight ratio of compound (I-10) to compound II is between 100:1 and 1:100; and the weight ratio of compound (I-10) to compound III, is between 5:1 and 1:5.

In mixtures B3-1 to B3-7626 of Table B3 according to one embodiment the weight ratio of compound (I-10) to compound II is between 100:1 and 1:100; and the weight ratio of compound (I-10) to compound III is, for example, 3:1, 1:1 or 1:3.

Table B11: Mixtures B3-1 to B3-7626 are defined as mixtures B1-1 to B1-7626 of Table B1, wherein compound (I-1) in each mixture is replaced with compound (I-11).

In mixtures B3-1 to B3-7626 of Table B3 according to one embodiment the weight ratio of compound (I-11) to compound II is between 100:1 and 1:100; and the weight ratio of compound (I-11) to compound III, is between 100:1 and 1:100.

In mixtures B3-1 to B3-7626 of Table B3 according to one embodiment the weight ratio of compound (I-11) to

compound II is between 100:1 and 1:100; and the weight ratio of compound (I-11) to compound III, is between 50:1 and 1:50.

In mixtures B3-1 to B3-7626 of Table B3 according to one embodiment the weight ratio of compound (I-11) to compound II is between 100:1 and 1:100; and the weight ratio of compound (I-11) to compound III, is between 20:1 and 1:20.

In mixtures B3-1 to B3-7626 of Table B3 according to one embodiment the weight ratio of compound (I-11) to compound II is between 100:1 and 1:100; and the weight ratio of compound (I-11) to compound III, is between 5:1 and 1:5.

In mixtures B3-1 to B3-7626 of Table B3 according to one embodiment the weight ratio of compound (I-11) to compound II is between 100:1 and 1:100; and the weight ratio of compound (I-11) to compound III is, for example, 3:1, 1:1 or 1:3.

Table B12: Mixtures B3-1 to B3-7626 are defined as mixtures B1-1 to B1-7626 of Table B1, wherein compound (I-1) in each mixture is replaced with compound (I-12).

In mixtures B3-1 to B3-7626 of Table B3 according to one embodiment the weight ratio of compound (I-12) to compound II is between 100:1 and 1:100; and the weight ratio of compound (I-12) to compound III, is between 100:1 and 1:100.

In mixtures B3-1 to B3-7626 of Table B3 according to one embodiment the weight ratio of compound (I-12) to compound II is between 100:1 and 1:100; and the weight ratio of compound (I-12) to compound III, is between 50:1 and 1:50.

In mixtures B3-1 to B3-7626 of Table B3 according to one embodiment the weight ratio of compound (I-12) to compound II is between 100:1 and 1:100; and the weight ratio of compound (I-12) to compound III, is between 20:1 and 1:20.

In mixtures B3-1 to B3-7626 of Table B3 according to one embodiment the weight ratio of compound (I-12) to compound II is between 100:1 and 1:100; and the weight ratio of compound (I-12) to compound III, is between 5:1 and 1:5.

In mixtures B3-1 to B3-7626 of Table B3 according to one embodiment the weight ratio of compound (I-12) to compound II is between 100:1 and 1:100; and the weight ratio of compound (I-12) to compound III is, for example, 3:1, 1:1 or 1:3.

Table B13: Mixtures B3-1 to B3-7626 are defined as mixtures B1-1 to B1-7626 of Table B1, wherein compound (I-1) in each mixture is replaced with compound (I-13).

In mixtures B3-1 to B3-7626 of Table B3 according to one embodiment the weight ratio of compound (I-13) to compound II is between 100:1 and 1:100; and the weight ratio of compound (I-13) to compound III, is between 100:1 and 1:100.

In mixtures B3-1 to B3-7626 of Table B3 according to one embodiment the weight ratio of compound (I-13) to compound II is between 100:1 and 1:100; and the weight ratio of compound (I-13) to compound III, is between 50:1 and 1:50.

In mixtures B3-1 to B3-7626 of Table B3 according to one embodiment the weight ratio of compound (I-13) to compound II is between 100:1 and 1:100; and the weight ratio of compound (I-13) to compound III, is between 20:1 and 1:20.

In mixtures B3-1 to B3-7626 of Table B3 according to one embodiment the weight ratio of compound (I-13) to compound II is between 100:1 and 1:100; and the weight ratio of compound (I-13) to compound III, is between 5:1 and 1:5.

In mixtures B3-1 to B3-7626 of Table B3 according to one embodiment the weight ratio of compound (I-13) to compound II is between 100:1 and 1:100; and the weight ratio of compound (I-13) to compound III is, for example, 3:1, 1:1 or 1:3.

Table B14: Mixtures B3-1 to B3-7626 are defined as mixtures B1-1 to B1-7626 of Table B1, wherein compound (I-1) in each mixture is replaced with compound (I-14).

In mixtures B3-1 to B3-7626 of Table B3 according to one embodiment the weight ratio of compound (I-14) to compound II is between 100:1 and 1:100; and the weight ratio of compound (I-14) to compound III, is between 100:1 and 1:100.

In mixtures B3-1 to B3-7626 of Table B3 according to one embodiment the weight ratio of compound (I-14) to compound II is between 100:1 and 1:100; and the weight ratio of compound (I-14) to compound III, is between 50:1 and 1:50.

In mixtures B3-1 to B3-7626 of Table B3 according to one embodiment the weight ratio of compound (I-14) to compound II is between 100:1 and 1:100; and the weight ratio of compound (I-14) to compound III, is between 20:1 and 1:20.

In mixtures B3-1 to B3-7626 of Table B3 according to one embodiment the weight ratio of compound (I-14) to compound II is between 100:1 and 1:100; and the weight ratio of compound (I-14) to compound III, is between 5:1 and 1:5.

In mixtures B3-1 to B3-7626 of Table B3 according to one embodiment the weight ratio of compound (I-14) to compound II is between 100:1 and 1:100; and the weight ratio of compound (I-14) to compound III is, for example, 3:1, 1:1 or 1:3.

Table B15: Mixtures B3-1 to B3-7626 are defined as mixtures B1-1 to B1-7626 of Table B1, wherein compound (I-1) in each mixture is replaced with compound (I-15).

In mixtures B3-1 to B3-7626 of Table B3 according to one embodiment the weight ratio of compound (I-15) to compound II is between 100:1 and 1:100; and the weight ratio of compound (I-15) to compound III, is between 100:1 and 1:100.

In mixtures B3-1 to B3-7626 of Table B3 according to one embodiment the weight ratio of compound (I-15) to compound II is between 100:1 and 1:100; and the weight ratio of compound (I-15) to compound III, is between 50:1 and 1:50.

In mixtures B3-1 to B3-7626 of Table B3 according to one embodiment the weight ratio of compound (I-15) to compound II is between 100:1 and 1:100; and the weight ratio of compound (I-15) to compound III, is between 20:1 and 1:20.

In mixtures B3-1 to B3-7626 of Table B3 according to one embodiment the weight ratio of compound (I-15) to compound II is between 100:1 and 1:100; and the weight ratio of compound (I-15) to compound III, is between 5:1 and 1:5.

In mixtures B3-1 to B3-7626 of Table B3 according to one embodiment the weight ratio of compound (I-15) to compound II is between 100:1 and 1:100; and the weight ratio of compound (I-15) to compound III is, for example, 3:1, 1:1 or 1:3.

Table B16: Mixtures B3-1 to B3-7626 are defined as mixtures B1-1 to B1-7626 of Table B1, wherein compound (I-1) in each mixture is replaced with compound (I-16).

In mixtures B3-1 to B3-7626 of Table B3 according to one embodiment the weight ratio of compound (I-16) to compound II is between 100:1 and 1:100; and the weight ratio of compound (I-16) to compound III, is between 100:1 and 1:100.

In mixtures B3-1 to B3-7626 of Table B3 according to one embodiment the weight ratio of compound (I-16) to compound II is between 100:1 and 1:100; and the weight ratio of compound (I-16) to compound III, is between 50:1 and 1:50.

In mixtures B3-1 to B3-7626 of Table B3 according to one embodiment the weight ratio of compound (I-16) to compound II is between 100:1 and 1:100; and the weight ratio of compound (I-16) to compound III, is between 20:1 and 1:20.

In mixtures B3-1 to B3-7626 of Table B3 according to one embodiment the weight ratio of compound (I-16) to compound II is between 100:1 and 1:100; and the weight ratio of compound (I-16) to compound III, is between 5:1 and 1:5.

In mixtures B3-1 to B3-7626 of Table B3 according to one embodiment the weight ratio of compound (I-16) to compound II is between 100:1 and 1:100; and the weight ratio of compound (I-16) to compound III is, for example, 3:1, 1:1 or 1:3.

Table B17: Mixtures B3-1 to B3-7626 are defined as mixtures B1-1 to B1-7626 of Table B1, wherein compound (I-1) in each mixture is replaced with compound (I-17).

In mixtures B3-1 to B3-7626 of Table B3 according to one embodiment the weight ratio of compound (I-17) to compound II is between 100:1 and 1:100; and the weight ratio of compound (I-17) to compound III, is between 100:1 and 1:100.

In mixtures B3-1 to B3-7626 of Table B3 according to one embodiment the weight ratio of compound (I-17) to compound II is between 100:1 and 1:100; and the weight ratio of compound (I-17) to compound III, is between 50:1 and 1:50.

In mixtures B3-1 to B3-7626 of Table B3 according to one embodiment the weight ratio of compound (I-17) to compound II is between 100:1 and 1:100; and the weight ratio of compound (I-17) to compound III, is between 20:1 and 1:20.

In mixtures B3-1 to B3-7626 of Table B3 according to one embodiment the weight ratio of compound (I-17) to compound II is between 100:1 and 1:100; and the weight ratio of compound (I-17) to compound III, is between 5:1 and 1:5.

In mixtures B3-1 to B3-7626 of Table B3 according to one embodiment the weight ratio of compound (I-17) to compound II is between 100:1 and 1:100; and the weight ratio of compound (I-17) to compound III is, for example, 3:1, 1:1 or 1:3.

Table B18: Mixtures B3-1 to B3-7626 are defined as mixtures B1-1 to B1-7626 of Table B1, wherein compound (I-1) in each mixture is replaced with compound (I-18).

In mixtures B3-1 to B3-7626 of Table B3 according to one embodiment the weight ratio of compound (I-18) to compound II is between 100:1 and 1:100; and the weight ratio of compound (I-18) to compound III, is between 100:1 and 1:100.

In mixtures B3-1 to B3-7626 of Table B3 according to one embodiment the weight ratio of compound (I-18) to compound II is between 100:1 and 1:100; and the weight ratio of compound (I-18) to compound III, is between 50:1 and 1:50.

In mixtures B3-1 to B3-7626 of Table B3 according to one embodiment the weight ratio of compound (I-18) to compound II is between 100:1 and 1:100; and the weight ratio of compound (I-18) to compound III, is between 20:1 and

1:20.

In mixtures B3-1 to B3-7626 of Table B3 according to one embodiment the weight ratio of compound (I-18) to compound II is between 100:1 and 1:100; and the weight ratio of compound (I-18) to compound III, is between 5:1 and 1:5.

In mixtures B3-1 to B3-7626 of Table B3 according to one embodiment the weight ratio of compound (I-18) to compound II is between 100:1 and 1:100; and the weight ratio of compound (I-18) to compound III is, for example, 3:1, 1:1 or 1:3.

Table B19: Mixtures B3-1 to B3-7626 are defined as mixtures B1-1 to B1-7626 of Table B1, wherein compound (I-1) in each mixture is replaced with compound (I-19).

In mixtures B3-1 to B3-7626 of Table B3 according to one embodiment the weight ratio of compound (I-19) to compound II is between 100:1 and 1:100; and the weight ratio of compound (I-19) to compound III, is between 100:1 and 1:100.

In mixtures B3-1 to B3-7626 of Table B3 according to one embodiment the weight ratio of compound (I-19) to compound II is between 100:1 and 1:100; and the weight ratio of compound (I-19) to compound III, is between 50:1 and 1:50.

In mixtures B3-1 to B3-7626 of Table B3 according to one embodiment the weight ratio of compound (I-19) to compound II is between 100:1 and 1:100; and the weight ratio of compound (I-19) to compound III, is between 20:1 and 1:20.

In mixtures B3-1 to B3-7626 of Table B3 according to one embodiment the weight ratio of compound (I-19) to compound II is between 100:1 and 1:100; and the weight ratio of compound (I-19) to compound III, is between 5:1 and 1:5.

In mixtures B3-1 to B3-7626 of Table B3 according to one embodiment the weight ratio of compound (I-19) to compound II is between 100:1 and 1:100; and the weight ratio of compound (I-19) to compound III is, for example, 3:1, 1:1 or 1:3.

Table B1

| Mixture | Co 2) | Co3) |
|---|---|---|
| B1-1 | (A.1.1) | (A.1.1) |
| B1-2 | (A.1.4) | (A.1.1) |
| B1-3 | (A.1.8) | (A.1.1) |
| B1-4 | (A.1.10) | (A.1.1) |
| B1-5 | (A.1.11) | (A.1.1) |
| B1-6 | (A.1.12) | (A.1.1) |
| B1-7 | (A.1.14) | (A.1.1) |
| B1-8 | (A.1.17) | (A.1.1) |
| B1-9 | (A.1.19) | (A.1.1) |
| B1-10 | (A.1.25) | (A.1.1) |
| B1-11 | (A.1.34) | (A.1.1) |
| B1-12 | (A.1.35) | (A.1.1) |
| B1-13 | (A.1.38) | (A.1.1) |
| B1-14 | (A.2.6) | (A.1.1) |
| B1-15 | (A.3.2) | (A.1.1) |
| B1-16 | (A.3.3) | (A.1.1) |
| B1-17 | (A.3.4) | (A.1.1) |

| | | |
|---|---|---|
| B1-18 | (A.3.7) | (A.1.1) |
| B1-19 | (A.3.8) | (A.1.1) |
| B1-20 | (A.3.9) | (A.1.1) |
| B1-21 | (A.3.10) | (A.1.1) |
| B1-22 | (A.3.11) | (A.1.1) |
| B1-23 | (A.3.12) | (A.1.1) |
| B1-24 | (A.3.15) | (A.1.1) |
| B1-25 | (A.3.16) | (A.1.1) |
| B1-26 | (A.3.17) | (A.1.1) |
| B1-27 | (A.3.19) | (A.1.1) |
| B1-28 | (A.3.21) | (A.1.1) |
| B1-29 | (A.3.22) | (A.1.1) |
| B1-30 | (A.3.23) | (A.1.1) |
| B1-31 | (A.3.28) | (A.1.1) |
| B1-32 | (A.3.31) | (A.1.1) |
| B1-33 | (A.4.5) | (A.1.1) |
| B1-34 | (B.1.4) | (A.1.1) |
| B1-35 | (B.1.5) | (A.1.1) |
| B1-36 | (B.1.8) | (A.1.1) |
| B1-37 | (B.1.10) | (A.1.1) |
| B1-38 | (B.1.12) | (A.1.1) |
| B1-39 | (B.1.15) | (A.1.1) |
| B1-40 | (B.1.17) | (A.1.1) |
| B1-41 | (B.1.18) | (A.1.1) |
| B1-42 | (B.1.21) | (A.1.1) |
| B1-43 | (B.1.22) | (A.1.1) |
| B1-44 | (B.1.23) | (A.1.1) |
| B1-45 | (B.1.25) | (A.1.1) |

| | | |
|---|---|---|
| B1-46 | (B.1.26) | (A.1.1) |
| B1-47 | (B.1.29) | (A.1.1) |
| B1-48 | (B.1.38) | (A.1.1) |
| B1-49 | (B.1.44) | (A.1.1) |
| B1-50 | (B.1.46) | (A.1.1) |
| B1-51 | (B.2.4) | (A.1.1) |
| B1-52 | (B.3.1) | (A.1.1) |
| B1-53 | (C.1.4) | (A.1.1) |
| B1-54 | (C.1.5) | (A.1.1) |
| B1-55 | (C.2.1) | (A.1.1) |
| B1-56 | (D.1.4) | (A.1.1) |
| B1-57 | (D.1.5) | (A.1.1) |
| B1-58 | (D.2.3) | (A.1.1) |
| B1-59 | (D.2.5) | (A.1.1) |
| B1-60 | (D.2.6) | (A.1.1) |
| B1-61 | (E.1.1) | (A.1.1) |
| B1-62 | (E.1.3) | (A.1.1) |
| B1-63 | (E.2.2) | (A.1.1) |
| B1-64 | (E.2.3), | (A.1.1) |
| B1-65 | (F.1.2) | (A.1.1) |
| B1-66 | (F.1.3) | (A.1.1) |
| B1-67 | (F.1.5) | (A.1.1) |
| B1-68 | (G.1.4) | (A.1.1) |
| B1-69 | (G.3.1) | (A.1.1) |
| B1-70 | (G.5.1) | (A.1.1) |
| B1-71 | (H.1.2) | (A.1.1) |
| B1-72 | (H.1.3) | (A.1.1) |
| B1-73 | (H.1.4) | (A.1.1) |

| | | |
|---|---|---|
| B1-74 | (H.1.5) | (A.1.1) |
| B1-75 | (H.1.6) | (A.1.1) |
| B1-76 | (H.1.7) | (A.1.1) |
| B1-77 | (H.2.2) | (A.1.1) |
| B1-78 | (H.2.3) | (A.1.1) |
| B1-79 | (H.2.5) | (A.1.1) |
| B1-80 | (H.2.7) | (A.1.1) |
| B1-81 | (H.3.2) | (A.1.1) |
| B1-82 | (H.3.4) | (A.1.1) |
| B1-83 | (H.3.5) | (A.1.1) |
| B1-84 | (H.3.10) | (A.1.1) |
| B1-85 | (H.4.2) | (A.1.1) |
| B1-86 | (H.4.9) | (A.1.1) |
| B1-87 | (I.1.1) | (A.1.1) |
| B1-88 | (I.2.1) | (A.1.1) |
| B1-89 | (I.2.2) | (A.1.1) |
| B1-90 | (J.1.2) | (A.1.1) |
| B1-91 | (J.1.3) | (A.1.1) |
| B1-92 | (J.1.4) | (A.1.1) |
| B1-93 | (J.1.5) | (A.1.1) |
| B1-94 | (J.1.8) | (A.1.1) |
| B1-95 | (J.1.12) | (A.1.1) |
| B1-96 | (K.1.13) | (A.1.1) |
| B1-97 | (K.1.47) | (A.1.1) |
| B1-98 | (K.1.54) | (A.1.1) |
| B1-99 | (L.1.5) | (A.1.1) |
| B1-100 | (L.1.9) | (A.1.1) |
| B1-101 | (L.1.12) | (A.1.1) |

| | | |
|---|---|---|
| B1-102 | (L.1.13) | (A.1.1) |
| B1-103 | (L.1.17) | (A.1.1) |
| B1-104 | (L.1.23) | (A.1.1) |
| B1-105 | (L.1.32), | (A.1.1) |
| B1-106 | (L.1.46) | (A.1.1) |
| B1-107 | (M.1.6) | (A.1.1) |
| B1-108 | (M.1.24) | (A.1.1) |
| B1-109 | (M.1.25) | (A.1.1) |
| B1-110 | (M.1.28) | (A.1.1) |
| B1-111 | (M.1.29) | (A.1.1) |
| B1-112 | (M.1.30) | (A.1.1) |
| B1-113 | (N.7.3) | (A.1.1) |
| B1-114 | (N.7.4) | (A.1.1) |
| B1-115 | (N.7.5) | (A.1.1) |
| B1-116 | (N.13.13) | (A.1.1) |
| B1-117 | (O.2.4), | (A.1.1) |
| B1-118 | (O.4.5) | (A.1.1) |
| B1-119 | (O.4.7) | (A.1.1) |
| B1-120 | (O.4.8) | (A.1.1) |
| B1-121 | (O.5.1) | (A.1.1) |
| B1-122 | (O.26.2) | (A.1.1) |
| B1-123 | (O.27.17) | (A.1.1) |
| B1-124 | (A.1.1) | (A.1.4) |
| B1-125 | (A.1.4) | (A.1.4) |
| B1-126 | (A.1.8) | (A.1.4) |
| B1-127 | (A.1.10) | (A.1.4) |
| B1-128 | (A.1.11) | (A.1.4) |
| B1-129 | (A.1.12) | (A.1.4) |

| | | |
|---|---|---|
| B1-130 | (A.1.14) | (A.1.4) |
| B1-131 | (A.1.17) | (A.1.4) |
| B1-132 | (A.1.19) | (A.1.4) |
| B1-133 | (A.1.25) | (A.1.4) |
| B1-134 | (A.1.34) | (A.1.4) |
| B1-135 | (A.1.35) | (A.1.4) |
| B1-136 | (A.1.38) | (A.1.4) |
| B1-137 | (A.2.6) | (A.1.4) |
| B1-138 | (A.3.2) | (A.1.4) |
| B1-139 | (A.3.3) | (A.1.4) |
| B1-140 | (A.3.4) | (A.1.4) |
| B1-141 | (A.3.7) | (A.1.4) |
| B1-142 | (A.3.8) | (A.1.4) |
| B1-143 | (A.3.9) | (A.1.4) |
| B1-144 | (A.3.10) | (A.1.4) |
| B1-145 | (A.3.11) | (A.1.4) |
| B1-146 | (A.3.12) | (A.1.4) |
| B1-147 | (A.3.15) | (A.1.4) |
| B1-148 | (A.3.16) | (A.1.4) |
| B1-149 | (A.3.17) | (A.1.4) |
| B1-150 | (A.3.19) | (A.1.4) |
| B1-151 | (A.3.21) | (A.1.4) |
| B1-152 | (A.3.22) | (A.1.4) |
| B1-153 | (A.3.23) | (A.1.4) |
| B1-154 | (A.3.28) | (A.1.4) |
| B1-155 | (A.3.31) | (A.1.4) |
| B1-156 | (A.4.5) | (A.1.4) |
| B1-157 | (B.1.4) | (A.1.4) |

| | | |
|---|---|---|
| B1-158 | (B.1.5) | (A.1.4) |
| B1-159 | (B.1.8) | (A.1.4) |
| B1-160 | (B.1.10) | (A.1.4) |
| B1-161 | (B.1.12) | (A.1.4) |
| B1-162 | (B.1.15) | (A.1.4) |
| B1-163 | (B.1.17) | (A.1.4) |
| B1-164 | (B.1.18) | (A.1.4) |
| B1-165 | (B.1.21) | (A.1.4) |
| B1-166 | (B.1.22) | (A.1.4) |
| B1-167 | (B.1.23) | (A.1.4) |
| B1-168 | (B.1.25) | (A.1.4) |
| B1-169 | (B.1.26) | (A.1.4) |
| B1-170 | (B.1.29) | (A.1.4) |
| B1-171 | (B.1.38) | (A.1.4) |
| B1-172 | (B.1.44) | (A.1.4) |
| B1-173 | (B.1.46) | (A.1.4) |
| B1-174 | (B.2.4) | (A.1.4) |
| B1-175 | (B.3.1) | (A.1.4) |
| B1-176 | (C.1.4) | (A.1.4) |
| B1-177 | (C.1.5) | (A.1.4) |
| B1-178 | (C.2.1) | (A.1.4) |
| B1-179 | (D.1.4) | (A.1.4) |
| B1-180 | (D.1.5) | (A.1.4) |
| B1-181 | (D.2.3) | (A.1.4) |
| B1-182 | (D.2.5) | (A.1.4) |
| B1-183 | (D.2.6) | (A.1.4) |
| B1-184 | (E.1.1) | (A.1.4) |
| B1-185 | (E.1.3) | (A.1.4) |

| | | |
|---|---|---|
| B1-186 | (E.2.2) | (A.1.4) |
| B1-187 | (E.2.3), | (A.1.4) |
| B1-188 | (F.1.2) | (A.1.4) |
| B1-189 | (F.1.3) | (A.1.4) |
| B1-190 | (F.1.5) | (A.1.4) |
| B1-191 | (G.1.4) | (A.1.4) |
| B1-192 | (G.3.1) | (A.1.4) |
| B1-193 | (G.5.1) | (A.1.4) |
| B1-194 | (H.1.2) | (A.1.4) |
| B1-195 | (H.1.3) | (A.1.4) |
| B1-196 | (H.1.4) | (A.1.4) |
| B1-197 | (H.1.5) | (A.1.4) |
| B1-198 | (H.1.6) | (A.1.4) |
| B1-199 | (H.1.7) | (A.1.4) |
| B1-200 | (H.2.2) | (A.1.4) |
| B1-201 | (H.2.3) | (A.1.4) |
| B1-202 | (H.2.5) | (A.1.4) |
| B1-203 | (H.2.7) | (A.1.4) |
| B1-204 | (H.3.2) | (A.1.4) |
| B1-205 | (H.3.4) | (A.1.4) |
| B1-206 | (H.3.5) | (A.1.4) |
| B1-207 | (H.3.10) | (A.1.4) |
| B1-208 | (H.4.2) | (A.1.4) |
| B1-209 | (H.4.9) | (A.1.4) |
| B1-210 | (I.1.1) | (A.1.4) |
| B1-211 | (I.2.1) | (A.1.4) |
| B1-212 | (I.2.2) | (A.1.4) |
| B1-213 | (J.1.2) | (A.1.4) |

| | | |
|---|---|---|
| B1-214 | (J.1.3) | (A.1.4) |
| B1-215 | (J.1.4) | (A.1.4) |
| B1-216 | (J.1.5) | (A.1.4) |
| B1-217 | (J.1.8) | (A.1.4) |
| B1-218 | (J.1.12) | (A.1.4) |
| B1-219 | (K.1.13) | (A.1.4) |
| B1-220 | (K.1.47) | (A.1.4) |
| B1-221 | (K.1.54) | (A.1.4) |
| B1-222 | (L.1.5) | (A.1.4) |
| B1-223 | (L.1.9) | (A.1.4) |
| B1-224 | (L.1.12) | (A.1.4) |
| B1-225 | (L.1.13) | (A.1.4) |
| B1-226 | (L.1.17) | (A.1.4) |
| B1-227 | (L.1.23) | (A.1.4) |
| B1-228 | (L.1.32), | (A.1.4) |
| B1-229 | (L.1.46) | (A.1.4) |
| B1-230 | (M.1.6) | (A.1.4) |
| B1-231 | (M.1.24) | (A.1.4) |
| B1-232 | (M.1.25) | (A.1.4) |
| B1-233 | (M.1.28) | (A.1.4) |
| B1-234 | (M.1.29) | (A.1.4) |
| B1-235 | (M.1.30) | (A.1.4) |
| B1-236 | (N.7.3) | (A.1.4) |
| B1-237 | (N.7.4) | (A.1.4) |
| B1-238 | (N.7.5) | (A.1.4) |
| B1-239 | (N.13.13) | (A.1.4) |
| B1-240 | (O.2.4), | (A.1.4) |
| B1-241 | (O.4.5) | (A.1.4) |

| | | |
|---|---|---|
| B1-242 | (O.4.7) | (A.1.4) |
| B1-243 | (O.4.8) | (A.1.4) |
| B1-244 | (O.5.1) | (A.1.4) |
| B1-245 | (O.26.2) | (A.1.4) |
| B1-246 | (O.27.17) | (A.1.4) |
| B1-247 | (A.1.1) | (A.1.14) |
| B1-248 | (A.1.4) | (A.1.14) |
| B1-249 | (A.1.8) | (A.1.14) |
| B1-250 | (A.1.10) | (A.1.14) |
| B1-251 | (A.1.11) | (A.1.14) |
| B1-252 | (A.1.12) | (A.1.14) |
| B1-253 | (A.1.14) | (A.1.14) |
| B1-254 | (A.1.17) | (A.1.14) |
| B1-255 | (A.1.19) | (A.1.14) |
| B1-256 | (A.1.25) | (A.1.14) |
| B1-257 | (A.1.34) | (A.1.14) |
| B1-258 | (A.1.35) | (A.1.14) |
| B1-259 | (A.1.38) | (A.1.14) |
| B1-260 | (A.2.6) | (A.1.14) |
| B1-261 | (A.3.2) | (A.1.14) |
| B1-262 | (A.3.3) | (A.1.14) |
| B1-263 | (A.3.4) | (A.1.14) |
| B1-264 | (A.3.7) | (A.1.14) |
| B1-265 | (A.3.8) | (A.1.14) |
| B1-266 | (A.3.9) | (A.1.14) |
| B1-267 | (A.3.10) | (A.1.14) |
| B1-268 | (A.3.11) | (A.1.14) |
| B1-269 | (A.3.12) | (A.1.14) |

| | | |
|---|---|---|
| B1-270 | (A.3.15) | (A.1.14) |
| B1-271 | (A.3.16) | (A.1.14) |
| B1-272 | (A.3.17) | (A.1.14) |
| B1-273 | (A.3.19) | (A.1.14) |
| B1-274 | (A.3.21) | (A.1.14) |
| B1-275 | (A.3.22) | (A.1.14) |
| B1-276 | (A.3.23) | (A.1.14) |
| B1-277 | (A.3.28) | (A.1.14) |
| B1-278 | (A.3.31) | (A.1.14) |
| B1-279 | (A.4.5) | (A.1.14) |
| B1-280 | (B.1.4) | (A.1.14) |
| B1-281 | (B.1.5) | (A.1.14) |
| B1-282 | (B.1.8) | (A.1.14) |
| B1-283 | (B.1.10) | (A.1.14) |
| B1-284 | (B.1.12) | (A.1.14) |
| B1-285 | (B.1.15) | (A.1.14) |
| B1-286 | (B.1.17) | (A.1.14) |
| B1-287 | (B.1.18) | (A.1.14) |
| B1-288 | (B.1.21) | (A.1.14) |
| B1-289 | (B.1.22) | (A.1.14) |
| B1-290 | (B.1.23) | (A.1.14) |
| B1-291 | (B.1.25) | (A.1.14) |
| B1-292 | (B.1.26) | (A.1.14) |
| B1-293 | (B.1.29) | (A.1.14) |
| B1-294 | (B.1.38) | (A.1.14) |
| B1-295 | (B.1.44) | (A.1.14) |
| B1-296 | (B.1.46) | (A.1.14) |
| B1-297 | (B.2.4) | (A.1.14) |

| | | |
|---|---|---|
| B1-298 | (B.3.1) | (A.1.14) |
| B1-299 | (C.1.4) | (A.1.14) |
| B1-300 | (C.1.5) | (A.1.14) |
| B1-301 | (C.2.1) | (A.1.14) |
| B1-302 | (D.1.4) | (A.1.14) |
| B1-303 | (D.1.5) | (A.1.14) |
| B1-304 | (D.2.3) | (A.1.14) |
| B1-305 | (D.2.5) | (A.1.14) |
| B1-306 | (D.2.6) | (A.1.14) |
| B1-307 | (E.1.1) | (A.1.14) |
| B1-308 | (E.1.3) | (A.1.14) |
| B1-309 | (E.2.2) | (A.1.14) |
| B1-310 | (E.2.3), | (A.1.14) |
| B1-311 | (F.1.2) | (A.1.14) |
| B1-312 | (F.1.3) | (A.1.14) |
| B1-313 | (F.1.5) | (A.1.14) |
| B1-314 | (G.1.4) | (A.1.14) |
| B1-315 | (G.3.1) | (A.1.14) |
| B1-316 | (G.5.1) | (A.1.14) |
| B1-317 | (H.1.2) | (A.1.14) |
| B1-318 | (H.1.3) | (A.1.14) |
| B1-319 | (H.1.4) | (A.1.14) |
| B1-320 | (H.1.5) | (A.1.14) |
| B1-321 | (H.1.6) | (A.1.14) |
| B1-322 | (H.1.7) | (A.1.14) |
| B1-323 | (H.2.2) | (A.1.14) |
| B1-324 | (H.2.3) | (A.1.14) |
| B1-325 | (H.2.5) | (A.1.14) |

| | | |
|---|---|---|
| B1-326 | (H.2.7) | (A.1.14) |
| B1-327 | (H.3.2) | (A.1.14) |
| B1-328 | (H.3.4) | (A.1.14) |
| B1-329 | (H.3.5) | (A.1.14) |
| B1-330 | (H.3.10) | (A.1.14) |
| B1-331 | (H.4.2) | (A.1.14) |
| B1-332 | (H.4.9) | (A.1.14) |
| B1-333 | (I.1.1) | (A.1.14) |
| B1-334 | (I.2.1) | (A.1.14) |
| B1-335 | (I.2.2) | (A.1.14) |
| B1-336 | (J.1.2) | (A.1.14) |
| B1-337 | (J.1.3) | (A.1.14) |
| B1-338 | (J.1.4) | (A.1.14) |
| B1-339 | (J.1.5) | (A.1.14) |
| B1-340 | (J.1.8) | (A.1.14) |
| B1-341 | (J.1.12) | (A.1.14) |
| B1-342 | (K.1.13) | (A.1.14) |
| B1-343 | (K.1.47) | (A.1.14) |
| B1-344 | (K.1.54) | (A.1.14) |
| B1-345 | (L.1.5) | (A.1.14) |
| B1-346 | (L.1.9) | (A.1.14) |
| B1-347 | (L.1.12) | (A.1.14) |
| B1-348 | (L.1.13) | (A.1.14) |
| B1-349 | (L.1.17) | (A.1.14) |
| B1-350 | (L.1.23) | (A.1.14) |
| B1-351 | (L.1.32), | (A.1.14) |
| B1-352 | (L.1.46) | (A.1.14) |
| B1-353 | (M.1.6) | (A.1.14) |

| | | |
|---|---|---|
| B1-354 | (M.1.24) | (A.1.14) |
| B1-355 | (M.1.25) | (A.1.14) |
| B1-356 | (M.1.28) | (A.1.14) |
| B1-357 | (M.1.29) | (A.1.14) |
| B1-358 | (M.1.30) | (A.1.14) |
| B1-359 | (N.7.3) | (A.1.14) |
| B1-360 | (N.7.4) | (A.1.14) |
| B1-361 | (N.7.5) | (A.1.14) |
| B1-362 | (N.13.13) | (A.1.14) |
| B1-363 | (O.2.4), | (A.1.14) |
| B1-364 | (O.4.5) | (A.1.14) |
| B1-365 | (O.4.7) | (A.1.14) |
| B1-366 | (O.4.8) | (A.1.14) |
| B1-367 | (O.5.1) | (A.1.14) |
| B1-368 | (O.26.2) | (A.1.14) |
| B1-369 | (O.27.17) | (A.1.14) |
| B1-370 | (A.1.1) | (A.1.17) |
| B1-371 | (A.1.4) | (A.1.17) |
| B1-372 | (A.1.8) | (A.1.17) |
| B1-373 | (A.1.10) | (A.1.17) |
| B1-374 | (A.1.11) | (A.1.17) |
| B1-375 | (A.1.12) | (A.1.17) |
| B1-376 | (A.1.14) | (A.1.17) |
| B1-377 | (A.1.17) | (A.1.17) |
| B1-378 | (A.1.19) | (A.1.17) |
| B1-379 | (A.1.25) | (A.1.17) |
| B1-380 | (A.1.34) | (A.1.17) |
| B1-381 | (A.1.35) | (A.1.17) |

| | | |
|---|---|---|
| B1-382 | (A.1.38) | (A.1.17) |
| B1-383 | (A.2.6) | (A.1.17) |
| B1-384 | (A.3.2) | (A.1.17) |
| B1-385 | (A.3.3) | (A.1.17) |
| B1-386 | (A.3.4) | (A.1.17) |
| B1-387 | (A.3.7) | (A.1.17) |
| B1-388 | (A.3.8) | (A.1.17) |
| B1-389 | (A.3.9) | (A.1.17) |
| B1-390 | (A.3.10) | (A.1.17) |
| B1-391 | (A.3.11) | (A.1.17) |
| B1-392 | (A.3.12) | (A.1.17) |
| B1-393 | (A.3.15) | (A.1.17) |
| B1-394 | (A.3.16) | (A.1.17) |
| B1-395 | (A.3.17) | (A.1.17) |
| B1-396 | (A.3.19) | (A.1.17) |
| B1-397 | (A.3.21) | (A.1.17) |
| B1-398 | (A.3.22) | (A.1.17) |
| B1-399 | (A.3.23) | (A.1.17) |
| B1-400 | (A.3.28) | (A.1.17) |
| B1-401 | (A.3.31) | (A.1.17) |
| B1-402 | (A.4.5) | (A.1.17) |
| B1-403 | (B.1.4) | (A.1.17) |
| B1-404 | (B.1.5) | (A.1.17) |
| B1-405 | (B.1.8) | (A.1.17) |
| B1-406 | (B.1.10) | (A.1.17) |
| B1-407 | (B.1.12) | (A.1.17) |
| B1-408 | (B.1.15) | (A.1.17) |
| B1-409 | (B.1.17) | (A.1.17) |

| | | |
|---|---|---|
| B1-410 | (B.1.18) | (A.1.17) |
| B1-411 | (B.1.21) | (A.1.17) |
| B1-412 | (B.1.22) | (A.1.17) |
| B1-413 | (B.1.23) | (A.1.17) |
| B1-414 | (B.1.25) | (A.1.17) |
| B1-415 | (B.1.26) | (A.1.17) |
| B1-416 | (B.1.29) | (A.1.17) |
| B1-417 | (B.1.38) | (A.1.17) |
| B1-418 | (B.1.44) | (A.1.17) |
| B1-419 | (B.1.46) | (A.1.17) |
| B1-420 | (B.2.4) | (A.1.17) |
| B1-421 | (B.3.1) | (A.1.17) |
| B1-422 | (C.1.4) | (A.1.17) |
| B1-423 | (C.1.5) | (A.1.17) |
| B1-424 | (C.2.1) | (A.1.17) |
| B1-425 | (D.1.4) | (A.1.17) |
| B1-426 | (D.1.5) | (A.1.17) |
| B1-427 | (D.2.3) | (A.1.17) |
| B1-428 | (D.2.5) | (A.1.17) |
| B1-429 | (D.2.6) | (A.1.17) |
| B1-430 | (E.1.1) | (A.1.17) |
| B1-431 | (E.1.3) | (A.1.17) |
| B1-432 | (E.2.2) | (A.1.17) |
| B1-433 | (E.2.3), | (A.1.17) |
| B1-434 | (F.1.2) | (A.1.17) |
| B1-435 | (F.1.3) | (A.1.17) |
| B1-436 | (F.1.5) | (A.1.17) |
| B1-437 | (G.1.4) | (A.1.17) |

| | | |
|---|---|---|
| B1-438 | (G.3.1) | (A.1.17) |
| B1-439 | (G.5.1) | (A.1.17) |
| B1-440 | (H.1.2) | (A.1.17) |
| B1-441 | (H.1.3) | (A.1.17) |
| B1-442 | (H.1.4) | (A.1.17) |
| B1-443 | (H.1.5) | (A.1.17) |
| B1-444 | (H.1.6) | (A.1.17) |
| B1-445 | (H.1.7) | (A.1.17) |
| B1-446 | (H.2.2) | (A.1.17) |
| B1-447 | (H.2.3) | (A.1.17) |
| B1-448 | (H.2.5) | (A.1.17) |
| B1-449 | (H.2.7) | (A.1.17) |
| B1-450 | (H.3.2) | (A.1.17) |
| B1-451 | (H.3.4) | (A.1.17) |
| B1-452 | (H.3.5) | (A.1.17) |
| B1-453 | (H.3.10) | (A.1.17) |
| B1-454 | (H.4.2) | (A.1.17) |
| B1-455 | (H.4.9) | (A.1.17) |
| B1-456 | (I.1.1) | (A.1.17) |
| B1-457 | (I.2.1) | (A.1.17) |
| B1-458 | (I.2.2) | (A.1.17) |
| B1-459 | (J.1.2) | (A.1.17) |
| B1-460 | (J.1.3) | (A.1.17) |
| B1-461 | (J.1.4) | (A.1.17) |
| B1-462 | (J.1.5) | (A.1.17) |
| B1-463 | (J.1.8) | (A.1.17) |
| B1-464 | (J.1.12) | (A.1.17) |
| B1-465 | (K.1.13) | (A.1.17) |

| | | |
|---|---|---|
| B1-466 | (K.1.47) | (A.1.17) |
| B1-467 | (K.1.54) | (A.1.17) |
| B1-468 | (L.1.5) | (A.1.17) |
| B1-469 | (L.1.9) | (A.1.17) |
| B1-470 | (L.1.12) | (A.1.17) |
| B1-471 | (L.1.13) | (A.1.17) |
| B1-472 | (L.1.17) | (A.1.17) |
| B1-473 | (L.1.23) | (A.1.17) |
| B1-474 | (L.1.32), | (A.1.17) |
| B1-475 | (L.1.46) | (A.1.17) |
| B1-476 | (M.1.6) | (A.1.17) |
| B1-477 | (M.1.24) | (A.1.17) |
| B1-478 | (M.1.25) | (A.1.17) |
| B1-479 | (M.1.28) | (A.1.17) |
| B1-480 | (M.1.29) | (A.1.17) |
| B1-481 | (M.1.30) | (A.1.17) |
| B1-482 | (N.7.3) | (A.1.17) |
| B1-483 | (N.7.4) | (A.1.17) |
| B1-484 | (N.7.5) | (A.1.17) |
| B1-485 | (N.13.13) | (A.1.17) |
| B1-486 | (O.2.4), | (A.1.17) |
| B1-487 | (O.4.5) | (A.1.17) |
| B1-488 | (O.4.7) | (A.1.17) |
| B1-489 | (O.4.8) | (A.1.17) |
| B1-490 | (O.5.1) | (A.1.17) |
| B1-491 | (O.26.2) | (A.1.17) |
| B1-492 | (O.27.17) | (A.1.17) |
| B1-493 | (A.1.1) | (A.1.19) |
| B1-494 | (A.1.4) | (A.1.19) |
| B1-495 | (A.1.8) | (A.1.19) |
| B1-496 | (A.1.10) | (A.1.19) |
| B1-497 | (A.1.11) | (A.1.19) |
| B1-498 | (A.1.12) | (A.1.19) |
| B1-499 | (A.1.14) | (A.1.19) |
| B1-500 | (A.1.17) | (A.1.19) |
| B1-501 | (A.1.19) | (A.1.19) |
| B1-502 | (A.1.25) | (A.1.19) |
| B1-503 | (A.1.34) | (A.1.19) |
| B1-504 | (A.1.35) | (A.1.19) |
| B1-505 | (A.1.38) | (A.1.19) |
| B1-506 | (A.2.6) | (A.1.19) |
| B1-507 | (A.3.2) | (A.1.19) |
| B1-508 | (A.3.3) | (A.1.19) |
| B1-509 | (A.3.4) | (A.1.19) |
| B1-510 | (A.3.7) | (A.1.19) |
| B1-511 | (A.3.8) | (A.1.19) |
| B1-512 | (A.3.9) | (A.1.19) |
| B1-513 | (A.3.10) | (A.1.19) |
| B1-514 | (A.3.11) | (A.1.19) |
| B1-515 | (A.3.12) | (A.1.19) |
| B1-516 | (A.3.15) | (A.1.19) |
| B1-517 | (A.3.16) | (A.1.19) |
| B1-518 | (A.3.17) | (A.1.19) |
| B1-519 | (A.3.19) | (A.1.19) |
| B1-520 | (A.3.21) | (A.1.19) |
| B1-521 | (A.3.22) | (A.1.19) |

| | | |
|---|---|---|
| B1-522 | (A.3.23) | (A.1.19) |
| B1-523 | (A.3.28) | (A.1.19) |
| B1-524 | (A.3.31) | (A.1.19) |
| B1-525 | (A.4.5) | (A.1.19) |
| B1-526 | (B.1.4) | (A.1.19) |
| B1-527 | (B.1.5) | (A.1.19) |
| B1-528 | (B.1.8) | (A.1.19) |
| B1-529 | (B.1.10) | (A.1.19) |
| B1-530 | (B.1.12) | (A.1.19) |
| B1-531 | (B.1.15) | (A.1.19) |
| B1-532 | (B.1.17) | (A.1.19) |
| B1-533 | (B.1.18) | (A.1.19) |
| B1-534 | (B.1.21) | (A.1.19) |
| B1-535 | (B.1.22) | (A.1.19) |
| B1-536 | (B.1.23) | (A.1.19) |
| B1-537 | (B.1.25) | (A.1.19) |
| B1-538 | (B.1.26) | (A.1.19) |
| B1-539 | (B.1.29) | (A.1.19) |
| B1-540 | (B.1.38) | (A.1.19) |
| B1-541 | (B.1.44) | (A.1.19) |
| B1-542 | (B.1.46) | (A.1.19) |
| B1-543 | (B.2.4) | (A.1.19) |
| B1-544 | (B.3.1) | (A.1.19) |
| B1-545 | (C.1.4) | (A.1.19) |
| B1-546 | (C.1.5) | (A.1.19) |
| B1-547 | (C.2.1) | (A.1.19) |
| B1-548 | (D.1.4) | (A.1.19) |
| B1-549 | (D.1.5) | (A.1.19) |

| | | |
|---|---|---|
| B1-550 | (D.2.3) | (A.1.19) |
| B1-551 | (D.2.5) | (A.1.19) |
| B1-552 | (D.2.6) | (A.1.19) |
| B1-553 | (E.1.1) | (A.1.19) |
| B1-554 | (E.1.3) | (A.1.19) |
| B1-555 | (E.2.2) | (A.1.19) |
| B1-556 | (E.2.3), | (A.1.19) |
| B1-557 | (F.1.2) | (A.1.19) |
| B1-558 | (F.1.3) | (A.1.19) |
| B1-559 | (F.1.5) | (A.1.19) |
| B1-560 | (G.1.4) | (A.1.19) |
| B1-561 | (G.3.1) | (A.1.19) |
| B1-562 | (G.5.1) | (A.1.19) |
| B1-563 | (H.1.2) | (A.1.19) |
| B1-564 | (H.1.3) | (A.1.19) |
| B1-565 | (H.1.4) | (A.1.19) |
| B1-566 | (H.1.5) | (A.1.19) |
| B1-567 | (H.1.6) | (A.1.19) |
| B1-568 | (H.1.7) | (A.1.19) |
| B1-569 | (H.2.2) | (A.1.19) |
| B1-570 | (H.2.3) | (A.1.19) |
| B1-571 | (H.2.5) | (A.1.19) |
| B1-572 | (H.2.7) | (A.1.19) |
| B1-573 | (H.3.2) | (A.1.19) |
| B1-574 | (H.3.4) | (A.1.19) |
| B1-575 | (H.3.5) | (A.1.19) |
| B1-576 | (H.3.10) | (A.1.19) |
| B1-577 | (H.4.2) | (A.1.19) |

| | | |
|---|---|---|
| B1-578 | (H.4.9) | (A.1.19) |
| B1-579 | (I.1.1) | (A.1.19) |
| B1-580 | (I.2.1) | (A.1.19) |
| B1-581 | (I.2.2) | (A.1.19) |
| B1-582 | (J.1.2) | (A.1.19) |
| B1-583 | (J.1.3) | (A.1.19) |
| B1-584 | (J.1.4) | (A.1.19) |
| B1-585 | (J.1.5) | (A.1.19) |
| B1-586 | (J.1.8) | (A.1.19) |
| B1-587 | (J.1.12) | (A.1.19) |
| B1-588 | (K.1.13) | (A.1.19) |
| B1-589 | (K.1.47) | (A.1.19) |
| B1-590 | (K.1.54) | (A.1.19) |
| B1-591 | (L.1.5) | (A.1.19) |
| B1-592 | (L.1.9) | (A.1.19) |
| B1-593 | (L.1.12) | (A.1.19) |
| B1-594 | (L.1.13) | (A.1.19) |
| B1-595 | (L.1.17) | (A.1.19) |
| B1-596 | (L.1.23) | (A.1.19) |
| B1-597 | (L.1.32), | (A.1.19) |
| B1-598 | (L.1.46) | (A.1.19) |
| B1-599 | (M.1.6) | (A.1.19) |
| B1-600 | (M.1.24) | (A.1.19) |
| B1-601 | (M.1.25) | (A.1.19) |
| B1-602 | (M.1.28) | (A.1.19) |
| B1-603 | (M.1.29) | (A.1.19) |
| B1-604 | (M.1.30) | (A.1.19) |
| B1-605 | (N.7.3) | (A.1.19) |
| B1-606 | (N.7.4) | (A.1.19) |
| B1-607 | (N.7.5) | (A.1.19) |
| B1-608 | (N.13.13) | (A.1.19) |
| B1-609 | (O.2.4), | (A.1.19) |
| B1-610 | (O.4.5) | (A.1.19) |
| B1-611 | (O.4.7) | (A.1.19) |
| B1-612 | (O.4.8) | (A.1.19) |
| B1-613 | (O.5.1) | (A.1.19) |
| B1-614 | (O.26.2) | (A.1.19) |
| B1-615 | (O.27.17) | (A.1.19) |
| B1-616 | (A.1.1) | (A.1.25) |
| B1-617 | (A.1.4) | (A.1.25) |
| B1-618 | (A.1.8) | (A.1.25) |
| B1-619 | (A.1.10) | (A.1.25) |
| B1-620 | (A.1.11) | (A.1.25) |
| B1-621 | (A.1.12) | (A.1.25) |
| B1-622 | (A.1.14) | (A.1.25) |
| B1-623 | (A.1.17) | (A.1.25) |
| B1-624 | (A.1.19) | (A.1.25) |
| B1-625 | (A.1.25) | (A.1.25) |
| B1-626 | (A.1.34) | (A.1.25) |
| B1-627 | (A.1.35) | (A.1.25) |
| B1-628 | (A.1.38) | (A.1.25) |
| B1-629 | (A.2.6) | (A.1.25) |
| B1-630 | (A.3.2) | (A.1.25) |
| B1-631 | (A.3.3) | (A.1.25) |
| B1-632 | (A.3.4) | (A.1.25) |
| B1-633 | (A.3.7) | (A.1.25) |

| | | |
|---|---|---|
| B1-634 | (A.3.8) | (A.1.25) |
| B1-635 | (A.3.9) | (A.1.25) |
| B1-636 | (A.3.10) | (A.1.25) |
| B1-637 | (A.3.11) | (A.1.25) |
| B1-638 | (A.3.12) | (A.1.25) |
| B1-639 | (A.3.15) | (A.1.25) |
| B1-640 | (A.3.16) | (A.1.25) |
| B1-641 | (A.3.17) | (A.1.25) |
| B1-642 | (A.3.19) | (A.1.25) |
| B1-643 | (A.3.21) | (A.1.25) |
| B1-644 | (A.3.22) | (A.1.25) |
| B1-645 | (A.3.23) | (A.1.25) |
| B1-646 | (A.3.28) | (A.1.25) |
| B1-647 | (A.3.31) | (A.1.25) |
| B1-648 | (A.4.5) | (A.1.25) |
| B1-649 | (B.1.4) | (A.1.25) |
| B1-650 | (B.1.5) | (A.1.25) |
| B1-651 | (B.1.8) | (A.1.25) |
| B1-652 | (B.1.10) | (A.1.25) |
| B1-653 | (B.1.12) | (A.1.25) |
| B1-654 | (B.1.15) | (A.1.25) |
| B1-655 | (B.1.17) | (A.1.25) |
| B1-656 | (B.1.18) | (A.1.25) |
| B1-657 | (B.1.21) | (A.1.25) |
| B1-658 | (B.1.22) | (A.1.25) |
| B1-659 | (B.1.23) | (A.1.25) |
| B1-660 | (B.1.25) | (A.1.25) |
| B1-661 | (B.1.26) | (A.1.25) |
| B1-662 | (B.1.29) | (A.1.25) |
| B1-663 | (B.1.38) | (A.1.25) |
| B1-664 | (B.1.44) | (A.1.25) |
| B1-665 | (B.1.46) | (A.1.25) |
| B1-666 | (B.2.4) | (A.1.25) |
| B1-667 | (B.3.1) | (A.1.25) |
| B1-668 | (C.1.4) | (A.1.25) |
| B1-669 | (C.1.5) | (A.1.25) |
| B1-670 | (C.2.1) | (A.1.25) |
| B1-671 | (D.1.4) | (A.1.25) |
| B1-672 | (D.1.5) | (A.1.25) |
| B1-673 | (D.2.3) | (A.1.25) |
| B1-674 | (D.2.5) | (A.1.25) |
| B1-675 | (D.2.6) | (A.1.25) |
| B1-676 | (E.1.1) | (A.1.25) |
| B1-677 | (E.1.3) | (A.1.25) |
| B1-678 | (E.2.2) | (A.1.25) |
| B1-679 | (E.2.3), | (A.1.25) |
| B1-680 | (F.1.2) | (A.1.25) |
| B1-681 | (F.1.3) | (A.1.25) |
| B1-682 | (F.1.5) | (A.1.25) |
| B1-683 | (G.1.4) | (A.1.25) |
| B1-684 | (G.3.1) | (A.1.25) |
| B1-685 | (G.5.1) | (A.1.25) |
| B1-686 | (H.1.2) | (A.1.25) |
| B1-687 | (H.1.3) | (A.1.25) |
| B1-688 | (H.1.4) | (A.1.25) |
| B1-689 | (H.1.5) | (A.1.25) |

| | | |
|---|---|---|
| B1-690 | (H.1.6) | (A.1.25) |
| B1-691 | (H.1.7) | (A.1.25) |
| B1-692 | (H.2.2) | (A.1.25) |
| B1-693 | (H.2.3) | (A.1.25) |
| B1-694 | (H.2.5) | (A.1.25) |
| B1-695 | (H.2.7) | (A.1.25) |
| B1-696 | (H.3.2) | (A.1.25) |
| B1-697 | (H.3.4) | (A.1.25) |
| B1-698 | (H.3.5) | (A.1.25) |
| B1-699 | (H.3.10) | (A.1.25) |
| B1-700 | (H.4.2) | (A.1.25) |
| B1-701 | (H.4.9) | (A.1.25) |
| B1-702 | (I.1.1) | (A.1.25) |
| B1-703 | (I.2.1) | (A.1.25) |
| B1-704 | (I.2.2) | (A.1.25) |
| B1-705 | (J.1.2) | (A.1.25) |
| B1-706 | (J.1.3) | (A.1.25) |
| B1-707 | (J.1.4) | (A.1.25) |
| B1-708 | (J.1.5) | (A.1.25) |
| B1-709 | (J.1.8) | (A.1.25) |
| B1-710 | (J.1.12) | (A.1.25) |
| B1-711 | (K.1.13) | (A.1.25) |
| B1-712 | (K.1.47) | (A.1.25) |
| B1-713 | (K.1.54) | (A.1.25) |
| B1-714 | (L.1.5) | (A.1.25) |
| B1-715 | (L.1.9) | (A.1.25) |
| B1-716 | (L.1.12) | (A.1.25) |
| B1-717 | (L.1.13) | (A.1.25) |

| | | |
|---|---|---|
| B1-718 | (L.1.17) | (A.1.25) |
| B1-719 | (L.1.23) | (A.1.25) |
| B1-720 | (L.1.32), | (A.1.25) |
| B1-721 | (L.1.46) | (A.1.25) |
| B1-722 | (M.1.6) | (A.1.25) |
| B1-723 | (M.1.24) | (A.1.25) |
| B1-724 | (M.1.25) | (A.1.25) |
| B1-725 | (M.1.28) | (A.1.25) |
| B1-726 | (M.1.29) | (A.1.25) |
| B1-727 | (M.1.30) | (A.1.25) |
| B1-728 | (N.7.3) | (A.1.25) |
| B1-729 | (N.7.4) | (A.1.25) |
| B1-730 | (N.7.5) | (A.1.25) |
| B1-731 | (N.13.13) | (A.1.25) |
| B1-732 | (O.2.4), | (A.1.25) |
| B1-733 | (O.4.5) | (A.1.25) |
| B1-734 | (O.4.7) | (A.1.25) |
| B1-735 | (O.4.8) | (A.1.25) |
| B1-736 | (O.5.1) | (A.1.25) |
| B1-737 | (O.26.2) | (A.1.25) |
| B1-738 | (O.27.17) | (A.1.25) |
| B1-739 | (A.1.1) | (A.1.34) |
| B1-740 | (A.1.4) | (A.1.34) |
| B1-741 | (A.1.8) | (A.1.34) |
| B1-742 | (A.1.10) | (A.1.34) |
| B1-743 | (A.1.11) | (A.1.34) |
| B1-744 | (A.1.12) | (A.1.34) |
| B1-745 | (A.1.14) | (A.1.34) |

| | | |
|---|---|---|
| B1-746 | (A.1.17) | (A.1.34) |
| B1-747 | (A.1.19) | (A.1.34) |
| B1-748 | (A.1.25) | (A.1.34) |
| B1-749 | (A.1.34) | (A.1.34) |
| B1-750 | (A.1.35) | (A.1.34) |
| B1-751 | (A.1.38) | (A.1.34) |
| B1-752 | (A.2.6) | (A.1.34) |
| B1-753 | (A.3.2) | (A.1.34) |
| B1-754 | (A.3.3) | (A.1.34) |
| B1-755 | (A.3.4) | (A.1.34) |
| B1-756 | (A.3.7) | (A.1.34) |
| B1-757 | (A.3.8) | (A.1.34) |
| B1-758 | (A.3.9) | (A.1.34) |
| B1-759 | (A.3.10) | (A.1.34) |
| B1-760 | (A.3.11) | (A.1.34) |
| B1-761 | (A.3.12) | (A.1.34) |
| B1-762 | (A.3.15) | (A.1.34) |
| B1-763 | (A.3.16) | (A.1.34) |
| B1-764 | (A.3.17) | (A.1.34) |
| B1-765 | (A.3.19) | (A.1.34) |
| B1-766 | (A.3.21) | (A.1.34) |
| B1-767 | (A.3.22) | (A.1.34) |
| B1-768 | (A.3.23) | (A.1.34) |
| B1-769 | (A.3.28) | (A.1.34) |
| B1-770 | (A.3.31) | (A.1.34) |
| B1-771 | (A.4.5) | (A.1.34) |
| B1-772 | (B.1.4) | (A.1.34) |
| B1-773 | (B.1.5) | (A.1.34) |

| | | |
|---|---|---|
| B1-774 | (B.1.8) | (A.1.34) |
| B1-775 | (B.1.10) | (A.1.34) |
| B1-776 | (B.1.12) | (A.1.34) |
| B1-777 | (B.1.15) | (A.1.34) |
| B1-778 | (B.1.17) | (A.1.34) |
| B1-779 | (B.1.18) | (A.1.34) |
| B1-780 | (B.1.21) | (A.1.34) |
| B1-781 | (B.1.22) | (A.1.34) |
| B1-782 | (B.1.23) | (A.1.34) |
| B1-783 | (B.1.25) | (A.1.34) |
| B1-784 | (B.1.26) | (A.1.34) |
| B1-785 | (B.1.29) | (A.1.34) |
| B1-786 | (B.1.38) | (A.1.34) |
| B1-787 | (B.1.44) | (A.1.34) |
| B1-788 | (B.1.46) | (A.1.34) |
| B1-789 | (B.2.4) | (A.1.34) |
| B1-790 | (B.3.1) | (A.1.34) |
| B1-791 | (C.1.4) | (A.1.34) |
| B1-792 | (C.1.5) | (A.1.34) |
| B1-793 | (C.2.1) | (A.1.34) |
| B1-794 | (D.1.4) | (A.1.34) |
| B1-795 | (D.1.5) | (A.1.34) |
| B1-796 | (D.2.3) | (A.1.34) |
| B1-797 | (D.2.5) | (A.1.34) |
| B1-798 | (D.2.6) | (A.1.34) |
| B1-799 | (E.1.1) | (A.1.34) |
| B1-800 | (E.1.3) | (A.1.34) |
| B1-801 | (E.2.2) | (A.1.34) |

| | | |
|---|---|---|
| B1-802 | (E.2.3), | (A.1.34) |
| B1-803 | (F.1.2) | (A.1.34) |
| B1-804 | (F.1.3) | (A.1.34) |
| B1-805 | (F.1.5) | (A.1.34) |
| B1-806 | (G.1.4) | (A.1.34) |
| B1-807 | (G.3.1) | (A.1.34) |
| B1-808 | (G.5.1) | (A.1.34) |
| B1-809 | (H.1.2) | (A.1.34) |
| B1-810 | (H.1.3) | (A.1.34) |
| B1-811 | (H.1.4) | (A.1.34) |
| B1-812 | (H.1.5) | (A.1.34) |
| B1-813 | (H.1.6) | (A.1.34) |
| B1-814 | (H.1.7) | (A.1.34) |
| B1-815 | (H.2.2) | (A.1.34) |
| B1-816 | (H.2.3) | (A.1.34) |
| B1-817 | (H.2.5) | (A.1.34) |
| B1-818 | (H.2.7) | (A.1.34) |
| B1-819 | (H.3.2) | (A.1.34) |
| B1-820 | (H.3.4) | (A.1.34) |
| B1-821 | (H.3.5) | (A.1.34) |
| B1-822 | (H.3.10) | (A.1.34) |
| B1-823 | (H.4.2) | (A.1.34) |
| B1-824 | (H.4.9) | (A.1.34) |
| B1-825 | (I.1.1) | (A.1.34) |
| B1-826 | (I.2.1) | (A.1.34) |
| B1-827 | (I.2.2) | (A.1.34) |
| B1-828 | (J.1.2) | (A.1.34) |
| B1-829 | (J.1.3) | (A.1.34) |

| | | |
|---|---|---|
| B1-830 | (J.1.4) | (A.1.34) |
| B1-831 | (J.1.5) | (A.1.34) |
| B1-832 | (J.1.8) | (A.1.34) |
| B1-833 | (J.1.12) | (A.1.34) |
| B1-834 | (K.1.13) | (A.1.34) |
| B1-835 | (K.1.47) | (A.1.34) |
| B1-836 | (K.1.54) | (A.1.34) |
| B1-837 | (L.1.5) | (A.1.34) |
| B1-838 | (L.1.9) | (A.1.34) |
| B1-839 | (L.1.12) | (A.1.34) |
| B1-840 | (L.1.13) | (A.1.34) |
| B1-841 | (L.1.17) | (A.1.34) |
| B1-842 | (L.1.23) | (A.1.34) |
| B1-843 | (L.1.32), | (A.1.34) |
| B1-844 | (L.1.46) | (A.1.34) |
| B1-845 | (M.1.6) | (A.1.34) |
| B1-846 | (M.1.24) | (A.1.34) |
| B1-847 | (M.1.25) | (A.1.34) |
| B1-848 | (M.1.28) | (A.1.34) |
| B1-849 | (M.1.29) | (A.1.34) |
| B1-850 | (M.1.30) | (A.1.34) |
| B1-851 | (N.7.3) | (A.1.34) |
| B1-852 | (N.7.4) | (A.1.34) |
| B1-853 | (N.7.5) | (A.1.34) |
| B1-854 | (N.13.13) | (A.1.34) |
| B1-855 | (O.2.4), | (A.1.34) |
| B1-856 | (O.4.5) | (A.1.34) |
| B1-857 | (O.4.7) | (A.1.34) |

| | | |
|---|---|---|
| B1-858 | (O.4.8) | (A.1.34) |
| B1-859 | (O.5.1) | (A.1.34) |
| B1-860 | (O.26.2) | (A.1.34) |
| B1-861 | (O.27.17) | (A.1.34) |
| B1-862 | (A.1.1) | (A.1.35) |
| B1-863 | (A.1.4) | (A.1.35) |
| B1-864 | (A.1.8) | (A.1.35) |
| B1-865 | (A.1.10) | (A.1.35) |
| B1-866 | (A.1.11) | (A.1.35) |
| B1-867 | (A.1.12) | (A.1.35) |
| B1-868 | (A.1.14) | (A.1.35) |
| B1-869 | (A.1.17) | (A.1.35) |
| B1-870 | (A.1.19) | (A.1.35) |
| B1-871 | (A.1.25) | (A.1.35) |
| B1-872 | (A.1.34) | (A.1.35) |
| B1-873 | (A.1.35) | (A.1.35) |
| B1-874 | (A.1.38) | (A.1.35) |
| B1-875 | (A.2.6) | (A.1.35) |
| B1-876 | (A.3.2) | (A.1.35) |
| B1-877 | (A.3.3) | (A.1.35) |
| B1-878 | (A.3.4) | (A.1.35) |
| B1-879 | (A.3.7) | (A.1.35) |
| B1-880 | (A.3.8) | (A.1.35) |
| B1-881 | (A.3.9) | (A.1.35) |
| B1-882 | (A.3.10) | (A.1.35) |
| B1-883 | (A.3.11) | (A.1.35) |
| B1-884 | (A.3.12) | (A.1.35) |
| B1-885 | (A.3.15) | (A.1.35) |

| | | |
|---|---|---|
| B1-886 | (A.3.16) | (A.1.35) |
| B1-887 | (A.3.17) | (A.1.35) |
| B1-888 | (A.3.19) | (A.1.35) |
| B1-889 | (A.3.21) | (A.1.35) |
| B1-890 | (A.3.22) | (A.1.35) |
| B1-891 | (A.3.23) | (A.1.35) |
| B1-892 | (A.3.28) | (A.1.35) |
| B1-893 | (A.3.31) | (A.1.35) |
| B1-894 | (A.4.5) | (A.1.35) |
| B1-895 | (B.1.4) | (A.1.35) |
| B1-896 | (B.1.5) | (A.1.35) |
| B1-897 | (B.1.8) | (A.1.35) |
| B1-898 | (B.1.10) | (A.1.35) |
| B1-899 | (B.1.12) | (A.1.35) |
| B1-900 | (B.1.15) | (A.1.35) |
| B1-901 | (B.1.17) | (A.1.35) |
| B1-902 | (B.1.18) | (A.1.35) |
| B1-903 | (B.1.21) | (A.1.35) |
| B1-904 | (B.1.22) | (A.1.35) |
| B1-905 | (B.1.23) | (A.1.35) |
| B1-906 | (B.1.25) | (A.1.35) |
| B1-907 | (B.1.26) | (A.1.35) |
| B1-908 | (B.1.29) | (A.1.35) |
| B1-909 | (B.1.38) | (A.1.35) |
| B1-910 | (B.1.44) | (A.1.35) |
| B1-911 | (B.1.46) | (A.1.35) |
| B1-912 | (B.2.4) | (A.1.35) |
| B1-913 | (B.3.1) | (A.1.35) |

| | | |
|---|---|---|
| B1-914 | (C.1.4) | (A.1.35) |
| B1-915 | (C.1.5) | (A.1.35) |
| B1-916 | (C.2.1) | (A.1.35) |
| B1-917 | (D.1.4) | (A.1.35) |
| B1-918 | (D.1.5) | (A.1.35) |
| B1-919 | (D.2.3) | (A.1.35) |
| B1-920 | (D.2.5) | (A.1.35) |
| B1-921 | (D.2.6) | (A.1.35) |
| B1-922 | (E.1.1) | (A.1.35) |
| B1-923 | (E.1.3) | (A.1.35) |
| B1-924 | (E.2.2) | (A.1.35) |
| B1-925 | (E.2.3), | (A.1.35) |
| B1-926 | (F.1.2) | (A.1.35) |
| B1-927 | (F.1.3) | (A.1.35) |
| B1-928 | (F.1.5) | (A.1.35) |
| B1-929 | (G.1.4) | (A.1.35) |
| B1-930 | (G.3.1) | (A.1.35) |
| B1-931 | (G.5.1) | (A.1.35) |
| B1-932 | (H.1.2) | (A.1.35) |
| B1-933 | (H.1.3) | (A.1.35) |
| B1-934 | (H.1.4) | (A.1.35) |
| B1-935 | (H.1.5) | (A.1.35) |
| B1-936 | (H.1.6) | (A.1.35) |
| B1-937 | (H.1.7) | (A.1.35) |
| B1-938 | (H.2.2) | (A.1.35) |
| B1-939 | (H.2.3) | (A.1.35) |
| B1-940 | (H.2.5) | (A.1.35) |
| B1-941 | (H.2.7) | (A.1.35) |

| | | |
|---|---|---|
| B1-942 | (H.3.2) | (A.1.35) |
| B1-943 | (H.3.4) | (A.1.35) |
| B1-944 | (H.3.5) | (A.1.35) |
| B1-945 | (H.3.10) | (A.1.35) |
| B1-946 | (H.4.2) | (A.1.35) |
| B1-947 | (H.4.9) | (A.1.35) |
| B1-948 | (I.1.1) | (A.1.35) |
| B1-949 | (I.2.1) | (A.1.35) |
| B1-950 | (I.2.2) | (A.1.35) |
| B1-951 | (J.1.2) | (A.1.35) |
| B1-952 | (J.1.3) | (A.1.35) |
| B1-953 | (J.1.4) | (A.1.35) |
| B1-954 | (J.1.5) | (A.1.35) |
| B1-955 | (J.1.8) | (A.1.35) |
| B1-956 | (J.1.12) | (A.1.35) |
| B1-957 | (K.1.13) | (A.1.35) |
| B1-958 | (K.1.47) | (A.1.35) |
| B1-959 | (K.1.54) | (A.1.35) |
| B1-960 | (L.1.5) | (A.1.35) |
| B1-961 | (L.1.9) | (A.1.35) |
| B1-962 | (L.1.12) | (A.1.35) |
| B1-963 | (L.1.13) | (A.1.35) |
| B1-964 | (L.1.17) | (A.1.35) |
| B1-965 | (L.1.23) | (A.1.35) |
| B1-966 | (L.1.32), | (A.1.35) |
| B1-967 | (L.1.46) | (A.1.35) |
| B1-968 | (M.1.6) | (A.1.35) |
| B1-969 | (M.1.24) | (A.1.35) |

| | | |
|---|---|---|
| B1-970 | (M.1.25) | (A.1.35) |
| B1-971 | (M.1.28) | (A.1.35) |
| B1-972 | (M.1.29) | (A.1.35) |
| B1-973 | (M.1.30) | (A.1.35) |
| B1-974 | (N.7.3) | (A.1.35) |
| B1-975 | (N.7.4) | (A.1.35) |
| B1-976 | (N.7.5) | (A.1.35) |
| B1-977 | (N.13.13) | (A.1.35) |
| B1-978 | (O.2.4), | (A.1.35) |
| B1-979 | (O.4.5) | (A.1.35) |
| B1-980 | (O.4.7) | (A.1.35) |
| B1-981 | (O.4.8) | (A.1.35) |
| B1-982 | (O.5.1) | (A.1.35) |
| B1-983 | (O.26.2) | (A.1.35) |
| B1-984 | (O.27.17) | (A.1.35) |
| B1-985 | (A.1.1) | (A.1.38) |
| B1-986 | (A.1.4) | (A.1.38) |
| B1-987 | (A.1.8) | (A.1.38) |
| B1-988 | (A.1.10) | (A.1.38) |
| B1-989 | (A.1.11) | (A.1.38) |
| B1-990 | (A.1.12) | (A.1.38) |
| B1-991 | (A.1.14) | (A.1.38) |
| B1-992 | (A.1.17) | (A.1.38) |
| B1-993 | (A.1.19) | (A.1.38) |
| B1-994 | (A.1.25) | (A.1.38) |
| B1-995 | (A.1.34) | (A.1.38) |
| B1-996 | (A.1.35) | (A.1.38) |
| B1-997 | (A.1.38) | (A.1.38) |

| | | |
|---|---|---|
| B1-998 | (A.2.6) | (A.1.38) |
| B1-999 | (A.3.2) | (A.1.38) |
| B1-1000 | (A.3.3) | (A.1.38) |
| B1-1001 | (A.3.4) | (A.1.38) |
| B1-1002 | (A.3.7) | (A.1.38) |
| B1-1003 | (A.3.8) | (A.1.38) |
| B1-1004 | (A.3.9) | (A.1.38) |
| B1-1005 | (A.3.10) | (A.1.38) |
| B1-1006 | (A.3.11) | (A.1.38) |
| B1-1007 | (A.3.12) | (A.1.38) |
| B1-1008 | (A.3.15) | (A.1.38) |
| B1-1009 | (A.3.16) | (A.1.38) |
| B1-1010 | (A.3.17) | (A.1.38) |
| B1-1011 | (A.3.19) | (A.1.38) |
| B1-1012 | (A.3.21) | (A.1.38) |
| B1-1013 | (A.3.22) | (A.1.38) |
| B1-1014 | (A.3.23) | (A.1.38) |
| B1-1015 | (A.3.28) | (A.1.38) |
| B1-1016 | (A.3.31) | (A.1.38) |
| B1-1017 | (A.4.5) | (A.1.38) |
| B1-1018 | (B.1.4) | (A.1.38) |
| B1-1019 | (B.1.5) | (A.1.38) |
| B1-1020 | (B.1.8) | (A.1.38) |
| B1-1021 | (B.1.10) | (A.1.38) |
| B1-1022 | (B.1.12) | (A.1.38) |
| B1-1023 | (B.1.15) | (A.1.38) |
| B1-1024 | (B.1.17) | (A.1.38) |
| B1-1025 | (B.1.18) | (A.1.38) |

| | | |
|---|---|---|
| B1-1026 | (B.1.21) | (A.1.38) |
| B1-1027 | (B.1.22) | (A.1.38) |
| B1-1028 | (B.1.23) | (A.1.38) |
| B1-1029 | (B.1.25) | (A.1.38) |
| B1-1030 | (B.1.26) | (A.1.38) |
| B1-1031 | (B.1.29) | (A.1.38) |
| B1-1032 | (B.1.38) | (A.1.38) |
| B1-1033 | (B.1.44) | (A.1.38) |
| B1-1034 | (B.1.46) | (A.1.38) |
| B1-1035 | (B.2.4) | (A.1.38) |
| B1-1036 | (B.3.1) | (A.1.38) |
| B1-1037 | (C.1.4) | (A.1.38) |
| B1-1038 | (C.1.5) | (A.1.38) |
| B1-1039 | (C.2.1) | (A.1.38) |
| B1-1040 | (D.1.4) | (A.1.38) |
| B1-1041 | (D.1.5) | (A.1.38) |
| B1-1042 | (D.2.3) | (A.1.38) |
| B1-1043 | (D.2.5) | (A.1.38) |
| B1-1044 | (D.2.6) | (A.1.38) |
| B1-1045 | (E.1.1) | (A.1.38) |
| B1-1046 | (E.1.3) | (A.1.38) |
| B1-1047 | (E.2.2) | (A.1.38) |
| B1-1048 | (E.2.3), | (A.1.38) |
| B1-1049 | (F.1.2) | (A.1.38) |
| B1-1050 | (F.1.3) | (A.1.38) |
| B1-1051 | (F.1.5) | (A.1.38) |
| B1-1052 | (G.1.4) | (A.1.38) |
| B1-1053 | (G.3.1) | (A.1.38) |

| | | |
|---|---|---|
| B1-1054 | (G.5.1) | (A.1.38) |
| B1-1055 | (H.1.2) | (A.1.38) |
| B1-1056 | (H.1.3) | (A.1.38) |
| B1-1057 | (H.1.4) | (A.1.38) |
| B1-1058 | (H.1.5) | (A.1.38) |
| B1-1059 | (H.1.6) | (A.1.38) |
| B1-1060 | (H.1.7) | (A.1.38) |
| B1-1061 | (H.2.2) | (A.1.38) |
| B1-1062 | (H.2.3) | (A.1.38) |
| B1-1063 | (H.2.5) | (A.1.38) |
| B1-1064 | (H.2.7) | (A.1.38) |
| B1-1065 | (H.3.2) | (A.1.38) |
| B1-1066 | (H.3.4) | (A.1.38) |
| B1-1067 | (H.3.5) | (A.1.38) |
| B1-1068 | (H.3.10) | (A.1.38) |
| B1-1069 | (H.4.2) | (A.1.38) |
| B1-1070 | (H.4.9) | (A.1.38) |
| B1-1071 | (I.1.1) | (A.1.38) |
| B1-1072 | (I.2.1) | (A.1.38) |
| B1-1073 | (I.2.2) | (A.1.38) |
| B1-1074 | (J.1.2) | (A.1.38) |
| B1-1075 | (J.1.3) | (A.1.38) |
| B1-1076 | (J.1.4) | (A.1.38) |
| B1-1077 | (J.1.5) | (A.1.38) |
| B1-1078 | (J.1.8) | (A.1.38) |
| B1-1079 | (J.1.12) | (A.1.38) |
| B1-1080 | (K.1.13) | (A.1.38) |
| B1-1081 | (K.1.47) | (A.1.38) |

| | | |
|---|---|---|
| B1-1082 | (K.1.54) | (A.1.38) |
| B1-1083 | (L.1.5) | (A.1.38) |
| B1-1084 | (L.1.9) | (A.1.38) |
| B1-1085 | (L.1.12) | (A.1.38) |
| B1-1086 | (L.1.13) | (A.1.38) |
| B1-1087 | (L.1.17) | (A.1.38) |
| B1-1088 | (L.1.23) | (A.1.38) |
| B1-1089 | (L.1.32), | (A.1.38) |
| B1-1090 | (L.1.46) | (A.1.38) |
| B1-1091 | (M.1.6) | (A.1.38) |
| B1-1092 | (M.1.24) | (A.1.38) |
| B1-1093 | (M.1.25) | (A.1.38) |
| B1-1094 | (M.1.28) | (A.1.38) |
| B1-1095 | (M.1.29) | (A.1.38) |
| B1-1096 | (M.1.30) | (A.1.38) |
| B1-1097 | (N.7.3) | (A.1.38) |
| B1-1098 | (N.7.4) | (A.1.38) |
| B1-1099 | (N.7.5) | (A.1.38) |
| B1-1100 | (N.13.13) | (A.1.38) |
| B1-1101 | (O.2.4), | (A.1.38) |
| B1-1102 | (O.4.5) | (A.1.38) |
| B1-1103 | (O.4.7) | (A.1.38) |
| B1-1104 | (O.4.8) | (A.1.38) |
| B1-1105 | (O.5.1) | (A.1.38) |
| B1-1106 | (O.26.2) | (A.1.38) |
| B1-1107 | (O.27.17) | (A.1.38) |
| B1-1108 | (A.1.1) | (A.2.6) |
| B1-1109 | (A.1.4) | (A.2.6) |

| | | |
|---|---|---|
| B1-1110 | (A.1.8) | (A.2.6) |
| B1-1111 | (A.1.10) | (A.2.6) |
| B1-1112 | (A.1.11) | (A.2.6) |
| B1-1113 | (A.1.12) | (A.2.6) |
| B1-1114 | (A.1.14) | (A.2.6) |
| B1-1115 | (A.1.17) | (A.2.6) |
| B1-1116 | (A.1.19) | (A.2.6) |
| B1-1117 | (A.1.25) | (A.2.6) |
| B1-1118 | (A.1.34) | (A.2.6) |
| B1-1119 | (A.1.35) | (A.2.6) |
| B1-1120 | (A.1.38) | (A.2.6) |
| B1-1121 | (A.2.6) | (A.2.6) |
| B1-1122 | (A.3.2) | (A.2.6) |
| B1-1123 | (A.3.3) | (A.2.6) |
| B1-1124 | (A.3.4) | (A.2.6) |
| B1-1125 | (A.3.7) | (A.2.6) |
| B1-1126 | (A.3.8) | (A.2.6) |
| B1-1127 | (A.3.9) | (A.2.6) |
| B1-1128 | (A.3.10) | (A.2.6) |
| B1-1129 | (A.3.11) | (A.2.6) |
| B1-1130 | (A.3.12) | (A.2.6) |
| B1-1131 | (A.3.15) | (A.2.6) |
| B1-1132 | (A.3.16) | (A.2.6) |
| B1-1133 | (A.3.17) | (A.2.6) |
| B1-1134 | (A.3.19) | (A.2.6) |
| B1-1135 | (A.3.21) | (A.2.6) |
| B1-1136 | (A.3.22) | (A.2.6) |
| B1-1137 | (A.3.23) | (A.2.6) |

| | | |
|---|---|---|
| B1-1138 | (A.3.28) | (A.2.6) |
| B1-1139 | (A.3.31) | (A.2.6) |
| B1-1140 | (A.4.5) | (A.2.6) |
| B1-1141 | (B.1.4) | (A.2.6) |
| B1-1142 | (B.1.5) | (A.2.6) |
| B1-1143 | (B.1.8) | (A.2.6) |
| B1-1144 | (B.1.10) | (A.2.6) |
| B1-1145 | (B.1.12) | (A.2.6) |
| B1-1146 | (B.1.15) | (A.2.6) |
| B1-1147 | (B.1.17) | (A.2.6) |
| B1-1148 | (B.1.18) | (A.2.6) |
| B1-1149 | (B.1.21) | (A.2.6) |
| B1-1150 | (B.1.22) | (A.2.6) |
| B1-1151 | (B.1.23) | (A.2.6) |
| B1-1152 | (B.1.25) | (A.2.6) |
| B1-1153 | (B.1.26) | (A.2.6) |
| B1-1154 | (B.1.29) | (A.2.6) |
| B1-1155 | (B.1.38) | (A.2.6) |
| B1-1156 | (B.1.44) | (A.2.6) |
| B1-1157 | (B.1.46) | (A.2.6) |
| B1-1158 | (B.2.4) | (A.2.6) |
| B1-1159 | (B.3.1) | (A.2.6) |
| B1-1160 | (C.1.4) | (A.2.6) |
| B1-1161 | (C.1.5) | (A.2.6) |
| B1-1162 | (C.2.1) | (A.2.6) |
| B1-1163 | (D.1.4) | (A.2.6) |
| B1-1164 | (D.1.5) | (A.2.6) |
| B1-1165 | (D.2.3) | (A.2.6) |

| | | |
|---|---|---|
| B1-1166 | (D.2.5) | (A.2.6) |
| B1-1167 | (D.2.6) | (A.2.6) |
| B1-1168 | (E.1.1) | (A.2.6) |
| B1-1169 | (E.1.3) | (A.2.6) |
| B1-1170 | (E.2.2) | (A.2.6) |
| B1-1171 | (E.2.3), | (A.2.6) |
| B1-1172 | (F.1.2) | (A.2.6) |
| B1-1173 | (F.1.3) | (A.2.6) |
| B1-1174 | (F.1.5) | (A.2.6) |
| B1-1175 | (G.1.4) | (A.2.6) |
| B1-1176 | (G.3.1) | (A.2.6) |
| B1-1177 | (G.5.1) | (A.2.6) |
| B1-1178 | (H.1.2) | (A.2.6) |
| B1-1179 | (H.1.3) | (A.2.6) |
| B1-1180 | (H.1.4) | (A.2.6) |
| B1-1181 | (H.1.5) | (A.2.6) |
| B1-1182 | (H.1.6) | (A.2.6) |
| B1-1183 | (H.1.7) | (A.2.6) |
| B1-1184 | (H.2.2) | (A.2.6) |
| B1-1185 | (H.2.3) | (A.2.6) |
| B1-1186 | (H.2.5) | (A.2.6) |
| B1-1187 | (H.2.7) | (A.2.6) |
| B1-1188 | (H.3.2) | (A.2.6) |
| B1-1189 | (H.3.4) | (A.2.6) |
| B1-1190 | (H.3.5) | (A.2.6) |
| B1-1191 | (H.3.10) | (A.2.6) |
| B1-1192 | (H.4.2) | (A.2.6) |
| B1-1193 | (H.4.9) | (A.2.6) |

| | | |
|---|---|---|
| B1-1194 | (I.1.1) | (A.2.6) |
| B1-1195 | (I.2.1) | (A.2.6) |
| B1-1196 | (I.2.2) | (A.2.6) |
| B1-1197 | (J.1.2) | (A.2.6) |
| B1-1198 | (J.1.3) | (A.2.6) |
| B1-1199 | (J.1.4) | (A.2.6) |
| B1-1200 | (J.1.5) | (A.2.6) |
| B1-1201 | (J.1.8) | (A.2.6) |
| B1-1202 | (J.1.12) | (A.2.6) |
| B1-1203 | (K.1.13) | (A.2.6) |
| B1-1204 | (K.1.47) | (A.2.6) |
| B1-1205 | (K.1.54) | (A.2.6) |
| B1-1206 | (L.1.5) | (A.2.6) |
| B1-1207 | (L.1.9) | (A.2.6) |
| B1-1208 | (L.1.12) | (A.2.6) |
| B1-1209 | (L.1.13) | (A.2.6) |
| B1-1210 | (L.1.17) | (A.2.6) |
| B1-1211 | (L.1.23) | (A.2.6) |
| B1-1212 | (L.1.32), | (A.2.6) |
| B1-1213 | (L.1.46) | (A.2.6) |
| B1-1214 | (M.1.6) | (A.2.6) |
| B1-1215 | (M.1.24) | (A.2.6) |
| B1-1216 | (M.1.25) | (A.2.6) |
| B1-1217 | (M.1.28) | (A.2.6) |
| B1-1218 | (M.1.29) | (A.2.6) |
| B1-1219 | (M.1.30) | (A.2.6) |
| B1-1220 | (N.7.3) | (A.2.6) |
| B1-1221 | (N.7.4) | (A.2.6) |

| | | |
|---|---|---|
| B1-1222 | (N.7.5) | (A.2.6) |
| B1-1223 | (N.13.13) | (A.2.6) |
| B1-1224 | (O.2.4), | (A.2.6) |
| B1-1225 | (O.4.5) | (A.2.6) |
| B1-1226 | (O.4.7) | (A.2.6) |
| B1-1227 | (O.4.8) | (A.2.6) |
| B1-1228 | (O.5.1) | (A.2.6) |
| B1-1229 | (O.26.2) | (A.2.6) |
| B1-1230 | (O.27.17) | (A.2.6) |
| B1-1231 | (A.1.1) | (A.3.4) |
| B1-1232 | (A.1.4) | (A.3.4) |
| B1-1233 | (A.1.8) | (A.3.4) |
| B1-1234 | (A.1.10) | (A.3.4) |
| B1-1235 | (A.1.11) | (A.3.4) |
| B1-1236 | (A.1.12) | (A.3.4) |
| B1-1237 | (A.1.14) | (A.3.4) |
| B1-1238 | (A.1.17) | (A.3.4) |
| B1-1239 | (A.1.19) | (A.3.4) |
| B1-1240 | (A.1.25) | (A.3.4) |
| B1-1241 | (A.1.34) | (A.3.4) |
| B1-1242 | (A.1.35) | (A.3.4) |
| B1-1243 | (A.1.38) | (A.3.4) |
| B1-1244 | (A.2.6) | (A.3.4) |
| B1-1245 | (A.3.2) | (A.3.4) |
| B1-1246 | (A.3.3) | (A.3.4) |
| B1-1247 | (A.3.4) | (A.3.4) |
| B1-1248 | (A.3.7) | (A.3.4) |
| B1-1249 | (A.3.8) | (A.3.4) |

| | | |
|---|---|---|
| B1-1250 | (A.3.9) | (A.3.4) |
| B1-1251 | (A.3.10) | (A.3.4) |
| B1-1252 | (A.3.11) | (A.3.4) |
| B1-1253 | (A.3.12) | (A.3.4) |
| B1-1254 | (A.3.15) | (A.3.4) |
| B1-1255 | (A.3.16) | (A.3.4) |
| B1-1256 | (A.3.17) | (A.3.4) |
| B1-1257 | (A.3.19) | (A.3.4) |
| B1-1258 | (A.3.21) | (A.3.4) |
| B1-1259 | (A.3.22) | (A.3.4) |
| B1-1260 | (A.3.23) | (A.3.4) |
| B1-1261 | (A.3.28) | (A.3.4) |
| B1-1262 | (A.3.31) | (A.3.4) |
| B1-1263 | (A.4.5) | (A.3.4) |
| B1-1264 | (B.1.4) | (A.3.4) |
| B1-1265 | (B.1.5) | (A.3.4) |
| B1-1266 | (B.1.8) | (A.3.4) |
| B1-1267 | (B.1.10) | (A.3.4) |
| B1-1268 | (B.1.12) | (A.3.4) |
| B1-1269 | (B.1.15) | (A.3.4) |
| B1-1270 | (B.1.17) | (A.3.4) |
| B1-1271 | (B.1.18) | (A.3.4) |
| B1-1272 | (B.1.21) | (A.3.4) |
| B1-1273 | (B.1.22) | (A.3.4) |
| B1-1274 | (B.1.23) | (A.3.4) |
| B1-1275 | (B.1.25) | (A.3.4) |
| B1-1276 | (B.1.26) | (A.3.4) |
| B1-1277 | (B.1.29) | (A.3.4) |

| | | |
|---|---|---|
| B1-1278 | (B.1.38) | (A.3.4) |
| B1-1279 | (B.1.44) | (A.3.4) |
| B1-1280 | (B.1.46) | (A.3.4) |
| B1-1281 | (B.2.4) | (A.3.4) |
| B1-1282 | (B.3.1) | (A.3.4) |
| B1-1283 | (C.1.4) | (A.3.4) |
| B1-1284 | (C.1.5) | (A.3.4) |
| B1-1285 | (C.2.1) | (A.3.4) |
| B1-1286 | (D.1.4) | (A.3.4) |
| B1-1287 | (D.1.5) | (A.3.4) |
| B1-1288 | (D.2.3) | (A.3.4) |
| B1-1289 | (D.2.5) | (A.3.4) |
| B1-1290 | (D.2.6) | (A.3.4) |
| B1-1291 | (E.1.1) | (A.3.4) |
| B1-1292 | (E.1.3) | (A.3.4) |
| B1-1293 | (E.2.2) | (A.3.4) |
| B1-1294 | (E.2.3), | (A.3.4) |
| B1-1295 | (F.1.2) | (A.3.4) |
| B1-1296 | (F.1.3) | (A.3.4) |
| B1-1297 | (F.1.5) | (A.3.4) |
| B1-1298 | (G.1.4) | (A.3.4) |
| B1-1299 | (G.3.1) | (A.3.4) |
| B1-1300 | (G.5.1) | (A.3.4) |
| B1-1301 | (H.1.2) | (A.3.4) |
| B1-1302 | (H.1.3) | (A.3.4) |
| B1-1303 | (H.1.4) | (A.3.4) |
| B1-1304 | (H.1.5) | (A.3.4) |
| B1-1305 | (H.1.6) | (A.3.4) |

| | | |
|---|---|---|
| B1-1306 | (H.1.7) | (A.3.4) |
| B1-1307 | (H.2.2) | (A.3.4) |
| B1-1308 | (H.2.3) | (A.3.4) |
| B1-1309 | (H.2.5) | (A.3.4) |
| B1-1310 | (H.2.7) | (A.3.4) |
| B1-1311 | (H.3.2) | (A.3.4) |
| B1-1312 | (H.3.4) | (A.3.4) |
| B1-1313 | (H.3.5) | (A.3.4) |
| B1-1314 | (H.3.10) | (A.3.4) |
| B1-1315 | (H.4.2) | (A.3.4) |
| B1-1316 | (H.4.9) | (A.3.4) |
| B1-1317 | (I.1.1) | (A.3.4) |
| B1-1318 | (I.2.1) | (A.3.4) |
| B1-1319 | (I.2.2) | (A.3.4) |
| B1-1320 | (J.1.2) | (A.3.4) |
| B1-1321 | (J.1.3) | (A.3.4) |
| B1-1322 | (J.1.4) | (A.3.4) |
| B1-1323 | (J.1.5) | (A.3.4) |
| B1-1324 | (J.1.8) | (A.3.4) |
| B1-1325 | (J.1.12) | (A.3.4) |
| B1-1326 | (K.1.13) | (A.3.4) |
| B1-1327 | (K.1.47) | (A.3.4) |
| B1-1328 | (K.1.54) | (A.3.4) |
| B1-1329 | (L.1.5) | (A.3.4) |
| B1-1330 | (L.1.9) | (A.3.4) |
| B1-1331 | (L.1.12) | (A.3.4) |
| B1-1332 | (L.1.13) | (A.3.4) |
| B1-1333 | (L.1.17) | (A.3.4) |

| | | |
|---|---|---|
| B1-1334 | (L.1.23) | (A.3.4) |
| B1-1335 | (L.1.32), | (A.3.4) |
| B1-1336 | (L.1.46) | (A.3.4) |
| B1-1337 | (M.1.6) | (A.3.4) |
| B1-1338 | (M.1.24) | (A.3.4) |
| B1-1339 | (M.1.25) | (A.3.4) |
| B1-1340 | (M.1.28) | (A.3.4) |
| B1-1341 | (M.1.29) | (A.3.4) |
| B1-1342 | (M.1.30) | (A.3.4) |
| B1-1343 | (N.7.3) | (A.3.4) |
| B1-1344 | (N.7.4) | (A.3.4) |
| B1-1345 | (N.7.5) | (A.3.4) |
| B1-1346 | (N.13.13) | (A.3.4) |
| B1-1347 | (O.2.4), | (A.3.4) |
| B1-1348 | (O.4.5) | (A.3.4) |
| B1-1349 | (O.4.7) | (A.3.4) |
| B1-1350 | (O.4.8) | (A.3.4) |
| B1-1351 | (O.5.1) | (A.3.4) |
| B1-1352 | (O.26.2) | (A.3.4) |
| B1-1353 | (O.27.17) | (A.3.4) |
| B1-1354 | (A.1.1) | (A.3.7) |
| B1-1355 | (A.1.4) | (A.3.7) |
| B1-1356 | (A.1.8) | (A.3.7) |
| B1-1357 | (A.1.10) | (A.3.7) |
| B1-1358 | (A.1.11) | (A.3.7) |
| B1-1359 | (A.1.12) | (A.3.7) |
| B1-1360 | (A.1.14) | (A.3.7) |
| B1-1361 | (A.1.17) | (A.3.7) |

| | | |
|---|---|---|
| B1-1362 | (A.1.19) | (A.3.7) |
| B1-1363 | (A.1.25) | (A.3.7) |
| B1-1364 | (A.1.34) | (A.3.7) |
| B1-1365 | (A.1.35) | (A.3.7) |
| B1-1366 | (A.1.38) | (A.3.7) |
| B1-1367 | (A.2.6) | (A.3.7) |
| B1-1368 | (A.3.2) | (A.3.7) |
| B1-1369 | (A.3.3) | (A.3.7) |
| B1-1370 | (A.3.4) | (A.3.7) |
| B1-1371 | (A.3.7) | (A.3.7) |
| B1-1372 | (A.3.8) | (A.3.7) |
| B1-1373 | (A.3.9) | (A.3.7) |
| B1-1374 | (A.3.10) | (A.3.7) |
| B1-1375 | (A.3.11) | (A.3.7) |
| B1-1376 | (A.3.12) | (A.3.7) |
| B1-1377 | (A.3.15) | (A.3.7) |
| B1-1378 | (A.3.16) | (A.3.7) |
| B1-1379 | (A.3.17) | (A.3.7) |
| B1-1380 | (A.3.19) | (A.3.7) |
| B1-1381 | (A.3.21) | (A.3.7) |
| B1-1382 | (A.3.22) | (A.3.7) |
| B1-1383 | (A.3.23) | (A.3.7) |
| B1-1384 | (A.3.28) | (A.3.7) |
| B1-1385 | (A.3.31) | (A.3.7) |
| B1-1386 | (A.4.5) | (A.3.7) |
| B1-1387 | (B.1.4) | (A.3.7) |
| B1-1388 | (B.1.5) | (A.3.7) |
| B1-1389 | (B.1.8) | (A.3.7) |

| | | |
|---|---|---|
| B1-1390 | (B.1.10) | (A.3.7) |
| B1-1391 | (B.1.12) | (A.3.7) |
| B1-1392 | (B.1.15) | (A.3.7) |
| B1-1393 | (B.1.17) | (A.3.7) |
| B1-1394 | (B.1.18) | (A.3.7) |
| B1-1395 | (B.1.21) | (A.3.7) |
| B1-1396 | (B.1.22) | (A.3.7) |
| B1-1397 | (B.1.23) | (A.3.7) |
| B1-1398 | (B.1.25) | (A.3.7) |
| B1-1399 | (B.1.26) | (A.3.7) |
| B1-1400 | (B.1.29) | (A.3.7) |
| B1-1401 | (B.1.38) | (A.3.7) |
| B1-1402 | (B.1.44) | (A.3.7) |
| B1-1403 | (B.1.46) | (A.3.7) |
| B1-1404 | (B.2.4) | (A.3.7) |
| B1-1405 | (B.3.1) | (A.3.7) |
| B1-1406 | (C.1.4) | (A.3.7) |
| B1-1407 | (C.1.5) | (A.3.7) |
| B1-1408 | (C.2.1) | (A.3.7) |
| B1-1409 | (D.1.4) | (A.3.7) |
| B1-1410 | (D.1.5) | (A.3.7) |
| B1-1411 | (D.2.3) | (A.3.7) |
| B1-1412 | (D.2.5) | (A.3.7) |
| B1-1413 | (D.2.6) | (A.3.7) |
| B1-1414 | (E.1.1) | (A.3.7) |
| B1-1415 | (E.1.3) | (A.3.7) |
| B1-1416 | (E.2.2) | (A.3.7) |
| B1-1417 | (E.2.3), | (A.3.7) |

| | | |
|---|---|---|
| B1-1418 | (F.1.2) | (A.3.7) |
| B1-1419 | (F.1.3) | (A.3.7) |
| B1-1420 | (F.1.5) | (A.3.7) |
| B1-1421 | (G.1.4) | (A.3.7) |
| B1-1422 | (G.3.1) | (A.3.7) |
| B1-1423 | (G.5.1) | (A.3.7) |
| B1-1424 | (H.1.2) | (A.3.7) |
| B1-1425 | (H.1.3) | (A.3.7) |
| B1-1426 | (H.1.4) | (A.3.7) |
| B1-1427 | (H.1.5) | (A.3.7) |
| B1-1428 | (H.1.6) | (A.3.7) |
| B1-1429 | (H.1.7) | (A.3.7) |
| B1-1430 | (H.2.2) | (A.3.7) |
| B1-1431 | (H.2.3) | (A.3.7) |
| B1-1432 | (H.2.5) | (A.3.7) |
| B1-1433 | (H.2.7) | (A.3.7) |
| B1-1434 | (H.3.2) | (A.3.7) |
| B1-1435 | (H.3.4) | (A.3.7) |
| B1-1436 | (H.3.5) | (A.3.7) |
| B1-1437 | (H.3.10) | (A.3.7) |
| B1-1438 | (H.4.2) | (A.3.7) |
| B1-1439 | (H.4.9) | (A.3.7) |
| B1-1440 | (I.1.1) | (A.3.7) |
| B1-1441 | (I.2.1) | (A.3.7) |
| B1-1442 | (I.2.2) | (A.3.7) |
| B1-1443 | (J.1.2) | (A.3.7) |
| B1-1444 | (J.1.3) | (A.3.7) |
| B1-1445 | (J.1.4) | (A.3.7) |

| | | |
|---|---|---|
| B1-1446 | (J.1.5) | (A.3.7) |
| B1-1447 | (J.1.8) | (A.3.7) |
| B1-1448 | (J.1.12) | (A.3.7) |
| B1-1449 | (K.1.13) | (A.3.7) |
| B1-1450 | (K.1.47) | (A.3.7) |
| B1-1451 | (K.1.54) | (A.3.7) |
| B1-1452 | (L.1.5) | (A.3.7) |
| B1-1453 | (L.1.9) | (A.3.7) |
| B1-1454 | (L.1.12) | (A.3.7) |
| B1-1455 | (L.1.13) | (A.3.7) |
| B1-1456 | (L.1.17) | (A.3.7) |
| B1-1457 | (L.1.23) | (A.3.7) |
| B1-1458 | (L.1.32), | (A.3.7) |
| B1-1459 | (L.1.46) | (A.3.7) |
| B1-1460 | (M.1.6) | (A.3.7) |
| B1-1461 | (M.1.24) | (A.3.7) |
| B1-1462 | (M.1.25) | (A.3.7) |
| B1-1463 | (M.1.28) | (A.3.7) |
| B1-1464 | (M.1.29) | (A.3.7) |
| B1-1465 | (M.1.30) | (A.3.7) |
| B1-1466 | (N.7.3) | (A.3.7) |
| B1-1467 | (N.7.4) | (A.3.7) |
| B1-1468 | (N.7.5) | (A.3.7) |
| B1-1469 | (N.13.13) | (A.3.7) |
| B1-1470 | (O.2.4), | (A.3.7) |
| B1-1471 | (O.4.5) | (A.3.7) |
| B1-1472 | (O.4.7) | (A.3.7) |
| B1-1473 | (O.4.8) | (A.3.7) |

| | | |
|---|---|---|
| B1-1474 | (O.5.1) | (A.3.7) |
| B1-1475 | (O.26.2) | (A.3.7) |
| B1-1476 | (O.27.17) | (A.3.7) |
| B1-1477 | (A.1.1) | (A.3.9) |
| B1-1478 | (A.1.4) | (A.3.9) |
| B1-1479 | (A.1.8) | (A.3.9) |
| B1-1480 | (A.1.10) | (A.3.9) |
| B1-1481 | (A.1.11) | (A.3.9) |
| B1-1482 | (A.1.12) | (A.3.9) |
| B1-1483 | (A.1.14) | (A.3.9) |
| B1-1484 | (A.1.17) | (A.3.9) |
| B1-1485 | (A.1.19) | (A.3.9) |
| B1-1486 | (A.1.25) | (A.3.9) |
| B1-1487 | (A.1.34) | (A.3.9) |
| B1-1488 | (A.1.35) | (A.3.9) |
| B1-1489 | (A.1.38) | (A.3.9) |
| B1-1490 | (A.2.6) | (A.3.9) |
| B1-1491 | (A.3.2) | (A.3.9) |
| B1-1492 | (A.3.3) | (A.3.9) |
| B1-1493 | (A.3.4) | (A.3.9) |
| B1-1494 | (A.3.7) | (A.3.9) |
| B1-1495 | (A.3.8) | (A.3.9) |
| B1-1496 | (A.3.9) | (A.3.9) |
| B1-1497 | (A.3.10) | (A.3.9) |
| B1-1498 | (A.3.11) | (A.3.9) |
| B1-1499 | (A.3.12) | (A.3.9) |
| B1-1500 | (A.3.15) | (A.3.9) |
| B1-1501 | (A.3.16) | (A.3.9) |

| | | |
|---|---|---|
| B1-1502 | (A.3.17) | (A.3.9) |
| B1-1503 | (A.3.19) | (A.3.9) |
| B1-1504 | (A.3.21) | (A.3.9) |
| B1-1505 | (A.3.22) | (A.3.9) |
| B1-1506 | (A.3.23) | (A.3.9) |
| B1-1507 | (A.3.28) | (A.3.9) |
| B1-1508 | (A.3.31) | (A.3.9) |
| B1-1509 | (A.4.5) | (A.3.9) |
| B1-1510 | (B.1.4) | (A.3.9) |
| B1-1511 | (B.1.5) | (A.3.9) |
| B1-1512 | (B.1.8) | (A.3.9) |
| B1-1513 | (B.1.10) | (A.3.9) |
| B1-1514 | (B.1.12) | (A.3.9) |
| B1-1515 | (B.1.15) | (A.3.9) |
| B1-1516 | (B.1.17) | (A.3.9) |
| B1-1517 | (B.1.18) | (A.3.9) |
| B1-1518 | (B.1.21) | (A.3.9) |
| B1-1519 | (B.1.22) | (A.3.9) |
| B1-1520 | (B.1.23) | (A.3.9) |
| B1-1521 | (B.1.25) | (A.3.9) |
| B1-1522 | (B.1.26) | (A.3.9) |
| B1-1523 | (B.1.29) | (A.3.9) |
| B1-1524 | (B.1.38) | (A.3.9) |
| B1-1525 | (B.1.44) | (A.3.9) |
| B1-1526 | (B.1.46) | (A.3.9) |
| B1-1527 | (B.2.4) | (A.3.9) |
| B1-1528 | (B.3.1) | (A.3.9) |
| B1-1529 | (C.1.4) | (A.3.9) |

| | | |
|---|---|---|
| B1-1530 | (C.1.5) | (A.3.9) |
| B1-1531 | (C.2.1) | (A.3.9) |
| B1-1532 | (D.1.4) | (A.3.9) |
| B1-1533 | (D.1.5) | (A.3.9) |
| B1-1534 | (D.2.3) | (A.3.9) |
| B1-1535 | (D.2.5) | (A.3.9) |
| B1-1536 | (D.2.6) | (A.3.9) |
| B1-1537 | (E.1.1) | (A.3.9) |
| B1-1538 | (E.1.3) | (A.3.9) |
| B1-1539 | (E.2.2) | (A.3.9) |
| B1-1540 | (E.2.3), | (A.3.9) |
| B1-1541 | (F.1.2) | (A.3.9) |
| B1-1542 | (F.1.3) | (A.3.9) |
| B1-1543 | (F.1.5) | (A.3.9) |
| B1-1544 | (G.1.4) | (A.3.9) |
| B1-1545 | (G.3.1) | (A.3.9) |
| B1-1546 | (G.5.1) | (A.3.9) |
| B1-1547 | (H.1.2) | (A.3.9) |
| B1-1548 | (H.1.3) | (A.3.9) |
| B1-1549 | (H.1.4) | (A.3.9) |
| B1-1550 | (H.1.5) | (A.3.9) |
| B1-1551 | (H.1.6) | (A.3.9) |
| B1-1552 | (H.1.7) | (A.3.9) |
| B1-1553 | (H.2.2) | (A.3.9) |
| B1-1554 | (H.2.3) | (A.3.9) |
| B1-1555 | (H.2.5) | (A.3.9) |
| B1-1556 | (H.2.7) | (A.3.9) |
| B1-1557 | (H.3.2) | (A.3.9) |

| | | |
|---|---|---|
| B1-1558 | (H.3.4) | (A.3.9) |
| B1-1559 | (H.3.5) | (A.3.9) |
| B1-1560 | (H.3.10) | (A.3.9) |
| B1-1561 | (H.4.2) | (A.3.9) |
| B1-1562 | (H.4.9) | (A.3.9) |
| B1-1563 | (I.1.1) | (A.3.9) |
| B1-1564 | (I.2.1) | (A.3.9) |
| B1-1565 | (I.2.2) | (A.3.9) |
| B1-1566 | (J.1.2) | (A.3.9) |
| B1-1567 | (J.1.3) | (A.3.9) |
| B1-1568 | (J.1.4) | (A.3.9) |
| B1-1569 | (J.1.5) | (A.3.9) |
| B1-1570 | (J.1.8) | (A.3.9) |
| B1-1571 | (J.1.12) | (A.3.9) |
| B1-1572 | (K.1.13) | (A.3.9) |
| B1-1573 | (K.1.47) | (A.3.9) |
| B1-1574 | (K.1.54) | (A.3.9) |
| B1-1575 | (L.1.5) | (A.3.9) |
| B1-1576 | (L.1.9) | (A.3.9) |
| B1-1577 | (L.1.12) | (A.3.9) |
| B1-1578 | (L.1.13) | (A.3.9) |
| B1-1579 | (L.1.17) | (A.3.9) |
| B1-1580 | (L.1.23) | (A.3.9) |
| B1-1581 | (L.1.32), | (A.3.9) |
| B1-1582 | (L.1.46) | (A.3.9) |
| B1-1583 | (M.1.6) | (A.3.9) |
| B1-1584 | (M.1.24) | (A.3.9) |
| B1-1585 | (M.1.25) | (A.3.9) |

| | | |
|---|---|---|
| B1-1586 | (M.1.28) | (A.3.9) |
| B1-1587 | (M.1.29) | (A.3.9) |
| B1-1588 | (M.1.30) | (A.3.9) |
| B1-1589 | (N.7.3) | (A.3.9) |
| B1-1590 | (N.7.4) | (A.3.9) |
| B1-1591 | (N.7.5) | (A.3.9) |
| B1-1592 | (N.13.13) | (A.3.9) |
| B1-1593 | (O.2.4), | (A.3.9) |
| B1-1594 | (O.4.5) | (A.3.9) |
| B1-1595 | (O.4.7) | (A.3.9) |
| B1-1596 | (O.4.8) | (A.3.9) |
| B1-1597 | (O.5.1) | (A.3.9) |
| B1-1598 | (O.26.2) | (A.3.9) |
| B1-1599 | (O.27.17) | (A.3.9) |
| B1-1600 | (A.1.1) | (A.3.10) |
| B1-1601 | (A.1.4) | (A.3.10) |
| B1-1602 | (A.1.8) | (A.3.10) |
| B1-1603 | (A.1.10) | (A.3.10) |
| B1-1604 | (A.1.11) | (A.3.10) |
| B1-1605 | (A.1.12) | (A.3.10) |
| B1-1606 | (A.1.14) | (A.3.10) |
| B1-1607 | (A.1.17) | (A.3.10) |
| B1-1608 | (A.1.19) | (A.3.10) |
| B1-1609 | (A.1.25) | (A.3.10) |
| B1-1610 | (A.1.34) | (A.3.10) |
| B1-1611 | (A.1.35) | (A.3.10) |
| B1-1612 | (A.1.38) | (A.3.10) |
| B1-1613 | (A.2.6) | (A.3.10) |
| B1-1614 | (A.3.2) | (A.3.10) |
| B1-1615 | (A.3.3) | (A.3.10) |
| B1-1616 | (A.3.4) | (A.3.10) |
| B1-1617 | (A.3.7) | (A.3.10) |
| B1-1618 | (A.3.8) | (A.3.10) |
| B1-1619 | (A.3.9) | (A.3.10) |
| B1-1620 | (A.3.10) | (A.3.10) |
| B1-1621 | (A.3.11) | (A.3.10) |
| B1-1622 | (A.3.12) | (A.3.10) |
| B1-1623 | (A.3.15) | (A.3.10) |
| B1-1624 | (A.3.16) | (A.3.10) |
| B1-1625 | (A.3.17) | (A.3.10) |
| B1-1626 | (A.3.19) | (A.3.10) |
| B1-1627 | (A.3.21) | (A.3.10) |
| B1-1628 | (A.3.22) | (A.3.10) |
| B1-1629 | (A.3.23) | (A.3.10) |
| B1-1630 | (A.3.28) | (A.3.10) |
| B1-1631 | (A.3.31) | (A.3.10) |
| B1-1632 | (A.4.5) | (A.3.10) |
| B1-1633 | (B.1.4) | (A.3.10) |
| B1-1634 | (B.1.5) | (A.3.10) |
| B1-1635 | (B.1.8) | (A.3.10) |
| B1-1636 | (B.1.10) | (A.3.10) |
| B1-1637 | (B.1.12) | (A.3.10) |
| B1-1638 | (B.1.15) | (A.3.10) |
| B1-1639 | (B.1.17) | (A.3.10) |
| B1-1640 | (B.1.18) | (A.3.10) |
| B1-1641 | (B.1.21) | (A.3.10) |

| | | |
|---|---|---|
| B1-1642 | (B.1.22) | (A.3.10) |
| B1-1643 | (B.1.23) | (A.3.10) |
| B1-1644 | (B.1.25) | (A.3.10) |
| B1-1645 | (B.1.26) | (A.3.10) |
| B1-1646 | (B.1.29) | (A.3.10) |
| B1-1647 | (B.1.38) | (A.3.10) |
| B1-1648 | (B.1.44) | (A.3.10) |
| B1-1649 | (B.1.46) | (A.3.10) |
| B1-1650 | (B.2.4) | (A.3.10) |
| B1-1651 | (B.3.1) | (A.3.10) |
| B1-1652 | (C.1.4) | (A.3.10) |
| B1-1653 | (C.1.5) | (A.3.10) |
| B1-1654 | (C.2.1) | (A.3.10) |
| B1-1655 | (D.1.4) | (A.3.10) |
| B1-1656 | (D.1.5) | (A.3.10) |
| B1-1657 | (D.2.3) | (A.3.10) |
| B1-1658 | (D.2.5) | (A.3.10) |
| B1-1659 | (D.2.6) | (A.3.10) |
| B1-1660 | (E.1.1) | (A.3.10) |
| B1-1661 | (E.1.3) | (A.3.10) |
| B1-1662 | (E.2.2) | (A.3.10) |
| B1-1663 | (E.2.3), | (A.3.10) |
| B1-1664 | (F.1.2) | (A.3.10) |
| B1-1665 | (F.1.3) | (A.3.10) |
| B1-1666 | (F.1.5) | (A.3.10) |
| B1-1667 | (G.1.4) | (A.3.10) |
| B1-1668 | (G.3.1) | (A.3.10) |
| B1-1669 | (G.5.1) | (A.3.10) |

| | | |
|---|---|---|
| B1-1670 | (H.1.2) | (A.3.10) |
| B1-1671 | (H.1.3) | (A.3.10) |
| B1-1672 | (H.1.4) | (A.3.10) |
| B1-1673 | (H.1.5) | (A.3.10) |
| B1-1674 | (H.1.6) | (A.3.10) |
| B1-1675 | (H.1.7) | (A.3.10) |
| B1-1676 | (H.2.2) | (A.3.10) |
| B1-1677 | (H.2.3) | (A.3.10) |
| B1-1678 | (H.2.5) | (A.3.10) |
| B1-1679 | (H.2.7) | (A.3.10) |
| B1-1680 | (H.3.2) | (A.3.10) |
| B1-1681 | (H.3.4) | (A.3.10) |
| B1-1682 | (H.3.5) | (A.3.10) |
| B1-1683 | (H.3.10) | (A.3.10) |
| B1-1684 | (H.4.2) | (A.3.10) |
| B1-1685 | (H.4.9) | (A.3.10) |
| B1-1686 | (I.1.1) | (A.3.10) |
| B1-1687 | (I.2.1) | (A.3.10) |
| B1-1688 | (I.2.2) | (A.3.10) |
| B1-1689 | (J.1.2) | (A.3.10) |
| B1-1690 | (J.1.3) | (A.3.10) |
| B1-1691 | (J.1.4) | (A.3.10) |
| B1-1692 | (J.1.5) | (A.3.10) |
| B1-1693 | (J.1.8) | (A.3.10) |
| B1-1694 | (J.1.12) | (A.3.10) |
| B1-1695 | (K.1.13) | (A.3.10) |
| B1-1696 | (K.1.47) | (A.3.10) |
| B1-1697 | (K.1.54) | (A.3.10) |

| | | |
|---|---|---|
| B1-1698 | (L.1.5) | (A.3.10) |
| B1-1699 | (L.1.9) | (A.3.10) |
| B1-1700 | (L.1.12) | (A.3.10) |
| B1-1701 | (L.1.13) | (A.3.10) |
| B1-1702 | (L.1.17) | (A.3.10) |
| B1-1703 | (L.1.23) | (A.3.10) |
| B1-1704 | (L.1.32), | (A.3.10) |
| B1-1705 | (L.1.46) | (A.3.10) |
| B1-1706 | (M.1.6) | (A.3.10) |
| B1-1707 | (M.1.24) | (A.3.10) |
| B1-1708 | (M.1.25) | (A.3.10) |
| B1-1709 | (M.1.28) | (A.3.10) |
| B1-1710 | (M.1.29) | (A.3.10) |
| B1-1711 | (M.1.30) | (A.3.10) |
| B1-1712 | (N.7.3) | (A.3.10) |
| B1-1713 | (N.7.4) | (A.3.10) |
| B1-1714 | (N.7.5) | (A.3.10) |
| B1-1715 | (N.13.13) | (A.3.10) |
| B1-1716 | (O.2.4), | (A.3.10) |
| B1-1717 | (O.4.5) | (A.3.10) |
| B1-1718 | (O.4.7) | (A.3.10) |
| B1-1719 | (O.4.8) | (A.3.10) |
| B1-1720 | (O.5.1) | (A.3.10) |
| B1-1721 | (O.26.2) | (A.3.10) |
| B1-1722 | (O.27.17) | (A.3.10) |
| B1-1723 | (A.1.1) | (A.3.16) |
| B1-1724 | (A.1.4) | (A.3.16) |
| B1-1725 | (A.1.8) | (A.3.16) |

| | | |
|---|---|---|
| B1-1726 | (A.1.10) | (A.3.16) |
| B1-1727 | (A.1.11) | (A.3.16) |
| B1-1728 | (A.1.12) | (A.3.16) |
| B1-1729 | (A.1.14) | (A.3.16) |
| B1-1730 | (A.1.17) | (A.3.16) |
| B1-1731 | (A.1.19) | (A.3.16) |
| B1-1732 | (A.1.25) | (A.3.16) |
| B1-1733 | (A.1.34) | (A.3.16) |
| B1-1734 | (A.1.35) | (A.3.16) |
| B1-1735 | (A.1.38) | (A.3.16) |
| B1-1736 | (A.2.6) | (A.3.16) |
| B1-1737 | (A.3.2) | (A.3.16) |
| B1-1738 | (A.3.3) | (A.3.16) |
| B1-1739 | (A.3.4) | (A.3.16) |
| B1-1740 | (A.3.7) | (A.3.16) |
| B1-1741 | (A.3.8) | (A.3.16) |
| B1-1742 | (A.3.9) | (A.3.16) |
| B1-1743 | (A.3.10) | (A.3.16) |
| B1-1744 | (A.3.11) | (A.3.16) |
| B1-1745 | (A.3.12) | (A.3.16) |
| B1-1746 | (A.3.15) | (A.3.16) |
| B1-1747 | (A.3.16) | (A.3.16) |
| B1-1748 | (A.3.17) | (A.3.16) |
| B1-1749 | (A.3.19) | (A.3.16) |
| B1-1750 | (A.3.21) | (A.3.16) |
| B1-1751 | (A.3.22) | (A.3.16) |
| B1-1752 | (A.3.23) | (A.3.16) |
| B1-1753 | (A.3.28) | (A.3.16) |

| | | |
|---|---|---|
| B1-1754 | (A.3.31) | (A.3.16) |
| B1-1755 | (A.4.5) | (A.3.16) |
| B1-1756 | (B.1.4) | (A.3.16) |
| B1-1757 | (B.1.5) | (A.3.16) |
| B1-1758 | (B.1.8) | (A.3.16) |
| B1-1759 | (B.1.10) | (A.3.16) |
| B1-1760 | (B.1.12) | (A.3.16) |
| B1-1761 | (B.1.15) | (A.3.16) |
| B1-1762 | (B.1.17) | (A.3.16) |
| B1-1763 | (B.1.18) | (A.3.16) |
| B1-1764 | (B.1.21) | (A.3.16) |
| B1-1765 | (B.1.22) | (A.3.16) |
| B1-1766 | (B.1.23) | (A.3.16) |
| B1-1767 | (B.1.25) | (A.3.16) |
| B1-1768 | (B.1.26) | (A.3.16) |
| B1-1769 | (B.1.29) | (A.3.16) |
| B1-1770 | (B.1.38) | (A.3.16) |
| B1-1771 | (B.1.44) | (A.3.16) |
| B1-1772 | (B.1.46) | (A.3.16) |
| B1-1773 | (B.2.4) | (A.3.16) |
| B1-1774 | (B.3.1) | (A.3.16) |
| B1-1775 | (C.1.4) | (A.3.16) |
| B1-1776 | (C.1.5) | (A.3.16) |
| B1-1777 | (C.2.1) | (A.3.16) |
| B1-1778 | (D.1.4) | (A.3.16) |
| B1-1779 | (D.1.5) | (A.3.16) |
| B1-1780 | (D.2.3) | (A.3.16) |
| B1-1781 | (D.2.5) | (A.3.16) |

| | | |
|---|---|---|
| B1-1782 | (D.2.6) | (A.3.16) |
| B1-1783 | (E.1.1) | (A.3.16) |
| B1-1784 | (E.1.3) | (A.3.16) |
| B1-1785 | (E.2.2) | (A.3.16) |
| B1-1786 | (E.2.3), | (A.3.16) |
| B1-1787 | (F.1.2) | (A.3.16) |
| B1-1788 | (F.1.3) | (A.3.16) |
| B1-1789 | (F.1.5) | (A.3.16) |
| B1-1790 | (G.1.4) | (A.3.16) |
| B1-1791 | (G.3.1) | (A.3.16) |
| B1-1792 | (G.5.1) | (A.3.16) |
| B1-1793 | (H.1.2) | (A.3.16) |
| B1-1794 | (H.1.3) | (A.3.16) |
| B1-1795 | (H.1.4) | (A.3.16) |
| B1-1796 | (H.1.5) | (A.3.16) |
| B1-1797 | (H.1.6) | (A.3.16) |
| B1-1798 | (H.1.7) | (A.3.16) |
| B1-1799 | (H.2.2) | (A.3.16) |
| B1-1800 | (H.2.3) | (A.3.16) |
| B1-1801 | (H.2.5) | (A.3.16) |
| B1-1802 | (H.2.7) | (A.3.16) |
| B1-1803 | (H.3.2) | (A.3.16) |
| B1-1804 | (H.3.4) | (A.3.16) |
| B1-1805 | (H.3.5) | (A.3.16) |
| B1-1806 | (H.3.10) | (A.3.16) |
| B1-1807 | (H.4.2) | (A.3.16) |
| B1-1808 | (H.4.9) | (A.3.16) |
| B1-1809 | (I.1.1) | (A.3.16) |

| | | |
|---|---|---|
| B1-1810 | (I.2.1) | (A.3.16) |
| B1-1811 | (I.2.2) | (A.3.16) |
| B1-1812 | (J.1.2) | (A.3.16) |
| B1-1813 | (J.1.3) | (A.3.16) |
| B1-1814 | (J.1.4) | (A.3.16) |
| B1-1815 | (J.1.5) | (A.3.16) |
| B1-1816 | (J.1.8) | (A.3.16) |
| B1-1817 | (J.1.12) | (A.3.16) |
| B1-1818 | (K.1.13) | (A.3.16) |
| B1-1819 | (K.1.47) | (A.3.16) |
| B1-1820 | (K.1.54) | (A.3.16) |
| B1-1821 | (L.1.5) | (A.3.16) |
| B1-1822 | (L.1.9) | (A.3.16) |
| B1-1823 | (L.1.12) | (A.3.16) |
| B1-1824 | (L.1.13) | (A.3.16) |
| B1-1825 | (L.1.17) | (A.3.16) |
| B1-1826 | (L.1.23) | (A.3.16) |
| B1-1827 | (L.1.32), | (A.3.16) |
| B1-1828 | (L.1.46) | (A.3.16) |
| B1-1829 | (M.1.6) | (A.3.16) |
| B1-1830 | (M.1.24) | (A.3.16) |
| B1-1831 | (M.1.25) | (A.3.16) |
| B1-1832 | (M.1.28) | (A.3.16) |
| B1-1833 | (M.1.29) | (A.3.16) |
| B1-1834 | (M.1.30) | (A.3.16) |
| B1-1835 | (N.7.3) | (A.3.16) |
| B1-1836 | (N.7.4) | (A.3.16) |
| B1-1837 | (N.7.5) | (A.3.16) |
| B1-1838 | (N.13.13) | (A.3.16) |
| B1-1839 | (O.2.4), | (A.3.16) |
| B1-1840 | (O.4.5) | (A.3.16) |
| B1-1841 | (O.4.7) | (A.3.16) |
| B1-1842 | (O.4.8) | (A.3.16) |
| B1-1843 | (O.5.1) | (A.3.16) |
| B1-1844 | (O.26.2) | (A.3.16) |
| B1-1845 | (O.27.17) | (A.3.16) |
| B1-1846 | (A.1.1) | (A.3.17) |
| B1-1847 | (A.1.4) | (A.3.17) |
| B1-1848 | (A.1.8) | (A.3.17) |
| B1-1849 | (A.1.10) | (A.3.17) |
| B1-1850 | (A.1.11) | (A.3.17) |
| B1-1851 | (A.1.12) | (A.3.17) |
| B1-1852 | (A.1.14) | (A.3.17) |
| B1-1853 | (A.1.17) | (A.3.17) |
| B1-1854 | (A.1.19) | (A.3.17) |
| B1-1855 | (A.1.25) | (A.3.17) |
| B1-1856 | (A.1.34) | (A.3.17) |
| B1-1857 | (A.1.35) | (A.3.17) |
| B1-1858 | (A.1.38) | (A.3.17) |
| B1-1859 | (A.2.6) | (A.3.17) |
| B1-1860 | (A.3.2) | (A.3.17) |
| B1-1861 | (A.3.3) | (A.3.17) |
| B1-1862 | (A.3.4) | (A.3.17) |
| B1-1863 | (A.3.7) | (A.3.17) |
| B1-1864 | (A.3.8) | (A.3.17) |
| B1-1865 | (A.3.9) | (A.3.17) |

| | | |
|---|---|---|
| B1-1866 | (A.3.10) | (A.3.17) |
| B1-1867 | (A.3.11) | (A.3.17) |
| B1-1868 | (A.3.12) | (A.3.17) |
| B1-1869 | (A.3.15) | (A.3.17) |
| B1-1870 | (A.3.16) | (A.3.17) |
| B1-1871 | (A.3.17) | (A.3.17) |
| B1-1872 | (A.3.19) | (A.3.17) |
| B1-1873 | (A.3.21) | (A.3.17) |
| B1-1874 | (A.3.22) | (A.3.17) |
| B1-1875 | (A.3.23) | (A.3.17) |
| B1-1876 | (A.3.28) | (A.3.17) |
| B1-1877 | (A.3.31) | (A.3.17) |
| B1-1878 | (A.4.5) | (A.3.17) |
| B1-1879 | (B.1.4) | (A.3.17) |
| B1-1880 | (B.1.5) | (A.3.17) |
| B1-1881 | (B.1.8) | (A.3.17) |
| B1-1882 | (B.1.10) | (A.3.17) |
| B1-1883 | (B.1.12) | (A.3.17) |
| B1-1884 | (B.1.15) | (A.3.17) |
| B1-1885 | (B.1.17) | (A.3.17) |
| B1-1886 | (B.1.18) | (A.3.17) |
| B1-1887 | (B.1.21) | (A.3.17) |
| B1-1888 | (B.1.22) | (A.3.17) |
| B1-1889 | (B.1.23) | (A.3.17) |
| B1-1890 | (B.1.25) | (A.3.17) |
| B1-1891 | (B.1.26) | (A.3.17) |
| B1-1892 | (B.1.29) | (A.3.17) |
| B1-1893 | (B.1.38) | (A.3.17) |
| B1-1894 | (B.1.44) | (A.3.17) |
| B1-1895 | (B.1.46) | (A.3.17) |
| B1-1896 | (B.2.4) | (A.3.17) |
| B1-1897 | (B.3.1) | (A.3.17) |
| B1-1898 | (C.1.4) | (A.3.17) |
| B1-1899 | (C.1.5) | (A.3.17) |
| B1-1900 | (C.2.1) | (A.3.17) |
| B1-1901 | (D.1.4) | (A.3.17) |
| B1-1902 | (D.1.5) | (A.3.17) |
| B1-1903 | (D.2.3) | (A.3.17) |
| B1-1904 | (D.2.5) | (A.3.17) |
| B1-1905 | (D.2.6) | (A.3.17) |
| B1-1906 | (E.1.1) | (A.3.17) |
| B1-1907 | (E.1.3) | (A.3.17) |
| B1-1908 | (E.2.2) | (A.3.17) |
| B1-1909 | (E.2.3), | (A.3.17) |
| B1-1910 | (F.1.2) | (A.3.17) |
| B1-1911 | (F.1.3) | (A.3.17) |
| B1-1912 | (F.1.5) | (A.3.17) |
| B1-1913 | (G.1.4) | (A.3.17) |
| B1-1914 | (G.3.1) | (A.3.17) |
| B1-1915 | (G.5.1) | (A.3.17) |
| B1-1916 | (H.1.2) | (A.3.17) |
| B1-1917 | (H.1.3) | (A.3.17) |
| B1-1918 | (H.1.4) | (A.3.17) |
| B1-1919 | (H.1.5) | (A.3.17) |
| B1-1920 | (H.1.6) | (A.3.17) |
| B1-1921 | (H.1.7) | (A.3.17) |

| | | |
|---|---|---|
| B1-1922 | (H.2.2) | (A.3.17) |
| B1-1923 | (H.2.3) | (A.3.17) |
| B1-1924 | (H.2.5) | (A.3.17) |
| B1-1925 | (H.2.7) | (A.3.17) |
| B1-1926 | (H.3.2) | (A.3.17) |
| B1-1927 | (H.3.4) | (A.3.17) |
| B1-1928 | (H.3.5) | (A.3.17) |
| B1-1929 | (H.3.10) | (A.3.17) |
| B1-1930 | (H.4.2) | (A.3.17) |
| B1-1931 | (H.4.9) | (A.3.17) |
| B1-1932 | (I.1.1) | (A.3.17) |
| B1-1933 | (I.2.1) | (A.3.17) |
| B1-1934 | (I.2.2) | (A.3.17) |
| B1-1935 | (J.1.2) | (A.3.17) |
| B1-1936 | (J.1.3) | (A.3.17) |
| B1-1937 | (J.1.4) | (A.3.17) |
| B1-1938 | (J.1.5) | (A.3.17) |
| B1-1939 | (J.1.8) | (A.3.17) |
| B1-1940 | (J.1.12) | (A.3.17) |
| B1-1941 | (K.1.13) | (A.3.17) |
| B1-1942 | (K.1.47) | (A.3.17) |
| B1-1943 | (K.1.54) | (A.3.17) |
| B1-1944 | (L.1.5) | (A.3.17) |
| B1-1945 | (L.1.9) | (A.3.17) |
| B1-1946 | (L.1.12) | (A.3.17) |
| B1-1947 | (L.1.13) | (A.3.17) |
| B1-1948 | (L.1.17) | (A.3.17) |
| B1-1949 | (L.1.23) | (A.3.17) |

| | | |
|---|---|---|
| B1-1950 | (L.1.32), | (A.3.17) |
| B1-1951 | (L.1.46) | (A.3.17) |
| B1-1952 | (M.1.6) | (A.3.17) |
| B1-1953 | (M.1.24) | (A.3.17) |
| B1-1954 | (M.1.25) | (A.3.17) |
| B1-1955 | (M.1.28) | (A.3.17) |
| B1-1956 | (M.1.29) | (A.3.17) |
| B1-1957 | (M.1.30) | (A.3.17) |
| B1-1958 | (N.7.3) | (A.3.17) |
| B1-1959 | (N.7.4) | (A.3.17) |
| B1-1960 | (N.7.5) | (A.3.17) |
| B1-1961 | (N.13.13) | (A.3.17) |
| B1-1962 | (O.2.4), | (A.3.17) |
| B1-1963 | (O.4.5) | (A.3.17) |
| B1-1964 | (O.4.7) | (A.3.17) |
| B1-1965 | (O.4.8) | (A.3.17) |
| B1-1966 | (O.5.1) | (A.3.17) |
| B1-1967 | (O.26.2) | (A.3.17) |
| B1-1968 | (O.27.17) | (A.3.17) |
| B1-1969 | (A.1.1) | (A.3.22) |
| B1-1970 | (A.1.4) | (A.3.22) |
| B1-1971 | (A.1.8) | (A.3.22) |
| B1-1972 | (A.1.10) | (A.3.22) |
| B1-1973 | (A.1.11) | (A.3.22) |
| B1-1974 | (A.1.12) | (A.3.22) |
| B1-1975 | (A.1.14) | (A.3.22) |
| B1-1976 | (A.1.17) | (A.3.22) |
| B1-1977 | (A.1.19) | (A.3.22) |

| | | |
|---|---|---|
| B1-1978 | (A.1.25) | (A.3.22) |
| B1-1979 | (A.1.34) | (A.3.22) |
| B1-1980 | (A.1.35) | (A.3.22) |
| B1-1981 | (A.1.38) | (A.3.22) |
| B1-1982 | (A.2.6) | (A.3.22) |
| B1-1983 | (A.3.2) | (A.3.22) |
| B1-1984 | (A.3.3) | (A.3.22) |
| B1-1985 | (A.3.4) | (A.3.22) |
| B1-1986 | (A.3.7) | (A.3.22) |
| B1-1987 | (A.3.8) | (A.3.22) |
| B1-1988 | (A.3.9) | (A.3.22) |
| B1-1989 | (A.3.10) | (A.3.22) |
| B1-1990 | (A.3.11) | (A.3.22) |
| B1-1991 | (A.3.12) | (A.3.22) |
| B1-1992 | (A.3.15) | (A.3.22) |
| B1-1993 | (A.3.16) | (A.3.22) |
| B1-1994 | (A.3.17) | (A.3.22) |
| B1-1995 | (A.3.19) | (A.3.22) |
| B1-1996 | (A.3.21) | (A.3.22) |
| B1-1997 | (A.3.22) | (A.3.22) |
| B1-1998 | (A.3.23) | (A.3.22) |
| B1-1999 | (A.3.28) | (A.3.22) |
| B1-2000 | (A.3.31) | (A.3.22) |
| B1-2001 | (A.4.5) | (A.3.22) |
| B1-2002 | (B.1.4) | (A.3.22) |
| B1-2003 | (B.1.5) | (A.3.22) |
| B1-2004 | (B.1.8) | (A.3.22) |
| B1-2005 | (B.1.10) | (A.3.22) |

| | | |
|---|---|---|
| B1-2006 | (B.1.12) | (A.3.22) |
| B1-2007 | (B.1.15) | (A.3.22) |
| B1-2008 | (B.1.17) | (A.3.22) |
| B1-2009 | (B.1.18) | (A.3.22) |
| B1-2010 | (B.1.21) | (A.3.22) |
| B1-2011 | (B.1.22) | (A.3.22) |
| B1-2012 | (B.1.23) | (A.3.22) |
| B1-2013 | (B.1.25) | (A.3.22) |
| B1-2014 | (B.1.26) | (A.3.22) |
| B1-2015 | (B.1.29) | (A.3.22) |
| B1-2016 | (B.1.38) | (A.3.22) |
| B1-2017 | (B.1.44) | (A.3.22) |
| B1-2018 | (B.1.46) | (A.3.22) |
| B1-2019 | (B.2.4) | (A.3.22) |
| B1-2020 | (B.3.1) | (A.3.22) |
| B1-2021 | (C.1.4) | (A.3.22) |
| B1-2022 | (C.1.5) | (A.3.22) |
| B1-2023 | (C.2.1) | (A.3.22) |
| B1-2024 | (D.1.4) | (A.3.22) |
| B1-2025 | (D.1.5) | (A.3.22) |
| B1-2026 | (D.2.3) | (A.3.22) |
| B1-2027 | (D.2.5) | (A.3.22) |
| B1-2028 | (D.2.6) | (A.3.22) |
| B1-2029 | (E.1.1) | (A.3.22) |
| B1-2030 | (E.1.3) | (A.3.22) |
| B1-2031 | (E.2.2) | (A.3.22) |
| B1-2032 | (E.2.3), | (A.3.22) |
| B1-2033 | (F.1.2) | (A.3.22) |

| | | |
|---|---|---|
| B1-2034 | (F.1.3) | (A.3.22) |
| B1-2035 | (F.1.5) | (A.3.22) |
| B1-2036 | (G.1.4) | (A.3.22) |
| B1-2037 | (G.3.1) | (A.3.22) |
| B1-2038 | (G.5.1) | (A.3.22) |
| B1-2039 | (H.1.2) | (A.3.22) |
| B1-2040 | (H.1.3) | (A.3.22) |
| B1-2041 | (H.1.4) | (A.3.22) |
| B1-2042 | (H.1.5) | (A.3.22) |
| B1-2043 | (H.1.6) | (A.3.22) |
| B1-2044 | (H.1.7) | (A.3.22) |
| B1-2045 | (H.2.2) | (A.3.22) |
| B1-2046 | (H.2.3) | (A.3.22) |
| B1-2047 | (H.2.5) | (A.3.22) |
| B1-2048 | (H.2.7) | (A.3.22) |
| B1-2049 | (H.3.2) | (A.3.22) |
| B1-2050 | (H.3.4) | (A.3.22) |
| B1-2051 | (H.3.5) | (A.3.22) |
| B1-2052 | (H.3.10) | (A.3.22) |
| B1-2053 | (H.4.2) | (A.3.22) |
| B1-2054 | (H.4.9) | (A.3.22) |
| B1-2055 | (I.1.1) | (A.3.22) |
| B1-2056 | (I.2.1) | (A.3.22) |
| B1-2057 | (I.2.2) | (A.3.22) |
| B1-2058 | (J.1.2) | (A.3.22) |
| B1-2059 | (J.1.3) | (A.3.22) |
| B1-2060 | (J.1.4) | (A.3.22) |
| B1-2061 | (J.1.5) | (A.3.22) |

| | | |
|---|---|---|
| B1-2062 | (J.1.8) | (A.3.22) |
| B1-2063 | (J.1.12) | (A.3.22) |
| B1-2064 | (K.1.13) | (A.3.22) |
| B1-2065 | (K.1.47) | (A.3.22) |
| B1-2066 | (K.1.54) | (A.3.22) |
| B1-2067 | (L.1.5) | (A.3.22) |
| B1-2068 | (L.1.9) | (A.3.22) |
| B1-2069 | (L.1.12) | (A.3.22) |
| B1-2070 | (L.1.13) | (A.3.22) |
| B1-2071 | (L.1.17) | (A.3.22) |
| B1-2072 | (L.1.23) | (A.3.22) |
| B1-2073 | (L.1.32), | (A.3.22) |
| B1-2074 | (L.1.46) | (A.3.22) |
| B1-2075 | (M.1.6) | (A.3.22) |
| B1-2076 | (M.1.24) | (A.3.22) |
| B1-2077 | (M.1.25) | (A.3.22) |
| B1-2078 | (M.1.28) | (A.3.22) |
| B1-2079 | (M.1.29) | (A.3.22) |
| B1-2080 | (M.1.30) | (A.3.22) |
| B1-2081 | (N.7.3) | (A.3.22) |
| B1-2082 | (N.7.4) | (A.3.22) |
| B1-2083 | (N.7.5) | (A.3.22) |
| B1-2084 | (N.13.13) | (A.3.22) |
| B1-2085 | (O.2.4), | (A.3.22) |
| B1-2086 | (O.4.5) | (A.3.22) |
| B1-2087 | (O.4.7) | (A.3.22) |
| B1-2088 | (O.4.8) | (A.3.22) |
| B1-2089 | (O.5.1) | (A.3.22) |

| | | |
|---|---|---|
| B1-2090 | (O.26.2) | (A.3.22) |
| B1-2091 | (O.27.17) | (A.3.22) |
| B1-2092 | (A.1.1) | (A.3.23) |
| B1-2093 | (A.1.4) | (A.3.23) |
| B1-2094 | (A.1.8) | (A.3.23) |
| B1-2095 | (A.1.10) | (A.3.23) |
| B1-2096 | (A.1.11) | (A.3.23) |
| B1-2097 | (A.1.12) | (A.3.23) |
| B1-2098 | (A.1.14) | (A.3.23) |
| B1-2099 | (A.1.17) | (A.3.23) |
| B1-2100 | (A.1.19) | (A.3.23) |
| B1-2101 | (A.1.25) | (A.3.23) |
| B1-2102 | (A.1.34) | (A.3.23) |
| B1-2103 | (A.1.35) | (A.3.23) |
| B1-2104 | (A.1.38) | (A.3.23) |
| B1-2105 | (A.2.6) | (A.3.23) |
| B1-2106 | (A.3.2) | (A.3.23) |
| B1-2107 | (A.3.3) | (A.3.23) |
| B1-2108 | (A.3.4) | (A.3.23) |
| B1-2109 | (A.3.7) | (A.3.23) |
| B1-2110 | (A.3.8) | (A.3.23) |
| B1-2111 | (A.3.9) | (A.3.23) |
| B1-2112 | (A.3.10) | (A.3.23) |
| B1-2113 | (A.3.11) | (A.3.23) |
| B1-2114 | (A.3.12) | (A.3.23) |
| B1-2115 | (A.3.15) | (A.3.23) |
| B1-2116 | (A.3.16) | (A.3.23) |
| B1-2117 | (A.3.17) | (A.3.23) |

| | | |
|---|---|---|
| B1-2118 | (A.3.19) | (A.3.23) |
| B1-2119 | (A.3.21) | (A.3.23) |
| B1-2120 | (A.3.22) | (A.3.23) |
| B1-2121 | (A.3.23) | (A.3.23) |
| B1-2122 | (A.3.28) | (A.3.23) |
| B1-2123 | (A.3.31) | (A.3.23) |
| B1-2124 | (A.4.5) | (A.3.23) |
| B1-2125 | (B.1.4) | (A.3.23) |
| B1-2126 | (B.1.5) | (A.3.23) |
| B1-2127 | (B.1.8) | (A.3.23) |
| B1-2128 | (B.1.10) | (A.3.23) |
| B1-2129 | (B.1.12) | (A.3.23) |
| B1-2130 | (B.1.15) | (A.3.23) |
| B1-2131 | (B.1.17) | (A.3.23) |
| B1-2132 | (B.1.18) | (A.3.23) |
| B1-2133 | (B.1.21) | (A.3.23) |
| B1-2134 | (B.1.22) | (A.3.23) |
| B1-2135 | (B.1.23) | (A.3.23) |
| B1-2136 | (B.1.25) | (A.3.23) |
| B1-2137 | (B.1.26) | (A.3.23) |
| B1-2138 | (B.1.29) | (A.3.23) |
| B1-2139 | (B.1.38) | (A.3.23) |
| B1-2140 | (B.1.44) | (A.3.23) |
| B1-2141 | (B.1.46) | (A.3.23) |
| B1-2142 | (B.2.4) | (A.3.23) |
| B1-2143 | (B.3.1) | (A.3.23) |
| B1-2144 | (C.1.4) | (A.3.23) |
| B1-2145 | (C.1.5) | (A.3.23) |

| | | |
|---|---|---|
| B1-2146 | (C.2.1) | (A.3.23) |
| B1-2147 | (D.1.4) | (A.3.23) |
| B1-2148 | (D.1.5) | (A.3.23) |
| B1-2149 | (D.2.3) | (A.3.23) |
| B1-2150 | (D.2.5) | (A.3.23) |
| B1-2151 | (D.2.6) | (A.3.23) |
| B1-2152 | (E.1.1) | (A.3.23) |
| B1-2153 | (E.1.3) | (A.3.23) |
| B1-2154 | (E.2.2) | (A.3.23) |
| B1-2155 | (E.2.3), | (A.3.23) |
| B1-2156 | (F.1.2) | (A.3.23) |
| B1-2157 | (F.1.3) | (A.3.23) |
| B1-2158 | (F.1.5) | (A.3.23) |
| B1-2159 | (G.1.4) | (A.3.23) |
| B1-2160 | (G.3.1) | (A.3.23) |
| B1-2161 | (G.5.1) | (A.3.23) |
| B1-2162 | (H.1.2) | (A.3.23) |
| B1-2163 | (H.1.3) | (A.3.23) |
| B1-2164 | (H.1.4) | (A.3.23) |
| B1-2165 | (H.1.5) | (A.3.23) |
| B1-2166 | (H.1.6) | (A.3.23) |
| B1-2167 | (H.1.7) | (A.3.23) |
| B1-2168 | (H.2.2) | (A.3.23) |
| B1-2169 | (H.2.3) | (A.3.23) |
| B1-2170 | (H.2.5) | (A.3.23) |
| B1-2171 | (H.2.7) | (A.3.23) |
| B1-2172 | (H.3.2) | (A.3.23) |
| B1-2173 | (H.3.4) | (A.3.23) |

| | | |
|---|---|---|
| B1-2174 | (H.3.5) | (A.3.23) |
| B1-2175 | (H.3.10) | (A.3.23) |
| B1-2176 | (H.4.2) | (A.3.23) |
| B1-2177 | (H.4.9) | (A.3.23) |
| B1-2178 | (I.1.1) | (A.3.23) |
| B1-2179 | (I.2.1) | (A.3.23) |
| B1-2180 | (I.2.2) | (A.3.23) |
| B1-2181 | (J.1.2) | (A.3.23) |
| B1-2182 | (J.1.3) | (A.3.23) |
| B1-2183 | (J.1.4) | (A.3.23) |
| B1-2184 | (J.1.5) | (A.3.23) |
| B1-2185 | (J.1.8) | (A.3.23) |
| B1-2186 | (J.1.12) | (A.3.23) |
| B1-2187 | (K.1.13) | (A.3.23) |
| B1-2188 | (K.1.47) | (A.3.23) |
| B1-2189 | (K.1.54) | (A.3.23) |
| B1-2190 | (L.1.5) | (A.3.23) |
| B1-2191 | (L.1.9) | (A.3.23) |
| B1-2192 | (L.1.12) | (A.3.23) |
| B1-2193 | (L.1.13) | (A.3.23) |
| B1-2194 | (L.1.17) | (A.3.23) |
| B1-2195 | (L.1.23) | (A.3.23) |
| B1-2196 | (L.1.32), | (A.3.23) |
| B1-2197 | (L.1.46) | (A.3.23) |
| B1-2198 | (M.1.6) | (A.3.23) |
| B1-2199 | (M.1.24) | (A.3.23) |
| B1-2200 | (M.1.25) | (A.3.23) |
| B1-2201 | (M.1.28) | (A.3.23) |

| | | |
|---|---|---|
| B1-2202 | (M.1.29) | (A.3.23) |
| B1-2203 | (M.1.30) | (A.3.23) |
| B1-2204 | (N.7.3) | (A.3.23) |
| B1-2205 | (N.7.4) | (A.3.23) |
| B1-2206 | (N.7.5) | (A.3.23) |
| B1-2207 | (N.13.13) | (A.3.23) |
| B1-2208 | (O.2.4), | (A.3.23) |
| B1-2209 | (O.4.5) | (A.3.23) |
| B1-2210 | (O.4.7) | (A.3.23) |
| B1-2211 | (O.4.8) | (A.3.23) |
| B1-2212 | (O.5.1) | (A.3.23) |
| B1-2213 | (O.26.2) | (A.3.23) |
| B1-2214 | (O.27.17) | (A.3.23) |
| B1-2215 | (A.1.1) | (A.3.28) |
| B1-2216 | (A.1.4) | (A.3.28) |
| B1-2217 | (A.1.8) | (A.3.28) |
| B1-2218 | (A.1.10) | (A.3.28) |
| B1-2219 | (A.1.11) | (A.3.28) |
| B1-2220 | (A.1.12) | (A.3.28) |
| B1-2221 | (A.1.14) | (A.3.28) |
| B1-2222 | (A.1.17) | (A.3.28) |
| B1-2223 | (A.1.19) | (A.3.28) |
| B1-2224 | (A.1.25) | (A.3.28) |
| B1-2225 | (A.1.34) | (A.3.28) |
| B1-2226 | (A.1.35) | (A.3.28) |
| B1-2227 | (A.1.38) | (A.3.28) |
| B1-2228 | (A.2.6) | (A.3.28) |
| B1-2229 | (A.3.2) | (A.3.28) |

| | | |
|---|---|---|
| B1-2230 | (A.3.3) | (A.3.28) |
| B1-2231 | (A.3.4) | (A.3.28) |
| B1-2232 | (A.3.7) | (A.3.28) |
| B1-2233 | (A.3.8) | (A.3.28) |
| B1-2234 | (A.3.9) | (A.3.28) |
| B1-2235 | (A.3.10) | (A.3.28) |
| B1-2236 | (A.3.11) | (A.3.28) |
| B1-2237 | (A.3.12) | (A.3.28) |
| B1-2238 | (A.3.15) | (A.3.28) |
| B1-2239 | (A.3.16) | (A.3.28) |
| B1-2240 | (A.3.17) | (A.3.28) |
| B1-2241 | (A.3.19) | (A.3.28) |
| B1-2242 | (A.3.21) | (A.3.28) |
| B1-2243 | (A.3.22) | (A.3.28) |
| B1-2244 | (A.3.23) | (A.3.28) |
| B1-2245 | (A.3.28) | (A.3.28) |
| B1-2246 | (A.3.31) | (A.3.28) |
| B1-2247 | (A.4.5) | (A.3.28) |
| B1-2248 | (B.1.4) | (A.3.28) |
| B1-2249 | (B.1.5) | (A.3.28) |
| B1-2250 | (B.1.8) | (A.3.28) |
| B1-2251 | (B.1.10) | (A.3.28) |
| B1-2252 | (B.1.12) | (A.3.28) |
| B1-2253 | (B.1.15) | (A.3.28) |
| B1-2254 | (B.1.17) | (A.3.28) |
| B1-2255 | (B.1.18) | (A.3.28) |
| B1-2256 | (B.1.21) | (A.3.28) |
| B1-2257 | (B.1.22) | (A.3.28) |

| | | |
|---|---|---|
| B1-2258 | (B.1.23) | (A.3.28) |
| B1-2259 | (B.1.25) | (A.3.28) |
| B1-2260 | (B.1.26) | (A.3.28) |
| B1-2261 | (B.1.29) | (A.3.28) |
| B1-2262 | (B.1.38) | (A.3.28) |
| B1-2263 | (B.1.44) | (A.3.28) |
| B1-2264 | (B.1.46) | (A.3.28) |
| B1-2265 | (B.2.4) | (A.3.28) |
| B1-2266 | (B.3.1) | (A.3.28) |
| B1-2267 | (C.1.4) | (A.3.28) |
| B1-2268 | (C.1.5) | (A.3.28) |
| B1-2269 | (C.2.1) | (A.3.28) |
| B1-2270 | (D.1.4) | (A.3.28) |
| B1-2271 | (D.1.5) | (A.3.28) |
| B1-2272 | (D.2.3) | (A.3.28) |
| B1-2273 | (D.2.5) | (A.3.28) |
| B1-2274 | (D.2.6) | (A.3.28) |
| B1-2275 | (E.1.1) | (A.3.28) |
| B1-2276 | (E.1.3) | (A.3.28) |
| B1-2277 | (E.2.2) | (A.3.28) |
| B1-2278 | (E.2.3), | (A.3.28) |
| B1-2279 | (F.1.2) | (A.3.28) |
| B1-2280 | (F.1.3) | (A.3.28) |
| B1-2281 | (F.1.5) | (A.3.28) |
| B1-2282 | (G.1.4) | (A.3.28) |
| B1-2283 | (G.3.1) | (A.3.28) |
| B1-2284 | (G.5.1) | (A.3.28) |
| B1-2285 | (H.1.2) | (A.3.28) |

| | | |
|---|---|---|
| B1-2286 | (H.1.3) | (A.3.28) |
| B1-2287 | (H.1.4) | (A.3.28) |
| B1-2288 | (H.1.5) | (A.3.28) |
| B1-2289 | (H.1.6) | (A.3.28) |
| B1-2290 | (H.1.7) | (A.3.28) |
| B1-2291 | (H.2.2) | (A.3.28) |
| B1-2292 | (H.2.3) | (A.3.28) |
| B1-2293 | (H.2.5) | (A.3.28) |
| B1-2294 | (H.2.7) | (A.3.28) |
| B1-2295 | (H.3.2) | (A.3.28) |
| B1-2296 | (H.3.4) | (A.3.28) |
| B1-2297 | (H.3.5) | (A.3.28) |
| B1-2298 | (H.3.10) | (A.3.28) |
| B1-2299 | (H.4.2) | (A.3.28) |
| B1-2300 | (H.4.9) | (A.3.28) |
| B1-2301 | (I.1.1) | (A.3.28) |
| B1-2302 | (I.2.1) | (A.3.28) |
| B1-2303 | (I.2.2) | (A.3.28) |
| B1-2304 | (J.1.2) | (A.3.28) |
| B1-2305 | (J.1.3) | (A.3.28) |
| B1-2306 | (J.1.4) | (A.3.28) |
| B1-2307 | (J.1.5) | (A.3.28) |
| B1-2308 | (J.1.8) | (A.3.28) |
| B1-2309 | (J.1.12) | (A.3.28) |
| B1-2310 | (K.1.13) | (A.3.28) |
| B1-2311 | (K.1.47) | (A.3.28) |
| B1-2312 | (K.1.54) | (A.3.28) |
| B1-2313 | (L.1.5) | (A.3.28) |

| | | |
|---|---|---|
| B1-2314 | (L.1.9) | (A.3.28) |
| B1-2315 | (L.1.12) | (A.3.28) |
| B1-2316 | (L.1.13) | (A.3.28) |
| B1-2317 | (L.1.17) | (A.3.28) |
| B1-2318 | (L.1.23) | (A.3.28) |
| B1-2319 | (L.1.32), | (A.3.28) |
| B1-2320 | (L.1.46) | (A.3.28) |
| B1-2321 | (M.1.6) | (A.3.28) |
| B1-2322 | (M.1.24) | (A.3.28) |
| B1-2323 | (M.1.25) | (A.3.28) |
| B1-2324 | (M.1.28) | (A.3.28) |
| B1-2325 | (M.1.29) | (A.3.28) |
| B1-2326 | (M.1.30) | (A.3.28) |
| B1-2327 | (N.7.3) | (A.3.28) |
| B1-2328 | (N.7.4) | (A.3.28) |
| B1-2329 | (N.7.5) | (A.3.28) |
| B1-2330 | (N.13.13) | (A.3.28) |
| B1-2331 | (O.2.4), | (A.3.28) |
| B1-2332 | (O.4.5) | (A.3.28) |
| B1-2333 | (O.4.7) | (A.3.28) |
| B1-2334 | (O.4.8) | (A.3.28) |
| B1-2335 | (O.5.1) | (A.3.28) |
| B1-2336 | (O.26.2) | (A.3.28) |
| B1-2337 | (O.27.17) | (A.3.28) |
| B1-2338 | (A.1.1) | (A.3.31) |
| B1-2339 | (A.1.4) | (A.3.31) |
| B1-2340 | (A.1.8) | (A.3.31) |
| B1-2341 | (A.1.10) | (A.3.31) |

| | | |
|---|---|---|
| B1-2342 | (A.1.11) | (A.3.31) |
| B1-2343 | (A.1.12) | (A.3.31) |
| B1-2344 | (A.1.14) | (A.3.31) |
| B1-2345 | (A.1.17) | (A.3.31) |
| B1-2346 | (A.1.19) | (A.3.31) |
| B1-2347 | (A.1.25) | (A.3.31) |
| B1-2348 | (A.1.34) | (A.3.31) |
| B1-2349 | (A.1.35) | (A.3.31) |
| B1-2350 | (A.1.38) | (A.3.31) |
| B1-2351 | (A.2.6) | (A.3.31) |
| B1-2352 | (A.3.2) | (A.3.31) |
| B1-2353 | (A.3.3) | (A.3.31) |
| B1-2354 | (A.3.4) | (A.3.31) |
| B1-2355 | (A.3.7) | (A.3.31) |
| B1-2356 | (A.3.8) | (A.3.31) |
| B1-2357 | (A.3.9) | (A.3.31) |
| B1-2358 | (A.3.10) | (A.3.31) |
| B1-2359 | (A.3.11) | (A.3.31) |
| B1-2360 | (A.3.12) | (A.3.31) |
| B1-2361 | (A.3.15) | (A.3.31) |
| B1-2362 | (A.3.16) | (A.3.31) |
| B1-2363 | (A.3.17) | (A.3.31) |
| B1-2364 | (A.3.19) | (A.3.31) |
| B1-2365 | (A.3.21) | (A.3.31) |
| B1-2366 | (A.3.22) | (A.3.31) |
| B1-2367 | (A.3.23) | (A.3.31) |
| B1-2368 | (A.3.28) | (A.3.31) |
| B1-2369 | (A.3.31) | (A.3.31) |

| | | |
|---|---|---|
| B1-2370 | (A.4.5) | (A.3.31) |
| B1-2371 | (B.1.4) | (A.3.31) |
| B1-2372 | (B.1.5) | (A.3.31) |
| B1-2373 | (B.1.8) | (A.3.31) |
| B1-2374 | (B.1.10) | (A.3.31) |
| B1-2375 | (B.1.12) | (A.3.31) |
| B1-2376 | (B.1.15) | (A.3.31) |
| B1-2377 | (B.1.17) | (A.3.31) |
| B1-2378 | (B.1.18) | (A.3.31) |
| B1-2379 | (B.1.21) | (A.3.31) |
| B1-2380 | (B.1.22) | (A.3.31) |
| B1-2381 | (B.1.23) | (A.3.31) |
| B1-2382 | (B.1.25) | (A.3.31) |
| B1-2383 | (B.1.26) | (A.3.31) |
| B1-2384 | (B.1.29) | (A.3.31) |
| B1-2385 | (B.1.38) | (A.3.31) |
| B1-2386 | (B.1.44) | (A.3.31) |
| B1-2387 | (B.1.46) | (A.3.31) |
| B1-2388 | (B.2.4) | (A.3.31) |
| B1-2389 | (B.3.1) | (A.3.31) |
| B1-2390 | (C.1.4) | (A.3.31) |
| B1-2391 | (C.1.5) | (A.3.31) |
| B1-2392 | (C.2.1) | (A.3.31) |
| B1-2393 | (D.1.4) | (A.3.31) |
| B1-2394 | (D.1.5) | (A.3.31) |
| B1-2395 | (D.2.3) | (A.3.31) |
| B1-2396 | (D.2.5) | (A.3.31) |
| B1-2397 | (D.2.6) | (A.3.31) |

| | | |
|---|---|---|
| B1-2398 | (E.1.1) | (A.3.31) |
| B1-2399 | (E.1.3) | (A.3.31) |
| B1-2400 | (E.2.2) | (A.3.31) |
| B1-2401 | (E.2.3), | (A.3.31) |
| B1-2402 | (F.1.2) | (A.3.31) |
| B1-2403 | (F.1.3) | (A.3.31) |
| B1-2404 | (F.1.5) | (A.3.31) |
| B1-2405 | (G.1.4) | (A.3.31) |
| B1-2406 | (G.3.1) | (A.3.31) |
| B1-2407 | (G.5.1) | (A.3.31) |
| B1-2408 | (H.1.2) | (A.3.31) |
| B1-2409 | (H.1.3) | (A.3.31) |
| B1-2410 | (H.1.4) | (A.3.31) |
| B1-2411 | (H.1.5) | (A.3.31) |
| B1-2412 | (H.1.6) | (A.3.31) |
| B1-2413 | (H.1.7) | (A.3.31) |
| B1-2414 | (H.2.2) | (A.3.31) |
| B1-2415 | (H.2.3) | (A.3.31) |
| B1-2416 | (H.2.5) | (A.3.31) |
| B1-2417 | (H.2.7) | (A.3.31) |
| B1-2418 | (H.3.2) | (A.3.31) |
| B1-2419 | (H.3.4) | (A.3.31) |
| B1-2420 | (H.3.5) | (A.3.31) |
| B1-2421 | (H.3.10) | (A.3.31) |
| B1-2422 | (H.4.2) | (A.3.31) |
| B1-2423 | (H.4.9) | (A.3.31) |
| B1-2424 | (I.1.1) | (A.3.31) |
| B1-2425 | (I.2.1) | (A.3.31) |

| | | |
|---|---|---|
| B1-2426 | (I.2.2) | (A.3.31) |
| B1-2427 | (J.1.2) | (A.3.31) |
| B1-2428 | (J.1.3) | (A.3.31) |
| B1-2429 | (J.1.4) | (A.3.31) |
| B1-2430 | (J.1.5) | (A.3.31) |
| B1-2431 | (J.1.8) | (A.3.31) |
| B1-2432 | (J.1.12) | (A.3.31) |
| B1-2433 | (K.1.13) | (A.3.31) |
| B1-2434 | (K.1.47) | (A.3.31) |
| B1-2435 | (K.1.54) | (A.3.31) |
| B1-2436 | (L.1.5) | (A.3.31) |
| B1-2437 | (L.1.9) | (A.3.31) |
| B1-2438 | (L.1.12) | (A.3.31) |
| B1-2439 | (L.1.13) | (A.3.31) |
| B1-2440 | (L.1.17) | (A.3.31) |
| B1-2441 | (L.1.23) | (A.3.31) |
| B1-2442 | (L.1.32), | (A.3.31) |
| B1-2443 | (L.1.46) | (A.3.31) |
| B1-2444 | (M.1.6) | (A.3.31) |
| B1-2445 | (M.1.24) | (A.3.31) |
| B1-2446 | (M.1.25) | (A.3.31) |
| B1-2447 | (M.1.28) | (A.3.31) |
| B1-2448 | (M.1.29) | (A.3.31) |
| B1-2449 | (M.1.30) | (A.3.31) |
| B1-2450 | (N.7.3) | (A.3.31) |
| B1-2451 | (N.7.4) | (A.3.31) |
| B1-2452 | (N.7.5) | (A.3.31) |
| B1-2453 | (N.13.13) | (A.3.31) |

| | | |
|---|---|---|
| B1-2454 | (O.2.4), | (A.3.31) |
| B1-2455 | (O.4.5) | (A.3.31) |
| B1-2456 | (O.4.7) | (A.3.31) |
| B1-2457 | (O.4.8) | (A.3.31) |
| B1-2458 | (O.5.1) | (A.3.31) |
| B1-2459 | (O.26.2) | (A.3.31) |
| B1-2460 | (O.27.17) | (A.3.31) |
| B1-2461 | (A.1.1) | (A.4.5) |
| B1-2462 | (A.1.4) | (A.4.5) |
| B1-2463 | (A.1.8) | (A.4.5) |
| B1-2464 | (A.1.10) | (A.4.5) |
| B1-2465 | (A.1.11) | (A.4.5) |
| B1-2466 | (A.1.12) | (A.4.5) |
| B1-2467 | (A.1.14) | (A.4.5) |
| B1-2468 | (A.1.17) | (A.4.5) |
| B1-2469 | (A.1.19) | (A.4.5) |
| B1-2470 | (A.1.25) | (A.4.5) |
| B1-2471 | (A.1.34) | (A.4.5) |
| B1-2472 | (A.1.35) | (A.4.5) |
| B1-2473 | (A.1.38) | (A.4.5) |
| B1-2474 | (A.2.6) | (A.4.5) |
| B1-2475 | (A.3.2) | (A.4.5) |
| B1-2476 | (A.3.3) | (A.4.5) |
| B1-2477 | (A.3.4) | (A.4.5) |
| B1-2478 | (A.3.7) | (A.4.5) |
| B1-2479 | (A.3.8) | (A.4.5) |
| B1-2480 | (A.3.9) | (A.4.5) |
| B1-2481 | (A.3.10) | (A.4.5) |

| | | |
|---|---|---|
| B1-2482 | (A.3.11) | (A.4.5) |
| B1-2483 | (A.3.12) | (A.4.5) |
| B1-2484 | (A.3.15) | (A.4.5) |
| B1-2485 | (A.3.16) | (A.4.5) |
| B1-2486 | (A.3.17) | (A.4.5) |
| B1-2487 | (A.3.19) | (A.4.5) |
| B1-2488 | (A.3.21) | (A.4.5) |
| B1-2489 | (A.3.22) | (A.4.5) |
| B1-2490 | (A.3.23) | (A.4.5) |
| B1-2491 | (A.3.28) | (A.4.5) |
| B1-2492 | (A.3.31) | (A.4.5) |
| B1-2493 | (A.4.5) | (A.4.5) |
| B1-2494 | (B.1.4) | (A.4.5) |
| B1-2495 | (B.1.5) | (A.4.5) |
| B1-2496 | (B.1.8) | (A.4.5) |
| B1-2497 | (B.1.10) | (A.4.5) |
| B1-2498 | (B.1.12) | (A.4.5) |
| B1-2499 | (B.1.15) | (A.4.5) |
| B1-2500 | (B.1.17) | (A.4.5) |
| B1-2501 | (B.1.18) | (A.4.5) |
| B1-2502 | (B.1.21) | (A.4.5) |
| B1-2503 | (B.1.22) | (A.4.5) |
| B1-2504 | (B.1.23) | (A.4.5) |
| B1-2505 | (B.1.25) | (A.4.5) |
| B1-2506 | (B.1.26) | (A.4.5) |
| B1-2507 | (B.1.29) | (A.4.5) |
| B1-2508 | (B.1.38) | (A.4.5) |
| B1-2509 | (B.1.44) | (A.4.5) |

| | | |
|---|---|---|
| B1-2510 | (B.1.46) | (A.4.5) |
| B1-2511 | (B.2.4) | (A.4.5) |
| B1-2512 | (B.3.1) | (A.4.5) |
| B1-2513 | (C.1.4) | (A.4.5) |
| B1-2514 | (C.1.5) | (A.4.5) |
| B1-2515 | (C.2.1) | (A.4.5) |
| B1-2516 | (D.1.4) | (A.4.5) |
| B1-2517 | (D.1.5) | (A.4.5) |
| B1-2518 | (D.2.3) | (A.4.5) |
| B1-2519 | (D.2.5) | (A.4.5) |
| B1-2520 | (D.2.6) | (A.4.5) |
| B1-2521 | (E.1.1) | (A.4.5) |
| B1-2522 | (E.1.3) | (A.4.5) |
| B1-2523 | (E.2.2) | (A.4.5) |
| B1-2524 | (E.2.3), | (A.4.5) |
| B1-2525 | (F.1.2) | (A.4.5) |
| B1-2526 | (F.1.3) | (A.4.5) |
| B1-2527 | (F.1.5) | (A.4.5) |
| B1-2528 | (G.1.4) | (A.4.5) |
| B1-2529 | (G.3.1) | (A.4.5) |
| B1-2530 | (G.5.1) | (A.4.5) |
| B1-2531 | (H.1.2) | (A.4.5) |
| B1-2532 | (H.1.3) | (A.4.5) |
| B1-2533 | (H.1.4) | (A.4.5) |
| B1-2534 | (H.1.5) | (A.4.5) |
| B1-2535 | (H.1.6) | (A.4.5) |
| B1-2536 | (H.1.7) | (A.4.5) |
| B1-2537 | (H.2.2) | (A.4.5) |

| | | |
|---|---|---|
| B1-2538 | (H.2.3) | (A.4.5) |
| B1-2539 | (H.2.5) | (A.4.5) |
| B1-2540 | (H.2.7) | (A.4.5) |
| B1-2541 | (H.3.2) | (A.4.5) |
| B1-2542 | (H.3.4) | (A.4.5) |
| B1-2543 | (H.3.5) | (A.4.5) |
| B1-2544 | (H.3.10) | (A.4.5) |
| B1-2545 | (H.4.2) | (A.4.5) |
| B1-2546 | (H.4.9) | (A.4.5) |
| B1-2547 | (I.1.1) | (A.4.5) |
| B1-2548 | (I.2.1) | (A.4.5) |
| B1-2549 | (I.2.2) | (A.4.5) |
| B1-2550 | (J.1.2) | (A.4.5) |
| B1-2551 | (J.1.3) | (A.4.5) |
| B1-2552 | (J.1.4) | (A.4.5) |
| B1-2553 | (J.1.5) | (A.4.5) |
| B1-2554 | (J.1.8) | (A.4.5) |
| B1-2555 | (J.1.12) | (A.4.5) |
| B1-2556 | (K.1.13) | (A.4.5) |
| B1-2557 | (K.1.47) | (A.4.5) |
| B1-2558 | (K.1.54) | (A.4.5) |
| B1-2559 | (L.1.5) | (A.4.5) |
| B1-2560 | (L.1.9) | (A.4.5) |
| B1-2561 | (L.1.12) | (A.4.5) |
| B1-2562 | (L.1.13) | (A.4.5) |
| B1-2563 | (L.1.17) | (A.4.5) |
| B1-2564 | (L.1.23) | (A.4.5) |
| B1-2565 | (L.1.32), | (A.4.5) |
| B1-2566 | (L.1.46) | (A.4.5) |
| B1-2567 | (M.1.6) | (A.4.5) |
| B1-2568 | (M.1.24) | (A.4.5) |
| B1-2569 | (M.1.25) | (A.4.5) |
| B1-2570 | (M.1.28) | (A.4.5) |
| B1-2571 | (M.1.29) | (A.4.5) |
| B1-2572 | (M.1.30) | (A.4.5) |
| B1-2573 | (N.7.3) | (A.4.5) |
| B1-2574 | (N.7.4) | (A.4.5) |
| B1-2575 | (N.7.5) | (A.4.5) |
| B1-2576 | (N.13.13) | (A.4.5) |
| B1-2577 | (O.2.4), | (A.4.5) |
| B1-2578 | (O.4.5) | (A.4.5) |
| B1-2579 | (O.4.7) | (A.4.5) |
| B1-2580 | (O.4.8) | (A.4.5) |
| B1-2581 | (O.5.1) | (A.4.5) |
| B1-2582 | (O.26.2) | (A.4.5) |
| B1-2583 | (O.27.17) | (A.4.5) |
| B1-2584 | (A.1.1) | (B.1.5) |
| B1-2585 | (A.1.4) | (B.1.5) |
| B1-2586 | (A.1.8) | (B.1.5) |
| B1-2587 | (A.1.10) | (B.1.5) |
| B1-2588 | (A.1.11) | (B.1.5) |
| B1-2589 | (A.1.12) | (B.1.5) |
| B1-2590 | (A.1.14) | (B.1.5) |
| B1-2591 | (A.1.17) | (B.1.5) |
| B1-2592 | (A.1.19) | (B.1.5) |
| B1-2593 | (A.1.25) | (B.1.5) |

| | | |
|---|---|---|
| B1-2594 | (A.1.34) | (B.1.5) |
| B1-2595 | (A.1.35) | (B.1.5) |
| B1-2596 | (A.1.38) | (B.1.5) |
| B1-2597 | (A.2.6) | (B.1.5) |
| B1-2598 | (A.3.2) | (B.1.5) |
| B1-2599 | (A.3.3) | (B.1.5) |
| B1-2600 | (A.3.4) | (B.1.5) |
| B1-2601 | (A.3.7) | (B.1.5) |
| B1-2602 | (A.3.8) | (B.1.5) |
| B1-2603 | (A.3.9) | (B.1.5) |
| B1-2604 | (A.3.10) | (B.1.5) |
| B1-2605 | (A.3.11) | (B.1.5) |
| B1-2606 | (A.3.12) | (B.1.5) |
| B1-2607 | (A.3.15) | (B.1.5) |
| B1-2608 | (A.3.16) | (B.1.5) |
| B1-2609 | (A.3.17) | (B.1.5) |
| B1-2610 | (A.3.19) | (B.1.5) |
| B1-2611 | (A.3.21) | (B.1.5) |
| B1-2612 | (A.3.22) | (B.1.5) |
| B1-2613 | (A.3.23) | (B.1.5) |
| B1-2614 | (A.3.28) | (B.1.5) |
| B1-2615 | (A.3.31) | (B.1.5) |
| B1-2616 | (A.4.5) | (B.1.5) |
| B1-2617 | (B.1.4) | (B.1.5) |
| B1-2618 | (B.1.5) | (B.1.5) |
| B1-2619 | (B.1.8) | (B.1.5) |
| B1-2620 | (B.1.10) | (B.1.5) |
| B1-2621 | (B.1.12) | (B.1.5) |

| | | |
|---|---|---|
| B1-2622 | (B.1.15) | (B.1.5) |
| B1-2623 | (B.1.17) | (B.1.5) |
| B1-2624 | (B.1.18) | (B.1.5) |
| B1-2625 | (B.1.21) | (B.1.5) |
| B1-2626 | (B.1.22) | (B.1.5) |
| B1-2627 | (B.1.23) | (B.1.5) |
| B1-2628 | (B.1.25) | (B.1.5) |
| B1-2629 | (B.1.26) | (B.1.5) |
| B1-2630 | (B.1.29) | (B.1.5) |
| B1-2631 | (B.1.38) | (B.1.5) |
| B1-2632 | (B.1.44) | (B.1.5) |
| B1-2633 | (B.1.46) | (B.1.5) |
| B1-2634 | (B.2.4) | (B.1.5) |
| B1-2635 | (B.3.1) | (B.1.5) |
| B1-2636 | (C.1.4) | (B.1.5) |
| B1-2637 | (C.1.5) | (B.1.5) |
| B1-2638 | (C.2.1) | (B.1.5) |
| B1-2639 | (D.1.4) | (B.1.5) |
| B1-2640 | (D.1.5) | (B.1.5) |
| B1-2641 | (D.2.3) | (B.1.5) |
| B1-2642 | (D.2.5) | (B.1.5) |
| B1-2643 | (D.2.6) | (B.1.5) |
| B1-2644 | (E.1.1) | (B.1.5) |
| B1-2645 | (E.1.3) | (B.1.5) |
| B1-2646 | (E.2.2) | (B.1.5) |
| B1-2647 | (E.2.3), | (B.1.5) |
| B1-2648 | (F.1.2) | (B.1.5) |
| B1-2649 | (F.1.3) | (B.1.5) |

| | | |
|---|---|---|
| B1-2650 | (F.1.5) | (B.1.5) |
| B1-2651 | (G.1.4) | (B.1.5) |
| B1-2652 | (G.3.1) | (B.1.5) |
| B1-2653 | (G.5.1) | (B.1.5) |
| B1-2654 | (H.1.2) | (B.1.5) |
| B1-2655 | (H.1.3) | (B.1.5) |
| B1-2656 | (H.1.4) | (B.1.5) |
| B1-2657 | (H.1.5) | (B.1.5) |
| B1-2658 | (H.1.6) | (B.1.5) |
| B1-2659 | (H.1.7) | (B.1.5) |
| B1-2660 | (H.2.2) | (B.1.5) |
| B1-2661 | (H.2.3) | (B.1.5) |
| B1-2662 | (H.2.5) | (B.1.5) |
| B1-2663 | (H.2.7) | (B.1.5) |
| B1-2664 | (H.3.2) | (B.1.5) |
| B1-2665 | (H.3.4) | (B.1.5) |
| B1-2666 | (H.3.5) | (B.1.5) |
| B1-2667 | (H.3.10) | (B.1.5) |
| B1-2668 | (H.4.2) | (B.1.5) |
| B1-2669 | (H.4.9) | (B.1.5) |
| B1-2670 | (I.1.1) | (B.1.5) |
| B1-2671 | (I.2.1) | (B.1.5) |
| B1-2672 | (I.2.2) | (B.1.5) |
| B1-2673 | (J.1.2) | (B.1.5) |
| B1-2674 | (J.1.3) | (B.1.5) |
| B1-2675 | (J.1.4) | (B.1.5) |
| B1-2676 | (J.1.5) | (B.1.5) |
| B1-2677 | (J.1.8) | (B.1.5) |
| B1-2678 | (J.1.12) | (B.1.5) |
| B1-2679 | (K.1.13) | (B.1.5) |
| B1-2680 | (K.1.47) | (B.1.5) |
| B1-2681 | (K.1.54) | (B.1.5) |
| B1-2682 | (L.1.5) | (B.1.5) |
| B1-2683 | (L.1.9) | (B.1.5) |
| B1-2684 | (L.1.12) | (B.1.5) |
| B1-2685 | (L.1.13) | (B.1.5) |
| B1-2686 | (L.1.17) | (B.1.5) |
| B1-2687 | (L.1.23) | (B.1.5) |
| B1-2688 | (L.1.32), | (B.1.5) |
| B1-2689 | (L.1.46) | (B.1.5) |
| B1-2690 | (M.1.6) | (B.1.5) |
| B1-2691 | (M.1.24) | (B.1.5) |
| B1-2692 | (M.1.25) | (B.1.5) |
| B1-2693 | (M.1.28) | (B.1.5) |
| B1-2694 | (M.1.29) | (B.1.5) |
| B1-2695 | (M.1.30) | (B.1.5) |
| B1-2696 | (N.7.3) | (B.1.5) |
| B1-2697 | (N.7.4) | (B.1.5) |
| B1-2698 | (N.7.5) | (B.1.5) |
| B1-2699 | (N.13.13) | (B.1.5) |
| B1-2700 | (O.2.4), | (B.1.5) |
| B1-2701 | (O.4.5) | (B.1.5) |
| B1-2702 | (O.4.7) | (B.1.5) |
| B1-2703 | (O.4.8) | (B.1.5) |
| B1-2704 | (O.5.1) | (B.1.5) |
| B1-2705 | (O.26.2) | (B.1.5) |

| | | |
|---|---|---|
| B1-2706 | (O.27.17) | (B.1.5) |
| B1-2707 | (A.1.1) | (B.1.23) |
| B1-2708 | (A.1.4) | (B.1.23) |
| B1-2709 | (A.1.8) | (B.1.23) |
| B1-2710 | (A.1.10) | (B.1.23) |
| B1-2711 | (A.1.11) | (B.1.23) |
| B1-2712 | (A.1.12) | (B.1.23) |
| B1-2713 | (A.1.14) | (B.1.23) |
| B1-2714 | (A.1.17) | (B.1.23) |
| B1-2715 | (A.1.19) | (B.1.23) |
| B1-2716 | (A.1.25) | (B.1.23) |
| B1-2717 | (A.1.34) | (B.1.23) |
| B1-2718 | (A.1.35) | (B.1.23) |
| B1-2719 | (A.1.38) | (B.1.23) |
| B1-2720 | (A.2.6) | (B.1.23) |
| B1-2721 | (A.3.2) | (B.1.23) |
| B1-2722 | (A.3.3) | (B.1.23) |
| B1-2723 | (A.3.4) | (B.1.23) |
| B1-2724 | (A.3.7) | (B.1.23) |
| B1-2725 | (A.3.8) | (B.1.23) |
| B1-2726 | (A.3.9) | (B.1.23) |
| B1-2727 | (A.3.10) | (B.1.23) |
| B1-2728 | (A.3.11) | (B.1.23) |
| B1-2729 | (A.3.12) | (B.1.23) |
| B1-2730 | (A.3.15) | (B.1.23) |
| B1-2731 | (A.3.16) | (B.1.23) |
| B1-2732 | (A.3.17) | (B.1.23) |
| B1-2733 | (A.3.19) | (B.1.23) |

| | | |
|---|---|---|
| B1-2734 | (A.3.21) | (B.1.23) |
| B1-2735 | (A.3.22) | (B.1.23) |
| B1-2736 | (A.3.23) | (B.1.23) |
| B1-2737 | (A.3.28) | (B.1.23) |
| B1-2738 | (A.3.31) | (B.1.23) |
| B1-2739 | (A.4.5) | (B.1.23) |
| B1-2740 | (B.1.4) | (B.1.23) |
| B1-2741 | (B.1.5) | (B.1.23) |
| B1-2742 | (B.1.8) | (B.1.23) |
| B1-2743 | (B.1.10) | (B.1.23) |
| B1-2744 | (B.1.12) | (B.1.23) |
| B1-2745 | (B.1.15) | (B.1.23) |
| B1-2746 | (B.1.17) | (B.1.23) |
| B1-2747 | (B.1.18) | (B.1.23) |
| B1-2748 | (B.1.21) | (B.1.23) |
| B1-2749 | (B.1.22) | (B.1.23) |
| B1-2750 | (B.1.23) | (B.1.23) |
| B1-2751 | (B.1.25) | (B.1.23) |
| B1-2752 | (B.1.26) | (B.1.23) |
| B1-2753 | (B.1.29) | (B.1.23) |
| B1-2754 | (B.1.38) | (B.1.23) |
| B1-2755 | (B.1.44) | (B.1.23) |
| B1-2756 | (B.1.46) | (B.1.23) |
| B1-2757 | (B.2.4) | (B.1.23) |
| B1-2758 | (B.3.1) | (B.1.23) |
| B1-2759 | (C.1.4) | (B.1.23) |
| B1-2760 | (C.1.5) | (B.1.23) |
| B1-2761 | (C.2.1) | (B.1.23) |

| | | |
|---|---|---|
| B1-2762 | (D.1.4) | (B.1.23) |
| B1-2763 | (D.1.5) | (B.1.23) |
| B1-2764 | (D.2.3) | (B.1.23) |
| B1-2765 | (D.2.5) | (B.1.23) |
| B1-2766 | (D.2.6) | (B.1.23) |
| B1-2767 | (E.1.1) | (B.1.23) |
| B1-2768 | (E.1.3) | (B.1.23) |
| B1-2769 | (E.2.2) | (B.1.23) |
| B1-2770 | (E.2.3), | (B.1.23) |
| B1-2771 | (F.1.2) | (B.1.23) |
| B1-2772 | (F.1.3) | (B.1.23) |
| B1-2773 | (F.1.5) | (B.1.23) |
| B1-2774 | (G.1.4) | (B.1.23) |
| B1-2775 | (G.3.1) | (B.1.23) |
| B1-2776 | (G.5.1) | (B.1.23) |
| B1-2777 | (H.1.2) | (B.1.23) |
| B1-2778 | (H.1.3) | (B.1.23) |
| B1-2779 | (H.1.4) | (B.1.23) |
| B1-2780 | (H.1.5) | (B.1.23) |
| B1-2781 | (H.1.6) | (B.1.23) |
| B1-2782 | (H.1.7) | (B.1.23) |
| B1-2783 | (H.2.2) | (B.1.23) |
| B1-2784 | (H.2.3) | (B.1.23) |
| B1-2785 | (H.2.5) | (B.1.23) |
| B1-2786 | (H.2.7) | (B.1.23) |
| B1-2787 | (H.3.2) | (B.1.23) |
| B1-2788 | (H.3.4) | (B.1.23) |
| B1-2789 | (H.3.5) | (B.1.23) |

| | | |
|---|---|---|
| B1-2790 | (H.3.10) | (B.1.23) |
| B1-2791 | (H.4.2) | (B.1.23) |
| B1-2792 | (H.4.9) | (B.1.23) |
| B1-2793 | (I.1.1) | (B.1.23) |
| B1-2794 | (I.2.1) | (B.1.23) |
| B1-2795 | (I.2.2) | (B.1.23) |
| B1-2796 | (J.1.2) | (B.1.23) |
| B1-2797 | (J.1.3) | (B.1.23) |
| B1-2798 | (J.1.4) | (B.1.23) |
| B1-2799 | (J.1.5) | (B.1.23) |
| B1-2800 | (J.1.8) | (B.1.23) |
| B1-2801 | (J.1.12) | (B.1.23) |
| B1-2802 | (K.1.13) | (B.1.23) |
| B1-2803 | (K.1.47) | (B.1.23) |
| B1-2804 | (K.1.54) | (B.1.23) |
| B1-2805 | (L.1.5) | (B.1.23) |
| B1-2806 | (L.1.9) | (B.1.23) |
| B1-2807 | (L.1.12) | (B.1.23) |
| B1-2808 | (L.1.13) | (B.1.23) |
| B1-2809 | (L.1.17) | (B.1.23) |
| B1-2810 | (L.1.23) | (B.1.23) |
| B1-2811 | (L.1.32), | (B.1.23) |
| B1-2812 | (L.1.46) | (B.1.23) |
| B1-2813 | (M.1.6) | (B.1.23) |
| B1-2814 | (M.1.24) | (B.1.23) |
| B1-2815 | (M.1.25) | (B.1.23) |
| B1-2816 | (M.1.28) | (B.1.23) |
| B1-2817 | (M.1.29) | (B.1.23) |

| | | |
|---|---|---|
| B1-2818 | (M.1.30) | (B.1.23) |
| B1-2819 | (N.7.3) | (B.1.23) |
| B1-2820 | (N.7.4) | (B.1.23) |
| B1-2821 | (N.7.5) | (B.1.23) |
| B1-2822 | (N.13.13) | (B.1.23) |
| B1-2823 | (O.2.4), | (B.1.23) |
| B1-2824 | (O.4.5) | (B.1.23) |
| B1-2825 | (O.4.7) | (B.1.23) |
| B1-2826 | (O.4.8) | (B.1.23) |
| B1-2827 | (O.5.1) | (B.1.23) |
| B1-2828 | (O.26.2) | (B.1.23) |
| B1-2829 | (O.27.17) | (B.1.23) |
| B1-2830 | (A.1.1) | (B.1.25) |
| B1-2831 | (A.1.4) | (B.1.25) |
| B1-2832 | (A.1.8) | (B.1.25) |
| B1-2833 | (A.1.10) | (B.1.25) |
| B1-2834 | (A.1.11) | (B.1.25) |
| B1-2835 | (A.1.12) | (B.1.25) |
| B1-2836 | (A.1.14) | (B.1.25) |
| B1-2837 | (A.1.17) | (B.1.25) |
| B1-2838 | (A.1.19) | (B.1.25) |
| B1-2839 | (A.1.25) | (B.1.25) |
| B1-2840 | (A.1.34) | (B.1.25) |
| B1-2841 | (A.1.35) | (B.1.25) |
| B1-2842 | (A.1.38) | (B.1.25) |
| B1-2843 | (A.2.6) | (B.1.25) |
| B1-2844 | (A.3.2) | (B.1.25) |
| B1-2845 | (A.3.3) | (B.1.25) |

| | | |
|---|---|---|
| B1-2846 | (A.3.4) | (B.1.25) |
| B1-2847 | (A.3.7) | (B.1.25) |
| B1-2848 | (A.3.8) | (B.1.25) |
| B1-2849 | (A.3.9) | (B.1.25) |
| B1-2850 | (A.3.10) | (B.1.25) |
| B1-2851 | (A.3.11) | (B.1.25) |
| B1-2852 | (A.3.12) | (B.1.25) |
| B1-2853 | (A.3.15) | (B.1.25) |
| B1-2854 | (A.3.16) | (B.1.25) |
| B1-2855 | (A.3.17) | (B.1.25) |
| B1-2856 | (A.3.19) | (B.1.25) |
| B1-2857 | (A.3.21) | (B.1.25) |
| B1-2858 | (A.3.22) | (B.1.25) |
| B1-2859 | (A.3.23) | (B.1.25) |
| B1-2860 | (A.3.28) | (B.1.25) |
| B1-2861 | (A.3.31) | (B.1.25) |
| B1-2862 | (A.4.5) | (B.1.25) |
| B1-2863 | (B.1.4) | (B.1.25) |
| B1-2864 | (B.1.5) | (B.1.25) |
| B1-2865 | (B.1.8) | (B.1.25) |
| B1-2866 | (B.1.10) | (B.1.25) |
| B1-2867 | (B.1.12) | (B.1.25) |
| B1-2868 | (B.1.15) | (B.1.25) |
| B1-2869 | (B.1.17) | (B.1.25) |
| B1-2870 | (B.1.18) | (B.1.25) |
| B1-2871 | (B.1.21) | (B.1.25) |
| B1-2872 | (B.1.22) | (B.1.25) |
| B1-2873 | (B.1.23) | (B.1.25) |

| | | |
|---|---|---|
| B1-2874 | (B.1.25) | (B.1.25) |
| B1-2875 | (B.1.26) | (B.1.25) |
| B1-2876 | (B.1.29) | (B.1.25) |
| B1-2877 | (B.1.38) | (B.1.25) |
| B1-2878 | (B.1.44) | (B.1.25) |
| B1-2879 | (B.1.46) | (B.1.25) |
| B1-2880 | (B.2.4) | (B.1.25) |
| B1-2881 | (B.3.1) | (B.1.25) |
| B1-2882 | (C.1.4) | (B.1.25) |
| B1-2883 | (C.1.5) | (B.1.25) |
| B1-2884 | (C.2.1) | (B.1.25) |
| B1-2885 | (D.1.4) | (B.1.25) |
| B1-2886 | (D.1.5) | (B.1.25) |
| B1-2887 | (D.2.3) | (B.1.25) |
| B1-2888 | (D.2.5) | (B.1.25) |
| B1-2889 | (D.2.6) | (B.1.25) |
| B1-2890 | (E.1.1) | (B.1.25) |
| B1-2891 | (E.1.3) | (B.1.25) |
| B1-2892 | (E.2.2) | (B.1.25) |
| B1-2893 | (E.2.3), | (B.1.25) |
| B1-2894 | (F.1.2) | (B.1.25) |
| B1-2895 | (F.1.3) | (B.1.25) |
| B1-2896 | (F.1.5) | (B.1.25) |
| B1-2897 | (G.1.4) | (B.1.25) |
| B1-2898 | (G.3.1) | (B.1.25) |
| B1-2899 | (G.5.1) | (B.1.25) |
| B1-2900 | (H.1.2) | (B.1.25) |
| B1-2901 | (H.1.3) | (B.1.25) |

| | | |
|---|---|---|
| B1-2902 | (H.1.4) | (B.1.25) |
| B1-2903 | (H.1.5) | (B.1.25) |
| B1-2904 | (H.1.6) | (B.1.25) |
| B1-2905 | (H.1.7) | (B.1.25) |
| B1-2906 | (H.2.2) | (B.1.25) |
| B1-2907 | (H.2.3) | (B.1.25) |
| B1-2908 | (H.2.5) | (B.1.25) |
| B1-2909 | (H.2.7) | (B.1.25) |
| B1-2910 | (H.3.2) | (B.1.25) |
| B1-2911 | (H.3.4) | (B.1.25) |
| B1-2912 | (H.3.5) | (B.1.25) |
| B1-2913 | (H.3.10) | (B.1.25) |
| B1-2914 | (H.4.2) | (B.1.25) |
| B1-2915 | (H.4.9) | (B.1.25) |
| B1-2916 | (I.1.1) | (B.1.25) |
| B1-2917 | (I.2.1) | (B.1.25) |
| B1-2918 | (I.2.2) | (B.1.25) |
| B1-2919 | (J.1.2) | (B.1.25) |
| B1-2920 | (J.1.3) | (B.1.25) |
| B1-2921 | (J.1.4) | (B.1.25) |
| B1-2922 | (J.1.5) | (B.1.25) |
| B1-2923 | (J.1.8) | (B.1.25) |
| B1-2924 | (J.1.12) | (B.1.25) |
| B1-2925 | (K.1.13) | (B.1.25) |
| B1-2926 | (K.1.47) | (B.1.25) |
| B1-2927 | (K.1.54) | (B.1.25) |
| B1-2928 | (L.1.5) | (B.1.25) |
| B1-2929 | (L.1.9) | (B.1.25) |

| | | |
|---|---|---|
| B1-2930 | (L.1.12) | (B.1.25) |
| B1-2931 | (L.1.13) | (B.1.25) |
| B1-2932 | (L.1.17) | (B.1.25) |
| B1-2933 | (L.1.23) | (B.1.25) |
| B1-2934 | (L.1.32), | (B.1.25) |
| B1-2935 | (L.1.46) | (B.1.25) |
| B1-2936 | (M.1.6) | (B.1.25) |
| B1-2937 | (M.1.24) | (B.1.25) |
| B1-2938 | (M.1.25) | (B.1.25) |
| B1-2939 | (M.1.28) | (B.1.25) |
| B1-2940 | (M.1.29) | (B.1.25) |
| B1-2941 | (M.1.30) | (B.1.25) |
| B1-2942 | (N.7.3) | (B.1.25) |
| B1-2943 | (N.7.4) | (B.1.25) |
| B1-2944 | (N.7.5) | (B.1.25) |
| B1-2945 | (N.13.13) | (B.1.25) |
| B1-2946 | (O.2.4), | (B.1.25) |
| B1-2947 | (O.4.5) | (B.1.25) |
| B1-2948 | (O.4.7) | (B.1.25) |
| B1-2949 | (O.4.8) | (B.1.25) |
| B1-2950 | (O.5.1) | (B.1.25) |
| B1-2951 | (O.26.2) | (B.1.25) |
| B1-2952 | (O.27.17) | (B.1.25) |
| B1-2953 | (A.1.1) | (B.1.26) |
| B1-2954 | (A.1.4) | (B.1.26) |
| B1-2955 | (A.1.8) | (B.1.26) |
| B1-2956 | (A.1.10) | (B.1.26) |
| B1-2957 | (A.1.11) | (B.1.26) |

| | | |
|---|---|---|
| B1-2958 | (A.1.12) | (B.1.26) |
| B1-2959 | (A.1.14) | (B.1.26) |
| B1-2960 | (A.1.17) | (B.1.26) |
| B1-2961 | (A.1.19) | (B.1.26) |
| B1-2962 | (A.1.25) | (B.1.26) |
| B1-2963 | (A.1.34) | (B.1.26) |
| B1-2964 | (A.1.35) | (B.1.26) |
| B1-2965 | (A.1.38) | (B.1.26) |
| B1-2966 | (A.2.6) | (B.1.26) |
| B1-2967 | (A.3.2) | (B.1.26) |
| B1-2968 | (A.3.3) | (B.1.26) |
| B1-2969 | (A.3.4) | (B.1.26) |
| B1-2970 | (A.3.7) | (B.1.26) |
| B1-2971 | (A.3.8) | (B.1.26) |
| B1-2972 | (A.3.9) | (B.1.26) |
| B1-2973 | (A.3.10) | (B.1.26) |
| B1-2974 | (A.3.11) | (B.1.26) |
| B1-2975 | (A.3.12) | (B.1.26) |
| B1-2976 | (A.3.15) | (B.1.26) |
| B1-2977 | (A.3.16) | (B.1.26) |
| B1-2978 | (A.3.17) | (B.1.26) |
| B1-2979 | (A.3.19) | (B.1.26) |
| B1-2980 | (A.3.21) | (B.1.26) |
| B1-2981 | (A.3.22) | (B.1.26) |
| B1-2982 | (A.3.23) | (B.1.26) |
| B1-2983 | (A.3.28) | (B.1.26) |
| B1-2984 | (A.3.31) | (B.1.26) |
| B1-2985 | (A.4.5) | (B.1.26) |

| | | |
|---|---|---|
| B1-2986 | (B.1.4) | (B.1.26) |
| B1-2987 | (B.1.5) | (B.1.26) |
| B1-2988 | (B.1.8) | (B.1.26) |
| B1-2989 | (B.1.10) | (B.1.26) |
| B1-2990 | (B.1.12) | (B.1.26) |
| B1-2991 | (B.1.15) | (B.1.26) |
| B1-2992 | (B.1.17) | (B.1.26) |
| B1-2993 | (B.1.18) | (B.1.26) |
| B1-2994 | (B.1.21) | (B.1.26) |
| B1-2995 | (B.1.22) | (B.1.26) |
| B1-2996 | (B.1.23) | (B.1.26) |
| B1-2997 | (B.1.25) | (B.1.26) |
| B1-2998 | (B.1.26) | (B.1.26) |
| B1-2999 | (B.1.29) | (B.1.26) |
| B1-3000 | (B.1.38) | (B.1.26) |
| B1-3001 | (B.1.44) | (B.1.26) |
| B1-3002 | (B.1.46) | (B.1.26) |
| B1-3003 | (B.2.4) | (B.1.26) |
| B1-3004 | (B.3.1) | (B.1.26) |
| B1-3005 | (C.1.4) | (B.1.26) |
| B1-3006 | (C.1.5) | (B.1.26) |
| B1-3007 | (C.2.1) | (B.1.26) |
| B1-3008 | (D.1.4) | (B.1.26) |
| B1-3009 | (D.1.5) | (B.1.26) |
| B1-3010 | (D.2.3) | (B.1.26) |
| B1-3011 | (D.2.5) | (B.1.26) |
| B1-3012 | (D.2.6) | (B.1.26) |
| B1-3013 | (E.1.1) | (B.1.26) |

| | | |
|---|---|---|
| B1-3014 | (E.1.3) | (B.1.26) |
| B1-3015 | (E.2.2) | (B.1.26) |
| B1-3016 | (E.2.3), | (B.1.26) |
| B1-3017 | (F.1.2) | (B.1.26) |
| B1-3018 | (F.1.3) | (B.1.26) |
| B1-3019 | (F.1.5) | (B.1.26) |
| B1-3020 | (G.1.4) | (B.1.26) |
| B1-3021 | (G.3.1) | (B.1.26) |
| B1-3022 | (G.5.1) | (B.1.26) |
| B1-3023 | (H.1.2) | (B.1.26) |
| B1-3024 | (H.1.3) | (B.1.26) |
| B1-3025 | (H.1.4) | (B.1.26) |
| B1-3026 | (H.1.5) | (B.1.26) |
| B1-3027 | (H.1.6) | (B.1.26) |
| B1-3028 | (H.1.7) | (B.1.26) |
| B1-3029 | (H.2.2) | (B.1.26) |
| B1-3030 | (H.2.3) | (B.1.26) |
| B1-3031 | (H.2.5) | (B.1.26) |
| B1-3032 | (H.2.7) | (B.1.26) |
| B1-3033 | (H.3.2) | (B.1.26) |
| B1-3034 | (H.3.4) | (B.1.26) |
| B1-3035 | (H.3.5) | (B.1.26) |
| B1-3036 | (H.3.10) | (B.1.26) |
| B1-3037 | (H.4.2) | (B.1.26) |
| B1-3038 | (H.4.9) | (B.1.26) |
| B1-3039 | (I.1.1) | (B.1.26) |
| B1-3040 | (I.2.1) | (B.1.26) |
| B1-3041 | (I.2.2) | (B.1.26) |

| | | |
|---|---|---|
| B1-3042 | (J.1.2) | (B.1.26) |
| B1-3043 | (J.1.3) | (B.1.26) |
| B1-3044 | (J.1.4) | (B.1.26) |
| B1-3045 | (J.1.5) | (B.1.26) |
| B1-3046 | (J.1.8) | (B.1.26) |
| B1-3047 | (J.1.12) | (B.1.26) |
| B1-3048 | (K.1.13) | (B.1.26) |
| B1-3049 | (K.1.47) | (B.1.26) |
| B1-3050 | (K.1.54) | (B.1.26) |
| B1-3051 | (L.1.5) | (B.1.26) |
| B1-3052 | (L.1.9) | (B.1.26) |
| B1-3053 | (L.1.12) | (B.1.26) |
| B1-3054 | (L.1.13) | (B.1.26) |
| B1-3055 | (L.1.17) | (B.1.26) |
| B1-3056 | (L.1.23) | (B.1.26) |
| B1-3057 | (L.1.32), | (B.1.26) |
| B1-3058 | (L.1.46) | (B.1.26) |
| B1-3059 | (M.1.6) | (B.1.26) |
| B1-3060 | (M.1.24) | (B.1.26) |
| B1-3061 | (M.1.25) | (B.1.26) |
| B1-3062 | (M.1.28) | (B.1.26) |
| B1-3063 | (M.1.29) | (B.1.26) |
| B1-3064 | (M.1.30) | (B.1.26) |
| B1-3065 | (N.7.3) | (B.1.26) |
| B1-3066 | (N.7.4) | (B.1.26) |
| B1-3067 | (N.7.5) | (B.1.26) |
| B1-3068 | (N.13.13) | (B.1.26) |
| B1-3069 | (O.2.4), | (B.1.26) |

| | | |
|---|---|---|
| B1-3070 | (O.4.5) | (B.1.26) |
| B1-3071 | (O.4.7) | (B.1.26) |
| B1-3072 | (O.4.8) | (B.1.26) |
| B1-3073 | (O.5.1) | (B.1.26) |
| B1-3074 | (O.26.2) | (B.1.26) |
| B1-3075 | (O.27.17) | (B.1.26) |
| B1-3076 | (A.1.1) | (B.1.29) |
| B1-3077 | (A.1.4) | (B.1.29) |
| B1-3078 | (A.1.8) | (B.1.29) |
| B1-3079 | (A.1.10) | (B.1.29) |
| B1-3080 | (A.1.11) | (B.1.29) |
| B1-3081 | (A.1.12) | (B.1.29) |
| B1-3082 | (A.1.14) | (B.1.29) |
| B1-3083 | (A.1.17) | (B.1.29) |
| B1-3084 | (A.1.19) | (B.1.29) |
| B1-3085 | (A.1.25) | (B.1.29) |
| B1-3086 | (A.1.34) | (B.1.29) |
| B1-3087 | (A.1.35) | (B.1.29) |
| B1-3088 | (A.1.38) | (B.1.29) |
| B1-3089 | (A.2.6) | (B.1.29) |
| B1-3090 | (A.3.2) | (B.1.29) |
| B1-3091 | (A.3.3) | (B.1.29) |
| B1-3092 | (A.3.4) | (B.1.29) |
| B1-3093 | (A.3.7) | (B.1.29) |
| B1-3094 | (A.3.8) | (B.1.29) |
| B1-3095 | (A.3.9) | (B.1.29) |
| B1-3096 | (A.3.10) | (B.1.29) |
| B1-3097 | (A.3.11) | (B.1.29) |

| | | |
|---|---|---|
| B1-3098 | (A.3.12) | (B.1.29) |
| B1-3099 | (A.3.15) | (B.1.29) |
| B1-3100 | (A.3.16) | (B.1.29) |
| B1-3101 | (A.3.17) | (B.1.29) |
| B1-3102 | (A.3.19) | (B.1.29) |
| B1-3103 | (A.3.21) | (B.1.29) |
| B1-3104 | (A.3.22) | (B.1.29) |
| B1-3105 | (A.3.23) | (B.1.29) |
| B1-3106 | (A.3.28) | (B.1.29) |
| B1-3107 | (A.3.31) | (B.1.29) |
| B1-3108 | (A.4.5) | (B.1.29) |
| B1-3109 | (B.1.4) | (B.1.29) |
| B1-3110 | (B.1.5) | (B.1.29) |
| B1-3111 | (B.1.8) | (B.1.29) |
| B1-3112 | (B.1.10) | (B.1.29) |
| B1-3113 | (B.1.12) | (B.1.29) |
| B1-3114 | (B.1.15) | (B.1.29) |
| B1-3115 | (B.1.17) | (B.1.29) |
| B1-3116 | (B.1.18) | (B.1.29) |
| B1-3117 | (B.1.21) | (B.1.29) |
| B1-3118 | (B.1.22) | (B.1.29) |
| B1-3119 | (B.1.23) | (B.1.29) |
| B1-3120 | (B.1.25) | (B.1.29) |
| B1-3121 | (B.1.26) | (B.1.29) |
| B1-3122 | (B.1.29) | (B.1.29) |
| B1-3123 | (B.1.38) | (B.1.29) |
| B1-3124 | (B.1.44) | (B.1.29) |
| B1-3125 | (B.1.46) | (B.1.29) |

| | | |
|---|---|---|
| B1-3126 | (B.2.4) | (B.1.29) |
| B1-3127 | (B.3.1) | (B.1.29) |
| B1-3128 | (C.1.4) | (B.1.29) |
| B1-3129 | (C.1.5) | (B.1.29) |
| B1-3130 | (C.2.1) | (B.1.29) |
| B1-3131 | (D.1.4) | (B.1.29) |
| B1-3132 | (D.1.5) | (B.1.29) |
| B1-3133 | (D.2.3) | (B.1.29) |
| B1-3134 | (D.2.5) | (B.1.29) |
| B1-3135 | (D.2.6) | (B.1.29) |
| B1-3136 | (E.1.1) | (B.1.29) |
| B1-3137 | (E.1.3) | (B.1.29) |
| B1-3138 | (E.2.2) | (B.1.29) |
| B1-3139 | (E.2.3), | (B.1.29) |
| B1-3140 | (F.1.2) | (B.1.29) |
| B1-3141 | (F.1.3) | (B.1.29) |
| B1-3142 | (F.1.5) | (B.1.29) |
| B1-3143 | (G.1.4) | (B.1.29) |
| B1-3144 | (G.3.1) | (B.1.29) |
| B1-3145 | (G.5.1) | (B.1.29) |
| B1-3146 | (H.1.2) | (B.1.29) |
| B1-3147 | (H.1.3) | (B.1.29) |
| B1-3148 | (H.1.4) | (B.1.29) |
| B1-3149 | (H.1.5) | (B.1.29) |
| B1-3150 | (H.1.6) | (B.1.29) |
| B1-3151 | (H.1.7) | (B.1.29) |
| B1-3152 | (H.2.2) | (B.1.29) |
| B1-3153 | (H.2.3) | (B.1.29) |

| | | |
|---|---|---|
| B1-3154 | (H.2.5) | (B.1.29) |
| B1-3155 | (H.2.7) | (B.1.29) |
| B1-3156 | (H.3.2) | (B.1.29) |
| B1-3157 | (H.3.4) | (B.1.29) |
| B1-3158 | (H.3.5) | (B.1.29) |
| B1-3159 | (H.3.10) | (B.1.29) |
| B1-3160 | (H.4.2) | (B.1.29) |
| B1-3161 | (H.4.9) | (B.1.29) |
| B1-3162 | (I.1.1) | (B.1.29) |
| B1-3163 | (I.2.1) | (B.1.29) |
| B1-3164 | (I.2.2) | (B.1.29) |
| B1-3165 | (J.1.2) | (B.1.29) |
| B1-3166 | (J.1.3) | (B.1.29) |
| B1-3167 | (J.1.4) | (B.1.29) |
| B1-3168 | (J.1.5) | (B.1.29) |
| B1-3169 | (J.1.8) | (B.1.29) |
| B1-3170 | (J.1.12) | (B.1.29) |
| B1-3171 | (K.1.13) | (B.1.29) |
| B1-3172 | (K.1.47) | (B.1.29) |
| B1-3173 | (K.1.54) | (B.1.29) |
| B1-3174 | (L.1.5) | (B.1.29) |
| B1-3175 | (L.1.9) | (B.1.29) |
| B1-3176 | (L.1.12) | (B.1.29) |
| B1-3177 | (L.1.13) | (B.1.29) |
| B1-3178 | (L.1.17) | (B.1.29) |
| B1-3179 | (L.1.23) | (B.1.29) |
| B1-3180 | (L.1.32), | (B.1.29) |
| B1-3181 | (L.1.46) | (B.1.29) |

| | | |
|---|---|---|
| B1-3182 | (M.1.6) | (B.1.29) |
| B1-3183 | (M.1.24) | (B.1.29) |
| B1-3184 | (M.1.25) | (B.1.29) |
| B1-3185 | (M.1.28) | (B.1.29) |
| B1-3186 | (M.1.29) | (B.1.29) |
| B1-3187 | (M.1.30) | (B.1.29) |
| B1-3188 | (N.7.3) | (B.1.29) |
| B1-3189 | (N.7.4) | (B.1.29) |
| B1-3190 | (N.7.5) | (B.1.29) |
| B1-3191 | (N.13.13) | (B.1.29) |
| B1-3192 | (O.2.4), | (B.1.29) |
| B1-3193 | (O.4.5) | (B.1.29) |
| B1-3194 | (O.4.7) | (B.1.29) |
| B1-3195 | (O.4.8) | (B.1.29) |
| B1-3196 | (O.5.1) | (B.1.29) |
| B1-3197 | (O.26.2) | (B.1.29) |
| B1-3198 | (O.27.17) | (B.1.29) |
| B1-3199 | (A.1.1) | (B.1.38) |
| B1-3200 | (A.1.4) | (B.1.38) |
| B1-3201 | (A.1.8) | (B.1.38) |
| B1-3202 | (A.1.10) | (B.1.38) |
| B1-3203 | (A.1.11) | (B.1.38) |
| B1-3204 | (A.1.12) | (B.1.38) |
| B1-3205 | (A.1.14) | (B.1.38) |
| B1-3206 | (A.1.17) | (B.1.38) |
| B1-3207 | (A.1.19) | (B.1.38) |
| B1-3208 | (A.1.25) | (B.1.38) |
| B1-3209 | (A.1.34) | (B.1.38) |

| | | |
|---|---|---|
| B1-3210 | (A.1.35) | (B.1.38) |
| B1-3211 | (A.1.38) | (B.1.38) |
| B1-3212 | (A.2.6) | (B.1.38) |
| B1-3213 | (A.3.2) | (B.1.38) |
| B1-3214 | (A.3.3) | (B.1.38) |
| B1-3215 | (A.3.4) | (B.1.38) |
| B1-3216 | (A.3.7) | (B.1.38) |
| B1-3217 | (A.3.8) | (B.1.38) |
| B1-3218 | (A.3.9) | (B.1.38) |
| B1-3219 | (A.3.10) | (B.1.38) |
| B1-3220 | (A.3.11) | (B.1.38) |
| B1-3221 | (A.3.12) | (B.1.38) |
| B1-3222 | (A.3.15) | (B.1.38) |
| B1-3223 | (A.3.16) | (B.1.38) |
| B1-3224 | (A.3.17) | (B.1.38) |
| B1-3225 | (A.3.19) | (B.1.38) |
| B1-3226 | (A.3.21) | (B.1.38) |
| B1-3227 | (A.3.22) | (B.1.38) |
| B1-3228 | (A.3.23) | (B.1.38) |
| B1-3229 | (A.3.28) | (B.1.38) |
| B1-3230 | (A.3.31) | (B.1.38) |
| B1-3231 | (A.4.5) | (B.1.38) |
| B1-3232 | (B.1.4) | (B.1.38) |
| B1-3233 | (B.1.5) | (B.1.38) |
| B1-3234 | (B.1.8) | (B.1.38) |
| B1-3235 | (B.1.10) | (B.1.38) |
| B1-3236 | (B.1.12) | (B.1.38) |
| B1-3237 | (B.1.15) | (B.1.38) |

| | | |
|---|---|---|
| B1-3238 | (B.1.17) | (B.1.38) |
| B1-3239 | (B.1.18) | (B.1.38) |
| B1-3240 | (B.1.21) | (B.1.38) |
| B1-3241 | (B.1.22) | (B.1.38) |
| B1-3242 | (B.1.23) | (B.1.38) |
| B1-3243 | (B.1.25) | (B.1.38) |
| B1-3244 | (B.1.26) | (B.1.38) |
| B1-3245 | (B.1.29) | (B.1.38) |
| B1-3246 | (B.1.38) | (B.1.38) |
| B1-3247 | (B.1.44) | (B.1.38) |
| B1-3248 | (B.1.46) | (B.1.38) |
| B1-3249 | (B.2.4) | (B.1.38) |
| B1-3250 | (B.3.1) | (B.1.38) |
| B1-3251 | (C.1.4) | (B.1.38) |
| B1-3252 | (C.1.5) | (B.1.38) |
| B1-3253 | (C.2.1) | (B.1.38) |
| B1-3254 | (D.1.4) | (B.1.38) |
| B1-3255 | (D.1.5) | (B.1.38) |
| B1-3256 | (D.2.3) | (B.1.38) |
| B1-3257 | (D.2.5) | (B.1.38) |
| B1-3258 | (D.2.6) | (B.1.38) |
| B1-3259 | (E.1.1) | (B.1.38) |
| B1-3260 | (E.1.3) | (B.1.38) |
| B1-3261 | (E.2.2) | (B.1.38) |
| B1-3262 | (E.2.3), | (B.1.38) |
| B1-3263 | (F.1.2) | (B.1.38) |
| B1-3264 | (F.1.3) | (B.1.38) |
| B1-3265 | (F.1.5) | (B.1.38) |

| | | |
|---|---|---|
| B1-3266 | (G.1.4) | (B.1.38) |
| B1-3267 | (G.3.1) | (B.1.38) |
| B1-3268 | (G.5.1) | (B.1.38) |
| B1-3269 | (H.1.2) | (B.1.38) |
| B1-3270 | (H.1.3) | (B.1.38) |
| B1-3271 | (H.1.4) | (B.1.38) |
| B1-3272 | (H.1.5) | (B.1.38) |
| B1-3273 | (H.1.6) | (B.1.38) |
| B1-3274 | (H.1.7) | (B.1.38) |
| B1-3275 | (H.2.2) | (B.1.38) |
| B1-3276 | (H.2.3) | (B.1.38) |
| B1-3277 | (H.2.5) | (B.1.38) |
| B1-3278 | (H.2.7) | (B.1.38) |
| B1-3279 | (H.3.2) | (B.1.38) |
| B1-3280 | (H.3.4) | (B.1.38) |
| B1-3281 | (H.3.5) | (B.1.38) |
| B1-3282 | (H.3.10) | (B.1.38) |
| B1-3283 | (H.4.2) | (B.1.38) |
| B1-3284 | (H.4.9) | (B.1.38) |
| B1-3285 | (I.1.1) | (B.1.38) |
| B1-3286 | (I.2.1) | (B.1.38) |
| B1-3287 | (I.2.2) | (B.1.38) |
| B1-3288 | (J.1.2) | (B.1.38) |
| B1-3289 | (J.1.3) | (B.1.38) |
| B1-3290 | (J.1.4) | (B.1.38) |
| B1-3291 | (J.1.5) | (B.1.38) |
| B1-3292 | (J.1.8) | (B.1.38) |
| B1-3293 | (J.1.12) | (B.1.38) |

| | | |
|---|---|---|
| B1-3294 | (K.1.13) | (B.1.38) |
| B1-3295 | (K.1.47) | (B.1.38) |
| B1-3296 | (K.1.54) | (B.1.38) |
| B1-3297 | (L.1.5) | (B.1.38) |
| B1-3298 | (L.1.9) | (B.1.38) |
| B1-3299 | (L.1.12) | (B.1.38) |
| B1-3300 | (L.1.13) | (B.1.38) |
| B1-3301 | (L.1.17) | (B.1.38) |
| B1-3302 | (L.1.23) | (B.1.38) |
| B1-3303 | (L.1.32), | (B.1.38) |
| B1-3304 | (L.1.46) | (B.1.38) |
| B1-3305 | (M.1.6) | (B.1.38) |
| B1-3306 | (M.1.24) | (B.1.38) |
| B1-3307 | (M.1.25) | (B.1.38) |
| B1-3308 | (M.1.28) | (B.1.38) |
| B1-3309 | (M.1.29) | (B.1.38) |
| B1-3310 | (M.1.30) | (B.1.38) |
| B1-3311 | (N.7.3) | (B.1.38) |
| B1-3312 | (N.7.4) | (B.1.38) |
| B1-3313 | (N.7.5) | (B.1.38) |
| B1-3314 | (N.13.13) | (B.1.38) |
| B1-3315 | (O.2.4), | (B.1.38) |
| B1-3316 | (O.4.5) | (B.1.38) |
| B1-3317 | (O.4.7) | (B.1.38) |
| B1-3318 | (O.4.8) | (B.1.38) |
| B1-3319 | (O.5.1) | (B.1.38) |
| B1-3320 | (O.26.2) | (B.1.38) |
| B1-3321 | (O.27.17) | (B.1.38) |

| | | |
|---|---|---|
| B1-3322 | (A.1.1) | (B.3.1) |
| B1-3323 | (A.1.4) | (B.3.1) |
| B1-3324 | (A.1.8) | (B.3.1) |
| B1-3325 | (A.1.10) | (B.3.1) |
| B1-3326 | (A.1.11) | (B.3.1) |
| B1-3327 | (A.1.12) | (B.3.1) |
| B1-3328 | (A.1.14) | (B.3.1) |
| B1-3329 | (A.1.17) | (B.3.1) |
| B1-3330 | (A.1.19) | (B.3.1) |
| B1-3331 | (A.1.25) | (B.3.1) |
| B1-3332 | (A.1.34) | (B.3.1) |
| B1-3333 | (A.1.35) | (B.3.1) |
| B1-3334 | (A.1.38) | (B.3.1) |
| B1-3335 | (A.2.6) | (B.3.1) |
| B1-3336 | (A.3.2) | (B.3.1) |
| B1-3337 | (A.3.3) | (B.3.1) |
| B1-3338 | (A.3.4) | (B.3.1) |
| B1-3339 | (A.3.7) | (B.3.1) |
| B1-3340 | (A.3.8) | (B.3.1) |
| B1-3341 | (A.3.9) | (B.3.1) |
| B1-3342 | (A.3.10) | (B.3.1) |
| B1-3343 | (A.3.11) | (B.3.1) |
| B1-3344 | (A.3.12) | (B.3.1) |
| B1-3345 | (A.3.15) | (B.3.1) |
| B1-3346 | (A.3.16) | (B.3.1) |
| B1-3347 | (A.3.17) | (B.3.1) |
| B1-3348 | (A.3.19) | (B.3.1) |
| B1-3349 | (A.3.21) | (B.3.1) |

| | | |
|---|---|---|
| B1-3350 | (A.3.22) | (B.3.1) |
| B1-3351 | (A.3.23) | (B.3.1) |
| B1-3352 | (A.3.28) | (B.3.1) |
| B1-3353 | (A.3.31) | (B.3.1) |
| B1-3354 | (A.4.5) | (B.3.1) |
| B1-3355 | (B.1.4) | (B.3.1) |
| B1-3356 | (B.1.5) | (B.3.1) |
| B1-3357 | (B.1.8) | (B.3.1) |
| B1-3358 | (B.1.10) | (B.3.1) |
| B1-3359 | (B.1.12) | (B.3.1) |
| B1-3360 | (B.1.15) | (B.3.1) |
| B1-3361 | (B.1.17) | (B.3.1) |
| B1-3362 | (B.1.18) | (B.3.1) |
| B1-3363 | (B.1.21) | (B.3.1) |
| B1-3364 | (B.1.22) | (B.3.1) |
| B1-3365 | (B.1.23) | (B.3.1) |
| B1-3366 | (B.1.25) | (B.3.1) |
| B1-3367 | (B.1.26) | (B.3.1) |
| B1-3368 | (B.1.29) | (B.3.1) |
| B1-3369 | (B.1.38) | (B.3.1) |
| B1-3370 | (B.1.44) | (B.3.1) |
| B1-3371 | (B.1.46) | (B.3.1) |
| B1-3372 | (B.2.4) | (B.3.1) |
| B1-3373 | (B.3.1) | (B.3.1) |
| B1-3374 | (C.1.4) | (B.3.1) |
| B1-3375 | (C.1.5) | (B.3.1) |
| B1-3376 | (C.2.1) | (B.3.1) |
| B1-3377 | (D.1.4) | (B.3.1) |

| | | |
|---|---|---|
| B1-3378 | (D.1.5) | (B.3.1) |
| B1-3379 | (D.2.3) | (B.3.1) |
| B1-3380 | (D.2.5) | (B.3.1) |
| B1-3381 | (D.2.6) | (B.3.1) |
| B1-3382 | (E.1.1) | (B.3.1) |
| B1-3383 | (E.1.3) | (B.3.1) |
| B1-3384 | (E.2.2) | (B.3.1) |
| B1-3385 | (E.2.3), | (B.3.1) |
| B1-3386 | (F.1.2) | (B.3.1) |
| B1-3387 | (F.1.3) | (B.3.1) |
| B1-3388 | (F.1.5) | (B.3.1) |
| B1-3389 | (G.1.4) | (B.3.1) |
| B1-3390 | (G.3.1) | (B.3.1) |
| B1-3391 | (G.5.1) | (B.3.1) |
| B1-3392 | (H.1.2) | (B.3.1) |
| B1-3393 | (H.1.3) | (B.3.1) |
| B1-3394 | (H.1.4) | (B.3.1) |
| B1-3395 | (H.1.5) | (B.3.1) |
| B1-3396 | (H.1.6) | (B.3.1) |
| B1-3397 | (H.1.7) | (B.3.1) |
| B1-3398 | (H.2.2) | (B.3.1) |
| B1-3399 | (H.2.3) | (B.3.1) |
| B1-3400 | (H.2.5) | (B.3.1) |
| B1-3401 | (H.2.7) | (B.3.1) |
| B1-3402 | (H.3.2) | (B.3.1) |
| B1-3403 | (H.3.4) | (B.3.1) |
| B1-3404 | (H.3.5) | (B.3.1) |
| B1-3405 | (H.3.10) | (B.3.1) |

| | | |
|---|---|---|
| B1-3406 | (H.4.2) | (B.3.1) |
| B1-3407 | (H.4.9) | (B.3.1) |
| B1-3408 | (I.1.1) | (B.3.1) |
| B1-3409 | (I.2.1) | (B.3.1) |
| B1-3410 | (I.2.2) | (B.3.1) |
| B1-3411 | (J.1.2) | (B.3.1) |
| B1-3412 | (J.1.3) | (B.3.1) |
| B1-3413 | (J.1.4) | (B.3.1) |
| B1-3414 | (J.1.5) | (B.3.1) |
| B1-3415 | (J.1.8) | (B.3.1) |
| B1-3416 | (J.1.12) | (B.3.1) |
| B1-3417 | (K.1.13) | (B.3.1) |
| B1-3418 | (K.1.47) | (B.3.1) |
| B1-3419 | (K.1.54) | (B.3.1) |
| B1-3420 | (L.1.5) | (B.3.1) |
| B1-3421 | (L.1.9) | (B.3.1) |
| B1-3422 | (L.1.12) | (B.3.1) |
| B1-3423 | (L.1.13) | (B.3.1) |
| B1-3424 | (L.1.17) | (B.3.1) |
| B1-3425 | (L.1.23) | (B.3.1) |
| B1-3426 | (L.1.32), | (B.3.1) |
| B1-3427 | (L.1.46) | (B.3.1) |
| B1-3428 | (M.1.6) | (B.3.1) |
| B1-3429 | (M.1.24) | (B.3.1) |
| B1-3430 | (M.1.25) | (B.3.1) |
| B1-3431 | (M.1.28) | (B.3.1) |
| B1-3432 | (M.1.29) | (B.3.1) |
| B1-3433 | (M.1.30) | (B.3.1) |

| | | |
|---|---|---|
| B1-3434 | (N.7.3) | (B.3.1) |
| B1-3435 | (N.7.4) | (B.3.1) |
| B1-3436 | (N.7.5) | (B.3.1) |
| B1-3437 | (N.13.13) | (B.3.1) |
| B1-3438 | (O.2.4), | (B.3.1) |
| B1-3439 | (O.4.5) | (B.3.1) |
| B1-3440 | (O.4.7) | (B.3.1) |
| B1-3441 | (O.4.8) | (B.3.1) |
| B1-3442 | (O.5.1) | (B.3.1) |
| B1-3443 | (O.26.2) | (B.3.1) |
| B1-3444 | (O.27.17) | (B.3.1) |
| B1-3445 | (A.1.1) | (C.2.1) |
| B1-3446 | (A.1.4) | (C.2.1) |
| B1-3447 | (A.1.8) | (C.2.1) |
| B1-3448 | (A.1.10) | (C.2.1) |
| B1-3449 | (A.1.11) | (C.2.1) |
| B1-3450 | (A.1.12) | (C.2.1) |
| B1-3451 | (A.1.14) | (C.2.1) |
| B1-3452 | (A.1.17) | (C.2.1) |
| B1-3453 | (A.1.19) | (C.2.1) |
| B1-3454 | (A.1.25) | (C.2.1) |
| B1-3455 | (A.1.34) | (C.2.1) |
| B1-3456 | (A.1.35) | (C.2.1) |
| B1-3457 | (A.1.38) | (C.2.1) |
| B1-3458 | (A.2.6) | (C.2.1) |
| B1-3459 | (A.3.2) | (C.2.1) |
| B1-3460 | (A.3.3) | (C.2.1) |
| B1-3461 | (A.3.4) | (C.2.1) |
| B1-3462 | (A.3.7) | (C.2.1) |
| B1-3463 | (A.3.8) | (C.2.1) |
| B1-3464 | (A.3.9) | (C.2.1) |
| B1-3465 | (A.3.10) | (C.2.1) |
| B1-3466 | (A.3.11) | (C.2.1) |
| B1-3467 | (A.3.12) | (C.2.1) |
| B1-3468 | (A.3.15) | (C.2.1) |
| B1-3469 | (A.3.16) | (C.2.1) |
| B1-3470 | (A.3.17) | (C.2.1) |
| B1-3471 | (A.3.19) | (C.2.1) |
| B1-3472 | (A.3.21) | (C.2.1) |
| B1-3473 | (A.3.22) | (C.2.1) |
| B1-3474 | (A.3.23) | (C.2.1) |
| B1-3475 | (A.3.28) | (C.2.1) |
| B1-3476 | (A.3.31) | (C.2.1) |
| B1-3477 | (A.4.5) | (C.2.1) |
| B1-3478 | (B.1.4) | (C.2.1) |
| B1-3479 | (B.1.5) | (C.2.1) |
| B1-3480 | (B.1.8) | (C.2.1) |
| B1-3481 | (B.1.10) | (C.2.1) |
| B1-3482 | (B.1.12) | (C.2.1) |
| B1-3483 | (B.1.15) | (C.2.1) |
| B1-3484 | (B.1.17) | (C.2.1) |
| B1-3485 | (B.1.18) | (C.2.1) |
| B1-3486 | (B.1.21) | (C.2.1) |
| B1-3487 | (B.1.22) | (C.2.1) |
| B1-3488 | (B.1.23) | (C.2.1) |
| B1-3489 | (B.1.25) | (C.2.1) |

| | | |
|---|---|---|
| B1-3490 | (B.1.26) | (C.2.1) |
| B1-3491 | (B.1.29) | (C.2.1) |
| B1-3492 | (B.1.38) | (C.2.1) |
| B1-3493 | (B.1.44) | (C.2.1) |
| B1-3494 | (B.1.46) | (C.2.1) |
| B1-3495 | (B.2.4) | (C.2.1) |
| B1-3496 | (B.3.1) | (C.2.1) |
| B1-3497 | (C.1.4) | (C.2.1) |
| B1-3498 | (C.1.5) | (C.2.1) |
| B1-3499 | (C.2.1) | (C.2.1) |
| B1-3500 | (D.1.4) | (C.2.1) |
| B1-3501 | (D.1.5) | (C.2.1) |
| B1-3502 | (D.2.3) | (C.2.1) |
| B1-3503 | (D.2.5) | (C.2.1) |
| B1-3504 | (D.2.6) | (C.2.1) |
| B1-3505 | (E.1.1) | (C.2.1) |
| B1-3506 | (E.1.3) | (C.2.1) |
| B1-3507 | (E.2.2) | (C.2.1) |
| B1-3508 | (E.2.3), | (C.2.1) |
| B1-3509 | (F.1.2) | (C.2.1) |
| B1-3510 | (F.1.3) | (C.2.1) |
| B1-3511 | (F.1.5) | (C.2.1) |
| B1-3512 | (G.1.4) | (C.2.1) |
| B1-3513 | (G.3.1) | (C.2.1) |
| B1-3514 | (G.5.1) | (C.2.1) |
| B1-3515 | (H.1.2) | (C.2.1) |
| B1-3516 | (H.1.3) | (C.2.1) |
| B1-3517 | (H.1.4) | (C.2.1) |

| | | |
|---|---|---|
| B1-3518 | (H.1.5) | (C.2.1) |
| B1-3519 | (H.1.6) | (C.2.1) |
| B1-3520 | (H.1.7) | (C.2.1) |
| B1-3521 | (H.2.2) | (C.2.1) |
| B1-3522 | (H.2.3) | (C.2.1) |
| B1-3523 | (H.2.5) | (C.2.1) |
| B1-3524 | (H.2.7) | (C.2.1) |
| B1-3525 | (H.3.2) | (C.2.1) |
| B1-3526 | (H.3.4) | (C.2.1) |
| B1-3527 | (H.3.5) | (C.2.1) |
| B1-3528 | (H.3.10) | (C.2.1) |
| B1-3529 | (H.4.2) | (C.2.1) |
| B1-3530 | (H.4.9) | (C.2.1) |
| B1-3531 | (I.1.1) | (C.2.1) |
| B1-3532 | (I.2.1) | (C.2.1) |
| B1-3533 | (I.2.2) | (C.2.1) |
| B1-3534 | (J.1.2) | (C.2.1) |
| B1-3535 | (J.1.3) | (C.2.1) |
| B1-3536 | (J.1.4) | (C.2.1) |
| B1-3537 | (J.1.5) | (C.2.1) |
| B1-3538 | (J.1.8) | (C.2.1) |
| B1-3539 | (J.1.12) | (C.2.1) |
| B1-3540 | (K.1.13) | (C.2.1) |
| B1-3541 | (K.1.47) | (C.2.1) |
| B1-3542 | (K.1.54) | (C.2.1) |
| B1-3543 | (L.1.5) | (C.2.1) |
| B1-3544 | (L.1.9) | (C.2.1) |
| B1-3545 | (L.1.12) | (C.2.1) |

| | | |
|---|---|---|
| B1-3546 | (L.1.13) | (C.2.1) |
| B1-3547 | (L.1.17) | (C.2.1) |
| B1-3548 | (L.1.23) | (C.2.1) |
| B1-3549 | (L.1.32), | (C.2.1) |
| B1-3550 | (L.1.46) | (C.2.1) |
| B1-3551 | (M.1.6) | (C.2.1) |
| B1-3552 | (M.1.24) | (C.2.1) |
| B1-3553 | (M.1.25) | (C.2.1) |
| B1-3554 | (M.1.28) | (C.2.1) |
| B1-3555 | (M.1.29) | (C.2.1) |
| B1-3556 | (M.1.30) | (C.2.1) |
| B1-3557 | (N.7.3) | (C.2.1) |
| B1-3558 | (N.7.4) | (C.2.1) |
| B1-3559 | (N.7.5) | (C.2.1) |
| B1-3560 | (N.13.13) | (C.2.1) |
| B1-3561 | (O.2.4), | (C.2.1) |
| B1-3562 | (O.4.5) | (C.2.1) |
| B1-3563 | (O.4.7) | (C.2.1) |
| B1-3564 | (O.4.8) | (C.2.1) |
| B1-3565 | (O.5.1) | (C.2.1) |
| B1-3566 | (O.26.2) | (C.2.1) |
| B1-3567 | (O.27.17) | (C.2.1) |
| B1-3568 | (A.1.1) | (C.5.3) |
| B1-3569 | (A.1.4) | (C.5.3) |
| B1-3570 | (A.1.8) | (C.5.3) |
| B1-3571 | (A.1.10) | (C.5.3) |
| B1-3572 | (A.1.11) | (C.5.3) |
| B1-3573 | (A.1.12) | (C.5.3) |

| | | |
|---|---|---|
| B1-3574 | (A.1.14) | (C.5.3) |
| B1-3575 | (A.1.17) | (C.5.3) |
| B1-3576 | (A.1.19) | (C.5.3) |
| B1-3577 | (A.1.25) | (C.5.3) |
| B1-3578 | (A.1.34) | (C.5.3) |
| B1-3579 | (A.1.35) | (C.5.3) |
| B1-3580 | (A.1.38) | (C.5.3) |
| B1-3581 | (A.2.6) | (C.5.3) |
| B1-3582 | (A.3.2) | (C.5.3) |
| B1-3583 | (A.3.3) | (C.5.3) |
| B1-3584 | (A.3.4) | (C.5.3) |
| B1-3585 | (A.3.7) | (C.5.3) |
| B1-3586 | (A.3.8) | (C.5.3) |
| B1-3587 | (A.3.9) | (C.5.3) |
| B1-3588 | (A.3.10) | (C.5.3) |
| B1-3589 | (A.3.11) | (C.5.3) |
| B1-3590 | (A.3.12) | (C.5.3) |
| B1-3591 | (A.3.15) | (C.5.3) |
| B1-3592 | (A.3.16) | (C.5.3) |
| B1-3593 | (A.3.17) | (C.5.3) |
| B1-3594 | (A.3.19) | (C.5.3) |
| B1-3595 | (A.3.21) | (C.5.3) |
| B1-3596 | (A.3.22) | (C.5.3) |
| B1-3597 | (A.3.23) | (C.5.3) |
| B1-3598 | (A.3.28) | (C.5.3) |
| B1-3599 | (A.3.31) | (C.5.3) |
| B1-3600 | (A.4.5) | (C.5.3) |
| B1-3601 | (B.1.4) | (C.5.3) |

| | | |
|---|---|---|
| B1-3602 | (B.1.5) | (C.5.3) |
| B1-3603 | (B.1.8) | (C.5.3) |
| B1-3604 | (B.1.10) | (C.5.3) |
| B1-3605 | (B.1.12) | (C.5.3) |
| B1-3606 | (B.1.15) | (C.5.3) |
| B1-3607 | (B.1.17) | (C.5.3) |
| B1-3608 | (B.1.18) | (C.5.3) |
| B1-3609 | (B.1.21) | (C.5.3) |
| B1-3610 | (B.1.22) | (C.5.3) |
| B1-3611 | (B.1.23) | (C.5.3) |
| B1-3612 | (B.1.25) | (C.5.3) |
| B1-3613 | (B.1.26) | (C.5.3) |
| B1-3614 | (B.1.29) | (C.5.3) |
| B1-3615 | (B.1.38) | (C.5.3) |
| B1-3616 | (B.1.44) | (C.5.3) |
| B1-3617 | (B.1.46) | (C.5.3) |
| B1-3618 | (B.2.4) | (C.5.3) |
| B1-3619 | (B.3.1) | (C.5.3) |
| B1-3620 | (C.1.4) | (C.5.3) |
| B1-3621 | (C.1.5) | (C.5.3) |
| B1-3622 | (C.2.1) | (C.5.3) |
| B1-3623 | (D.1.4) | (C.5.3) |
| B1-3624 | (D.1.5) | (C.5.3) |
| B1-3625 | (D.2.3) | (C.5.3) |
| B1-3626 | (D.2.5) | (C.5.3) |
| B1-3627 | (D.2.6) | (C.5.3) |
| B1-3628 | (E.1.1) | (C.5.3) |
| B1-3629 | (E.1.3) | (C.5.3) |

| | | |
|---|---|---|
| B1-3630 | (E.2.2) | (C.5.3) |
| B1-3631 | (E.2.3), | (C.5.3) |
| B1-3632 | (F.1.2) | (C.5.3) |
| B1-3633 | (F.1.3) | (C.5.3) |
| B1-3634 | (F.1.5) | (C.5.3) |
| B1-3635 | (G.1.4) | (C.5.3) |
| B1-3636 | (G.3.1) | (C.5.3) |
| B1-3637 | (G.5.1) | (C.5.3) |
| B1-3638 | (H.1.2) | (C.5.3) |
| B1-3639 | (H.1.3) | (C.5.3) |
| B1-3640 | (H.1.4) | (C.5.3) |
| B1-3641 | (H.1.5) | (C.5.3) |
| B1-3642 | (H.1.6) | (C.5.3) |
| B1-3643 | (H.1.7) | (C.5.3) |
| B1-3644 | (H.2.2) | (C.5.3) |
| B1-3645 | (H.2.3) | (C.5.3) |
| B1-3646 | (H.2.5) | (C.5.3) |
| B1-3647 | (H.2.7) | (C.5.3) |
| B1-3648 | (H.3.2) | (C.5.3) |
| B1-3649 | (H.3.4) | (C.5.3) |
| B1-3650 | (H.3.5) | (C.5.3) |
| B1-3651 | (H.3.10) | (C.5.3) |
| B1-3652 | (H.4.2) | (C.5.3) |
| B1-3653 | (H.4.9) | (C.5.3) |
| B1-3654 | (I.1.1) | (C.5.3) |
| B1-3655 | (I.2.1) | (C.5.3) |
| B1-3656 | (I.2.2) | (C.5.3) |
| B1-3657 | (J.1.2) | (C.5.3) |

| | | |
|---|---|---|
| B1-3658 | (J.1.3) | (C.5.3) |
| B1-3659 | (J.1.4) | (C.5.3) |
| B1-3660 | (J.1.5) | (C.5.3) |
| B1-3661 | (J.1.8) | (C.5.3) |
| B1-3662 | (J.1.12) | (C.5.3) |
| B1-3663 | (K.1.13) | (C.5.3) |
| B1-3664 | (K.1.47) | (C.5.3) |
| B1-3665 | (K.1.54) | (C.5.3) |
| B1-3666 | (L.1.5) | (C.5.3) |
| B1-3667 | (L.1.9) | (C.5.3) |
| B1-3668 | (L.1.12) | (C.5.3) |
| B1-3669 | (L.1.13) | (C.5.3) |
| B1-3670 | (L.1.17) | (C.5.3) |
| B1-3671 | (L.1.23) | (C.5.3) |
| B1-3672 | (L.1.32), | (C.5.3) |
| B1-3673 | (L.1.46) | (C.5.3) |
| B1-3674 | (M.1.6) | (C.5.3) |
| B1-3675 | (M.1.24) | (C.5.3) |
| B1-3676 | (M.1.25) | (C.5.3) |
| B1-3677 | (M.1.28) | (C.5.3) |
| B1-3678 | (M.1.29) | (C.5.3) |
| B1-3679 | (M.1.30) | (C.5.3) |
| B1-3680 | (N.7.3) | (C.5.3) |
| B1-3681 | (N.7.4) | (C.5.3) |
| B1-3682 | (N.7.5) | (C.5.3) |
| B1-3683 | (N.13.13) | (C.5.3) |
| B1-3684 | (O.2.4), | (C.5.3) |
| B1-3685 | (O.4.5) | (C.5.3) |

| | | |
|---|---|---|
| B1-3686 | (O.4.7) | (C.5.3) |
| B1-3687 | (O.4.8) | (C.5.3) |
| B1-3688 | (O.5.1) | (C.5.3) |
| B1-3689 | (O.26.2) | (C.5.3) |
| B1-3690 | (O.27.17) | (C.5.3) |
| B1-3691 | (A.1.1) | (D.1.5) |
| B1-3692 | (A.1.4) | (D.1.5) |
| B1-3693 | (A.1.8) | (D.1.5) |
| B1-3694 | (A.1.10) | (D.1.5) |
| B1-3695 | (A.1.11) | (D.1.5) |
| B1-3696 | (A.1.12) | (D.1.5) |
| B1-3697 | (A.1.14) | (D.1.5) |
| B1-3698 | (A.1.17) | (D.1.5) |
| B1-3699 | (A.1.19) | (D.1.5) |
| B1-3700 | (A.1.25) | (D.1.5) |
| B1-3701 | (A.1.34) | (D.1.5) |
| B1-3702 | (A.1.35) | (D.1.5) |
| B1-3703 | (A.1.38) | (D.1.5) |
| B1-3704 | (A.2.6) | (D.1.5) |
| B1-3705 | (A.3.2) | (D.1.5) |
| B1-3706 | (A.3.3) | (D.1.5) |
| B1-3707 | (A.3.4) | (D.1.5) |
| B1-3708 | (A.3.7) | (D.1.5) |
| B1-3709 | (A.3.8) | (D.1.5) |
| B1-3710 | (A.3.9) | (D.1.5) |
| B1-3711 | (A.3.10) | (D.1.5) |
| B1-3712 | (A.3.11) | (D.1.5) |
| B1-3713 | (A.3.12) | (D.1.5) |

| | | |
|---|---|---|
| B1-3714 | (A.3.15) | (D.1.5) |
| B1-3715 | (A.3.16) | (D.1.5) |
| B1-3716 | (A.3.17) | (D.1.5) |
| B1-3717 | (A.3.19) | (D.1.5) |
| B1-3718 | (A.3.21) | (D.1.5) |
| B1-3719 | (A.3.22) | (D.1.5) |
| B1-3720 | (A.3.23) | (D.1.5) |
| B1-3721 | (A.3.28) | (D.1.5) |
| B1-3722 | (A.3.31) | (D.1.5) |
| B1-3723 | (A.4.5) | (D.1.5) |
| B1-3724 | (B.1.4) | (D.1.5) |
| B1-3725 | (B.1.5) | (D.1.5) |
| B1-3726 | (B.1.8) | (D.1.5) |
| B1-3727 | (B.1.10) | (D.1.5) |
| B1-3728 | (B.1.12) | (D.1.5) |
| B1-3729 | (B.1.15) | (D.1.5) |
| B1-3730 | (B.1.17) | (D.1.5) |
| B1-3731 | (B.1.18) | (D.1.5) |
| B1-3732 | (B.1.21) | (D.1.5) |
| B1-3733 | (B.1.22) | (D.1.5) |
| B1-3734 | (B.1.23) | (D.1.5) |
| B1-3735 | (B.1.25) | (D.1.5) |
| B1-3736 | (B.1.26) | (D.1.5) |
| B1-3737 | (B.1.29) | (D.1.5) |
| B1-3738 | (B.1.38) | (D.1.5) |
| B1-3739 | (B.1.44) | (D.1.5) |
| B1-3740 | (B.1.46) | (D.1.5) |
| B1-3741 | (B.2.4) | (D.1.5) |

| | | |
|---|---|---|
| B1-3742 | (B.3.1) | (D.1.5) |
| B1-3743 | (C.1.4) | (D.1.5) |
| B1-3744 | (C.1.5) | (D.1.5) |
| B1-3745 | (C.2.1) | (D.1.5) |
| B1-3746 | (D.1.4) | (D.1.5) |
| B1-3747 | (D.1.5) | (D.1.5) |
| B1-3748 | (D.2.3) | (D.1.5) |
| B1-3749 | (D.2.5) | (D.1.5) |
| B1-3750 | (D.2.6) | (D.1.5) |
| B1-3751 | (E.1.1) | (D.1.5) |
| B1-3752 | (E.1.3) | (D.1.5) |
| B1-3753 | (E.2.2) | (D.1.5) |
| B1-3754 | (E.2.3), | (D.1.5) |
| B1-3755 | (F.1.2) | (D.1.5) |
| B1-3756 | (F.1.3) | (D.1.5) |
| B1-3757 | (F.1.5) | (D.1.5) |
| B1-3758 | (G.1.4) | (D.1.5) |
| B1-3759 | (G.3.1) | (D.1.5) |
| B1-3760 | (G.5.1) | (D.1.5) |
| B1-3761 | (H.1.2) | (D.1.5) |
| B1-3762 | (H.1.3) | (D.1.5) |
| B1-3763 | (H.1.4) | (D.1.5) |
| B1-3764 | (H.1.5) | (D.1.5) |
| B1-3765 | (H.1.6) | (D.1.5) |
| B1-3766 | (H.1.7) | (D.1.5) |
| B1-3767 | (H.2.2) | (D.1.5) |
| B1-3768 | (H.2.3) | (D.1.5) |
| B1-3769 | (H.2.5) | (D.1.5) |

| | | |
|---|---|---|
| B1-3770 | (H.2.7) | (D.1.5) |
| B1-3771 | (H.3.2) | (D.1.5) |
| B1-3772 | (H.3.4) | (D.1.5) |
| B1-3773 | (H.3.5) | (D.1.5) |
| B1-3774 | (H.3.10) | (D.1.5) |
| B1-3775 | (H.4.2) | (D.1.5) |
| B1-3776 | (H.4.9) | (D.1.5) |
| B1-3777 | (I.1.1) | (D.1.5) |
| B1-3778 | (I.2.1) | (D.1.5) |
| B1-3779 | (I.2.2) | (D.1.5) |
| B1-3780 | (J.1.2) | (D.1.5) |
| B1-3781 | (J.1.3) | (D.1.5) |
| B1-3782 | (J.1.4) | (D.1.5) |
| B1-3783 | (J.1.5) | (D.1.5) |
| B1-3784 | (J.1.8) | (D.1.5) |
| B1-3785 | (J.1.12) | (D.1.5) |
| B1-3786 | (K.1.13) | (D.1.5) |
| B1-3787 | (K.1.47) | (D.1.5) |
| B1-3788 | (K.1.54) | (D.1.5) |
| B1-3789 | (L.1.5) | (D.1.5) |
| B1-3790 | (L.1.9) | (D.1.5) |
| B1-3791 | (L.1.12) | (D.1.5) |
| B1-3792 | (L.1.13) | (D.1.5) |
| B1-3793 | (L.1.17) | (D.1.5) |
| B1-3794 | (L.1.23) | (D.1.5) |
| B1-3795 | (L.1.32), | (D.1.5) |
| B1-3796 | (L.1.46) | (D.1.5) |
| B1-3797 | (M.1.6) | (D.1.5) |

| | | |
|---|---|---|
| B1-3798 | (M.1.24) | (D.1.5) |
| B1-3799 | (M.1.25) | (D.1.5) |
| B1-3800 | (M.1.28) | (D.1.5) |
| B1-3801 | (M.1.29) | (D.1.5) |
| B1-3802 | (M.1.30) | (D.1.5) |
| B1-3803 | (N.7.3) | (D.1.5) |
| B1-3804 | (N.7.4) | (D.1.5) |
| B1-3805 | (N.7.5) | (D.1.5) |
| B1-3806 | (N.13.13) | (D.1.5) |
| B1-3807 | (O.2.4), | (D.1.5) |
| B1-3808 | (O.4.5) | (D.1.5) |
| B1-3809 | (O.4.7) | (D.1.5) |
| B1-3810 | (O.4.8) | (D.1.5) |
| B1-3811 | (O.5.1) | (D.1.5) |
| B1-3812 | (O.26.2) | (D.1.5) |
| B1-3813 | (O.27.17) | (D.1.5) |
| B1-3814 | (A.1.1) | (E.1.3) |
| B1-3815 | (A.1.4) | (E.1.3) |
| B1-3816 | (A.1.8) | (E.1.3) |
| B1-3817 | (A.1.10) | (E.1.3) |
| B1-3818 | (A.1.11) | (E.1.3) |
| B1-3819 | (A.1.12) | (E.1.3) |
| B1-3820 | (A.1.14) | (E.1.3) |
| B1-3821 | (A.1.17) | (E.1.3) |
| B1-3822 | (A.1.19) | (E.1.3) |
| B1-3823 | (A.1.25) | (E.1.3) |
| B1-3824 | (A.1.34) | (E.1.3) |
| B1-3825 | (A.1.35) | (E.1.3) |

| | | |
|---|---|---|
| B1-3826 | (A.1.38) | (E.1.3) |
| B1-3827 | (A.2.6) | (E.1.3) |
| B1-3828 | (A.3.2) | (E.1.3) |
| B1-3829 | (A.3.3) | (E.1.3) |
| B1-3830 | (A.3.4) | (E.1.3) |
| B1-3831 | (A.3.7) | (E.1.3) |
| B1-3832 | (A.3.8) | (E.1.3) |
| B1-3833 | (A.3.9) | (E.1.3) |
| B1-3834 | (A.3.10) | (E.1.3) |
| B1-3835 | (A.3.11) | (E.1.3) |
| B1-3836 | (A.3.12) | (E.1.3) |
| B1-3837 | (A.3.15) | (E.1.3) |
| B1-3838 | (A.3.16) | (E.1.3) |
| B1-3839 | (A.3.17) | (E.1.3) |
| B1-3840 | (A.3.19) | (E.1.3) |
| B1-3841 | (A.3.21) | (E.1.3) |
| B1-3842 | (A.3.22) | (E.1.3) |
| B1-3843 | (A.3.23) | (E.1.3) |
| B1-3844 | (A.3.28) | (E.1.3) |
| B1-3845 | (A.3.31) | (E.1.3) |
| B1-3846 | (A.4.5) | (E.1.3) |
| B1-3847 | (B.1.4) | (E.1.3) |
| B1-3848 | (B.1.5) | (E.1.3) |
| B1-3849 | (B.1.8) | (E.1.3) |
| B1-3850 | (B.1.10) | (E.1.3) |
| B1-3851 | (B.1.12) | (E.1.3) |
| B1-3852 | (B.1.15) | (E.1.3) |
| B1-3853 | (B.1.17) | (E.1.3) |

| | | |
|---|---|---|
| B1-3854 | (B.1.18) | (E.1.3) |
| B1-3855 | (B.1.21) | (E.1.3) |
| B1-3856 | (B.1.22) | (E.1.3) |
| B1-3857 | (B.1.23) | (E.1.3) |
| B1-3858 | (B.1.25) | (E.1.3) |
| B1-3859 | (B.1.26) | (E.1.3) |
| B1-3860 | (B.1.29) | (E.1.3) |
| B1-3861 | (B.1.38) | (E.1.3) |
| B1-3862 | (B.1.44) | (E.1.3) |
| B1-3863 | (B.1.46) | (E.1.3) |
| B1-3864 | (B.2.4) | (E.1.3) |
| B1-3865 | (B.3.1) | (E.1.3) |
| B1-3866 | (C.1.4) | (E.1.3) |
| B1-3867 | (C.1.5) | (E.1.3) |
| B1-3868 | (C.2.1) | (E.1.3) |
| B1-3869 | (D.1.4) | (E.1.3) |
| B1-3870 | (D.1.5) | (E.1.3) |
| B1-3871 | (D.2.3) | (E.1.3) |
| B1-3872 | (D.2.5) | (E.1.3) |
| B1-3873 | (D.2.6) | (E.1.3) |
| B1-3874 | (E.1.1) | (E.1.3) |
| B1-3875 | (E.1.3) | (E.1.3) |
| B1-3876 | (E.2.2) | (E.1.3) |
| B1-3877 | (E.2.3), | (E.1.3) |
| B1-3878 | (F.1.2) | (E.1.3) |
| B1-3879 | (F.1.3) | (E.1.3) |
| B1-3880 | (F.1.5) | (E.1.3) |
| B1-3881 | (G.1.4) | (E.1.3) |

| | | |
|---|---|---|
| B1-3882 | (G.3.1) | (E.1.3) |
| B1-3883 | (G.5.1) | (E.1.3) |
| B1-3884 | (H.1.2) | (E.1.3) |
| B1-3885 | (H.1.3) | (E.1.3) |
| B1-3886 | (H.1.4) | (E.1.3) |
| B1-3887 | (H.1.5) | (E.1.3) |
| B1-3888 | (H.1.6) | (E.1.3) |
| B1-3889 | (H.1.7) | (E.1.3) |
| B1-3890 | (H.2.2) | (E.1.3) |
| B1-3891 | (H.2.3) | (E.1.3) |
| B1-3892 | (H.2.5) | (E.1.3) |
| B1-3893 | (H.2.7) | (E.1.3) |
| B1-3894 | (H.3.2) | (E.1.3) |
| B1-3895 | (H.3.4) | (E.1.3) |
| B1-3896 | (H.3.5) | (E.1.3) |
| B1-3897 | (H.3.10) | (E.1.3) |
| B1-3898 | (H.4.2) | (E.1.3) |
| B1-3899 | (H.4.9) | (E.1.3) |
| B1-3900 | (I.1.1) | (E.1.3) |
| B1-3901 | (I.2.1) | (E.1.3) |
| B1-3902 | (I.2.2) | (E.1.3) |
| B1-3903 | (J.1.2) | (E.1.3) |
| B1-3904 | (J.1.3) | (E.1.3) |
| B1-3905 | (J.1.4) | (E.1.3) |
| B1-3906 | (J.1.5) | (E.1.3) |
| B1-3907 | (J.1.8) | (E.1.3) |
| B1-3908 | (J.1.12) | (E.1.3) |
| B1-3909 | (K.1.13) | (E.1.3) |

| | | |
|---|---|---|
| B1-3910 | (K.1.47) | (E.1.3) |
| B1-3911 | (K.1.54) | (E.1.3) |
| B1-3912 | (L.1.5) | (E.1.3) |
| B1-3913 | (L.1.9) | (E.1.3) |
| B1-3914 | (L.1.12) | (E.1.3) |
| B1-3915 | (L.1.13) | (E.1.3) |
| B1-3916 | (L.1.17) | (E.1.3) |
| B1-3917 | (L.1.23) | (E.1.3) |
| B1-3918 | (L.1.32), | (E.1.3) |
| B1-3919 | (L.1.46) | (E.1.3) |
| B1-3920 | (M.1.6) | (E.1.3) |
| B1-3921 | (M.1.24) | (E.1.3) |
| B1-3922 | (M.1.25) | (E.1.3) |
| B1-3923 | (M.1.28) | (E.1.3) |
| B1-3924 | (M.1.29) | (E.1.3) |
| B1-3925 | (M.1.30) | (E.1.3) |
| B1-3926 | (N.7.3) | (E.1.3) |
| B1-3927 | (N.7.4) | (E.1.3) |
| B1-3928 | (N.7.5) | (E.1.3) |
| B1-3929 | (N.13.13) | (E.1.3) |
| B1-3930 | (O.2.4), | (E.1.3) |
| B1-3931 | (O.4.5) | (E.1.3) |
| B1-3932 | (O.4.7) | (E.1.3) |
| B1-3933 | (O.4.8) | (E.1.3) |
| B1-3934 | (O.5.1) | (E.1.3) |
| B1-3935 | (O.26.2) | (E.1.3) |
| B1-3936 | (O.27.17) | (E.1.3) |
| B1-3937 | (A.1.1) | (F.1.2) |

| | | |
|---|---|---|
| B1-3938 | (A.1.4) | (F.1.2) |
| B1-3939 | (A.1.8) | (F.1.2) |
| B1-3940 | (A.1.10) | (F.1.2) |
| B1-3941 | (A.1.11) | (F.1.2) |
| B1-3942 | (A.1.12) | (F.1.2) |
| B1-3943 | (A.1.14) | (F.1.2) |
| B1-3944 | (A.1.17) | (F.1.2) |
| B1-3945 | (A.1.19) | (F.1.2) |
| B1-3946 | (A.1.25) | (F.1.2) |
| B1-3947 | (A.1.34) | (F.1.2) |
| B1-3948 | (A.1.35) | (F.1.2) |
| B1-3949 | (A.1.38) | (F.1.2) |
| B1-3950 | (A.2.6) | (F.1.2) |
| B1-3951 | (A.3.2) | (F.1.2) |
| B1-3952 | (A.3.3) | (F.1.2) |
| B1-3953 | (A.3.4) | (F.1.2) |
| B1-3954 | (A.3.7) | (F.1.2) |
| B1-3955 | (A.3.8) | (F.1.2) |
| B1-3956 | (A.3.9) | (F.1.2) |
| B1-3957 | (A.3.10) | (F.1.2) |
| B1-3958 | (A.3.11) | (F.1.2) |
| B1-3959 | (A.3.12) | (F.1.2) |
| B1-3960 | (A.3.15) | (F.1.2) |
| B1-3961 | (A.3.16) | (F.1.2) |
| B1-3962 | (A.3.17) | (F.1.2) |
| B1-3963 | (A.3.19) | (F.1.2) |
| B1-3964 | (A.3.21) | (F.1.2) |
| B1-3965 | (A.3.22) | (F.1.2) |

| | | |
|---|---|---|
| B1-3966 | (A.3.23) | (F.1.2) |
| B1-3967 | (A.3.28) | (F.1.2) |
| B1-3968 | (A.3.31) | (F.1.2) |
| B1-3969 | (A.4.5) | (F.1.2) |
| B1-3970 | (B.1.4) | (F.1.2) |
| B1-3971 | (B.1.5) | (F.1.2) |
| B1-3972 | (B.1.8) | (F.1.2) |
| B1-3973 | (B.1.10) | (F.1.2) |
| B1-3974 | (B.1.12) | (F.1.2) |
| B1-3975 | (B.1.15) | (F.1.2) |
| B1-3976 | (B.1.17) | (F.1.2) |
| B1-3977 | (B.1.18) | (F.1.2) |
| B1-3978 | (B.1.21) | (F.1.2) |
| B1-3979 | (B.1.22) | (F.1.2) |
| B1-3980 | (B.1.23) | (F.1.2) |
| B1-3981 | (B.1.25) | (F.1.2) |
| B1-3982 | (B.1.26) | (F.1.2) |
| B1-3983 | (B.1.29) | (F.1.2) |
| B1-3984 | (B.1.38) | (F.1.2) |
| B1-3985 | (B.1.44) | (F.1.2) |
| B1-3986 | (B.1.46) | (F.1.2) |
| B1-3987 | (B.2.4) | (F.1.2) |
| B1-3988 | (B.3.1) | (F.1.2) |
| B1-3989 | (C.1.4) | (F.1.2) |
| B1-3990 | (C.1.5) | (F.1.2) |
| B1-3991 | (C.2.1) | (F.1.2) |
| B1-3992 | (D.1.4) | (F.1.2) |
| B1-3993 | (D.1.5) | (F.1.2) |

| | | |
|---|---|---|
| B1-3994 | (D.2.3) | (F.1.2) |
| B1-3995 | (D.2.5) | (F.1.2) |
| B1-3996 | (D.2.6) | (F.1.2) |
| B1-3997 | (E.1.1) | (F.1.2) |
| B1-3998 | (E.1.3) | (F.1.2) |
| B1-3999 | (E.2.2) | (F.1.2) |
| B1-4000 | (E.2.3), | (F.1.2) |
| B1-4001 | (F.1.2) | (F.1.2) |
| B1-4002 | (F.1.3) | (F.1.2) |
| B1-4003 | (F.1.5) | (F.1.2) |
| B1-4004 | (G.1.4) | (F.1.2) |
| B1-4005 | (G.3.1) | (F.1.2) |
| B1-4006 | (G.5.1) | (F.1.2) |
| B1-4007 | (H.1.2) | (F.1.2) |
| B1-4008 | (H.1.3) | (F.1.2) |
| B1-4009 | (H.1.4) | (F.1.2) |
| B1-4010 | (H.1.5) | (F.1.2) |
| B1-4011 | (H.1.6) | (F.1.2) |
| B1-4012 | (H.1.7) | (F.1.2) |
| B1-4013 | (H.2.2) | (F.1.2) |
| B1-4014 | (H.2.3) | (F.1.2) |
| B1-4015 | (H.2.5) | (F.1.2) |
| B1-4016 | (H.2.7) | (F.1.2) |
| B1-4017 | (H.3.2) | (F.1.2) |
| B1-4018 | (H.3.4) | (F.1.2) |
| B1-4019 | (H.3.5) | (F.1.2) |
| B1-4020 | (H.3.10) | (F.1.2) |
| B1-4021 | (H.4.2) | (F.1.2) |

| | | |
|---|---|---|
| B1-4022 | (H.4.9) | (F.1.2) |
| B1-4023 | (I.1.1) | (F.1.2) |
| B1-4024 | (I.2.1) | (F.1.2) |
| B1-4025 | (I.2.2) | (F.1.2) |
| B1-4026 | (J.1.2) | (F.1.2) |
| B1-4027 | (J.1.3) | (F.1.2) |
| B1-4028 | (J.1.4) | (F.1.2) |
| B1-4029 | (J.1.5) | (F.1.2) |
| B1-4030 | (J.1.8) | (F.1.2) |
| B1-4031 | (J.1.12) | (F.1.2) |
| B1-4032 | (K.1.13) | (F.1.2) |
| B1-4033 | (K.1.47) | (F.1.2) |
| B1-4034 | (K.1.54) | (F.1.2) |
| B1-4035 | (L.1.5) | (F.1.2) |
| B1-4036 | (L.1.9) | (F.1.2) |
| B1-4037 | (L.1.12) | (F.1.2) |
| B1-4038 | (L.1.13) | (F.1.2) |
| B1-4039 | (L.1.17) | (F.1.2) |
| B1-4040 | (L.1.23) | (F.1.2) |
| B1-4041 | (L.1.32), | (F.1.2) |
| B1-4042 | (L.1.46) | (F.1.2) |
| B1-4043 | (M.1.6) | (F.1.2) |
| B1-4044 | (M.1.24) | (F.1.2) |
| B1-4045 | (M.1.25) | (F.1.2) |
| B1-4046 | (M.1.28) | (F.1.2) |
| B1-4047 | (M.1.29) | (F.1.2) |
| B1-4048 | (M.1.30) | (F.1.2) |
| B1-4049 | (N.7.3) | (F.1.2) |

| | | |
|---|---|---|
| B1-4050 | (N.7.4) | (F.1.2) |
| B1-4051 | (N.7.5) | (F.1.2) |
| B1-4052 | (N.13.13) | (F.1.2) |
| B1-4053 | (O.2.4), | (F.1.2) |
| B1-4054 | (O.4.5) | (F.1.2) |
| B1-4055 | (O.4.7) | (F.1.2) |
| B1-4056 | (O.4.8) | (F.1.2) |
| B1-4057 | (O.5.1) | (F.1.2) |
| B1-4058 | (O.26.2) | (F.1.2) |
| B1-4059 | (O.27.17) | (F.1.2) |
| B1-4060 | (A.1.1) | (F.1.5) |
| B1-4061 | (A.1.4) | (F.1.5) |
| B1-4062 | (A.1.8) | (F.1.5) |
| B1-4063 | (A.1.10) | (F.1.5) |
| B1-4064 | (A.1.11) | (F.1.5) |
| B1-4065 | (A.1.12) | (F.1.5) |
| B1-4066 | (A.1.14) | (F.1.5) |
| B1-4067 | (A.1.17) | (F.1.5) |
| B1-4068 | (A.1.19) | (F.1.5) |
| B1-4069 | (A.1.25) | (F.1.5) |
| B1-4070 | (A.1.34) | (F.1.5) |
| B1-4071 | (A.1.35) | (F.1.5) |
| B1-4072 | (A.1.38) | (F.1.5) |
| B1-4073 | (A.2.6) | (F.1.5) |
| B1-4074 | (A.3.2) | (F.1.5) |
| B1-4075 | (A.3.3) | (F.1.5) |
| B1-4076 | (A.3.4) | (F.1.5) |
| B1-4077 | (A.3.7) | (F.1.5) |

| | | |
|---|---|---|
| B1-4078 | (A.3.8) | (F.1.5) |
| B1-4079 | (A.3.9) | (F.1.5) |
| B1-4080 | (A.3.10) | (F.1.5) |
| B1-4081 | (A.3.11) | (F.1.5) |
| B1-4082 | (A.3.12) | (F.1.5) |
| B1-4083 | (A.3.15) | (F.1.5) |
| B1-4084 | (A.3.16) | (F.1.5) |
| B1-4085 | (A.3.17) | (F.1.5) |
| B1-4086 | (A.3.19) | (F.1.5) |
| B1-4087 | (A.3.21) | (F.1.5) |
| B1-4088 | (A.3.22) | (F.1.5) |
| B1-4089 | (A.3.23) | (F.1.5) |
| B1-4090 | (A.3.28) | (F.1.5) |
| B1-4091 | (A.3.31) | (F.1.5) |
| B1-4092 | (A.4.5) | (F.1.5) |
| B1-4093 | (B.1.4) | (F.1.5) |
| B1-4094 | (B.1.5) | (F.1.5) |
| B1-4095 | (B.1.8) | (F.1.5) |
| B1-4096 | (B.1.10) | (F.1.5) |
| B1-4097 | (B.1.12) | (F.1.5) |
| B1-4098 | (B.1.15) | (F.1.5) |
| B1-4099 | (B.1.17) | (F.1.5) |
| B1-4100 | (B.1.18) | (F.1.5) |
| B1-4101 | (B.1.21) | (F.1.5) |
| B1-4102 | (B.1.22) | (F.1.5) |
| B1-4103 | (B.1.23) | (F.1.5) |
| B1-4104 | (B.1.25) | (F.1.5) |
| B1-4105 | (B.1.26) | (F.1.5) |

| | | |
|---|---|---|
| B1-4106 | (B.1.29) | (F.1.5) |
| B1-4107 | (B.1.38) | (F.1.5) |
| B1-4108 | (B.1.44) | (F.1.5) |
| B1-4109 | (B.1.46) | (F.1.5) |
| B1-4110 | (B.2.4) | (F.1.5) |
| B1-4111 | (B.3.1) | (F.1.5) |
| B1-4112 | (C.1.4) | (F.1.5) |
| B1-4113 | (C.1.5) | (F.1.5) |
| B1-4114 | (C.2.1) | (F.1.5) |
| B1-4115 | (D.1.4) | (F.1.5) |
| B1-4116 | (D.1.5) | (F.1.5) |
| B1-4117 | (D.2.3) | (F.1.5) |
| B1-4118 | (D.2.5) | (F.1.5) |
| B1-4119 | (D.2.6) | (F.1.5) |
| B1-4120 | (E.1.1) | (F.1.5) |
| B1-4121 | (E.1.3) | (F.1.5) |
| B1-4122 | (E.2.2) | (F.1.5) |
| B1-4123 | (E.2.3), | (F.1.5) |
| B1-4124 | (F.1.2) | (F.1.5) |
| B1-4125 | (F.1.3) | (F.1.5) |
| B1-4126 | (F.1.5) | (F.1.5) |
| B1-4127 | (G.1.4) | (F.1.5) |
| B1-4128 | (G.3.1) | (F.1.5) |
| B1-4129 | (G.5.1) | (F.1.5) |
| B1-4130 | (H.1.2) | (F.1.5) |
| B1-4131 | (H.1.3) | (F.1.5) |
| B1-4132 | (H.1.4) | (F.1.5) |
| B1-4133 | (H.1.5) | (F.1.5) |

| | | |
|---|---|---|
| B1-4134 | (H.1.6) | (F.1.5) |
| B1-4135 | (H.1.7) | (F.1.5) |
| B1-4136 | (H.2.2) | (F.1.5) |
| B1-4137 | (H.2.3) | (F.1.5) |
| B1-4138 | (H.2.5) | (F.1.5) |
| B1-4139 | (H.2.7) | (F.1.5) |
| B1-4140 | (H.3.2) | (F.1.5) |
| B1-4141 | (H.3.4) | (F.1.5) |
| B1-4142 | (H.3.5) | (F.1.5) |
| B1-4143 | (H.3.10) | (F.1.5) |
| B1-4144 | (H.4.2) | (F.1.5) |
| B1-4145 | (H.4.9) | (F.1.5) |
| B1-4146 | (I.1.1) | (F.1.5) |
| B1-4147 | (I.2.1) | (F.1.5) |
| B1-4148 | (I.2.2) | (F.1.5) |
| B1-4149 | (J.1.2) | (F.1.5) |
| B1-4150 | (J.1.3) | (F.1.5) |
| B1-4151 | (J.1.4) | (F.1.5) |
| B1-4152 | (J.1.5) | (F.1.5) |
| B1-4153 | (J.1.8) | (F.1.5) |
| B1-4154 | (J.1.12) | (F.1.5) |
| B1-4155 | (K.1.13) | (F.1.5) |
| B1-4156 | (K.1.47) | (F.1.5) |
| B1-4157 | (K.1.54) | (F.1.5) |
| B1-4158 | (L.1.5) | (F.1.5) |
| B1-4159 | (L.1.9) | (F.1.5) |
| B1-4160 | (L.1.12) | (F.1.5) |
| B1-4161 | (L.1.13) | (F.1.5) |

| | | |
|---|---|---|
| B1-4162 | (L.1.17) | (F.1.5) |
| B1-4163 | (L.1.23) | (F.1.5) |
| B1-4164 | (L.1.32), | (F.1.5) |
| B1-4165 | (L.1.46) | (F.1.5) |
| B1-4166 | (M.1.6) | (F.1.5) |
| B1-4167 | (M.1.24) | (F.1.5) |
| B1-4168 | (M.1.25) | (F.1.5) |
| B1-4169 | (M.1.28) | (F.1.5) |
| B1-4170 | (M.1.29) | (F.1.5) |
| B1-4171 | (M.1.30) | (F.1.5) |
| B1-4172 | (N.7.3) | (F.1.5) |
| B1-4173 | (N.7.4) | (F.1.5) |
| B1-4174 | (N.7.5) | (F.1.5) |
| B1-4175 | (N.13.13) | (F.1.5) |
| B1-4176 | (O.2.4), | (F.1.5) |
| B1-4177 | (O.4.5) | (F.1.5) |
| B1-4178 | (O.4.7) | (F.1.5) |
| B1-4179 | (O.4.8) | (F.1.5) |
| B1-4180 | (O.5.1) | (F.1.5) |
| B1-4181 | (O.26.2) | (F.1.5) |
| B1-4182 | (O.27.17) | (F.1.5) |
| B1-4183 | (A.1.1) | (G.1.4) |
| B1-4184 | (A.1.4) | (G.1.4) |
| B1-4185 | (A.1.8) | (G.1.4) |
| B1-4186 | (A.1.10) | (G.1.4) |
| B1-4187 | (A.1.11) | (G.1.4) |
| B1-4188 | (A.1.12) | (G.1.4) |
| B1-4189 | (A.1.14) | (G.1.4) |

| | | |
|---|---|---|
| B1-4190 | (A.1.17) | (G.1.4) |
| B1-4191 | (A.1.19) | (G.1.4) |
| B1-4192 | (A.1.25) | (G.1.4) |
| B1-4193 | (A.1.34) | (G.1.4) |
| B1-4194 | (A.1.35) | (G.1.4) |
| B1-4195 | (A.1.38) | (G.1.4) |
| B1-4196 | (A.2.6) | (G.1.4) |
| B1-4197 | (A.3.2) | (G.1.4) |
| B1-4198 | (A.3.3) | (G.1.4) |
| B1-4199 | (A.3.4) | (G.1.4) |
| B1-4200 | (A.3.7) | (G.1.4) |
| B1-4201 | (A.3.8) | (G.1.4) |
| B1-4202 | (A.3.9) | (G.1.4) |
| B1-4203 | (A.3.10) | (G.1.4) |
| B1-4204 | (A.3.11) | (G.1.4) |
| B1-4205 | (A.3.12) | (G.1.4) |
| B1-4206 | (A.3.15) | (G.1.4) |
| B1-4207 | (A.3.16) | (G.1.4) |
| B1-4208 | (A.3.17) | (G.1.4) |
| B1-4209 | (A.3.19) | (G.1.4) |
| B1-4210 | (A.3.21) | (G.1.4) |
| B1-4211 | (A.3.22) | (G.1.4) |
| B1-4212 | (A.3.23) | (G.1.4) |
| B1-4213 | (A.3.28) | (G.1.4) |
| B1-4214 | (A.3.31) | (G.1.4) |
| B1-4215 | (A.4.5) | (G.1.4) |
| B1-4216 | (B.1.4) | (G.1.4) |
| B1-4217 | (B.1.5) | (G.1.4) |

| | | |
|---|---|---|
| B1-4218 | (B.1.8) | (G.1.4) |
| B1-4219 | (B.1.10) | (G.1.4) |
| B1-4220 | (B.1.12) | (G.1.4) |
| B1-4221 | (B.1.15) | (G.1.4) |
| B1-4222 | (B.1.17) | (G.1.4) |
| B1-4223 | (B.1.18) | (G.1.4) |
| B1-4224 | (B.1.21) | (G.1.4) |
| B1-4225 | (B.1.22) | (G.1.4) |
| B1-4226 | (B.1.23) | (G.1.4) |
| B1-4227 | (B.1.25) | (G.1.4) |
| B1-4228 | (B.1.26) | (G.1.4) |
| B1-4229 | (B.1.29) | (G.1.4) |
| B1-4230 | (B.1.38) | (G.1.4) |
| B1-4231 | (B.1.44) | (G.1.4) |
| B1-4232 | (B.1.46) | (G.1.4) |
| B1-4233 | (B.2.4) | (G.1.4) |
| B1-4234 | (B.3.1) | (G.1.4) |
| B1-4235 | (C.1.4) | (G.1.4) |
| B1-4236 | (C.1.5) | (G.1.4) |
| B1-4237 | (C.2.1) | (G.1.4) |
| B1-4238 | (D.1.4) | (G.1.4) |
| B1-4239 | (D.1.5) | (G.1.4) |
| B1-4240 | (D.2.3) | (G.1.4) |
| B1-4241 | (D.2.5) | (G.1.4) |
| B1-4242 | (D.2.6) | (G.1.4) |
| B1-4243 | (E.1.1) | (G.1.4) |
| B1-4244 | (E.1.3) | (G.1.4) |
| B1-4245 | (E.2.2) | (G.1.4) |

| | | |
|---|---|---|
| B1-4246 | (E.2.3), | (G.1.4) |
| B1-4247 | (F.1.2) | (G.1.4) |
| B1-4248 | (F.1.3) | (G.1.4) |
| B1-4249 | (F.1.5) | (G.1.4) |
| B1-4250 | (G.1.4) | (G.1.4) |
| B1-4251 | (G.3.1) | (G.1.4) |
| B1-4252 | (G.5.1) | (G.1.4) |
| B1-4253 | (H.1.2) | (G.1.4) |
| B1-4254 | (H.1.3) | (G.1.4) |
| B1-4255 | (H.1.4) | (G.1.4) |
| B1-4256 | (H.1.5) | (G.1.4) |
| B1-4257 | (H.1.6) | (G.1.4) |
| B1-4258 | (H.1.7) | (G.1.4) |
| B1-4259 | (H.2.2) | (G.1.4) |
| B1-4260 | (H.2.3) | (G.1.4) |
| B1-4261 | (H.2.5) | (G.1.4) |
| B1-4262 | (H.2.7) | (G.1.4) |
| B1-4263 | (H.3.2) | (G.1.4) |
| B1-4264 | (H.3.4) | (G.1.4) |
| B1-4265 | (H.3.5) | (G.1.4) |
| B1-4266 | (H.3.10) | (G.1.4) |
| B1-4267 | (H.4.2) | (G.1.4) |
| B1-4268 | (H.4.9) | (G.1.4) |
| B1-4269 | (I.1.1) | (G.1.4) |
| B1-4270 | (I.2.1) | (G.1.4) |
| B1-4271 | (I.2.2) | (G.1.4) |
| B1-4272 | (J.1.2) | (G.1.4) |
| B1-4273 | (J.1.3) | (G.1.4) |

| | | |
|---|---|---|
| B1-4274 | (J.1.4) | (G.1.4) |
| B1-4275 | (J.1.5) | (G.1.4) |
| B1-4276 | (J.1.8) | (G.1.4) |
| B1-4277 | (J.1.12) | (G.1.4) |
| B1-4278 | (K.1.13) | (G.1.4) |
| B1-4279 | (K.1.47) | (G.1.4) |
| B1-4280 | (K.1.54) | (G.1.4) |
| B1-4281 | (L.1.5) | (G.1.4) |
| B1-4282 | (L.1.9) | (G.1.4) |
| B1-4283 | (L.1.12) | (G.1.4) |
| B1-4284 | (L.1.13) | (G.1.4) |
| B1-4285 | (L.1.17) | (G.1.4) |
| B1-4286 | (L.1.23) | (G.1.4) |
| B1-4287 | (L.1.32), | (G.1.4) |
| B1-4288 | (L.1.46) | (G.1.4) |
| B1-4289 | (M.1.6) | (G.1.4) |
| B1-4290 | (M.1.24) | (G.1.4) |
| B1-4291 | (M.1.25) | (G.1.4) |
| B1-4292 | (M.1.28) | (G.1.4) |
| B1-4293 | (M.1.29) | (G.1.4) |
| B1-4294 | (M.1.30) | (G.1.4) |
| B1-4295 | (N.7.3) | (G.1.4) |
| B1-4296 | (N.7.4) | (G.1.4) |
| B1-4297 | (N.7.5) | (G.1.4) |
| B1-4298 | (N.13.13) | (G.1.4) |
| B1-4299 | (O.2.4), | (G.1.4) |
| B1-4300 | (O.4.5) | (G.1.4) |
| B1-4301 | (O.4.7) | (G.1.4) |

| | | |
|---|---|---|
| B1-4302 | (O.4.8) | (G.1.4) |
| B1-4303 | (O.5.1) | (G.1.4) |
| B1-4304 | (O.26.2) | (G.1.4) |
| B1-4305 | (O.27.17) | (G.1.4) |
| B1-4306 | (A.1.1) | (G.5.1) |
| B1-4307 | (A.1.4) | (G.5.1) |
| B1-4308 | (A.1.8) | (G.5.1) |
| B1-4309 | (A.1.10) | (G.5.1) |
| B1-4310 | (A.1.11) | (G.5.1) |
| B1-4311 | (A.1.12) | (G.5.1) |
| B1-4312 | (A.1.14) | (G.5.1) |
| B1-4313 | (A.1.17) | (G.5.1) |
| B1-4314 | (A.1.19) | (G.5.1) |
| B1-4315 | (A.1.25) | (G.5.1) |
| B1-4316 | (A.1.34) | (G.5.1) |
| B1-4317 | (A.1.35) | (G.5.1) |
| B1-4318 | (A.1.38) | (G.5.1) |
| B1-4319 | (A.2.6) | (G.5.1) |
| B1-4320 | (A.3.2) | (G.5.1) |
| B1-4321 | (A.3.3) | (G.5.1) |
| B1-4322 | (A.3.4) | (G.5.1) |
| B1-4323 | (A.3.7) | (G.5.1) |
| B1-4324 | (A.3.8) | (G.5.1) |
| B1-4325 | (A.3.9) | (G.5.1) |
| B1-4326 | (A.3.10) | (G.5.1) |
| B1-4327 | (A.3.11) | (G.5.1) |
| B1-4328 | (A.3.12) | (G.5.1) |
| B1-4329 | (A.3.15) | (G.5.1) |

| | | |
|---|---|---|
| B1-4330 | (A.3.16) | (G.5.1) |
| B1-4331 | (A.3.17) | (G.5.1) |
| B1-4332 | (A.3.19) | (G.5.1) |
| B1-4333 | (A.3.21) | (G.5.1) |
| B1-4334 | (A.3.22) | (G.5.1) |
| B1-4335 | (A.3.23) | (G.5.1) |
| B1-4336 | (A.3.28) | (G.5.1) |
| B1-4337 | (A.3.31) | (G.5.1) |
| B1-4338 | (A.4.5) | (G.5.1) |
| B1-4339 | (B.1.4) | (G.5.1) |
| B1-4340 | (B.1.5) | (G.5.1) |
| B1-4341 | (B.1.8) | (G.5.1) |
| B1-4342 | (B.1.10) | (G.5.1) |
| B1-4343 | (B.1.12) | (G.5.1) |
| B1-4344 | (B.1.15) | (G.5.1) |
| B1-4345 | (B.1.17) | (G.5.1) |
| B1-4346 | (B.1.18) | (G.5.1) |
| B1-4347 | (B.1.21) | (G.5.1) |
| B1-4348 | (B.1.22) | (G.5.1) |
| B1-4349 | (B.1.23) | (G.5.1) |
| B1-4350 | (B.1.25) | (G.5.1) |
| B1-4351 | (B.1.26) | (G.5.1) |
| B1-4352 | (B.1.29) | (G.5.1) |
| B1-4353 | (B.1.38) | (G.5.1) |
| B1-4354 | (B.1.44) | (G.5.1) |
| B1-4355 | (B.1.46) | (G.5.1) |
| B1-4356 | (B.2.4) | (G.5.1) |
| B1-4357 | (B.3.1) | (G.5.1) |

| | | |
|---|---|---|
| B1-4358 | (C.1.4) | (G.5.1) |
| B1-4359 | (C.1.5) | (G.5.1) |
| B1-4360 | (C.2.1) | (G.5.1) |
| B1-4361 | (D.1.4) | (G.5.1) |
| B1-4362 | (D.1.5) | (G.5.1) |
| B1-4363 | (D.2.3) | (G.5.1) |
| B1-4364 | (D.2.5) | (G.5.1) |
| B1-4365 | (D.2.6) | (G.5.1) |
| B1-4366 | (E.1.1) | (G.5.1) |
| B1-4367 | (E.1.3) | (G.5.1) |
| B1-4368 | (E.2.2) | (G.5.1) |
| B1-4369 | (E.2.3), | (G.5.1) |
| B1-4370 | (F.1.2) | (G.5.1) |
| B1-4371 | (F.1.3) | (G.5.1) |
| B1-4372 | (F.1.5) | (G.5.1) |
| B1-4373 | (G.1.4) | (G.5.1) |
| B1-4374 | (G.3.1) | (G.5.1) |
| B1-4375 | (G.5.1) | (G.5.1) |
| B1-4376 | (H.1.2) | (G.5.1) |
| B1-4377 | (H.1.3) | (G.5.1) |
| B1-4378 | (H.1.4) | (G.5.1) |
| B1-4379 | (H.1.5) | (G.5.1) |
| B1-4380 | (H.1.6) | (G.5.1) |
| B1-4381 | (H.1.7) | (G.5.1) |
| B1-4382 | (H.2.2) | (G.5.1) |
| B1-4383 | (H.2.3) | (G.5.1) |
| B1-4384 | (H.2.5) | (G.5.1) |
| B1-4385 | (H.2.7) | (G.5.1) |

| | | |
|---|---|---|
| B1-4386 | (H.3.2) | (G.5.1) |
| B1-4387 | (H.3.4) | (G.5.1) |
| B1-4388 | (H.3.5) | (G.5.1) |
| B1-4389 | (H.3.10) | (G.5.1) |
| B1-4390 | (H.4.2) | (G.5.1) |
| B1-4391 | (H.4.9) | (G.5.1) |
| B1-4392 | (I.1.1) | (G.5.1) |
| B1-4393 | (I.2.1) | (G.5.1) |
| B1-4394 | (I.2.2) | (G.5.1) |
| B1-4395 | (J.1.2) | (G.5.1) |
| B1-4396 | (J.1.3) | (G.5.1) |
| B1-4397 | (J.1.4) | (G.5.1) |
| B1-4398 | (J.1.5) | (G.5.1) |
| B1-4399 | (J.1.8) | (G.5.1) |
| B1-4400 | (J.1.12) | (G.5.1) |
| B1-4401 | (K.1.13) | (G.5.1) |
| B1-4402 | (K.1.47) | (G.5.1) |
| B1-4403 | (K.1.54) | (G.5.1) |
| B1-4404 | (L.1.5) | (G.5.1) |
| B1-4405 | (L.1.9) | (G.5.1) |
| B1-4406 | (L.1.12) | (G.5.1) |
| B1-4407 | (L.1.13) | (G.5.1) |
| B1-4408 | (L.1.17) | (G.5.1) |
| B1-4409 | (L.1.23) | (G.5.1) |
| B1-4410 | (L.1.32), | (G.5.1) |
| B1-4411 | (L.1.46) | (G.5.1) |
| B1-4412 | (M.1.6) | (G.5.1) |
| B1-4413 | (M.1.24) | (G.5.1) |
| B1-4414 | (M.1.25) | (G.5.1) |
| B1-4415 | (M.1.28) | (G.5.1) |
| B1-4416 | (M.1.29) | (G.5.1) |
| B1-4417 | (M.1.30) | (G.5.1) |
| B1-4418 | (N.7.3) | (G.5.1) |
| B1-4419 | (N.7.4) | (G.5.1) |
| B1-4420 | (N.7.5) | (G.5.1) |
| B1-4421 | (N.13.13) | (G.5.1) |
| B1-4422 | (O.2.4), | (G.5.1) |
| B1-4423 | (O.4.5) | (G.5.1) |
| B1-4424 | (O.4.7) | (G.5.1) |
| B1-4425 | (O.4.8) | (G.5.1) |
| B1-4426 | (O.5.1) | (G.5.1) |
| B1-4427 | (O.26.2) | (G.5.1) |
| B1-4428 | (O.27.17) | (G.5.1) |
| B1-4429 | (A.1.1) | (H.3.2) |
| B1-4430 | (A.1.4) | (H.3.2) |
| B1-4431 | (A.1.8) | (H.3.2) |
| B1-4432 | (A.1.10) | (H.3.2) |
| B1-4433 | (A.1.11) | (H.3.2) |
| B1-4434 | (A.1.12) | (H.3.2) |
| B1-4435 | (A.1.14) | (H.3.2) |
| B1-4436 | (A.1.17) | (H.3.2) |
| B1-4437 | (A.1.19) | (H.3.2) |
| B1-4438 | (A.1.25) | (H.3.2) |
| B1-4439 | (A.1.34) | (H.3.2) |
| B1-4440 | (A.1.35) | (H.3.2) |
| B1-4441 | (A.1.38) | (H.3.2) |

| | | |
|---|---|---|
| B1-4442 | (A.2.6) | (H.3.2) |
| B1-4443 | (A.3.2) | (H.3.2) |
| B1-4444 | (A.3.3) | (H.3.2) |
| B1-4445 | (A.3.4) | (H.3.2) |
| B1-4446 | (A.3.7) | (H.3.2) |
| B1-4447 | (A.3.8) | (H.3.2) |
| B1-4448 | (A.3.9) | (H.3.2) |
| B1-4449 | (A.3.10) | (H.3.2) |
| B1-4450 | (A.3.11) | (H.3.2) |
| B1-4451 | (A.3.12) | (H.3.2) |
| B1-4452 | (A.3.15) | (H.3.2) |
| B1-4453 | (A.3.16) | (H.3.2) |
| B1-4454 | (A.3.17) | (H.3.2) |
| B1-4455 | (A.3.19) | (H.3.2) |
| B1-4456 | (A.3.21) | (H.3.2) |
| B1-4457 | (A.3.22) | (H.3.2) |
| B1-4458 | (A.3.23) | (H.3.2) |
| B1-4459 | (A.3.28) | (H.3.2) |
| B1-4460 | (A.3.31) | (H.3.2) |
| B1-4461 | (A.4.5) | (H.3.2) |
| B1-4462 | (B.1.4) | (H.3.2) |
| B1-4463 | (B.1.5) | (H.3.2) |
| B1-4464 | (B.1.8) | (H.3.2) |
| B1-4465 | (B.1.10) | (H.3.2) |
| B1-4466 | (B.1.12) | (H.3.2) |
| B1-4467 | (B.1.15) | (H.3.2) |
| B1-4468 | (B.1.17) | (H.3.2) |
| B1-4469 | (B.1.18) | (H.3.2) |

| | | |
|---|---|---|
| B1-4470 | (B.1.21) | (H.3.2) |
| B1-4471 | (B.1.22) | (H.3.2) |
| B1-4472 | (B.1.23) | (H.3.2) |
| B1-4473 | (B.1.25) | (H.3.2) |
| B1-4474 | (B.1.26) | (H.3.2) |
| B1-4475 | (B.1.29) | (H.3.2) |
| B1-4476 | (B.1.38) | (H.3.2) |
| B1-4477 | (B.1.44) | (H.3.2) |
| B1-4478 | (B.1.46) | (H.3.2) |
| B1-4479 | (B.2.4) | (H.3.2) |
| B1-4480 | (B.3.1) | (H.3.2) |
| B1-4481 | (C.1.4) | (H.3.2) |
| B1-4482 | (C.1.5) | (H.3.2) |
| B1-4483 | (C.2.1) | (H.3.2) |
| B1-4484 | (D.1.4) | (H.3.2) |
| B1-4485 | (D.1.5) | (H.3.2) |
| B1-4486 | (D.2.3) | (H.3.2) |
| B1-4487 | (D.2.5) | (H.3.2) |
| B1-4488 | (D.2.6) | (H.3.2) |
| B1-4489 | (E.1.1) | (H.3.2) |
| B1-4490 | (E.1.3) | (H.3.2) |
| B1-4491 | (E.2.2) | (H.3.2) |
| B1-4492 | (E.2.3), | (H.3.2) |
| B1-4493 | (F.1.2) | (H.3.2) |
| B1-4494 | (F.1.3) | (H.3.2) |
| B1-4495 | (F.1.5) | (H.3.2) |
| B1-4496 | (G.1.4) | (H.3.2) |
| B1-4497 | (G.3.1) | (H.3.2) |

| | | |
|---|---|---|
| B1-4498 | (G.5.1) | (H.3.2) |
| B1-4499 | (H.1.2) | (H.3.2) |
| B1-4500 | (H.1.3) | (H.3.2) |
| B1-4501 | (H.1.4) | (H.3.2) |
| B1-4502 | (H.1.5) | (H.3.2) |
| B1-4503 | (H.1.6) | (H.3.2) |
| B1-4504 | (H.1.7) | (H.3.2) |
| B1-4505 | (H.2.2) | (H.3.2) |
| B1-4506 | (H.2.3) | (H.3.2) |
| B1-4507 | (H.2.5) | (H.3.2) |
| B1-4508 | (H.2.7) | (H.3.2) |
| B1-4509 | (H.3.2) | (H.3.2) |
| B1-4510 | (H.3.4) | (H.3.2) |
| B1-4511 | (H.3.5) | (H.3.2) |
| B1-4512 | (H.3.10) | (H.3.2) |
| B1-4513 | (H.4.2) | (H.3.2) |
| B1-4514 | (H.4.9) | (H.3.2) |
| B1-4515 | (I.1.1) | (H.3.2) |
| B1-4516 | (I.2.1) | (H.3.2) |
| B1-4517 | (I.2.2) | (H.3.2) |
| B1-4518 | (J.1.2) | (H.3.2) |
| B1-4519 | (J.1.3) | (H.3.2) |
| B1-4520 | (J.1.4) | (H.3.2) |
| B1-4521 | (J.1.5) | (H.3.2) |
| B1-4522 | (J.1.8) | (H.3.2) |
| B1-4523 | (J.1.12) | (H.3.2) |
| B1-4524 | (K.1.13) | (H.3.2) |
| B1-4525 | (K.1.47) | (H.3.2) |
| B1-4526 | (K.1.54) | (H.3.2) |
| B1-4527 | (L.1.5) | (H.3.2) |
| B1-4528 | (L.1.9) | (H.3.2) |
| B1-4529 | (L.1.12) | (H.3.2) |
| B1-4530 | (L.1.13) | (H.3.2) |
| B1-4531 | (L.1.17) | (H.3.2) |
| B1-4532 | (L.1.23) | (H.3.2) |
| B1-4533 | (L.1.32), | (H.3.2) |
| B1-4534 | (L.1.46) | (H.3.2) |
| B1-4535 | (M.1.6) | (H.3.2) |
| B1-4536 | (M.1.24) | (H.3.2) |
| B1-4537 | (M.1.25) | (H.3.2) |
| B1-4538 | (M.1.28) | (H.3.2) |
| B1-4539 | (M.1.29) | (H.3.2) |
| B1-4540 | (M.1.30) | (H.3.2) |
| B1-4541 | (N.7.3) | (H.3.2) |
| B1-4542 | (N.7.4) | (H.3.2) |
| B1-4543 | (N.7.5) | (H.3.2) |
| B1-4544 | (N.13.13) | (H.3.2) |
| B1-4545 | (O.2.4), | (H.3.2) |
| B1-4546 | (O.4.5) | (H.3.2) |
| B1-4547 | (O.4.7) | (H.3.2) |
| B1-4548 | (O.4.8) | (H.3.2) |
| B1-4549 | (O.5.1) | (H.3.2) |
| B1-4550 | (O.26.2) | (H.3.2) |
| B1-4551 | (O.27.17) | (H.3.2) |
| B1-4552 | (A.1.1) | (I.1.1) |
| B1-4553 | (A.1.4) | (I.1.1) |

| | | |
|---|---|---|
| B1-4554 | (A.1.8) | (I.1.1) |
| B1-4555 | (A.1.10) | (I.1.1) |
| B1-4556 | (A.1.11) | (I.1.1) |
| B1-4557 | (A.1.12) | (I.1.1) |
| B1-4558 | (A.1.14) | (I.1.1) |
| B1-4559 | (A.1.17) | (I.1.1) |
| B1-4560 | (A.1.19) | (I.1.1) |
| B1-4561 | (A.1.25) | (I.1.1) |
| B1-4562 | (A.1.34) | (I.1.1) |
| B1-4563 | (A.1.35) | (I.1.1) |
| B1-4564 | (A.1.38) | (I.1.1) |
| B1-4565 | (A.2.6) | (I.1.1) |
| B1-4566 | (A.3.2) | (I.1.1) |
| B1-4567 | (A.3.3) | (I.1.1) |
| B1-4568 | (A.3.4) | (I.1.1) |
| B1-4569 | (A.3.7) | (I.1.1) |
| B1-4570 | (A.3.8) | (I.1.1) |
| B1-4571 | (A.3.9) | (I.1.1) |
| B1-4572 | (A.3.10) | (I.1.1) |
| B1-4573 | (A.3.11) | (I.1.1) |
| B1-4574 | (A.3.12) | (I.1.1) |
| B1-4575 | (A.3.15) | (I.1.1) |
| B1-4576 | (A.3.16) | (I.1.1) |
| B1-4577 | (A.3.17) | (I.1.1) |
| B1-4578 | (A.3.19) | (I.1.1) |
| B1-4579 | (A.3.21) | (I.1.1) |
| B1-4580 | (A.3.22) | (I.1.1) |
| B1-4581 | (A.3.23) | (I.1.1) |

| | | |
|---|---|---|
| B1-4582 | (A.3.28) | (I.1.1) |
| B1-4583 | (A.3.31) | (I.1.1) |
| B1-4584 | (A.4.5) | (I.1.1) |
| B1-4585 | (B.1.4) | (I.1.1) |
| B1-4586 | (B.1.5) | (I.1.1) |
| B1-4587 | (B.1.8) | (I.1.1) |
| B1-4588 | (B.1.10) | (I.1.1) |
| B1-4589 | (B.1.12) | (I.1.1) |
| B1-4590 | (B.1.15) | (I.1.1) |
| B1-4591 | (B.1.17) | (I.1.1) |
| B1-4592 | (B.1.18) | (I.1.1) |
| B1-4593 | (B.1.21) | (I.1.1) |
| B1-4594 | (B.1.22) | (I.1.1) |
| B1-4595 | (B.1.23) | (I.1.1) |
| B1-4596 | (B.1.25) | (I.1.1) |
| B1-4597 | (B.1.26) | (I.1.1) |
| B1-4598 | (B.1.29) | (I.1.1) |
| B1-4599 | (B.1.38) | (I.1.1) |
| B1-4600 | (B.1.44) | (I.1.1) |
| B1-4601 | (B.1.46) | (I.1.1) |
| B1-4602 | (B.2.4) | (I.1.1) |
| B1-4603 | (B.3.1) | (I.1.1) |
| B1-4604 | (C.1.4) | (I.1.1) |
| B1-4605 | (C.1.5) | (I.1.1) |
| B1-4606 | (C.2.1) | (I.1.1) |
| B1-4607 | (D.1.4) | (I.1.1) |
| B1-4608 | (D.1.5) | (I.1.1) |
| B1-4609 | (D.2.3) | (I.1.1) |

| | | |
|---|---|---|
| B1-4610 | (D.2.5) | (I.1.1) |
| B1-4611 | (D.2.6) | (I.1.1) |
| B1-4612 | (E.1.1) | (I.1.1) |
| B1-4613 | (E.1.3) | (I.1.1) |
| B1-4614 | (E.2.2) | (I.1.1) |
| B1-4615 | (E.2.3), | (I.1.1) |
| B1-4616 | (F.1.2) | (I.1.1) |
| B1-4617 | (F.1.3) | (I.1.1) |
| B1-4618 | (F.1.5) | (I.1.1) |
| B1-4619 | (G.1.4) | (I.1.1) |
| B1-4620 | (G.3.1) | (I.1.1) |
| B1-4621 | (G.5.1) | (I.1.1) |
| B1-4622 | (H.1.2) | (I.1.1) |
| B1-4623 | (H.1.3) | (I.1.1) |
| B1-4624 | (H.1.4) | (I.1.1) |
| B1-4625 | (H.1.5) | (I.1.1) |
| B1-4626 | (H.1.6) | (I.1.1) |
| B1-4627 | (H.1.7) | (I.1.1) |
| B1-4628 | (H.2.2) | (I.1.1) |
| B1-4629 | (H.2.3) | (I.1.1) |
| B1-4630 | (H.2.5) | (I.1.1) |
| B1-4631 | (H.2.7) | (I.1.1) |
| B1-4632 | (H.3.2) | (I.1.1) |
| B1-4633 | (H.3.4) | (I.1.1) |
| B1-4634 | (H.3.5) | (I.1.1) |
| B1-4635 | (H.3.10) | (I.1.1) |
| B1-4636 | (H.4.2) | (I.1.1) |
| B1-4637 | (H.4.9) | (I.1.1) |

| | | |
|---|---|---|
| B1-4638 | (I.1.1) | (I.1.1) |
| B1-4639 | (I.2.1) | (I.1.1) |
| B1-4640 | (I.2.2) | (I.1.1) |
| B1-4641 | (J.1.2) | (I.1.1) |
| B1-4642 | (J.1.3) | (I.1.1) |
| B1-4643 | (J.1.4) | (I.1.1) |
| B1-4644 | (J.1.5) | (I.1.1) |
| B1-4645 | (J.1.8) | (I.1.1) |
| B1-4646 | (J.1.12) | (I.1.1) |
| B1-4647 | (K.1.13) | (I.1.1) |
| B1-4648 | (K.1.47) | (I.1.1) |
| B1-4649 | (K.1.54) | (I.1.1) |
| B1-4650 | (L.1.5) | (I.1.1) |
| B1-4651 | (L.1.9) | (I.1.1) |
| B1-4652 | (L.1.12) | (I.1.1) |
| B1-4653 | (L.1.13) | (I.1.1) |
| B1-4654 | (L.1.17) | (I.1.1) |
| B1-4655 | (L.1.23) | (I.1.1) |
| B1-4656 | (L.1.32), | (I.1.1) |
| B1-4657 | (L.1.46) | (I.1.1) |
| B1-4658 | (M.1.6) | (I.1.1) |
| B1-4659 | (M.1.24) | (I.1.1) |
| B1-4660 | (M.1.25) | (I.1.1) |
| B1-4661 | (M.1.28) | (I.1.1) |
| B1-4662 | (M.1.29) | (I.1.1) |
| B1-4663 | (M.1.30) | (I.1.1) |
| B1-4664 | (N.7.3) | (I.1.1) |
| B1-4665 | (N.7.4) | (I.1.1) |

| | | |
|---|---|---|
| B1-4666 | (N.7.5) | (I.1.1) |
| B1-4667 | (N.13.13) | (I.1.1) |
| B1-4668 | (O.2.4), | (I.1.1) |
| B1-4669 | (O.4.5) | (I.1.1) |
| B1-4670 | (O.4.7) | (I.1.1) |
| B1-4671 | (O.4.8) | (I.1.1) |
| B1-4672 | (O.5.1) | (I.1.1) |
| B1-4673 | (O.26.2) | (I.1.1) |
| B1-4674 | (O.27.17) | (I.1.1) |
| B1-4675 | (A.1.1) | (I.2.1) |
| B1-4676 | (A.1.4) | (I.2.1) |
| B1-4677 | (A.1.8) | (I.2.1) |
| B1-4678 | (A.1.10) | (I.2.1) |
| B1-4679 | (A.1.11) | (I.2.1) |
| B1-4680 | (A.1.12) | (I.2.1) |
| B1-4681 | (A.1.14) | (I.2.1) |
| B1-4682 | (A.1.17) | (I.2.1) |
| B1-4683 | (A.1.19) | (I.2.1) |
| B1-4684 | (A.1.25) | (I.2.1) |
| B1-4685 | (A.1.34) | (I.2.1) |
| B1-4686 | (A.1.35) | (I.2.1) |
| B1-4687 | (A.1.38) | (I.2.1) |
| B1-4688 | (A.2.6) | (I.2.1) |
| B1-4689 | (A.3.2) | (I.2.1) |
| B1-4690 | (A.3.3) | (I.2.1) |
| B1-4691 | (A.3.4) | (I.2.1) |
| B1-4692 | (A.3.7) | (I.2.1) |
| B1-4693 | (A.3.8) | (I.2.1) |

| | | |
|---|---|---|
| B1-4694 | (A.3.9) | (I.2.1) |
| B1-4695 | (A.3.10) | (I.2.1) |
| B1-4696 | (A.3.11) | (I.2.1) |
| B1-4697 | (A.3.12) | (I.2.1) |
| B1-4698 | (A.3.15) | (I.2.1) |
| B1-4699 | (A.3.16) | (I.2.1) |
| B1-4700 | (A.3.17) | (I.2.1) |
| B1-4701 | (A.3.19) | (I.2.1) |
| B1-4702 | (A.3.21) | (I.2.1) |
| B1-4703 | (A.3.22) | (I.2.1) |
| B1-4704 | (A.3.23) | (I.2.1) |
| B1-4705 | (A.3.28) | (I.2.1) |
| B1-4706 | (A.3.31) | (I.2.1) |
| B1-4707 | (A.4.5) | (I.2.1) |
| B1-4708 | (B.1.4) | (I.2.1) |
| B1-4709 | (B.1.5) | (I.2.1) |
| B1-4710 | (B.1.8) | (I.2.1) |
| B1-4711 | (B.1.10) | (I.2.1) |
| B1-4712 | (B.1.12) | (I.2.1) |
| B1-4713 | (B.1.15) | (I.2.1) |
| B1-4714 | (B.1.17) | (I.2.1) |
| B1-4715 | (B.1.18) | (I.2.1) |
| B1-4716 | (B.1.21) | (I.2.1) |
| B1-4717 | (B.1.22) | (I.2.1) |
| B1-4718 | (B.1.23) | (I.2.1) |
| B1-4719 | (B.1.25) | (I.2.1) |
| B1-4720 | (B.1.26) | (I.2.1) |
| B1-4721 | (B.1.29) | (I.2.1) |

| | | |
|---|---|---|
| B1-4722 | (B.1.38) | (I.2.1) |
| B1-4723 | (B.1.44) | (I.2.1) |
| B1-4724 | (B.1.46) | (I.2.1) |
| B1-4725 | (B.2.4) | (I.2.1) |
| B1-4726 | (B.3.1) | (I.2.1) |
| B1-4727 | (C.1.4) | (I.2.1) |
| B1-4728 | (C.1.5) | (I.2.1) |
| B1-4729 | (C.2.1) | (I.2.1) |
| B1-4730 | (D.1.4) | (I.2.1) |
| B1-4731 | (D.1.5) | (I.2.1) |
| B1-4732 | (D.2.3) | (I.2.1) |
| B1-4733 | (D.2.5) | (I.2.1) |
| B1-4734 | (D.2.6) | (I.2.1) |
| B1-4735 | (E.1.1) | (I.2.1) |
| B1-4736 | (E.1.3) | (I.2.1) |
| B1-4737 | (E.2.2) | (I.2.1) |
| B1-4738 | (E.2.3), | (I.2.1) |
| B1-4739 | (F.1.2) | (I.2.1) |
| B1-4740 | (F.1.3) | (I.2.1) |
| B1-4741 | (F.1.5) | (I.2.1) |
| B1-4742 | (G.1.4) | (I.2.1) |
| B1-4743 | (G.3.1) | (I.2.1) |
| B1-4744 | (G.5.1) | (I.2.1) |
| B1-4745 | (H.1.2) | (I.2.1) |
| B1-4746 | (H.1.3) | (I.2.1) |
| B1-4747 | (H.1.4) | (I.2.1) |
| B1-4748 | (H.1.5) | (I.2.1) |
| B1-4749 | (H.1.6) | (I.2.1) |

| | | |
|---|---|---|
| B1-4750 | (H.1.7) | (I.2.1) |
| B1-4751 | (H.2.2) | (I.2.1) |
| B1-4752 | (H.2.3) | (I.2.1) |
| B1-4753 | (H.2.5) | (I.2.1) |
| B1-4754 | (H.2.7) | (I.2.1) |
| B1-4755 | (H.3.2) | (I.2.1) |
| B1-4756 | (H.3.4) | (I.2.1) |
| B1-4757 | (H.3.5) | (I.2.1) |
| B1-4758 | (H.3.10) | (I.2.1) |
| B1-4759 | (H.4.2) | (I.2.1) |
| B1-4760 | (H.4.9) | (I.2.1) |
| B1-4761 | (I.1.1) | (I.2.1) |
| B1-4762 | (I.2.1) | (I.2.1) |
| B1-4763 | (I.2.2) | (I.2.1) |
| B1-4764 | (J.1.2) | (I.2.1) |
| B1-4765 | (J.1.3) | (I.2.1) |
| B1-4766 | (J.1.4) | (I.2.1) |
| B1-4767 | (J.1.5) | (I.2.1) |
| B1-4768 | (J.1.8) | (I.2.1) |
| B1-4769 | (J.1.12) | (I.2.1) |
| B1-4770 | (K.1.13) | (I.2.1) |
| B1-4771 | (K.1.47) | (I.2.1) |
| B1-4772 | (K.1.54) | (I.2.1) |
| B1-4773 | (L.1.5) | (I.2.1) |
| B1-4774 | (L.1.9) | (I.2.1) |
| B1-4775 | (L.1.12) | (I.2.1) |
| B1-4776 | (L.1.13) | (I.2.1) |
| B1-4777 | (L.1.17) | (I.2.1) |

| | | |
|---|---|---|
| B1-4778 | (L.1.23) | (I.2.1) |
| B1-4779 | (L.1.32), | (I.2.1) |
| B1-4780 | (L.1.46) | (I.2.1) |
| B1-4781 | (M.1.6) | (I.2.1) |
| B1-4782 | (M.1.24) | (I.2.1) |
| B1-4783 | (M.1.25) | (I.2.1) |
| B1-4784 | (M.1.28) | (I.2.1) |
| B1-4785 | (M.1.29) | (I.2.1) |
| B1-4786 | (M.1.30) | (I.2.1) |
| B1-4787 | (N.7.3) | (I.2.1) |
| B1-4788 | (N.7.4) | (I.2.1) |
| B1-4789 | (N.7.5) | (I.2.1) |
| B1-4790 | (N.13.13) | (I.2.1) |
| B1-4791 | (O.2.4), | (I.2.1) |
| B1-4792 | (O.4.5) | (I.2.1) |
| B1-4793 | (O.4.7) | (I.2.1) |
| B1-4794 | (O.4.8) | (I.2.1) |
| B1-4795 | (O.5.1) | (I.2.1) |
| B1-4796 | (O.26.2) | (I.2.1) |
| B1-4797 | (O.27.17) | (I.2.1) |
| B1-4798 | (A.1.1) | (I.2.2) |
| B1-4799 | (A.1.4) | (I.2.2) |
| B1-4800 | (A.1.8) | (I.2.2) |
| B1-4801 | (A.1.10) | (I.2.2) |
| B1-4802 | (A.1.11) | (I.2.2) |
| B1-4803 | (A.1.12) | (I.2.2) |
| B1-4804 | (A.1.14) | (I.2.2) |
| B1-4805 | (A.1.17) | (I.2.2) |

| | | |
|---|---|---|
| B1-4806 | (A.1.19) | (I.2.2) |
| B1-4807 | (A.1.25) | (I.2.2) |
| B1-4808 | (A.1.34) | (I.2.2) |
| B1-4809 | (A.1.35) | (I.2.2) |
| B1-4810 | (A.1.38) | (I.2.2) |
| B1-4811 | (A.2.6) | (I.2.2) |
| B1-4812 | (A.3.2) | (I.2.2) |
| B1-4813 | (A.3.3) | (I.2.2) |
| B1-4814 | (A.3.4) | (I.2.2) |
| B1-4815 | (A.3.7) | (I.2.2) |
| B1-4816 | (A.3.8) | (I.2.2) |
| B1-4817 | (A.3.9) | (I.2.2) |
| B1-4818 | (A.3.10) | (I.2.2) |
| B1-4819 | (A.3.11) | (I.2.2) |
| B1-4820 | (A.3.12) | (I.2.2) |
| B1-4821 | (A.3.15) | (I.2.2) |
| B1-4822 | (A.3.16) | (I.2.2) |
| B1-4823 | (A.3.17) | (I.2.2) |
| B1-4824 | (A.3.19) | (I.2.2) |
| B1-4825 | (A.3.21) | (I.2.2) |
| B1-4826 | (A.3.22) | (I.2.2) |
| B1-4827 | (A.3.23) | (I.2.2) |
| B1-4828 | (A.3.28) | (I.2.2) |
| B1-4829 | (A.3.31) | (I.2.2) |
| B1-4830 | (A.4.5) | (I.2.2) |
| B1-4831 | (B.1.4) | (I.2.2) |
| B1-4832 | (B.1.5) | (I.2.2) |
| B1-4833 | (B.1.8) | (I.2.2) |

| | | |
|---|---|---|
| B1-4834 | (B.1.10) | (I.2.2) |
| B1-4835 | (B.1.12) | (I.2.2) |
| B1-4836 | (B.1.15) | (I.2.2) |
| B1-4837 | (B.1.17) | (I.2.2) |
| B1-4838 | (B.1.18) | (I.2.2) |
| B1-4839 | (B.1.21) | (I.2.2) |
| B1-4840 | (B.1.22) | (I.2.2) |
| B1-4841 | (B.1.23) | (I.2.2) |
| B1-4842 | (B.1.25) | (I.2.2) |
| B1-4843 | (B.1.26) | (I.2.2) |
| B1-4844 | (B.1.29) | (I.2.2) |
| B1-4845 | (B.1.38) | (I.2.2) |
| B1-4846 | (B.1.44) | (I.2.2) |
| B1-4847 | (B.1.46) | (I.2.2) |
| B1-4848 | (B.2.4) | (I.2.2) |
| B1-4849 | (B.3.1) | (I.2.2) |
| B1-4850 | (C.1.4) | (I.2.2) |
| B1-4851 | (C.1.5) | (I.2.2) |
| B1-4852 | (C.2.1) | (I.2.2) |
| B1-4853 | (D.1.4) | (I.2.2) |
| B1-4854 | (D.1.5) | (I.2.2) |
| B1-4855 | (D.2.3) | (I.2.2) |
| B1-4856 | (D.2.5) | (I.2.2) |
| B1-4857 | (D.2.6) | (I.2.2) |
| B1-4858 | (E.1.1) | (I.2.2) |
| B1-4859 | (E.1.3) | (I.2.2) |
| B1-4860 | (E.2.2) | (I.2.2) |
| B1-4861 | (E.2.3), | (I.2.2) |

| | | |
|---|---|---|
| B1-4862 | (F.1.2) | (I.2.2) |
| B1-4863 | (F.1.3) | (I.2.2) |
| B1-4864 | (F.1.5) | (I.2.2) |
| B1-4865 | (G.1.4) | (I.2.2) |
| B1-4866 | (G.3.1) | (I.2.2) |
| B1-4867 | (G.5.1) | (I.2.2) |
| B1-4868 | (H.1.2) | (I.2.2) |
| B1-4869 | (H.1.3) | (I.2.2) |
| B1-4870 | (H.1.4) | (I.2.2) |
| B1-4871 | (H.1.5) | (I.2.2) |
| B1-4872 | (H.1.6) | (I.2.2) |
| B1-4873 | (H.1.7) | (I.2.2) |
| B1-4874 | (H.2.2) | (I.2.2) |
| B1-4875 | (H.2.3) | (I.2.2) |
| B1-4876 | (H.2.5) | (I.2.2) |
| B1-4877 | (H.2.7) | (I.2.2) |
| B1-4878 | (H.3.2) | (I.2.2) |
| B1-4879 | (H.3.4) | (I.2.2) |
| B1-4880 | (H.3.5) | (I.2.2) |
| B1-4881 | (H.3.10) | (I.2.2) |
| B1-4882 | (H.4.2) | (I.2.2) |
| B1-4883 | (H.4.9) | (I.2.2) |
| B1-4884 | (I.1.1) | (I.2.2) |
| B1-4885 | (I.2.1) | (I.2.2) |
| B1-4886 | (I.2.2) | (I.2.2) |
| B1-4887 | (J.1.2) | (I.2.2) |
| B1-4888 | (J.1.3) | (I.2.2) |
| B1-4889 | (J.1.4) | (I.2.2) |

| | | |
|---|---|---|
| B1-4890 | (J.1.5) | (I.2.2) |
| B1-4891 | (J.1.8) | (I.2.2) |
| B1-4892 | (J.1.12) | (I.2.2) |
| B1-4893 | (K.1.13) | (I.2.2) |
| B1-4894 | (K.1.47) | (I.2.2) |
| B1-4895 | (K.1.54) | (I.2.2) |
| B1-4896 | (L.1.5) | (I.2.2) |
| B1-4897 | (L.1.9) | (I.2.2) |
| B1-4898 | (L.1.12) | (I.2.2) |
| B1-4899 | (L.1.13) | (I.2.2) |
| B1-4900 | (L.1.17) | (I.2.2) |
| B1-4901 | (L.1.23) | (I.2.2) |
| B1-4902 | (L.1.32), | (I.2.2) |
| B1-4903 | (L.1.46) | (I.2.2) |
| B1-4904 | (M.1.6) | (I.2.2) |
| B1-4905 | (M.1.24) | (I.2.2) |
| B1-4906 | (M.1.25) | (I.2.2) |
| B1-4907 | (M.1.28) | (I.2.2) |
| B1-4908 | (M.1.29) | (I.2.2) |
| B1-4909 | (M.1.30) | (I.2.2) |
| B1-4910 | (N.7.3) | (I.2.2) |
| B1-4911 | (N.7.4) | (I.2.2) |
| B1-4912 | (N.7.5) | (I.2.2) |
| B1-4913 | (N.13.13) | (I.2.2) |
| B1-4914 | (O.2.4), | (I.2.2) |
| B1-4915 | (O.4.5) | (I.2.2) |
| B1-4916 | (O.4.7) | (I.2.2) |
| B1-4917 | (O.4.8) | (I.2.2) |

| | | |
|---|---|---|
| B1-4918 | (O.5.1) | (I.2.2) |
| B1-4919 | (O.26.2) | (I.2.2) |
| B1-4920 | (O.27.17) | (I.2.2) |
| B1-4921 | (A.1.1) | (J.1.2) |
| B1-4922 | (A.1.4) | (J.1.2) |
| B1-4923 | (A.1.8) | (J.1.2) |
| B1-4924 | (A.1.10) | (J.1.2) |
| B1-4925 | (A.1.11) | (J.1.2) |
| B1-4926 | (A.1.12) | (J.1.2) |
| B1-4927 | (A.1.14) | (J.1.2) |
| B1-4928 | (A.1.17) | (J.1.2) |
| B1-4929 | (A.1.19) | (J.1.2) |
| B1-4930 | (A.1.25) | (J.1.2) |
| B1-4931 | (A.1.34) | (J.1.2) |
| B1-4932 | (A.1.35) | (J.1.2) |
| B1-4933 | (A.1.38) | (J.1.2) |
| B1-4934 | (A.2.6) | (J.1.2) |
| B1-4935 | (A.3.2) | (J.1.2) |
| B1-4936 | (A.3.3) | (J.1.2) |
| B1-4937 | (A.3.4) | (J.1.2) |
| B1-4938 | (A.3.7) | (J.1.2) |
| B1-4939 | (A.3.8) | (J.1.2) |
| B1-4940 | (A.3.9) | (J.1.2) |
| B1-4941 | (A.3.10) | (J.1.2) |
| B1-4942 | (A.3.11) | (J.1.2) |
| B1-4943 | (A.3.12) | (J.1.2) |
| B1-4944 | (A.3.15) | (J.1.2) |
| B1-4945 | (A.3.16) | (J.1.2) |

| | | |
|---|---|---|
| B1-4946 | (A.3.17) | (J.1.2) |
| B1-4947 | (A.3.19) | (J.1.2) |
| B1-4948 | (A.3.21) | (J.1.2) |
| B1-4949 | (A.3.22) | (J.1.2) |
| B1-4950 | (A.3.23) | (J.1.2) |
| B1-4951 | (A.3.28) | (J.1.2) |
| B1-4952 | (A.3.31) | (J.1.2) |
| B1-4953 | (A.4.5) | (J.1.2) |
| B1-4954 | (B.1.4) | (J.1.2) |
| B1-4955 | (B.1.5) | (J.1.2) |
| B1-4956 | (B.1.8) | (J.1.2) |
| B1-4957 | (B.1.10) | (J.1.2) |
| B1-4958 | (B.1.12) | (J.1.2) |
| B1-4959 | (B.1.15) | (J.1.2) |
| B1-4960 | (B.1.17) | (J.1.2) |
| B1-4961 | (B.1.18) | (J.1.2) |
| B1-4962 | (B.1.21) | (J.1.2) |
| B1-4963 | (B.1.22) | (J.1.2) |
| B1-4964 | (B.1.23) | (J.1.2) |
| B1-4965 | (B.1.25) | (J.1.2) |
| B1-4966 | (B.1.26) | (J.1.2) |
| B1-4967 | (B.1.29) | (J.1.2) |
| B1-4968 | (B.1.38) | (J.1.2) |
| B1-4969 | (B.1.44) | (J.1.2) |
| B1-4970 | (B.1.46) | (J.1.2) |
| B1-4971 | (B.2.4) | (J.1.2) |
| B1-4972 | (B.3.1) | (J.1.2) |
| B1-4973 | (C.1.4) | (J.1.2) |

| | | |
|---|---|---|
| B1-4974 | (C.1.5) | (J.1.2) |
| B1-4975 | (C.2.1) | (J.1.2) |
| B1-4976 | (D.1.4) | (J.1.2) |
| B1-4977 | (D.1.5) | (J.1.2) |
| B1-4978 | (D.2.3) | (J.1.2) |
| B1-4979 | (D.2.5) | (J.1.2) |
| B1-4980 | (D.2.6) | (J.1.2) |
| B1-4981 | (E.1.1) | (J.1.2) |
| B1-4982 | (E.1.3) | (J.1.2) |
| B1-4983 | (E.2.2) | (J.1.2) |
| B1-4984 | (E.2.3), | (J.1.2) |
| B1-4985 | (F.1.2) | (J.1.2) |
| B1-4986 | (F.1.3) | (J.1.2) |
| B1-4987 | (F.1.5) | (J.1.2) |
| B1-4988 | (G.1.4) | (J.1.2) |
| B1-4989 | (G.3.1) | (J.1.2) |
| B1-4990 | (G.5.1) | (J.1.2) |
| B1-4991 | (H.1.2) | (J.1.2) |
| B1-4992 | (H.1.3) | (J.1.2) |
| B1-4993 | (H.1.4) | (J.1.2) |
| B1-4994 | (H.1.5) | (J.1.2) |
| B1-4995 | (H.1.6) | (J.1.2) |
| B1-4996 | (H.1.7) | (J.1.2) |
| B1-4997 | (H.2.2) | (J.1.2) |
| B1-4998 | (H.2.3) | (J.1.2) |
| B1-4999 | (H.2.5) | (J.1.2) |
| B1-5000 | (H.2.7) | (J.1.2) |
| B1-5001 | (H.3.2) | (J.1.2) |

| | | |
|---|---|---|
| B1-5002 | (H.3.4) | (J.1.2) |
| B1-5003 | (H.3.5) | (J.1.2) |
| B1-5004 | (H.3.10) | (J.1.2) |
| B1-5005 | (H.4.2) | (J.1.2) |
| B1-5006 | (H.4.9) | (J.1.2) |
| B1-5007 | (I.1.1) | (J.1.2) |
| B1-5008 | (I.2.1) | (J.1.2) |
| B1-5009 | (I.2.2) | (J.1.2) |
| B1-5010 | (J.1.2) | (J.1.2) |
| B1-5011 | (J.1.3) | (J.1.2) |
| B1-5012 | (J.1.4) | (J.1.2) |
| B1-5013 | (J.1.5) | (J.1.2) |
| B1-5014 | (J.1.8) | (J.1.2) |
| B1-5015 | (J.1.12) | (J.1.2) |
| B1-5016 | (K.1.13) | (J.1.2) |
| B1-5017 | (K.1.47) | (J.1.2) |
| B1-5018 | (K.1.54) | (J.1.2) |
| B1-5019 | (L.1.5) | (J.1.2) |
| B1-5020 | (L.1.9) | (J.1.2) |
| B1-5021 | (L.1.12) | (J.1.2) |
| B1-5022 | (L.1.13) | (J.1.2) |
| B1-5023 | (L.1.17) | (J.1.2) |
| B1-5024 | (L.1.23) | (J.1.2) |
| B1-5025 | (L.1.32), | (J.1.2) |
| B1-5026 | (L.1.46) | (J.1.2) |
| B1-5027 | (M.1.6) | (J.1.2) |
| B1-5028 | (M.1.24) | (J.1.2) |
| B1-5029 | (M.1.25) | (J.1.2) |

| | | |
|---|---|---|
| B1-5030 | (M.1.28) | (J.1.2) |
| B1-5031 | (M.1.29) | (J.1.2) |
| B1-5032 | (M.1.30) | (J.1.2) |
| B1-5033 | (N.7.3) | (J.1.2) |
| B1-5034 | (N.7.4) | (J.1.2) |
| B1-5035 | (N.7.5) | (J.1.2) |
| B1-5036 | (N.13.13) | (J.1.2) |
| B1-5037 | (O.2.4), | (J.1.2) |
| B1-5038 | (O.4.5) | (J.1.2) |
| B1-5039 | (O.4.7) | (J.1.2) |
| B1-5040 | (O.4.8) | (J.1.2) |
| B1-5041 | (O.5.1) | (J.1.2) |
| B1-5042 | (O.26.2) | (J.1.2) |
| B1-5043 | (O.27.17) | (J.1.2) |
| B1-5044 | (A.1.1) | (J.1.3) |
| B1-5045 | (A.1.4) | (J.1.3) |
| B1-5046 | (A.1.8) | (J.1.3) |
| B1-5047 | (A.1.10) | (J.1.3) |
| B1-5048 | (A.1.11) | (J.1.3) |
| B1-5049 | (A.1.12) | (J.1.3) |
| B1-5050 | (A.1.14) | (J.1.3) |
| B1-5051 | (A.1.17) | (J.1.3) |
| B1-5052 | (A.1.19) | (J.1.3) |
| B1-5053 | (A.1.25) | (J.1.3) |
| B1-5054 | (A.1.34) | (J.1.3) |
| B1-5055 | (A.1.35) | (J.1.3) |
| B1-5056 | (A.1.38) | (J.1.3) |
| B1-5057 | (A.2.6) | (J.1.3) |

| | | |
|---|---|---|
| B1-5058 | (A.3.2) | (J.1.3) |
| B1-5059 | (A.3.3) | (J.1.3) |
| B1-5060 | (A.3.4) | (J.1.3) |
| B1-5061 | (A.3.7) | (J.1.3) |
| B1-5062 | (A.3.8) | (J.1.3) |
| B1-5063 | (A.3.9) | (J.1.3) |
| B1-5064 | (A.3.10) | (J.1.3) |
| B1-5065 | (A.3.11) | (J.1.3) |
| B1-5066 | (A.3.12) | (J.1.3) |
| B1-5067 | (A.3.15) | (J.1.3) |
| B1-5068 | (A.3.16) | (J.1.3) |
| B1-5069 | (A.3.17) | (J.1.3) |
| B1-5070 | (A.3.19) | (J.1.3) |
| B1-5071 | (A.3.21) | (J.1.3) |
| B1-5072 | (A.3.22) | (J.1.3) |
| B1-5073 | (A.3.23) | (J.1.3) |
| B1-5074 | (A.3.28) | (J.1.3) |
| B1-5075 | (A.3.31) | (J.1.3) |
| B1-5076 | (A.4.5) | (J.1.3) |
| B1-5077 | (B.1.4) | (J.1.3) |
| B1-5078 | (B.1.5) | (J.1.3) |
| B1-5079 | (B.1.8) | (J.1.3) |
| B1-5080 | (B.1.10) | (J.1.3) |
| B1-5081 | (B.1.12) | (J.1.3) |
| B1-5082 | (B.1.15) | (J.1.3) |
| B1-5083 | (B.1.17) | (J.1.3) |
| B1-5084 | (B.1.18) | (J.1.3) |
| B1-5085 | (B.1.21) | (J.1.3) |
| B1-5086 | (B.1.22) | (J.1.3) |
| B1-5087 | (B.1.23) | (J.1.3) |
| B1-5088 | (B.1.25) | (J.1.3) |
| B1-5089 | (B.1.26) | (J.1.3) |
| B1-5090 | (B.1.29) | (J.1.3) |
| B1-5091 | (B.1.38) | (J.1.3) |
| B1-5092 | (B.1.44) | (J.1.3) |
| B1-5093 | (B.1.46) | (J.1.3) |
| B1-5094 | (B.2.4) | (J.1.3) |
| B1-5095 | (B.3.1) | (J.1.3) |
| B1-5096 | (C.1.4) | (J.1.3) |
| B1-5097 | (C.1.5) | (J.1.3) |
| B1-5098 | (C.2.1) | (J.1.3) |
| B1-5099 | (D.1.4) | (J.1.3) |
| B1-5100 | (D.1.5) | (J.1.3) |
| B1-5101 | (D.2.3) | (J.1.3) |
| B1-5102 | (D.2.5) | (J.1.3) |
| B1-5103 | (D.2.6) | (J.1.3) |
| B1-5104 | (E.1.1) | (J.1.3) |
| B1-5105 | (E.1.3) | (J.1.3) |
| B1-5106 | (E.2.2) | (J.1.3) |
| B1-5107 | (E.2.3), | (J.1.3) |
| B1-5108 | (F.1.2) | (J.1.3) |
| B1-5109 | (F.1.3) | (J.1.3) |
| B1-5110 | (F.1.5) | (J.1.3) |
| B1-5111 | (G.1.4) | (J.1.3) |
| B1-5112 | (G.3.1) | (J.1.3) |
| B1-5113 | (G.5.1) | (J.1.3) |

| | | |
|---|---|---|
| B1-5114 | (H.1.2) | (J.1.3) |
| B1-5115 | (H.1.3) | (J.1.3) |
| B1-5116 | (H.1.4) | (J.1.3) |
| B1-5117 | (H.1.5) | (J.1.3) |
| B1-5118 | (H.1.6) | (J.1.3) |
| B1-5119 | (H.1.7) | (J.1.3) |
| B1-5120 | (H.2.2) | (J.1.3) |
| B1-5121 | (H.2.3) | (J.1.3) |
| B1-5122 | (H.2.5) | (J.1.3) |
| B1-5123 | (H.2.7) | (J.1.3) |
| B1-5124 | (H.3.2) | (J.1.3) |
| B1-5125 | (H.3.4) | (J.1.3) |
| B1-5126 | (H.3.5) | (J.1.3) |
| B1-5127 | (H.3.10) | (J.1.3) |
| B1-5128 | (H.4.2) | (J.1.3) |
| B1-5129 | (H.4.9) | (J.1.3) |
| B1-5130 | (I.1.1) | (J.1.3) |
| B1-5131 | (I.2.1) | (J.1.3) |
| B1-5132 | (I.2.2) | (J.1.3) |
| B1-5133 | (J.1.2) | (J.1.3) |
| B1-5134 | (J.1.3) | (J.1.3) |
| B1-5135 | (J.1.4) | (J.1.3) |
| B1-5136 | (J.1.5) | (J.1.3) |
| B1-5137 | (J.1.8) | (J.1.3) |
| B1-5138 | (J.1.12) | (J.1.3) |
| B1-5139 | (K.1.13) | (J.1.3) |
| B1-5140 | (K.1.47) | (J.1.3) |
| B1-5141 | (K.1.54) | (J.1.3) |

| | | |
|---|---|---|
| B1-5142 | (L.1.5) | (J.1.3) |
| B1-5143 | (L.1.9) | (J.1.3) |
| B1-5144 | (L.1.12) | (J.1.3) |
| B1-5145 | (L.1.13) | (J.1.3) |
| B1-5146 | (L.1.17) | (J.1.3) |
| B1-5147 | (L.1.23) | (J.1.3) |
| B1-5148 | (L.1.32), | (J.1.3) |
| B1-5149 | (L.1.46) | (J.1.3) |
| B1-5150 | (M.1.6) | (J.1.3) |
| B1-5151 | (M.1.24) | (J.1.3) |
| B1-5152 | (M.1.25) | (J.1.3) |
| B1-5153 | (M.1.28) | (J.1.3) |
| B1-5154 | (M.1.29) | (J.1.3) |
| B1-5155 | (M.1.30) | (J.1.3) |
| B1-5156 | (N.7.3) | (J.1.3) |
| B1-5157 | (N.7.4) | (J.1.3) |
| B1-5158 | (N.7.5) | (J.1.3) |
| B1-5159 | (N.13.13) | (J.1.3) |
| B1-5160 | (O.2.4), | (J.1.3) |
| B1-5161 | (O.4.5) | (J.1.3) |
| B1-5162 | (O.4.7) | (J.1.3) |
| B1-5163 | (O.4.8) | (J.1.3) |
| B1-5164 | (O.5.1) | (J.1.3) |
| B1-5165 | (O.26.2) | (J.1.3) |
| B1-5166 | (O.27.17) | (J.1.3) |
| B1-5167 | (A.1.1) | (J.1.4) |
| B1-5168 | (A.1.4) | (J.1.4) |
| B1-5169 | (A.1.8) | (J.1.4) |

| | | |
|---|---|---|
| B1-5170 | (A.1.10) | (J.1.4) |
| B1-5171 | (A.1.11) | (J.1.4) |
| B1-5172 | (A.1.12) | (J.1.4) |
| B1-5173 | (A.1.14) | (J.1.4) |
| B1-5174 | (A.1.17) | (J.1.4) |
| B1-5175 | (A.1.19) | (J.1.4) |
| B1-5176 | (A.1.25) | (J.1.4) |
| B1-5177 | (A.1.34) | (J.1.4) |
| B1-5178 | (A.1.35) | (J.1.4) |
| B1-5179 | (A.1.38) | (J.1.4) |
| B1-5180 | (A.2.6) | (J.1.4) |
| B1-5181 | (A.3.2) | (J.1.4) |
| B1-5182 | (A.3.3) | (J.1.4) |
| B1-5183 | (A.3.4) | (J.1.4) |
| B1-5184 | (A.3.7) | (J.1.4) |
| B1-5185 | (A.3.8) | (J.1.4) |
| B1-5186 | (A.3.9) | (J.1.4) |
| B1-5187 | (A.3.10) | (J.1.4) |
| B1-5188 | (A.3.11) | (J.1.4) |
| B1-5189 | (A.3.12) | (J.1.4) |
| B1-5190 | (A.3.15) | (J.1.4) |
| B1-5191 | (A.3.16) | (J.1.4) |
| B1-5192 | (A.3.17) | (J.1.4) |
| B1-5193 | (A.3.19) | (J.1.4) |
| B1-5194 | (A.3.21) | (J.1.4) |
| B1-5195 | (A.3.22) | (J.1.4) |
| B1-5196 | (A.3.23) | (J.1.4) |
| B1-5197 | (A.3.28) | (J.1.4) |

| | | |
|---|---|---|
| B1-5198 | (A.3.31) | (J.1.4) |
| B1-5199 | (A.4.5) | (J.1.4) |
| B1-5200 | (B.1.4) | (J.1.4) |
| B1-5201 | (B.1.5) | (J.1.4) |
| B1-5202 | (B.1.8) | (J.1.4) |
| B1-5203 | (B.1.10) | (J.1.4) |
| B1-5204 | (B.1.12) | (J.1.4) |
| B1-5205 | (B.1.15) | (J.1.4) |
| B1-5206 | (B.1.17) | (J.1.4) |
| B1-5207 | (B.1.18) | (J.1.4) |
| B1-5208 | (B.1.21) | (J.1.4) |
| B1-5209 | (B.1.22) | (J.1.4) |
| B1-5210 | (B.1.23) | (J.1.4) |
| B1-5211 | (B.1.25) | (J.1.4) |
| B1-5212 | (B.1.26) | (J.1.4) |
| B1-5213 | (B.1.29) | (J.1.4) |
| B1-5214 | (B.1.38) | (J.1.4) |
| B1-5215 | (B.1.44) | (J.1.4) |
| B1-5216 | (B.1.46) | (J.1.4) |
| B1-5217 | (B.2.4) | (J.1.4) |
| B1-5218 | (B.3.1) | (J.1.4) |
| B1-5219 | (C.1.4) | (J.1.4) |
| B1-5220 | (C.1.5) | (J.1.4) |
| B1-5221 | (C.2.1) | (J.1.4) |
| B1-5222 | (D.1.4) | (J.1.4) |
| B1-5223 | (D.1.5) | (J.1.4) |
| B1-5224 | (D.2.3) | (J.1.4) |
| B1-5225 | (D.2.5) | (J.1.4) |

| | | |
|---|---|---|
| B1-5226 | (D.2.6) | (J.1.4) |
| B1-5227 | (E.1.1) | (J.1.4) |
| B1-5228 | (E.1.3) | (J.1.4) |
| B1-5229 | (E.2.2) | (J.1.4) |
| B1-5230 | (E.2.3), | (J.1.4) |
| B1-5231 | (F.1.2) | (J.1.4) |
| B1-5232 | (F.1.3) | (J.1.4) |
| B1-5233 | (F.1.5) | (J.1.4) |
| B1-5234 | (G.1.4) | (J.1.4) |
| B1-5235 | (G.3.1) | (J.1.4) |
| B1-5236 | (G.5.1) | (J.1.4) |
| B1-5237 | (H.1.2) | (J.1.4) |
| B1-5238 | (H.1.3) | (J.1.4) |
| B1-5239 | (H.1.4) | (J.1.4) |
| B1-5240 | (H.1.5) | (J.1.4) |
| B1-5241 | (H.1.6) | (J.1.4) |
| B1-5242 | (H.1.7) | (J.1.4) |
| B1-5243 | (H.2.2) | (J.1.4) |
| B1-5244 | (H.2.3) | (J.1.4) |
| B1-5245 | (H.2.5) | (J.1.4) |
| B1-5246 | (H.2.7) | (J.1.4) |
| B1-5247 | (H.3.2) | (J.1.4) |
| B1-5248 | (H.3.4) | (J.1.4) |
| B1-5249 | (H.3.5) | (J.1.4) |
| B1-5250 | (H.3.10) | (J.1.4) |
| B1-5251 | (H.4.2) | (J.1.4) |
| B1-5252 | (H.4.9) | (J.1.4) |
| B1-5253 | (I.1.1) | (J.1.4) |

| | | |
|---|---|---|
| B1-5254 | (I.2.1) | (J.1.4) |
| B1-5255 | (I.2.2) | (J.1.4) |
| B1-5256 | (J.1.2) | (J.1.4) |
| B1-5257 | (J.1.3) | (J.1.4) |
| B1-5258 | (J.1.4) | (J.1.4) |
| B1-5259 | (J.1.5) | (J.1.4) |
| B1-5260 | (J.1.8) | (J.1.4) |
| B1-5261 | (J.1.12) | (J.1.4) |
| B1-5262 | (K.1.13) | (J.1.4) |
| B1-5263 | (K.1.47) | (J.1.4) |
| B1-5264 | (K.1.54) | (J.1.4) |
| B1-5265 | (L.1.5) | (J.1.4) |
| B1-5266 | (L.1.9) | (J.1.4) |
| B1-5267 | (L.1.12) | (J.1.4) |
| B1-5268 | (L.1.13) | (J.1.4) |
| B1-5269 | (L.1.17) | (J.1.4) |
| B1-5270 | (L.1.23) | (J.1.4) |
| B1-5271 | (L.1.32), | (J.1.4) |
| B1-5272 | (L.1.46) | (J.1.4) |
| B1-5273 | (M.1.6) | (J.1.4) |
| B1-5274 | (M.1.24) | (J.1.4) |
| B1-5275 | (M.1.25) | (J.1.4) |
| B1-5276 | (M.1.28) | (J.1.4) |
| B1-5277 | (M.1.29) | (J.1.4) |
| B1-5278 | (M.1.30) | (J.1.4) |
| B1-5279 | (N.7.3) | (J.1.4) |
| B1-5280 | (N.7.4) | (J.1.4) |
| B1-5281 | (N.7.5) | (J.1.4) |

| | | |
|---|---|---|
| B1-5282 | (N.13.13) | (J.1.4) |
| B1-5283 | (O.2.4), | (J.1.4) |
| B1-5284 | (O.4.5) | (J.1.4) |
| B1-5285 | (O.4.7) | (J.1.4) |
| B1-5286 | (O.4.8) | (J.1.4) |
| B1-5287 | (O.5.1) | (J.1.4) |
| B1-5288 | (O.26.2) | (J.1.4) |
| B1-5289 | (O.27.17) | (J.1.4) |
| B1-5290 | (A.1.1) | (J.1.5) |
| B1-5291 | (A.1.4) | (J.1.5) |
| B1-5292 | (A.1.8) | (J.1.5) |
| B1-5293 | (A.1.10) | (J.1.5) |
| B1-5294 | (A.1.11) | (J.1.5) |
| B1-5295 | (A.1.12) | (J.1.5) |
| B1-5296 | (A.1.14) | (J.1.5) |
| B1-5297 | (A.1.17) | (J.1.5) |
| B1-5298 | (A.1.19) | (J.1.5) |
| B1-5299 | (A.1.25) | (J.1.5) |
| B1-5300 | (A.1.34) | (J.1.5) |
| B1-5301 | (A.1.35) | (J.1.5) |
| B1-5302 | (A.1.38) | (J.1.5) |
| B1-5303 | (A.2.6) | (J.1.5) |
| B1-5304 | (A.3.2) | (J.1.5) |
| B1-5305 | (A.3.3) | (J.1.5) |
| B1-5306 | (A.3.4) | (J.1.5) |
| B1-5307 | (A.3.7) | (J.1.5) |
| B1-5308 | (A.3.8) | (J.1.5) |
| B1-5309 | (A.3.9) | (J.1.5) |

| | | |
|---|---|---|
| B1-5310 | (A.3.10) | (J.1.5) |
| B1-5311 | (A.3.11) | (J.1.5) |
| B1-5312 | (A.3.12) | (J.1.5) |
| B1-5313 | (A.3.15) | (J.1.5) |
| B1-5314 | (A.3.16) | (J.1.5) |
| B1-5315 | (A.3.17) | (J.1.5) |
| B1-5316 | (A.3.19) | (J.1.5) |
| B1-5317 | (A.3.21) | (J.1.5) |
| B1-5318 | (A.3.22) | (J.1.5) |
| B1-5319 | (A.3.23) | (J.1.5) |
| B1-5320 | (A.3.28) | (J.1.5) |
| B1-5321 | (A.3.31) | (J.1.5) |
| B1-5322 | (A.4.5) | (J.1.5) |
| B1-5323 | (B.1.4) | (J.1.5) |
| B1-5324 | (B.1.5) | (J.1.5) |
| B1-5325 | (B.1.8) | (J.1.5) |
| B1-5326 | (B.1.10) | (J.1.5) |
| B1-5327 | (B.1.12) | (J.1.5) |
| B1-5328 | (B.1.15) | (J.1.5) |
| B1-5329 | (B.1.17) | (J.1.5) |
| B1-5330 | (B.1.18) | (J.1.5) |
| B1-5331 | (B.1.21) | (J.1.5) |
| B1-5332 | (B.1.22) | (J.1.5) |
| B1-5333 | (B.1.23) | (J.1.5) |
| B1-5334 | (B.1.25) | (J.1.5) |
| B1-5335 | (B.1.26) | (J.1.5) |
| B1-5336 | (B.1.29) | (J.1.5) |
| B1-5337 | (B.1.38) | (J.1.5) |

| | | |
|---|---|---|
| B1-5338 | (B.1.44) | (J.1.5) |
| B1-5339 | (B.1.46) | (J.1.5) |
| B1-5340 | (B.2.4) | (J.1.5) |
| B1-5341 | (B.3.1) | (J.1.5) |
| B1-5342 | (C.1.4) | (J.1.5) |
| B1-5343 | (C.1.5) | (J.1.5) |
| B1-5344 | (C.2.1) | (J.1.5) |
| B1-5345 | (D.1.4) | (J.1.5) |
| B1-5346 | (D.1.5) | (J.1.5) |
| B1-5347 | (D.2.3) | (J.1.5) |
| B1-5348 | (D.2.5) | (J.1.5) |
| B1-5349 | (D.2.6) | (J.1.5) |
| B1-5350 | (E.1.1) | (J.1.5) |
| B1-5351 | (E.1.3) | (J.1.5) |
| B1-5352 | (E.2.2) | (J.1.5) |
| B1-5353 | (E.2.3), | (J.1.5) |
| B1-5354 | (F.1.2) | (J.1.5) |
| B1-5355 | (F.1.3) | (J.1.5) |
| B1-5356 | (F.1.5) | (J.1.5) |
| B1-5357 | (G.1.4) | (J.1.5) |
| B1-5358 | (G.3.1) | (J.1.5) |
| B1-5359 | (G.5.1) | (J.1.5) |
| B1-5360 | (H.1.2) | (J.1.5) |
| B1-5361 | (H.1.3) | (J.1.5) |
| B1-5362 | (H.1.4) | (J.1.5) |
| B1-5363 | (H.1.5) | (J.1.5) |
| B1-5364 | (H.1.6) | (J.1.5) |
| B1-5365 | (H.1.7) | (J.1.5) |

| | | |
|---|---|---|
| B1-5366 | (H.2.2) | (J.1.5) |
| B1-5367 | (H.2.3) | (J.1.5) |
| B1-5368 | (H.2.5) | (J.1.5) |
| B1-5369 | (H.2.7) | (J.1.5) |
| B1-5370 | (H.3.2) | (J.1.5) |
| B1-5371 | (H.3.4) | (J.1.5) |
| B1-5372 | (H.3.5) | (J.1.5) |
| B1-5373 | (H.3.10) | (J.1.5) |
| B1-5374 | (H.4.2) | (J.1.5) |
| B1-5375 | (H.4.9) | (J.1.5) |
| B1-5376 | (I.1.1) | (J.1.5) |
| B1-5377 | (I.2.1) | (J.1.5) |
| B1-5378 | (I.2.2) | (J.1.5) |
| B1-5379 | (J.1.2) | (J.1.5) |
| B1-5380 | (J.1.3) | (J.1.5) |
| B1-5381 | (J.1.4) | (J.1.5) |
| B1-5382 | (J.1.5) | (J.1.5) |
| B1-5383 | (J.1.8) | (J.1.5) |
| B1-5384 | (J.1.12) | (J.1.5) |
| B1-5385 | (K.1.13) | (J.1.5) |
| B1-5386 | (K.1.47) | (J.1.5) |
| B1-5387 | (K.1.54) | (J.1.5) |
| B1-5388 | (L.1.5) | (J.1.5) |
| B1-5389 | (L.1.9) | (J.1.5) |
| B1-5390 | (L.1.12) | (J.1.5) |
| B1-5391 | (L.1.13) | (J.1.5) |
| B1-5392 | (L.1.17) | (J.1.5) |
| B1-5393 | (L.1.23) | (J.1.5) |

| | | |
|---|---|---|
| B1-5394 | (L.1.32), | (J.1.5) |
| B1-5395 | (L.1.46) | (J.1.5) |
| B1-5396 | (M.1.6) | (J.1.5) |
| B1-5397 | (M.1.24) | (J.1.5) |
| B1-5398 | (M.1.25) | (J.1.5) |
| B1-5399 | (M.1.28) | (J.1.5) |
| B1-5400 | (M.1.29) | (J.1.5) |
| B1-5401 | (M.1.30) | (J.1.5) |
| B1-5402 | (N.7.3) | (J.1.5) |
| B1-5403 | (N.7.4) | (J.1.5) |
| B1-5404 | (N.7.5) | (J.1.5) |
| B1-5405 | (N.13.13) | (J.1.5) |
| B1-5406 | (O.2.4), | (J.1.5) |
| B1-5407 | (O.4.5) | (J.1.5) |
| B1-5408 | (O.4.7) | (J.1.5) |
| B1-5409 | (O.4.8) | (J.1.5) |
| B1-5410 | (O.5.1) | (J.1.5) |
| B1-5411 | (O.26.2) | (J.1.5) |
| B1-5412 | (O.27.17) | (J.1.5) |
| B1-5413 | (A.1.1) | (J.1.8) |
| B1-5414 | (A.1.4) | (J.1.8) |
| B1-5415 | (A.1.8) | (J.1.8) |
| B1-5416 | (A.1.10) | (J.1.8) |
| B1-5417 | (A.1.11) | (J.1.8) |
| B1-5418 | (A.1.12) | (J.1.8) |
| B1-5419 | (A.1.14) | (J.1.8) |
| B1-5420 | (A.1.17) | (J.1.8) |
| B1-5421 | (A.1.19) | (J.1.8) |

| | | |
|---|---|---|
| B1-5422 | (A.1.25) | (J.1.8) |
| B1-5423 | (A.1.34) | (J.1.8) |
| B1-5424 | (A.1.35) | (J.1.8) |
| B1-5425 | (A.1.38) | (J.1.8) |
| B1-5426 | (A.2.6) | (J.1.8) |
| B1-5427 | (A.3.2) | (J.1.8) |
| B1-5428 | (A.3.3) | (J.1.8) |
| B1-5429 | (A.3.4) | (J.1.8) |
| B1-5430 | (A.3.7) | (J.1.8) |
| B1-5431 | (A.3.8) | (J.1.8) |
| B1-5432 | (A.3.9) | (J.1.8) |
| B1-5433 | (A.3.10) | (J.1.8) |
| B1-5434 | (A.3.11) | (J.1.8) |
| B1-5435 | (A.3.12) | (J.1.8) |
| B1-5436 | (A.3.15) | (J.1.8) |
| B1-5437 | (A.3.16) | (J.1.8) |
| B1-5438 | (A.3.17) | (J.1.8) |
| B1-5439 | (A.3.19) | (J.1.8) |
| B1-5440 | (A.3.21) | (J.1.8) |
| B1-5441 | (A.3.22) | (J.1.8) |
| B1-5442 | (A.3.23) | (J.1.8) |
| B1-5443 | (A.3.28) | (J.1.8) |
| B1-5444 | (A.3.31) | (J.1.8) |
| B1-5445 | (A.4.5) | (J.1.8) |
| B1-5446 | (B.1.4) | (J.1.8) |
| B1-5447 | (B.1.5) | (J.1.8) |
| B1-5448 | (B.1.8) | (J.1.8) |
| B1-5449 | (B.1.10) | (J.1.8) |

| | | |
|---|---|---|
| B1-5450 | (B.1.12) | (J.1.8) |
| B1-5451 | (B.1.15) | (J.1.8) |
| B1-5452 | (B.1.17) | (J.1.8) |
| B1-5453 | (B.1.18) | (J.1.8) |
| B1-5454 | (B.1.21) | (J.1.8) |
| B1-5455 | (B.1.22) | (J.1.8) |
| B1-5456 | (B.1.23) | (J.1.8) |
| B1-5457 | (B.1.25) | (J.1.8) |
| B1-5458 | (B.1.26) | (J.1.8) |
| B1-5459 | (B.1.29) | (J.1.8) |
| B1-5460 | (B.1.38) | (J.1.8) |
| B1-5461 | (B.1.44) | (J.1.8) |
| B1-5462 | (B.1.46) | (J.1.8) |
| B1-5463 | (B.2.4) | (J.1.8) |
| B1-5464 | (B.3.1) | (J.1.8) |
| B1-5465 | (C.1.4) | (J.1.8) |
| B1-5466 | (C.1.5) | (J.1.8) |
| B1-5467 | (C.2.1) | (J.1.8) |
| B1-5468 | (D.1.4) | (J.1.8) |
| B1-5469 | (D.1.5) | (J.1.8) |
| B1-5470 | (D.2.3) | (J.1.8) |
| B1-5471 | (D.2.5) | (J.1.8) |
| B1-5472 | (D.2.6) | (J.1.8) |
| B1-5473 | (E.1.1) | (J.1.8) |
| B1-5474 | (E.1.3) | (J.1.8) |
| B1-5475 | (E.2.2) | (J.1.8) |
| B1-5476 | (E.2.3), | (J.1.8) |
| B1-5477 | (F.1.2) | (J.1.8) |

| | | |
|---|---|---|
| B1-5478 | (F.1.3) | (J.1.8) |
| B1-5479 | (F.1.5) | (J.1.8) |
| B1-5480 | (G.1.4) | (J.1.8) |
| B1-5481 | (G.3.1) | (J.1.8) |
| B1-5482 | (G.5.1) | (J.1.8) |
| B1-5483 | (H.1.2) | (J.1.8) |
| B1-5484 | (H.1.3) | (J.1.8) |
| B1-5485 | (H.1.4) | (J.1.8) |
| B1-5486 | (H.1.5) | (J.1.8) |
| B1-5487 | (H.1.6) | (J.1.8) |
| B1-5488 | (H.1.7) | (J.1.8) |
| B1-5489 | (H.2.2) | (J.1.8) |
| B1-5490 | (H.2.3) | (J.1.8) |
| B1-5491 | (H.2.5) | (J.1.8) |
| B1-5492 | (H.2.7) | (J.1.8) |
| B1-5493 | (H.3.2) | (J.1.8) |
| B1-5494 | (H.3.4) | (J.1.8) |
| B1-5495 | (H.3.5) | (J.1.8) |
| B1-5496 | (H.3.10) | (J.1.8) |
| B1-5497 | (H.4.2) | (J.1.8) |
| B1-5498 | (H.4.9) | (J.1.8) |
| B1-5499 | (I.1.1) | (J.1.8) |
| B1-5500 | (I.2.1) | (J.1.8) |
| B1-5501 | (I.2.2) | (J.1.8) |
| B1-5502 | (J.1.2) | (J.1.8) |
| B1-5503 | (J.1.3) | (J.1.8) |
| B1-5504 | (J.1.4) | (J.1.8) |
| B1-5505 | (J.1.5) | (J.1.8) |

| | | |
|---|---|---|
| B1-5506 | (J.1.8) | (J.1.8) |
| B1-5507 | (J.1.12) | (J.1.8) |
| B1-5508 | (K.1.13) | (J.1.8) |
| B1-5509 | (K.1.47) | (J.1.8) |
| B1-5510 | (K.1.54) | (J.1.8) |
| B1-5511 | (L.1.5) | (J.1.8) |
| B1-5512 | (L.1.9) | (J.1.8) |
| B1-5513 | (L.1.12) | (J.1.8) |
| B1-5514 | (L.1.13) | (J.1.8) |
| B1-5515 | (L.1.17) | (J.1.8) |
| B1-5516 | (L.1.23) | (J.1.8) |
| B1-5517 | (L.1.32), | (J.1.8) |
| B1-5518 | (L.1.46) | (J.1.8) |
| B1-5519 | (M.1.6) | (J.1.8) |
| B1-5520 | (M.1.24) | (J.1.8) |
| B1-5521 | (M.1.25) | (J.1.8) |
| B1-5522 | (M.1.28) | (J.1.8) |
| B1-5523 | (M.1.29) | (J.1.8) |
| B1-5524 | (M.1.30) | (J.1.8) |
| B1-5525 | (N.7.3) | (J.1.8) |
| B1-5526 | (N.7.4) | (J.1.8) |
| B1-5527 | (N.7.5) | (J.1.8) |
| B1-5528 | (N.13.13) | (J.1.8) |
| B1-5529 | (O.2.4), | (J.1.8) |
| B1-5530 | (O.4.5) | (J.1.8) |
| B1-5531 | (O.4.7) | (J.1.8) |
| B1-5532 | (O.4.8) | (J.1.8) |
| B1-5533 | (O.5.1) | (J.1.8) |

| | | |
|---|---|---|
| B1-5534 | (O.26.2) | (J.1.8) |
| B1-5535 | (O.27.17) | (J.1.8) |
| B1-5536 | (A.1.1) | (J.1.12) |
| B1-5537 | (A.1.4) | (J.1.12) |
| B1-5538 | (A.1.8) | (J.1.12) |
| B1-5539 | (A.1.10) | (J.1.12) |
| B1-5540 | (A.1.11) | (J.1.12) |
| B1-5541 | (A.1.12) | (J.1.12) |
| B1-5542 | (A.1.14) | (J.1.12) |
| B1-5543 | (A.1.17) | (J.1.12) |
| B1-5544 | (A.1.19) | (J.1.12) |
| B1-5545 | (A.1.25) | (J.1.12) |
| B1-5546 | (A.1.34) | (J.1.12) |
| B1-5547 | (A.1.35) | (J.1.12) |
| B1-5548 | (A.1.38) | (J.1.12) |
| B1-5549 | (A.2.6) | (J.1.12) |
| B1-5550 | (A.3.2) | (J.1.12) |
| B1-5551 | (A.3.3) | (J.1.12) |
| B1-5552 | (A.3.4) | (J.1.12) |
| B1-5553 | (A.3.7) | (J.1.12) |
| B1-5554 | (A.3.8) | (J.1.12) |
| B1-5555 | (A.3.9) | (J.1.12) |
| B1-5556 | (A.3.10) | (J.1.12) |
| B1-5557 | (A.3.11) | (J.1.12) |
| B1-5558 | (A.3.12) | (J.1.12) |
| B1-5559 | (A.3.15) | (J.1.12) |
| B1-5560 | (A.3.16) | (J.1.12) |
| B1-5561 | (A.3.17) | (J.1.12) |

| | | |
|---|---|---|
| B1-5562 | (A.3.19) | (J.1.12) |
| B1-5563 | (A.3.21) | (J.1.12) |
| B1-5564 | (A.3.22) | (J.1.12) |
| B1-5565 | (A.3.23) | (J.1.12) |
| B1-5566 | (A.3.28) | (J.1.12) |
| B1-5567 | (A.3.31) | (J.1.12) |
| B1-5568 | (A.4.5) | (J.1.12) |
| B1-5569 | (B.1.4) | (J.1.12) |
| B1-5570 | (B.1.5) | (J.1.12) |
| B1-5571 | (B.1.8) | (J.1.12) |
| B1-5572 | (B.1.10) | (J.1.12) |
| B1-5573 | (B.1.12) | (J.1.12) |
| B1-5574 | (B.1.15) | (J.1.12) |
| B1-5575 | (B.1.17) | (J.1.12) |
| B1-5576 | (B.1.18) | (J.1.12) |
| B1-5577 | (B.1.21) | (J.1.12) |
| B1-5578 | (B.1.22) | (J.1.12) |
| B1-5579 | (B.1.23) | (J.1.12) |
| B1-5580 | (B.1.25) | (J.1.12) |
| B1-5581 | (B.1.26) | (J.1.12) |
| B1-5582 | (B.1.29) | (J.1.12) |
| B1-5583 | (B.1.38) | (J.1.12) |
| B1-5584 | (B.1.44) | (J.1.12) |
| B1-5585 | (B.1.46) | (J.1.12) |
| B1-5586 | (B.2.4) | (J.1.12) |
| B1-5587 | (B.3.1) | (J.1.12) |
| B1-5588 | (C.1.4) | (J.1.12) |
| B1-5589 | (C.1.5) | (J.1.12) |

| | | |
|---|---|---|
| B1-5590 | (C.2.1) | (J.1.12) |
| B1-5591 | (D.1.4) | (J.1.12) |
| B1-5592 | (D.1.5) | (J.1.12) |
| B1-5593 | (D.2.3) | (J.1.12) |
| B1-5594 | (D.2.5) | (J.1.12) |
| B1-5595 | (D.2.6) | (J.1.12) |
| B1-5596 | (E.1.1) | (J.1.12) |
| B1-5597 | (E.1.3) | (J.1.12) |
| B1-5598 | (E.2.2) | (J.1.12) |
| B1-5599 | (E.2.3), | (J.1.12) |
| B1-5600 | (F.1.2) | (J.1.12) |
| B1-5601 | (F.1.3) | (J.1.12) |
| B1-5602 | (F.1.5) | (J.1.12) |
| B1-5603 | (G.1.4) | (J.1.12) |
| B1-5604 | (G.3.1) | (J.1.12) |
| B1-5605 | (G.5.1) | (J.1.12) |
| B1-5606 | (H.1.2) | (J.1.12) |
| B1-5607 | (H.1.3) | (J.1.12) |
| B1-5608 | (H.1.4) | (J.1.12) |
| B1-5609 | (H.1.5) | (J.1.12) |
| B1-5610 | (H.1.6) | (J.1.12) |
| B1-5611 | (H.1.7) | (J.1.12) |
| B1-5612 | (H.2.2) | (J.1.12) |
| B1-5613 | (H.2.3) | (J.1.12) |
| B1-5614 | (H.2.5) | (J.1.12) |
| B1-5615 | (H.2.7) | (J.1.12) |
| B1-5616 | (H.3.2) | (J.1.12) |
| B1-5617 | (H.3.4) | (J.1.12) |

| | | |
|---|---|---|
| B1-5618 | (H.3.5) | (J.1.12) |
| B1-5619 | (H.3.10) | (J.1.12) |
| B1-5620 | (H.4.2) | (J.1.12) |
| B1-5621 | (H.4.9) | (J.1.12) |
| B1-5622 | (I.1.1) | (J.1.12) |
| B1-5623 | (I.2.1) | (J.1.12) |
| B1-5624 | (I.2.2) | (J.1.12) |
| B1-5625 | (J.1.2) | (J.1.12) |
| B1-5626 | (J.1.3) | (J.1.12) |
| B1-5627 | (J.1.4) | (J.1.12) |
| B1-5628 | (J.1.5) | (J.1.12) |
| B1-5629 | (J.1.8) | (J.1.12) |
| B1-5630 | (J.1.12) | (J.1.12) |
| B1-5631 | (K.1.13) | (J.1.12) |
| B1-5632 | (K.1.47) | (J.1.12) |
| B1-5633 | (K.1.54) | (J.1.12) |
| B1-5634 | (L.1.5) | (J.1.12) |
| B1-5635 | (L.1.9) | (J.1.12) |
| B1-5636 | (L.1.12) | (J.1.12) |
| B1-5637 | (L.1.13) | (J.1.12) |
| B1-5638 | (L.1.17) | (J.1.12) |
| B1-5639 | (L.1.23) | (J.1.12) |
| B1-5640 | (L.1.32), | (J.1.12) |
| B1-5641 | (L.1.46) | (J.1.12) |
| B1-5642 | (M.1.6) | (J.1.12) |
| B1-5643 | (M.1.24) | (J.1.12) |
| B1-5644 | (M.1.25) | (J.1.12) |
| B1-5645 | (M.1.28) | (J.1.12) |

| | | |
|---|---|---|
| B1-5646 | (M.1.29) | (J.1.12) |
| B1-5647 | (M.1.30) | (J.1.12) |
| B1-5648 | (N.7.3) | (J.1.12) |
| B1-5649 | (N.7.4) | (J.1.12) |
| B1-5650 | (N.7.5) | (J.1.12) |
| B1-5651 | (N.13.13) | (J.1.12) |
| B1-5652 | (O.2.4), | (J.1.12) |
| B1-5653 | (O.4.5) | (J.1.12) |
| B1-5654 | (O.4.7) | (J.1.12) |
| B1-5655 | (O.4.8) | (J.1.12) |
| B1-5656 | (O.5.1) | (J.1.12) |
| B1-5657 | (O.26.2) | (J.1.12) |
| B1-5658 | (O.27.17) | (J.1.12) |
| B1-5659 | (A.1.1) | (K.1.47) |
| B1-5660 | (A.1.4) | (K.1.47) |
| B1-5661 | (A.1.8) | (K.1.47) |
| B1-5662 | (A.1.10) | (K.1.47) |
| B1-5663 | (A.1.11) | (K.1.47) |
| B1-5664 | (A.1.12) | (K.1.47) |
| B1-5665 | (A.1.14) | (K.1.47) |
| B1-5666 | (A.1.17) | (K.1.47) |
| B1-5667 | (A.1.19) | (K.1.47) |
| B1-5668 | (A.1.25) | (K.1.47) |
| B1-5669 | (A.1.34) | (K.1.47) |
| B1-5670 | (A.1.35) | (K.1.47) |
| B1-5671 | (A.1.38) | (K.1.47) |
| B1-5672 | (A.2.6) | (K.1.47) |
| B1-5673 | (A.3.2) | (K.1.47) |

| | | |
|---|---|---|
| B1-5674 | (A.3.3) | (K.1.47) |
| B1-5675 | (A.3.4) | (K.1.47) |
| B1-5676 | (A.3.7) | (K.1.47) |
| B1-5677 | (A.3.8) | (K.1.47) |
| B1-5678 | (A.3.9) | (K.1.47) |
| B1-5679 | (A.3.10) | (K.1.47) |
| B1-5680 | (A.3.11) | (K.1.47) |
| B1-5681 | (A.3.12) | (K.1.47) |
| B1-5682 | (A.3.15) | (K.1.47) |
| B1-5683 | (A.3.16) | (K.1.47) |
| B1-5684 | (A.3.17) | (K.1.47) |
| B1-5685 | (A.3.19) | (K.1.47) |
| B1-5686 | (A.3.21) | (K.1.47) |
| B1-5687 | (A.3.22) | (K.1.47) |
| B1-5688 | (A.3.23) | (K.1.47) |
| B1-5689 | (A.3.28) | (K.1.47) |
| B1-5690 | (A.3.31) | (K.1.47) |
| B1-5691 | (A.4.5) | (K.1.47) |
| B1-5692 | (B.1.4) | (K.1.47) |
| B1-5693 | (B.1.5) | (K.1.47) |
| B1-5694 | (B.1.8) | (K.1.47) |
| B1-5695 | (B.1.10) | (K.1.47) |
| B1-5696 | (B.1.12) | (K.1.47) |
| B1-5697 | (B.1.15) | (K.1.47) |
| B1-5698 | (B.1.17) | (K.1.47) |
| B1-5699 | (B.1.18) | (K.1.47) |
| B1-5700 | (B.1.21) | (K.1.47) |
| B1-5701 | (B.1.22) | (K.1.47) |

| | | |
|---|---|---|
| B1-5702 | (B.1.23) | (K.1.47) |
| B1-5703 | (B.1.25) | (K.1.47) |
| B1-5704 | (B.1.26) | (K.1.47) |
| B1-5705 | (B.1.29) | (K.1.47) |
| B1-5706 | (B.1.38) | (K.1.47) |
| B1-5707 | (B.1.44) | (K.1.47) |
| B1-5708 | (B.1.46) | (K.1.47) |
| B1-5709 | (B.2.4) | (K.1.47) |
| B1-5710 | (B.3.1) | (K.1.47) |
| B1-5711 | (C.1.4) | (K.1.47) |
| B1-5712 | (C.1.5) | (K.1.47) |
| B1-5713 | (C.2.1) | (K.1.47) |
| B1-5714 | (D.1.4) | (K.1.47) |
| B1-5715 | (D.1.5) | (K.1.47) |
| B1-5716 | (D.2.3) | (K.1.47) |
| B1-5717 | (D.2.5) | (K.1.47) |
| B1-5718 | (D.2.6) | (K.1.47) |
| B1-5719 | (E.1.1) | (K.1.47) |
| B1-5720 | (E.1.3) | (K.1.47) |
| B1-5721 | (E.2.2) | (K.1.47) |
| B1-5722 | (E.2.3), | (K.1.47) |
| B1-5723 | (F.1.2) | (K.1.47) |
| B1-5724 | (F.1.3) | (K.1.47) |
| B1-5725 | (F.1.5) | (K.1.47) |
| B1-5726 | (G.1.4) | (K.1.47) |
| B1-5727 | (G.3.1) | (K.1.47) |
| B1-5728 | (G.5.1) | (K.1.47) |
| B1-5729 | (H.1.2) | (K.1.47) |

| | | |
|---|---|---|
| B1-5730 | (H.1.3) | (K.1.47) |
| B1-5731 | (H.1.4) | (K.1.47) |
| B1-5732 | (H.1.5) | (K.1.47) |
| B1-5733 | (H.1.6) | (K.1.47) |
| B1-5734 | (H.1.7) | (K.1.47) |
| B1-5735 | (H.2.2) | (K.1.47) |
| B1-5736 | (H.2.3) | (K.1.47) |
| B1-5737 | (H.2.5) | (K.1.47) |
| B1-5738 | (H.2.7) | (K.1.47) |
| B1-5739 | (H.3.2) | (K.1.47) |
| B1-5740 | (H.3.4) | (K.1.47) |
| B1-5741 | (H.3.5) | (K.1.47) |
| B1-5742 | (H.3.10) | (K.1.47) |
| B1-5743 | (H.4.2) | (K.1.47) |
| B1-5744 | (H.4.9) | (K.1.47) |
| B1-5745 | (I.1.1) | (K.1.47) |
| B1-5746 | (I.2.1) | (K.1.47) |
| B1-5747 | (I.2.2) | (K.1.47) |
| B1-5748 | (J.1.2) | (K.1.47) |
| B1-5749 | (J.1.3) | (K.1.47) |
| B1-5750 | (J.1.4) | (K.1.47) |
| B1-5751 | (J.1.5) | (K.1.47) |
| B1-5752 | (J.1.8) | (K.1.47) |
| B1-5753 | (J.1.12) | (K.1.47) |
| B1-5754 | (K.1.13) | (K.1.47) |
| B1-5755 | (K.1.47) | (K.1.47) |
| B1-5756 | (K.1.54) | (K.1.47) |
| B1-5757 | (L.1.5) | (K.1.47) |

| | | |
|---|---|---|
| B1-5758 | (L.1.9) | (K.1.47) |
| B1-5759 | (L.1.12) | (K.1.47) |
| B1-5760 | (L.1.13) | (K.1.47) |
| B1-5761 | (L.1.17) | (K.1.47) |
| B1-5762 | (L.1.23) | (K.1.47) |
| B1-5763 | (L.1.32), | (K.1.47) |
| B1-5764 | (L.1.46) | (K.1.47) |
| B1-5765 | (M.1.6) | (K.1.47) |
| B1-5766 | (M.1.24) | (K.1.47) |
| B1-5767 | (M.1.25) | (K.1.47) |
| B1-5768 | (M.1.28) | (K.1.47) |
| B1-5769 | (M.1.29) | (K.1.47) |
| B1-5770 | (M.1.30) | (K.1.47) |
| B1-5771 | (N.7.3) | (K.1.47) |
| B1-5772 | (N.7.4) | (K.1.47) |
| B1-5773 | (N.7.5) | (K.1.47) |
| B1-5774 | (N.13.13) | (K.1.47) |
| B1-5775 | (O.2.4), | (K.1.47) |
| B1-5776 | (O.4.5) | (K.1.47) |
| B1-5777 | (O.4.7) | (K.1.47) |
| B1-5778 | (O.4.8) | (K.1.47) |
| B1-5779 | (O.5.1) | (K.1.47) |
| B1-5780 | (O.26.2) | (K.1.47) |
| B1-5781 | (O.27.17) | (K.1.47) |
| B1-5782 | (A.1.1) | (K.1.54) |
| B1-5783 | (A.1.4) | (K.1.54) |
| B1-5784 | (A.1.8) | (K.1.54) |
| B1-5785 | (A.1.10) | (K.1.54) |

| | | |
|---|---|---|
| B1-5786 | (A.1.11) | (K.1.54) |
| B1-5787 | (A.1.12) | (K.1.54) |
| B1-5788 | (A.1.14) | (K.1.54) |
| B1-5789 | (A.1.17) | (K.1.54) |
| B1-5790 | (A.1.19) | (K.1.54) |
| B1-5791 | (A.1.25) | (K.1.54) |
| B1-5792 | (A.1.34) | (K.1.54) |
| B1-5793 | (A.1.35) | (K.1.54) |
| B1-5794 | (A.1.38) | (K.1.54) |
| B1-5795 | (A.2.6) | (K.1.54) |
| B1-5796 | (A.3.2) | (K.1.54) |
| B1-5797 | (A.3.3) | (K.1.54) |
| B1-5798 | (A.3.4) | (K.1.54) |
| B1-5799 | (A.3.7) | (K.1.54) |
| B1-5800 | (A.3.8) | (K.1.54) |
| B1-5801 | (A.3.9) | (K.1.54) |
| B1-5802 | (A.3.10) | (K.1.54) |
| B1-5803 | (A.3.11) | (K.1.54) |
| B1-5804 | (A.3.12) | (K.1.54) |
| B1-5805 | (A.3.15) | (K.1.54) |
| B1-5806 | (A.3.16) | (K.1.54) |
| B1-5807 | (A.3.17) | (K.1.54) |
| B1-5808 | (A.3.19) | (K.1.54) |
| B1-5809 | (A.3.21) | (K.1.54) |
| B1-5810 | (A.3.22) | (K.1.54) |
| B1-5811 | (A.3.23) | (K.1.54) |
| B1-5812 | (A.3.28) | (K.1.54) |
| B1-5813 | (A.3.31) | (K.1.54) |

| | | |
|---|---|---|
| B1-5814 | (A.4.5) | (K.1.54) |
| B1-5815 | (B.1.4) | (K.1.54) |
| B1-5816 | (B.1.5) | (K.1.54) |
| B1-5817 | (B.1.8) | (K.1.54) |
| B1-5818 | (B.1.10) | (K.1.54) |
| B1-5819 | (B.1.12) | (K.1.54) |
| B1-5820 | (B.1.15) | (K.1.54) |
| B1-5821 | (B.1.17) | (K.1.54) |
| B1-5822 | (B.1.18) | (K.1.54) |
| B1-5823 | (B.1.21) | (K.1.54) |
| B1-5824 | (B.1.22) | (K.1.54) |
| B1-5825 | (B.1.23) | (K.1.54) |
| B1-5826 | (B.1.25) | (K.1.54) |
| B1-5827 | (B.1.26) | (K.1.54) |
| B1-5828 | (B.1.29) | (K.1.54) |
| B1-5829 | (B.1.38) | (K.1.54) |
| B1-5830 | (B.1.44) | (K.1.54) |
| B1-5831 | (B.1.46) | (K.1.54) |
| B1-5832 | (B.2.4) | (K.1.54) |
| B1-5833 | (B.3.1) | (K.1.54) |
| B1-5834 | (C.1.4) | (K.1.54) |
| B1-5835 | (C.1.5) | (K.1.54) |
| B1-5836 | (C.2.1) | (K.1.54) |
| B1-5837 | (D.1.4) | (K.1.54) |
| B1-5838 | (D.1.5) | (K.1.54) |
| B1-5839 | (D.2.3) | (K.1.54) |
| B1-5840 | (D.2.5) | (K.1.54) |
| B1-5841 | (D.2.6) | (K.1.54) |

| | | |
|---|---|---|
| B1-5842 | (E.1.1) | (K.1.54) |
| B1-5843 | (E.1.3) | (K.1.54) |
| B1-5844 | (E.2.2) | (K.1.54) |
| B1-5845 | (E.2.3), | (K.1.54) |
| B1-5846 | (F.1.2) | (K.1.54) |
| B1-5847 | (F.1.3) | (K.1.54) |
| B1-5848 | (F.1.5) | (K.1.54) |
| B1-5849 | (G.1.4) | (K.1.54) |
| B1-5850 | (G.3.1) | (K.1.54) |
| B1-5851 | (G.5.1) | (K.1.54) |
| B1-5852 | (H.1.2) | (K.1.54) |
| B1-5853 | (H.1.3) | (K.1.54) |
| B1-5854 | (H.1.4) | (K.1.54) |
| B1-5855 | (H.1.5) | (K.1.54) |
| B1-5856 | (H.1.6) | (K.1.54) |
| B1-5857 | (H.1.7) | (K.1.54) |
| B1-5858 | (H.2.2) | (K.1.54) |
| B1-5859 | (H.2.3) | (K.1.54) |
| B1-5860 | (H.2.5) | (K.1.54) |
| B1-5861 | (H.2.7) | (K.1.54) |
| B1-5862 | (H.3.2) | (K.1.54) |
| B1-5863 | (H.3.4) | (K.1.54) |
| B1-5864 | (H.3.5) | (K.1.54) |
| B1-5865 | (H.3.10) | (K.1.54) |
| B1-5866 | (H.4.2) | (K.1.54) |
| B1-5867 | (H.4.9) | (K.1.54) |
| B1-5868 | (I.1.1) | (K.1.54) |
| B1-5869 | (I.2.1) | (K.1.54) |

| | | |
|---|---|---|
| B1-5870 | (I.2.2) | (K.1.54) |
| B1-5871 | (J.1.2) | (K.1.54) |
| B1-5872 | (J.1.3) | (K.1.54) |
| B1-5873 | (J.1.4) | (K.1.54) |
| B1-5874 | (J.1.5) | (K.1.54) |
| B1-5875 | (J.1.8) | (K.1.54) |
| B1-5876 | (J.1.12) | (K.1.54) |
| B1-5877 | (K.1.13) | (K.1.54) |
| B1-5878 | (K.1.47) | (K.1.54) |
| B1-5879 | (K.1.54) | (K.1.54) |
| B1-5880 | (L.1.5) | (K.1.54) |
| B1-5881 | (L.1.9) | (K.1.54) |
| B1-5882 | (L.1.12) | (K.1.54) |
| B1-5883 | (L.1.13) | (K.1.54) |
| B1-5884 | (L.1.17) | (K.1.54) |
| B1-5885 | (L.1.23) | (K.1.54) |
| B1-5886 | (L.1.32), | (K.1.54) |
| B1-5887 | (L.1.46) | (K.1.54) |
| B1-5888 | (M.1.6) | (K.1.54) |
| B1-5889 | (M.1.24) | (K.1.54) |
| B1-5890 | (M.1.25) | (K.1.54) |
| B1-5891 | (M.1.28) | (K.1.54) |
| B1-5892 | (M.1.29) | (K.1.54) |
| B1-5893 | (M.1.30) | (K.1.54) |
| B1-5894 | (N.7.3) | (K.1.54) |
| B1-5895 | (N.7.4) | (K.1.54) |
| B1-5896 | (N.7.5) | (K.1.54) |
| B1-5897 | (N.13.13) | (K.1.54) |

| | | |
|---|---|---|
| B1-5898 | (O.2.4), | (K.1.54) |
| B1-5899 | (O.4.5) | (K.1.54) |
| B1-5900 | (O.4.7) | (K.1.54) |
| B1-5901 | (O.4.8) | (K.1.54) |
| B1-5902 | (O.5.1) | (K.1.54) |
| B1-5903 | (O.26.2) | (K.1.54) |
| B1-5904 | (O.27.17) | (K.1.54) |
| B1-5905 | (A.1.1) | (M.1.24) |
| B1-5906 | (A.1.4) | (M.1.24) |
| B1-5907 | (A.1.8) | (M.1.24) |
| B1-5908 | (A.1.10) | (M.1.24) |
| B1-5909 | (A.1.11) | (M.1.24) |
| B1-5910 | (A.1.12) | (M.1.24) |
| B1-5911 | (A.1.14) | (M.1.24) |
| B1-5912 | (A.1.17) | (M.1.24) |
| B1-5913 | (A.1.19) | (M.1.24) |
| B1-5914 | (A.1.25) | (M.1.24) |
| B1-5915 | (A.1.34) | (M.1.24) |
| B1-5916 | (A.1.35) | (M.1.24) |
| B1-5917 | (A.1.38) | (M.1.24) |
| B1-5918 | (A.2.6) | (M.1.24) |
| B1-5919 | (A.3.2) | (M.1.24) |
| B1-5920 | (A.3.3) | (M.1.24) |
| B1-5921 | (A.3.4) | (M.1.24) |
| B1-5922 | (A.3.7) | (M.1.24) |
| B1-5923 | (A.3.8) | (M.1.24) |
| B1-5924 | (A.3.9) | (M.1.24) |
| B1-5925 | (A.3.10) | (M.1.24) |

| | | |
|---|---|---|
| B1-5926 | (A.3.11) | (M.1.24) |
| B1-5927 | (A.3.12) | (M.1.24) |
| B1-5928 | (A.3.15) | (M.1.24) |
| B1-5929 | (A.3.16) | (M.1.24) |
| B1-5930 | (A.3.17) | (M.1.24) |
| B1-5931 | (A.3.19) | (M.1.24) |
| B1-5932 | (A.3.21) | (M.1.24) |
| B1-5933 | (A.3.22) | (M.1.24) |
| B1-5934 | (A.3.23) | (M.1.24) |
| B1-5935 | (A.3.28) | (M.1.24) |
| B1-5936 | (A.3.31) | (M.1.24) |
| B1-5937 | (A.4.5) | (M.1.24) |
| B1-5938 | (B.1.4) | (M.1.24) |
| B1-5939 | (B.1.5) | (M.1.24) |
| B1-5940 | (B.1.8) | (M.1.24) |
| B1-5941 | (B.1.10) | (M.1.24) |
| B1-5942 | (B.1.12) | (M.1.24) |
| B1-5943 | (B.1.15) | (M.1.24) |
| B1-5944 | (B.1.17) | (M.1.24) |
| B1-5945 | (B.1.18) | (M.1.24) |
| B1-5946 | (B.1.21) | (M.1.24) |
| B1-5947 | (B.1.22) | (M.1.24) |
| B1-5948 | (B.1.23) | (M.1.24) |
| B1-5949 | (B.1.25) | (M.1.24) |
| B1-5950 | (B.1.26) | (M.1.24) |
| B1-5951 | (B.1.29) | (M.1.24) |
| B1-5952 | (B.1.38) | (M.1.24) |
| B1-5953 | (B.1.44) | (M.1.24) |

| | | |
|---|---|---|
| B1-5954 | (B.1.46) | (M.1.24) |
| B1-5955 | (B.2.4) | (M.1.24) |
| B1-5956 | (B.3.1) | (M.1.24) |
| B1-5957 | (C.1.4) | (M.1.24) |
| B1-5958 | (C.1.5) | (M.1.24) |
| B1-5959 | (C.2.1) | (M.1.24) |
| B1-5960 | (D.1.4) | (M.1.24) |
| B1-5961 | (D.1.5) | (M.1.24) |
| B1-5962 | (D.2.3) | (M.1.24) |
| B1-5963 | (D.2.5) | (M.1.24) |
| B1-5964 | (D.2.6) | (M.1.24) |
| B1-5965 | (E.1.1) | (M.1.24) |
| B1-5966 | (E.1.3) | (M.1.24) |
| B1-5967 | (E.2.2) | (M.1.24) |
| B1-5968 | (E.2.3), | (M.1.24) |
| B1-5969 | (F.1.2) | (M.1.24) |
| B1-5970 | (F.1.3) | (M.1.24) |
| B1-5971 | (F.1.5) | (M.1.24) |
| B1-5972 | (G.1.4) | (M.1.24) |
| B1-5973 | (G.3.1) | (M.1.24) |
| B1-5974 | (G.5.1) | (M.1.24) |
| B1-5975 | (H.1.2) | (M.1.24) |
| B1-5976 | (H.1.3) | (M.1.24) |
| B1-5977 | (H.1.4) | (M.1.24) |
| B1-5978 | (H.1.5) | (M.1.24) |
| B1-5979 | (H.1.6) | (M.1.24) |
| B1-5980 | (H.1.7) | (M.1.24) |
| B1-5981 | (H.2.2) | (M.1.24) |

| | | |
|---|---|---|
| B1-5982 | (H.2.3) | (M.1.24) |
| B1-5983 | (H.2.5) | (M.1.24) |
| B1-5984 | (H.2.7) | (M.1.24) |
| B1-5985 | (H.3.2) | (M.1.24) |
| B1-5986 | (H.3.4) | (M.1.24) |
| B1-5987 | (H.3.5) | (M.1.24) |
| B1-5988 | (H.3.10) | (M.1.24) |
| B1-5989 | (H.4.2) | (M.1.24) |
| B1-5990 | (H.4.9) | (M.1.24) |
| B1-5991 | (I.1.1) | (M.1.24) |
| B1-5992 | (I.2.1) | (M.1.24) |
| B1-5993 | (I.2.2) | (M.1.24) |
| B1-5994 | (J.1.2) | (M.1.24) |
| B1-5995 | (J.1.3) | (M.1.24) |
| B1-5996 | (J.1.4) | (M.1.24) |
| B1-5997 | (J.1.5) | (M.1.24) |
| B1-5998 | (J.1.8) | (M.1.24) |
| B1-5999 | (J.1.12) | (M.1.24) |
| B1-6000 | (K.1.13) | (M.1.24) |
| B1-6001 | (K.1.47) | (M.1.24) |
| B1-6002 | (K.1.54) | (M.1.24) |
| B1-6003 | (L.1.5) | (M.1.24) |
| B1-6004 | (L.1.9) | (M.1.24) |
| B1-6005 | (L.1.12) | (M.1.24) |
| B1-6006 | (L.1.13) | (M.1.24) |
| B1-6007 | (L.1.17) | (M.1.24) |
| B1-6008 | (L.1.23) | (M.1.24) |
| B1-6009 | (L.1.32), | (M.1.24) |

| | | |
|---|---|---|
| B1-6010 | (L.1.46) | (M.1.24) |
| B1-6011 | (M.1.6) | (M.1.24) |
| B1-6012 | (M.1.24) | (M.1.24) |
| B1-6013 | (M.1.25) | (M.1.24) |
| B1-6014 | (M.1.28) | (M.1.24) |
| B1-6015 | (M.1.29) | (M.1.24) |
| B1-6016 | (M.1.30) | (M.1.24) |
| B1-6017 | (N.7.3) | (M.1.24) |
| B1-6018 | (N.7.4) | (M.1.24) |
| B1-6019 | (N.7.5) | (M.1.24) |
| B1-6020 | (N.13.13) | (M.1.24) |
| B1-6021 | (O.2.4), | (M.1.24) |
| B1-6022 | (O.4.5) | (M.1.24) |
| B1-6023 | (O.4.7) | (M.1.24) |
| B1-6024 | (O.4.8) | (M.1.24) |
| B1-6025 | (O.5.1) | (M.1.24) |
| B1-6026 | (O.26.2) | (M.1.24) |
| B1-6027 | (O.27.17) | (M.1.24) |
| B1-6028 | (A.1.1) | (M.1.25) |
| B1-6029 | (A.1.4) | (M.1.25) |
| B1-6030 | (A.1.8) | (M.1.25) |
| B1-6031 | (A.1.10) | (M.1.25) |
| B1-6032 | (A.1.11) | (M.1.25) |
| B1-6033 | (A.1.12) | (M.1.25) |
| B1-6034 | (A.1.14) | (M.1.25) |
| B1-6035 | (A.1.17) | (M.1.25) |
| B1-6036 | (A.1.19) | (M.1.25) |
| B1-6037 | (A.1.25) | (M.1.25) |

| | | |
|---|---|---|
| B1-6038 | (A.1.34) | (M.1.25) |
| B1-6039 | (A.1.35) | (M.1.25) |
| B1-6040 | (A.1.38) | (M.1.25) |
| B1-6041 | (A.2.6) | (M.1.25) |
| B1-6042 | (A.3.2) | (M.1.25) |
| B1-6043 | (A.3.3) | (M.1.25) |
| B1-6044 | (A.3.4) | (M.1.25) |
| B1-6045 | (A.3.7) | (M.1.25) |
| B1-6046 | (A.3.8) | (M.1.25) |
| B1-6047 | (A.3.9) | (M.1.25) |
| B1-6048 | (A.3.10) | (M.1.25) |
| B1-6049 | (A.3.11) | (M.1.25) |
| B1-6050 | (A.3.12) | (M.1.25) |
| B1-6051 | (A.3.15) | (M.1.25) |
| B1-6052 | (A.3.16) | (M.1.25) |
| B1-6053 | (A.3.17) | (M.1.25) |
| B1-6054 | (A.3.19) | (M.1.25) |
| B1-6055 | (A.3.21) | (M.1.25) |
| B1-6056 | (A.3.22) | (M.1.25) |
| B1-6057 | (A.3.23) | (M.1.25) |
| B1-6058 | (A.3.28) | (M.1.25) |
| B1-6059 | (A.3.31) | (M.1.25) |
| B1-6060 | (A.4.5) | (M.1.25) |
| B1-6061 | (B.1.4) | (M.1.25) |
| B1-6062 | (B.1.5) | (M.1.25) |
| B1-6063 | (B.1.8) | (M.1.25) |
| B1-6064 | (B.1.10) | (M.1.25) |
| B1-6065 | (B.1.12) | (M.1.25) |

| | | |
|---|---|---|
| B1-6066 | (B.1.15) | (M.1.25) |
| B1-6067 | (B.1.17) | (M.1.25) |
| B1-6068 | (B.1.18) | (M.1.25) |
| B1-6069 | (B.1.21) | (M.1.25) |
| B1-6070 | (B.1.22) | (M.1.25) |
| B1-6071 | (B.1.23) | (M.1.25) |
| B1-6072 | (B.1.25) | (M.1.25) |
| B1-6073 | (B.1.26) | (M.1.25) |
| B1-6074 | (B.1.29) | (M.1.25) |
| B1-6075 | (B.1.38) | (M.1.25) |
| B1-6076 | (B.1.44) | (M.1.25) |
| B1-6077 | (B.1.46) | (M.1.25) |
| B1-6078 | (B.2.4) | (M.1.25) |
| B1-6079 | (B.3.1) | (M.1.25) |
| B1-6080 | (C.1.4) | (M.1.25) |
| B1-6081 | (C.1.5) | (M.1.25) |
| B1-6082 | (C.2.1) | (M.1.25) |
| B1-6083 | (D.1.4) | (M.1.25) |
| B1-6084 | (D.1.5) | (M.1.25) |
| B1-6085 | (D.2.3) | (M.1.25) |
| B1-6086 | (D.2.5) | (M.1.25) |
| B1-6087 | (D.2.6) | (M.1.25) |
| B1-6088 | (E.1.1) | (M.1.25) |
| B1-6089 | (E.1.3) | (M.1.25) |
| B1-6090 | (E.2.2) | (M.1.25) |
| B1-6091 | (E.2.3), | (M.1.25) |
| B1-6092 | (F.1.2) | (M.1.25) |
| B1-6093 | (F.1.3) | (M.1.25) |

| | | |
|---|---|---|
| B1-6094 | (F.1.5) | (M.1.25) |
| B1-6095 | (G.1.4) | (M.1.25) |
| B1-6096 | (G.3.1) | (M.1.25) |
| B1-6097 | (G.5.1) | (M.1.25) |
| B1-6098 | (H.1.2) | (M.1.25) |
| B1-6099 | (H.1.3) | (M.1.25) |
| B1-6100 | (H.1.4) | (M.1.25) |
| B1-6101 | (H.1.5) | (M.1.25) |
| B1-6102 | (H.1.6) | (M.1.25) |
| B1-6103 | (H.1.7) | (M.1.25) |
| B1-6104 | (H.2.2) | (M.1.25) |
| B1-6105 | (H.2.3) | (M.1.25) |
| B1-6106 | (H.2.5) | (M.1.25) |
| B1-6107 | (H.2.7) | (M.1.25) |
| B1-6108 | (H.3.2) | (M.1.25) |
| B1-6109 | (H.3.4) | (M.1.25) |
| B1-6110 | (H.3.5) | (M.1.25) |
| B1-6111 | (H.3.10) | (M.1.25) |
| B1-6112 | (H.4.2) | (M.1.25) |
| B1-6113 | (H.4.9) | (M.1.25) |
| B1-6114 | (I.1.1) | (M.1.25) |
| B1-6115 | (I.2.1) | (M.1.25) |
| B1-6116 | (I.2.2) | (M.1.25) |
| B1-6117 | (J.1.2) | (M.1.25) |
| B1-6118 | (J.1.3) | (M.1.25) |
| B1-6119 | (J.1.4) | (M.1.25) |
| B1-6120 | (J.1.5) | (M.1.25) |
| B1-6121 | (J.1.8) | (M.1.25) |

| | | |
|---|---|---|
| B1-6122 | (J.1.12) | (M.1.25) |
| B1-6123 | (K.1.13) | (M.1.25) |
| B1-6124 | (K.1.47) | (M.1.25) |
| B1-6125 | (K.1.54) | (M.1.25) |
| B1-6126 | (L.1.5) | (M.1.25) |
| B1-6127 | (L.1.9) | (M.1.25) |
| B1-6128 | (L.1.12) | (M.1.25) |
| B1-6129 | (L.1.13) | (M.1.25) |
| B1-6130 | (L.1.17) | (M.1.25) |
| B1-6131 | (L.1.23) | (M.1.25) |
| B1-6132 | (L.1.32), | (M.1.25) |
| B1-6133 | (L.1.46) | (M.1.25) |
| B1-6134 | (M.1.6) | (M.1.25) |
| B1-6135 | (M.1.24) | (M.1.25) |
| B1-6136 | (M.1.25) | (M.1.25) |
| B1-6137 | (M.1.28) | (M.1.25) |
| B1-6138 | (M.1.29) | (M.1.25) |
| B1-6139 | (M.1.30) | (M.1.25) |
| B1-6140 | (N.7.3) | (M.1.25) |
| B1-6141 | (N.7.4) | (M.1.25) |
| B1-6142 | (N.7.5) | (M.1.25) |
| B1-6143 | (N.13.13) | (M.1.25) |
| B1-6144 | (O.2.4), | (M.1.25) |
| B1-6145 | (O.4.5) | (M.1.25) |
| B1-6146 | (O.4.7) | (M.1.25) |
| B1-6147 | (O.4.8) | (M.1.25) |
| B1-6148 | (O.5.1) | (M.1.25) |
| B1-6149 | (O.26.2) | (M.1.25) |

| | | |
|---|---|---|
| B1-6150 | (O.27.17) | (M.1.25) |
| B1-6151 | (A.1.1) | (M.1.29) |
| B1-6152 | (A.1.4) | (M.1.29) |
| B1-6153 | (A.1.8) | (M.1.29) |
| B1-6154 | (A.1.10) | (M.1.29) |
| B1-6155 | (A.1.11) | (M.1.29) |
| B1-6156 | (A.1.12) | (M.1.29) |
| B1-6157 | (A.1.14) | (M.1.29) |
| B1-6158 | (A.1.17) | (M.1.29) |
| B1-6159 | (A.1.19) | (M.1.29) |
| B1-6160 | (A.1.25) | (M.1.29) |
| B1-6161 | (A.1.34) | (M.1.29) |
| B1-6162 | (A.1.35) | (M.1.29) |
| B1-6163 | (A.1.38) | (M.1.29) |
| B1-6164 | (A.2.6) | (M.1.29) |
| B1-6165 | (A.3.2) | (M.1.29) |
| B1-6166 | (A.3.3) | (M.1.29) |
| B1-6167 | (A.3.4) | (M.1.29) |
| B1-6168 | (A.3.7) | (M.1.29) |
| B1-6169 | (A.3.8) | (M.1.29) |
| B1-6170 | (A.3.9) | (M.1.29) |
| B1-6171 | (A.3.10) | (M.1.29) |
| B1-6172 | (A.3.11) | (M.1.29) |
| B1-6173 | (A.3.12) | (M.1.29) |
| B1-6174 | (A.3.15) | (M.1.29) |
| B1-6175 | (A.3.16) | (M.1.29) |
| B1-6176 | (A.3.17) | (M.1.29) |
| B1-6177 | (A.3.19) | (M.1.29) |

| | | |
|---|---|---|
| B1-6178 | (A.3.21) | (M.1.29) |
| B1-6179 | (A.3.22) | (M.1.29) |
| B1-6180 | (A.3.23) | (M.1.29) |
| B1-6181 | (A.3.28) | (M.1.29) |
| B1-6182 | (A.3.31) | (M.1.29) |
| B1-6183 | (A.4.5) | (M.1.29) |
| B1-6184 | (B.1.4) | (M.1.29) |
| B1-6185 | (B.1.5) | (M.1.29) |
| B1-6186 | (B.1.8) | (M.1.29) |
| B1-6187 | (B.1.10) | (M.1.29) |
| B1-6188 | (B.1.12) | (M.1.29) |
| B1-6189 | (B.1.15) | (M.1.29) |
| B1-6190 | (B.1.17) | (M.1.29) |
| B1-6191 | (B.1.18) | (M.1.29) |
| B1-6192 | (B.1.21) | (M.1.29) |
| B1-6193 | (B.1.22) | (M.1.29) |
| B1-6194 | (B.1.23) | (M.1.29) |
| B1-6195 | (B.1.25) | (M.1.29) |
| B1-6196 | (B.1.26) | (M.1.29) |
| B1-6197 | (B.1.29) | (M.1.29) |
| B1-6198 | (B.1.38) | (M.1.29) |
| B1-6199 | (B.1.44) | (M.1.29) |
| B1-6200 | (B.1.46) | (M.1.29) |
| B1-6201 | (B.2.4) | (M.1.29) |
| B1-6202 | (B.3.1) | (M.1.29) |
| B1-6203 | (C.1.4) | (M.1.29) |
| B1-6204 | (C.1.5) | (M.1.29) |
| B1-6205 | (C.2.1) | (M.1.29) |

| | | |
|---|---|---|
| B1-6206 | (D.1.4) | (M.1.29) |
| B1-6207 | (D.1.5) | (M.1.29) |
| B1-6208 | (D.2.3) | (M.1.29) |
| B1-6209 | (D.2.5) | (M.1.29) |
| B1-6210 | (D.2.6) | (M.1.29) |
| B1-6211 | (E.1.1) | (M.1.29) |
| B1-6212 | (E.1.3) | (M.1.29) |
| B1-6213 | (E.2.2) | (M.1.29) |
| B1-6214 | (E.2.3), | (M.1.29) |
| B1-6215 | (F.1.2) | (M.1.29) |
| B1-6216 | (F.1.3) | (M.1.29) |
| B1-6217 | (F.1.5) | (M.1.29) |
| B1-6218 | (G.1.4) | (M.1.29) |
| B1-6219 | (G.3.1) | (M.1.29) |
| B1-6220 | (G.5.1) | (M.1.29) |
| B1-6221 | (H.1.2) | (M.1.29) |
| B1-6222 | (H.1.3) | (M.1.29) |
| B1-6223 | (H.1.4) | (M.1.29) |
| B1-6224 | (H.1.5) | (M.1.29) |
| B1-6225 | (H.1.6) | (M.1.29) |
| B1-6226 | (H.1.7) | (M.1.29) |
| B1-6227 | (H.2.2) | (M.1.29) |
| B1-6228 | (H.2.3) | (M.1.29) |
| B1-6229 | (H.2.5) | (M.1.29) |
| B1-6230 | (H.2.7) | (M.1.29) |
| B1-6231 | (H.3.2) | (M.1.29) |
| B1-6232 | (H.3.4) | (M.1.29) |
| B1-6233 | (H.3.5) | (M.1.29) |

| | | |
|---|---|---|
| B1-6234 | (H.3.10) | (M.1.29) |
| B1-6235 | (H.4.2) | (M.1.29) |
| B1-6236 | (H.4.9) | (M.1.29) |
| B1-6237 | (I.1.1) | (M.1.29) |
| B1-6238 | (I.2.1) | (M.1.29) |
| B1-6239 | (I.2.2) | (M.1.29) |
| B1-6240 | (J.1.2) | (M.1.29) |
| B1-6241 | (J.1.3) | (M.1.29) |
| B1-6242 | (J.1.4) | (M.1.29) |
| B1-6243 | (J.1.5) | (M.1.29) |
| B1-6244 | (J.1.8) | (M.1.29) |
| B1-6245 | (J.1.12) | (M.1.29) |
| B1-6246 | (K.1.13) | (M.1.29) |
| B1-6247 | (K.1.47) | (M.1.29) |
| B1-6248 | (K.1.54) | (M.1.29) |
| B1-6249 | (L.1.5) | (M.1.29) |
| B1-6250 | (L.1.9) | (M.1.29) |
| B1-6251 | (L.1.12) | (M.1.29) |
| B1-6252 | (L.1.13) | (M.1.29) |
| B1-6253 | (L.1.17) | (M.1.29) |
| B1-6254 | (L.1.23) | (M.1.29) |
| B1-6255 | (L.1.32), | (M.1.29) |
| B1-6256 | (L.1.46) | (M.1.29) |
| B1-6257 | (M.1.6) | (M.1.29) |
| B1-6258 | (M.1.24) | (M.1.29) |
| B1-6259 | (M.1.25) | (M.1.29) |
| B1-6260 | (M.1.28) | (M.1.29) |
| B1-6261 | (M.1.29) | (M.1.29) |
| B1-6262 | (M.1.30) | (M.1.29) |
| B1-6263 | (N.7.3) | (M.1.29) |
| B1-6264 | (N.7.4) | (M.1.29) |
| B1-6265 | (N.7.5) | (M.1.29) |
| B1-6266 | (N.13.13) | (M.1.29) |
| B1-6267 | (O.2.4), | (M.1.29) |
| B1-6268 | (O.4.5) | (M.1.29) |
| B1-6269 | (O.4.7) | (M.1.29) |
| B1-6270 | (O.4.8) | (M.1.29) |
| B1-6271 | (O.5.1) | (M.1.29) |
| B1-6272 | (O.26.2) | (M.1.29) |
| B1-6273 | (O.27.17) | (M.1.29) |
| B1-6274 | (A.1.1) | (M.1.30) |
| B1-6275 | (A.1.4) | (M.1.30) |
| B1-6276 | (A.1.8) | (M.1.30) |
| B1-6277 | (A.1.10) | (M.1.30) |
| B1-6278 | (A.1.11) | (M.1.30) |
| B1-6279 | (A.1.12) | (M.1.30) |
| B1-6280 | (A.1.14) | (M.1.30) |
| B1-6281 | (A.1.17) | (M.1.30) |
| B1-6282 | (A.1.19) | (M.1.30) |
| B1-6283 | (A.1.25) | (M.1.30) |
| B1-6284 | (A.1.34) | (M.1.30) |
| B1-6285 | (A.1.35) | (M.1.30) |
| B1-6286 | (A.1.38) | (M.1.30) |
| B1-6287 | (A.2.6) | (M.1.30) |
| B1-6288 | (A.3.2) | (M.1.30) |
| B1-6289 | (A.3.3) | (M.1.30) |

| | | |
|---|---|---|
| B1-6290 | (A.3.4) | (M.1.30) |
| B1-6291 | (A.3.7) | (M.1.30) |
| B1-6292 | (A.3.8) | (M.1.30) |
| B1-6293 | (A.3.9) | (M.1.30) |
| B1-6294 | (A.3.10) | (M.1.30) |
| B1-6295 | (A.3.11) | (M.1.30) |
| B1-6296 | (A.3.12) | (M.1.30) |
| B1-6297 | (A.3.15) | (M.1.30) |
| B1-6298 | (A.3.16) | (M.1.30) |
| B1-6299 | (A.3.17) | (M.1.30) |
| B1-6300 | (A.3.19) | (M.1.30) |
| B1-6301 | (A.3.21) | (M.1.30) |
| B1-6302 | (A.3.22) | (M.1.30) |
| B1-6303 | (A.3.23) | (M.1.30) |
| B1-6304 | (A.3.28) | (M.1.30) |
| B1-6305 | (A.3.31) | (M.1.30) |
| B1-6306 | (A.4.5) | (M.1.30) |
| B1-6307 | (B.1.4) | (M.1.30) |
| B1-6308 | (B.1.5) | (M.1.30) |
| B1-6309 | (B.1.8) | (M.1.30) |
| B1-6310 | (B.1.10) | (M.1.30) |
| B1-6311 | (B.1.12) | (M.1.30) |
| B1-6312 | (B.1.15) | (M.1.30) |
| B1-6313 | (B.1.17) | (M.1.30) |
| B1-6314 | (B.1.18) | (M.1.30) |
| B1-6315 | (B.1.21) | (M.1.30) |
| B1-6316 | (B.1.22) | (M.1.30) |
| B1-6317 | (B.1.23) | (M.1.30) |

| | | |
|---|---|---|
| B1-6318 | (B.1.25) | (M.1.30) |
| B1-6319 | (B.1.26) | (M.1.30) |
| B1-6320 | (B.1.29) | (M.1.30) |
| B1-6321 | (B.1.38) | (M.1.30) |
| B1-6322 | (B.1.44) | (M.1.30) |
| B1-6323 | (B.1.46) | (M.1.30) |
| B1-6324 | (B.2.4) | (M.1.30) |
| B1-6325 | (B.3.1) | (M.1.30) |
| B1-6326 | (C.1.4) | (M.1.30) |
| B1-6327 | (C.1.5) | (M.1.30) |
| B1-6328 | (C.2.1) | (M.1.30) |
| B1-6329 | (D.1.4) | (M.1.30) |
| B1-6330 | (D.1.5) | (M.1.30) |
| B1-6331 | (D.2.3) | (M.1.30) |
| B1-6332 | (D.2.5) | (M.1.30) |
| B1-6333 | (D.2.6) | (M.1.30) |
| B1-6334 | (E.1.1) | (M.1.30) |
| B1-6335 | (E.1.3) | (M.1.30) |
| B1-6336 | (E.2.2) | (M.1.30) |
| B1-6337 | (E.2.3), | (M.1.30) |
| B1-6338 | (F.1.2) | (M.1.30) |
| B1-6339 | (F.1.3) | (M.1.30) |
| B1-6340 | (F.1.5) | (M.1.30) |
| B1-6341 | (G.1.4) | (M.1.30) |
| B1-6342 | (G.3.1) | (M.1.30) |
| B1-6343 | (G.5.1) | (M.1.30) |
| B1-6344 | (H.1.2) | (M.1.30) |
| B1-6345 | (H.1.3) | (M.1.30) |

| | | |
|---|---|---|
| B1-6346 | (H.1.4) | (M.1.30) |
| B1-6347 | (H.1.5) | (M.1.30) |
| B1-6348 | (H.1.6) | (M.1.30) |
| B1-6349 | (H.1.7) | (M.1.30) |
| B1-6350 | (H.2.2) | (M.1.30) |
| B1-6351 | (H.2.3) | (M.1.30) |
| B1-6352 | (H.2.5) | (M.1.30) |
| B1-6353 | (H.2.7) | (M.1.30) |
| B1-6354 | (H.3.2) | (M.1.30) |
| B1-6355 | (H.3.4) | (M.1.30) |
| B1-6356 | (H.3.5) | (M.1.30) |
| B1-6357 | (H.3.10) | (M.1.30) |
| B1-6358 | (H.4.2) | (M.1.30) |
| B1-6359 | (H.4.9) | (M.1.30) |
| B1-6360 | (I.1.1) | (M.1.30) |
| B1-6361 | (I.2.1) | (M.1.30) |
| B1-6362 | (I.2.2) | (M.1.30) |
| B1-6363 | (J.1.2) | (M.1.30) |
| B1-6364 | (J.1.3) | (M.1.30) |
| B1-6365 | (J.1.4) | (M.1.30) |
| B1-6366 | (J.1.5) | (M.1.30) |
| B1-6367 | (J.1.8) | (M.1.30) |
| B1-6368 | (J.1.12) | (M.1.30) |
| B1-6369 | (K.1.13) | (M.1.30) |
| B1-6370 | (K.1.47) | (M.1.30) |
| B1-6371 | (K.1.54) | (M.1.30) |
| B1-6372 | (L.1.5) | (M.1.30) |
| B1-6373 | (L.1.9) | (M.1.30) |

| | | |
|---|---|---|
| B1-6374 | (L.1.12) | (M.1.30) |
| B1-6375 | (L.1.13) | (M.1.30) |
| B1-6376 | (L.1.17) | (M.1.30) |
| B1-6377 | (L.1.23) | (M.1.30) |
| B1-6378 | (L.1.32), | (M.1.30) |
| B1-6379 | (L.1.46) | (M.1.30) |
| B1-6380 | (M.1.6) | (M.1.30) |
| B1-6381 | (M.1.24) | (M.1.30) |
| B1-6382 | (M.1.25) | (M.1.30) |
| B1-6383 | (M.1.28) | (M.1.30) |
| B1-6384 | (M.1.29) | (M.1.30) |
| B1-6385 | (M.1.30) | (M.1.30) |
| B1-6386 | (N.7.3) | (M.1.30) |
| B1-6387 | (N.7.4) | (M.1.30) |
| B1-6388 | (N.7.5) | (M.1.30) |
| B1-6389 | (N.13.13) | (M.1.30) |
| B1-6390 | (O.2.4), | (M.1.30) |
| B1-6391 | (O.4.5) | (M.1.30) |
| B1-6392 | (O.4.7) | (M.1.30) |
| B1-6393 | (O.4.8) | (M.1.30) |
| B1-6394 | (O.5.1) | (M.1.30) |
| B1-6395 | (O.26.2) | (M.1.30) |
| B1-6396 | (O.27.17) | (M.1.30) |
| B1-6397 | (A.1.1) | (N.7.3) |
| B1-6398 | (A.1.4) | (N.7.3) |
| B1-6399 | (A.1.8) | (N.7.3) |
| B1-6400 | (A.1.10) | (N.7.3) |
| B1-6401 | (A.1.11) | (N.7.3) |

| | | |
|---|---|---|
| B1-6402 | (A.1.12) | (N.7.3) |
| B1-6403 | (A.1.14) | (N.7.3) |
| B1-6404 | (A.1.17) | (N.7.3) |
| B1-6405 | (A.1.19) | (N.7.3) |
| B1-6406 | (A.1.25) | (N.7.3) |
| B1-6407 | (A.1.34) | (N.7.3) |
| B1-6408 | (A.1.35) | (N.7.3) |
| B1-6409 | (A.1.38) | (N.7.3) |
| B1-6410 | (A.2.6) | (N.7.3) |
| B1-6411 | (A.3.2) | (N.7.3) |
| B1-6412 | (A.3.3) | (N.7.3) |
| B1-6413 | (A.3.4) | (N.7.3) |
| B1-6414 | (A.3.7) | (N.7.3) |
| B1-6415 | (A.3.8) | (N.7.3) |
| B1-6416 | (A.3.9) | (N.7.3) |
| B1-6417 | (A.3.10) | (N.7.3) |
| B1-6418 | (A.3.11) | (N.7.3) |
| B1-6419 | (A.3.12) | (N.7.3) |
| B1-6420 | (A.3.15) | (N.7.3) |
| B1-6421 | (A.3.16) | (N.7.3) |
| B1-6422 | (A.3.17) | (N.7.3) |
| B1-6423 | (A.3.19) | (N.7.3) |
| B1-6424 | (A.3.21) | (N.7.3) |
| B1-6425 | (A.3.22) | (N.7.3) |
| B1-6426 | (A.3.23) | (N.7.3) |
| B1-6427 | (A.3.28) | (N.7.3) |
| B1-6428 | (A.3.31) | (N.7.3) |
| B1-6429 | (A.4.5) | (N.7.3) |

| | | |
|---|---|---|
| B1-6430 | (B.1.4) | (N.7.3) |
| B1-6431 | (B.1.5) | (N.7.3) |
| B1-6432 | (B.1.8) | (N.7.3) |
| B1-6433 | (B.1.10) | (N.7.3) |
| B1-6434 | (B.1.12) | (N.7.3) |
| B1-6435 | (B.1.15) | (N.7.3) |
| B1-6436 | (B.1.17) | (N.7.3) |
| B1-6437 | (B.1.18) | (N.7.3) |
| B1-6438 | (B.1.21) | (N.7.3) |
| B1-6439 | (B.1.22) | (N.7.3) |
| B1-6440 | (B.1.23) | (N.7.3) |
| B1-6441 | (B.1.25) | (N.7.3) |
| B1-6442 | (B.1.26) | (N.7.3) |
| B1-6443 | (B.1.29) | (N.7.3) |
| B1-6444 | (B.1.38) | (N.7.3) |
| B1-6445 | (B.1.44) | (N.7.3) |
| B1-6446 | (B.1.46) | (N.7.3) |
| B1-6447 | (B.2.4) | (N.7.3) |
| B1-6448 | (B.3.1) | (N.7.3) |
| B1-6449 | (C.1.4) | (N.7.3) |
| B1-6450 | (C.1.5) | (N.7.3) |
| B1-6451 | (C.2.1) | (N.7.3) |
| B1-6452 | (D.1.4) | (N.7.3) |
| B1-6453 | (D.1.5) | (N.7.3) |
| B1-6454 | (D.2.3) | (N.7.3) |
| B1-6455 | (D.2.5) | (N.7.3) |
| B1-6456 | (D.2.6) | (N.7.3) |
| B1-6457 | (E.1.1) | (N.7.3) |

| | | |
|---|---|---|
| B1-6458 | (E.1.3) | (N.7.3) |
| B1-6459 | (E.2.2) | (N.7.3) |
| B1-6460 | (E.2.3), | (N.7.3) |
| B1-6461 | (F.1.2) | (N.7.3) |
| B1-6462 | (F.1.3) | (N.7.3) |
| B1-6463 | (F.1.5) | (N.7.3) |
| B1-6464 | (G.1.4) | (N.7.3) |
| B1-6465 | (G.3.1) | (N.7.3) |
| B1-6466 | (G.5.1) | (N.7.3) |
| B1-6467 | (H.1.2) | (N.7.3) |
| B1-6468 | (H.1.3) | (N.7.3) |
| B1-6469 | (H.1.4) | (N.7.3) |
| B1-6470 | (H.1.5) | (N.7.3) |
| B1-6471 | (H.1.6) | (N.7.3) |
| B1-6472 | (H.1.7) | (N.7.3) |
| B1-6473 | (H.2.2) | (N.7.3) |
| B1-6474 | (H.2.3) | (N.7.3) |
| B1-6475 | (H.2.5) | (N.7.3) |
| B1-6476 | (H.2.7) | (N.7.3) |
| B1-6477 | (H.3.2) | (N.7.3) |
| B1-6478 | (H.3.4) | (N.7.3) |
| B1-6479 | (H.3.5) | (N.7.3) |
| B1-6480 | (H.3.10) | (N.7.3) |
| B1-6481 | (H.4.2) | (N.7.3) |
| B1-6482 | (H.4.9) | (N.7.3) |
| B1-6483 | (I.1.1) | (N.7.3) |
| B1-6484 | (I.2.1) | (N.7.3) |
| B1-6485 | (I.2.2) | (N.7.3) |

| | | |
|---|---|---|
| B1-6486 | (J.1.2) | (N.7.3) |
| B1-6487 | (J.1.3) | (N.7.3) |
| B1-6488 | (J.1.4) | (N.7.3) |
| B1-6489 | (J.1.5) | (N.7.3) |
| B1-6490 | (J.1.8) | (N.7.3) |
| B1-6491 | (J.1.12) | (N.7.3) |
| B1-6492 | (K.1.13) | (N.7.3) |
| B1-6493 | (K.1.47) | (N.7.3) |
| B1-6494 | (K.1.54) | (N.7.3) |
| B1-6495 | (L.1.5) | (N.7.3) |
| B1-6496 | (L.1.9) | (N.7.3) |
| B1-6497 | (L.1.12) | (N.7.3) |
| B1-6498 | (L.1.13) | (N.7.3) |
| B1-6499 | (L.1.17) | (N.7.3) |
| B1-6500 | (L.1.23) | (N.7.3) |
| B1-6501 | (L.1.32), | (N.7.3) |
| B1-6502 | (L.1.46) | (N.7.3) |
| B1-6503 | (M.1.6) | (N.7.3) |
| B1-6504 | (M.1.24) | (N.7.3) |
| B1-6505 | (M.1.25) | (N.7.3) |
| B1-6506 | (M.1.28) | (N.7.3) |
| B1-6507 | (M.1.29) | (N.7.3) |
| B1-6508 | (M.1.30) | (N.7.3) |
| B1-6509 | (N.7.3) | (N.7.3) |
| B1-6510 | (N.7.4) | (N.7.3) |
| B1-6511 | (N.7.5) | (N.7.3) |
| B1-6512 | (N.13.13) | (N.7.3) |
| B1-6513 | (O.2.4), | (N.7.3) |

| | | |
|---|---|---|
| B1-6514 | (O.4.5) | (N.7.3) |
| B1-6515 | (O.4.7) | (N.7.3) |
| B1-6516 | (O.4.8) | (N.7.3) |
| B1-6517 | (O.5.1) | (N.7.3) |
| B1-6518 | (O.26.2) | (N.7.3) |
| B1-6519 | (O.27.17) | (N.7.3) |
| B1-6520 | (A.1.1) | (N.7.4) |
| B1-6521 | (A.1.4) | (N.7.4) |
| B1-6522 | (A.1.8) | (N.7.4) |
| B1-6523 | (A.1.10) | (N.7.4) |
| B1-6524 | (A.1.11) | (N.7.4) |
| B1-6525 | (A.1.12) | (N.7.4) |
| B1-6526 | (A.1.14) | (N.7.4) |
| B1-6527 | (A.1.17) | (N.7.4) |
| B1-6528 | (A.1.19) | (N.7.4) |
| B1-6529 | (A.1.25) | (N.7.4) |
| B1-6530 | (A.1.34) | (N.7.4) |
| B1-6531 | (A.1.35) | (N.7.4) |
| B1-6532 | (A.1.38) | (N.7.4) |
| B1-6533 | (A.2.6) | (N.7.4) |
| B1-6534 | (A.3.2) | (N.7.4) |
| B1-6535 | (A.3.3) | (N.7.4) |
| B1-6536 | (A.3.4) | (N.7.4) |
| B1-6537 | (A.3.7) | (N.7.4) |
| B1-6538 | (A.3.8) | (N.7.4) |
| B1-6539 | (A.3.9) | (N.7.4) |
| B1-6540 | (A.3.10) | (N.7.4) |
| B1-6541 | (A.3.11) | (N.7.4) |

| | | |
|---|---|---|
| B1-6542 | (A.3.12) | (N.7.4) |
| B1-6543 | (A.3.15) | (N.7.4) |
| B1-6544 | (A.3.16) | (N.7.4) |
| B1-6545 | (A.3.17) | (N.7.4) |
| B1-6546 | (A.3.19) | (N.7.4) |
| B1-6547 | (A.3.21) | (N.7.4) |
| B1-6548 | (A.3.22) | (N.7.4) |
| B1-6549 | (A.3.23) | (N.7.4) |
| B1-6550 | (A.3.28) | (N.7.4) |
| B1-6551 | (A.3.31) | (N.7.4) |
| B1-6552 | (A.4.5) | (N.7.4) |
| B1-6553 | (B.1.4) | (N.7.4) |
| B1-6554 | (B.1.5) | (N.7.4) |
| B1-6555 | (B.1.8) | (N.7.4) |
| B1-6556 | (B.1.10) | (N.7.4) |
| B1-6557 | (B.1.12) | (N.7.4) |
| B1-6558 | (B.1.15) | (N.7.4) |
| B1-6559 | (B.1.17) | (N.7.4) |
| B1-6560 | (B.1.18) | (N.7.4) |
| B1-6561 | (B.1.21) | (N.7.4) |
| B1-6562 | (B.1.22) | (N.7.4) |
| B1-6563 | (B.1.23) | (N.7.4) |
| B1-6564 | (B.1.25) | (N.7.4) |
| B1-6565 | (B.1.26) | (N.7.4) |
| B1-6566 | (B.1.29) | (N.7.4) |
| B1-6567 | (B.1.38) | (N.7.4) |
| B1-6568 | (B.1.44) | (N.7.4) |
| B1-6569 | (B.1.46) | (N.7.4) |

| | | |
|---|---|---|
| B1-6570 | (B.2.4) | (N.7.4) |
| B1-6571 | (B.3.1) | (N.7.4) |
| B1-6572 | (C.1.4) | (N.7.4) |
| B1-6573 | (C.1.5) | (N.7.4) |
| B1-6574 | (C.2.1) | (N.7.4) |
| B1-6575 | (D.1.4) | (N.7.4) |
| B1-6576 | (D.1.5) | (N.7.4) |
| B1-6577 | (D.2.3) | (N.7.4) |
| B1-6578 | (D.2.5) | (N.7.4) |
| B1-6579 | (D.2.6) | (N.7.4) |
| B1-6580 | (E.1.1) | (N.7.4) |
| B1-6581 | (E.1.3) | (N.7.4) |
| B1-6582 | (E.2.2) | (N.7.4) |
| B1-6583 | (E.2.3), | (N.7.4) |
| B1-6584 | (F.1.2) | (N.7.4) |
| B1-6585 | (F.1.3) | (N.7.4) |
| B1-6586 | (F.1.5) | (N.7.4) |
| B1-6587 | (G.1.4) | (N.7.4) |
| B1-6588 | (G.3.1) | (N.7.4) |
| B1-6589 | (G.5.1) | (N.7.4) |
| B1-6590 | (H.1.2) | (N.7.4) |
| B1-6591 | (H.1.3) | (N.7.4) |
| B1-6592 | (H.1.4) | (N.7.4) |
| B1-6593 | (H.1.5) | (N.7.4) |
| B1-6594 | (H.1.6) | (N.7.4) |
| B1-6595 | (H.1.7) | (N.7.4) |
| B1-6596 | (H.2.2) | (N.7.4) |
| B1-6597 | (H.2.3) | (N.7.4) |

| | | |
|---|---|---|
| B1-6598 | (H.2.5) | (N.7.4) |
| B1-6599 | (H.2.7) | (N.7.4) |
| B1-6600 | (H.3.2) | (N.7.4) |
| B1-6601 | (H.3.4) | (N.7.4) |
| B1-6602 | (H.3.5) | (N.7.4) |
| B1-6603 | (H.3.10) | (N.7.4) |
| B1-6604 | (H.4.2) | (N.7.4) |
| B1-6605 | (H.4.9) | (N.7.4) |
| B1-6606 | (I.1.1) | (N.7.4) |
| B1-6607 | (I.2.1) | (N.7.4) |
| B1-6608 | (I.2.2) | (N.7.4) |
| B1-6609 | (J.1.2) | (N.7.4) |
| B1-6610 | (J.1.3) | (N.7.4) |
| B1-6611 | (J.1.4) | (N.7.4) |
| B1-6612 | (J.1.5) | (N.7.4) |
| B1-6613 | (J.1.8) | (N.7.4) |
| B1-6614 | (J.1.12) | (N.7.4) |
| B1-6615 | (K.1.13) | (N.7.4) |
| B1-6616 | (K.1.47) | (N.7.4) |
| B1-6617 | (K.1.54) | (N.7.4) |
| B1-6618 | (L.1.5) | (N.7.4) |
| B1-6619 | (L.1.9) | (N.7.4) |
| B1-6620 | (L.1.12) | (N.7.4) |
| B1-6621 | (L.1.13) | (N.7.4) |
| B1-6622 | (L.1.17) | (N.7.4) |
| B1-6623 | (L.1.23) | (N.7.4) |
| B1-6624 | (L.1.32), | (N.7.4) |
| B1-6625 | (L.1.46) | (N.7.4) |

| | | |
|---|---|---|
| B1-6626 | (M.1.6) | (N.7.4) |
| B1-6627 | (M.1.24) | (N.7.4) |
| B1-6628 | (M.1.25) | (N.7.4) |
| B1-6629 | (M.1.28) | (N.7.4) |
| B1-6630 | (M.1.29) | (N.7.4) |
| B1-6631 | (M.1.30) | (N.7.4) |
| B1-6632 | (N.7.3) | (N.7.4) |
| B1-6633 | (N.7.4) | (N.7.4) |
| B1-6634 | (N.7.5) | (N.7.4) |
| B1-6635 | (N.13.13) | (N.7.4) |
| B1-6636 | (O.2.4), | (N.7.4) |
| B1-6637 | (O.4.5) | (N.7.4) |
| B1-6638 | (O.4.7) | (N.7.4) |
| B1-6639 | (O.4.8) | (N.7.4) |
| B1-6640 | (O.5.1) | (N.7.4) |
| B1-6641 | (O.26.2) | (N.7.4) |
| B1-6642 | (O.27.17) | (N.7.4) |
| B1-6643 | (A.1.1) | (N.7.5) |
| B1-6644 | (A.1.4) | (N.7.5) |
| B1-6645 | (A.1.8) | (N.7.5) |
| B1-6646 | (A.1.10) | (N.7.5) |
| B1-6647 | (A.1.11) | (N.7.5) |
| B1-6648 | (A.1.12) | (N.7.5) |
| B1-6649 | (A.1.14) | (N.7.5) |
| B1-6650 | (A.1.17) | (N.7.5) |
| B1-6651 | (A.1.19) | (N.7.5) |
| B1-6652 | (A.1.25) | (N.7.5) |
| B1-6653 | (A.1.34) | (N.7.5) |

| | | |
|---|---|---|
| B1-6654 | (A.1.35) | (N.7.5) |
| B1-6655 | (A.1.38) | (N.7.5) |
| B1-6656 | (A.2.6) | (N.7.5) |
| B1-6657 | (A.3.2) | (N.7.5) |
| B1-6658 | (A.3.3) | (N.7.5) |
| B1-6659 | (A.3.4) | (N.7.5) |
| B1-6660 | (A.3.7) | (N.7.5) |
| B1-6661 | (A.3.8) | (N.7.5) |
| B1-6662 | (A.3.9) | (N.7.5) |
| B1-6663 | (A.3.10) | (N.7.5) |
| B1-6664 | (A.3.11) | (N.7.5) |
| B1-6665 | (A.3.12) | (N.7.5) |
| B1-6666 | (A.3.15) | (N.7.5) |
| B1-6667 | (A.3.16) | (N.7.5) |
| B1-6668 | (A.3.17) | (N.7.5) |
| B1-6669 | (A.3.19) | (N.7.5) |
| B1-6670 | (A.3.21) | (N.7.5) |
| B1-6671 | (A.3.22) | (N.7.5) |
| B1-6672 | (A.3.23) | (N.7.5) |
| B1-6673 | (A.3.28) | (N.7.5) |
| B1-6674 | (A.3.31) | (N.7.5) |
| B1-6675 | (A.4.5) | (N.7.5) |
| B1-6676 | (B.1.4) | (N.7.5) |
| B1-6677 | (B.1.5) | (N.7.5) |
| B1-6678 | (B.1.8) | (N.7.5) |
| B1-6679 | (B.1.10) | (N.7.5) |
| B1-6680 | (B.1.12) | (N.7.5) |
| B1-6681 | (B.1.15) | (N.7.5) |

| | | |
|---|---|---|
| B1-6682 | (B.1.17) | (N.7.5) |
| B1-6683 | (B.1.18) | (N.7.5) |
| B1-6684 | (B.1.21) | (N.7.5) |
| B1-6685 | (B.1.22) | (N.7.5) |
| B1-6686 | (B.1.23) | (N.7.5) |
| B1-6687 | (B.1.25) | (N.7.5) |
| B1-6688 | (B.1.26) | (N.7.5) |
| B1-6689 | (B.1.29) | (N.7.5) |
| B1-6690 | (B.1.38) | (N.7.5) |
| B1-6691 | (B.1.44) | (N.7.5) |
| B1-6692 | (B.1.46) | (N.7.5) |
| B1-6693 | (B.2.4) | (N.7.5) |
| B1-6694 | (B.3.1) | (N.7.5) |
| B1-6695 | (C.1.4) | (N.7.5) |
| B1-6696 | (C.1.5) | (N.7.5) |
| B1-6697 | (C.2.1) | (N.7.5) |
| B1-6698 | (D.1.4) | (N.7.5) |
| B1-6699 | (D.1.5) | (N.7.5) |
| B1-6700 | (D.2.3) | (N.7.5) |
| B1-6701 | (D.2.5) | (N.7.5) |
| B1-6702 | (D.2.6) | (N.7.5) |
| B1-6703 | (E.1.1) | (N.7.5) |
| B1-6704 | (E.1.3) | (N.7.5) |
| B1-6705 | (E.2.2) | (N.7.5) |
| B1-6706 | (E.2.3), | (N.7.5) |
| B1-6707 | (F.1.2) | (N.7.5) |
| B1-6708 | (F.1.3) | (N.7.5) |
| B1-6709 | (F.1.5) | (N.7.5) |

| | | |
|---|---|---|
| B1-6710 | (G.1.4) | (N.7.5) |
| B1-6711 | (G.3.1) | (N.7.5) |
| B1-6712 | (G.5.1) | (N.7.5) |
| B1-6713 | (H.1.2) | (N.7.5) |
| B1-6714 | (H.1.3) | (N.7.5) |
| B1-6715 | (H.1.4) | (N.7.5) |
| B1-6716 | (H.1.5) | (N.7.5) |
| B1-6717 | (H.1.6) | (N.7.5) |
| B1-6718 | (H.1.7) | (N.7.5) |
| B1-6719 | (H.2.2) | (N.7.5) |
| B1-6720 | (H.2.3) | (N.7.5) |
| B1-6721 | (H.2.5) | (N.7.5) |
| B1-6722 | (H.2.7) | (N.7.5) |
| B1-6723 | (H.3.2) | (N.7.5) |
| B1-6724 | (H.3.4) | (N.7.5) |
| B1-6725 | (H.3.5) | (N.7.5) |
| B1-6726 | (H.3.10) | (N.7.5) |
| B1-6727 | (H.4.2) | (N.7.5) |
| B1-6728 | (H.4.9) | (N.7.5) |
| B1-6729 | (I.1.1) | (N.7.5) |
| B1-6730 | (I.2.1) | (N.7.5) |
| B1-6731 | (I.2.2) | (N.7.5) |
| B1-6732 | (J.1.2) | (N.7.5) |
| B1-6733 | (J.1.3) | (N.7.5) |
| B1-6734 | (J.1.4) | (N.7.5) |
| B1-6735 | (J.1.5) | (N.7.5) |
| B1-6736 | (J.1.8) | (N.7.5) |
| B1-6737 | (J.1.12) | (N.7.5) |

| | | |
|---|---|---|
| B1-6738 | (K.1.13) | (N.7.5) |
| B1-6739 | (K.1.47) | (N.7.5) |
| B1-6740 | (K.1.54) | (N.7.5) |
| B1-6741 | (L.1.5) | (N.7.5) |
| B1-6742 | (L.1.9) | (N.7.5) |
| B1-6743 | (L.1.12) | (N.7.5) |
| B1-6744 | (L.1.13) | (N.7.5) |
| B1-6745 | (L.1.17) | (N.7.5) |
| B1-6746 | (L.1.23) | (N.7.5) |
| B1-6747 | (L.1.32), | (N.7.5) |
| B1-6748 | (L.1.46) | (N.7.5) |
| B1-6749 | (M.1.6) | (N.7.5) |
| B1-6750 | (M.1.24) | (N.7.5) |
| B1-6751 | (M.1.25) | (N.7.5) |
| B1-6752 | (M.1.28) | (N.7.5) |
| B1-6753 | (M.1.29) | (N.7.5) |
| B1-6754 | (M.1.30) | (N.7.5) |
| B1-6755 | (N.7.3) | (N.7.5) |
| B1-6756 | (N.7.4) | (N.7.5) |
| B1-6757 | (N.7.5) | (N.7.5) |
| B1-6758 | (N.13.13) | (N.7.5) |
| B1-6759 | (O.2.4), | (N.7.5) |
| B1-6760 | (O.4.5) | (N.7.5) |
| B1-6761 | (O.4.7) | (N.7.5) |
| B1-6762 | (O.4.8) | (N.7.5) |
| B1-6763 | (O.5.1) | (N.7.5) |
| B1-6764 | (O.26.2) | (N.7.5) |
| B1-6765 | (O.27.17) | (N.7.5) |

| | | |
|---|---|---|
| B1-6766 | (A.1.1) | (O.2.4) |
| B1-6767 | (A.1.4) | (O.2.4) |
| B1-6768 | (A.1.8) | (O.2.4) |
| B1-6769 | (A.1.10) | (O.2.4) |
| B1-6770 | (A.1.11) | (O.2.4) |
| B1-6771 | (A.1.12) | (O.2.4) |
| B1-6772 | (A.1.14) | (O.2.4) |
| B1-6773 | (A.1.17) | (O.2.4) |
| B1-6774 | (A.1.19) | (O.2.4) |
| B1-6775 | (A.1.25) | (O.2.4) |
| B1-6776 | (A.1.34) | (O.2.4) |
| B1-6777 | (A.1.35) | (O.2.4) |
| B1-6778 | (A.1.38) | (O.2.4) |
| B1-6779 | (A.2.6) | (O.2.4) |
| B1-6780 | (A.3.2) | (O.2.4) |
| B1-6781 | (A.3.3) | (O.2.4) |
| B1-6782 | (A.3.4) | (O.2.4) |
| B1-6783 | (A.3.7) | (O.2.4) |
| B1-6784 | (A.3.8) | (O.2.4) |
| B1-6785 | (A.3.9) | (O.2.4) |
| B1-6786 | (A.3.10) | (O.2.4) |
| B1-6787 | (A.3.11) | (O.2.4) |
| B1-6788 | (A.3.12) | (O.2.4) |
| B1-6789 | (A.3.15) | (O.2.4) |
| B1-6790 | (A.3.16) | (O.2.4) |
| B1-6791 | (A.3.17) | (O.2.4) |
| B1-6792 | (A.3.19) | (O.2.4) |
| B1-6793 | (A.3.21) | (O.2.4) |

| | | | | | |
|---|---|---|---|---|---|
| B1-6794 | (A.3.22) | (O.2.4) | B1-6822 | (D.1.5) | (O.2.4) |
| B1-6795 | (A.3.23) | (O.2.4) | B1-6823 | (D.2.3) | (O.2.4) |
| B1-6796 | (A.3.28) | (O.2.4) | B1-6824 | (D.2.5) | (O.2.4) |
| B1-6797 | (A.3.31) | (O.2.4) | B1-6825 | (D.2.6) | (O.2.4) |
| B1-6798 | (A.4.5) | (O.2.4) | B1-6826 | (E.1.1) | (O.2.4) |
| B1-6799 | (B.1.4) | (O.2.4) | B1-6827 | (E.1.3) | (O.2.4) |
| B1-6800 | (B.1.5) | (O.2.4) | B1-6828 | (E.2.2) | (O.2.4) |
| B1-6801 | (B.1.8) | (O.2.4) | B1-6829 | (E.2.3), | (O.2.4) |
| B1-6802 | (B.1.10) | (O.2.4) | B1-6830 | (F.1.2) | (O.2.4) |
| B1-6803 | (B.1.12) | (O.2.4) | B1-6831 | (F.1.3) | (O.2.4) |
| B1-6804 | (B.1.15) | (O.2.4) | B1-6832 | (F.1.5) | (O.2.4) |
| B1-6805 | (B.1.17) | (O.2.4) | B1-6833 | (G.1.4) | (O.2.4) |
| B1-6806 | (B.1.18) | (O.2.4) | B1-6834 | (G.3.1) | (O.2.4) |
| B1-6807 | (B.1.21) | (O.2.4) | B1-6835 | (G.5.1) | (O.2.4) |
| B1-6808 | (B.1.22) | (O.2.4) | B1-6836 | (H.1.2) | (O.2.4) |
| B1-6809 | (B.1.23) | (O.2.4) | B1-6837 | (H.1.3) | (O.2.4) |
| B1-6810 | (B.1.25) | (O.2.4) | B1-6838 | (H.1.4) | (O.2.4) |
| B1-6811 | (B.1.26) | (O.2.4) | B1-6839 | (H.1.5) | (O.2.4) |
| B1-6812 | (B.1.29) | (O.2.4) | B1-6840 | (H.1.6) | (O.2.4) |
| B1-6813 | (B.1.38) | (O.2.4) | B1-6841 | (H.1.7) | (O.2.4) |
| B1-6814 | (B.1.44) | (O.2.4) | B1-6842 | (H.2.2) | (O.2.4) |
| B1-6815 | (B.1.46) | (O.2.4) | B1-6843 | (H.2.3) | (O.2.4) |
| B1-6816 | (B.2.4) | (O.2.4) | B1-6844 | (H.2.5) | (O.2.4) |
| B1-6817 | (B.3.1) | (O.2.4) | B1-6845 | (H.2.7) | (O.2.4) |
| B1-6818 | (C.1.4) | (O.2.4) | B1-6846 | (H.3.2) | (O.2.4) |
| B1-6819 | (C.1.5) | (O.2.4) | B1-6847 | (H.3.4) | (O.2.4) |
| B1-6820 | (C.2.1) | (O.2.4) | B1-6848 | (H.3.5) | (O.2.4) |
| B1-6821 | (D.1.4) | (O.2.4) | B1-6849 | (H.3.10) | (O.2.4) |

| | | |
|---|---|---|
| B1-6850 | (H.4.2) | (O.2.4) |
| B1-6851 | (H.4.9) | (O.2.4) |
| B1-6852 | (I.1.1) | (O.2.4) |
| B1-6853 | (I.2.1) | (O.2.4) |
| B1-6854 | (I.2.2) | (O.2.4) |
| B1-6855 | (J.1.2) | (O.2.4) |
| B1-6856 | (J.1.3) | (O.2.4) |
| B1-6857 | (J.1.4) | (O.2.4) |
| B1-6858 | (J.1.5) | (O.2.4) |
| B1-6859 | (J.1.8) | (O.2.4) |
| B1-6860 | (J.1.12) | (O.2.4) |
| B1-6861 | (K.1.13) | (O.2.4) |
| B1-6862 | (K.1.47) | (O.2.4) |
| B1-6863 | (K.1.54) | (O.2.4) |
| B1-6864 | (L.1.5) | (O.2.4) |
| B1-6865 | (L.1.9) | (O.2.4) |
| B1-6866 | (L.1.12) | (O.2.4) |
| B1-6867 | (L.1.13) | (O.2.4) |
| B1-6868 | (L.1.17) | (O.2.4) |
| B1-6869 | (L.1.23) | (O.2.4) |
| B1-6870 | (L.1.32), | (O.2.4) |
| B1-6871 | (L.1.46) | (O.2.4) |
| B1-6872 | (M.1.6) | (O.2.4) |
| B1-6873 | (M.1.24) | (O.2.4) |
| B1-6874 | (M.1.25) | (O.2.4) |
| B1-6875 | (M.1.28) | (O.2.4) |
| B1-6876 | (M.1.29) | (O.2.4) |
| B1-6877 | (M.1.30) | (O.2.4) |

| | | |
|---|---|---|
| B1-6878 | (N.7.3) | (O.2.4) |
| B1-6879 | (N.7.4) | (O.2.4) |
| B1-6880 | (N.7.5) | (O.2.4) |
| B1-6881 | (N.13.13) | (O.2.4) |
| B1-6882 | (O.2.4), | (O.2.4) |
| B1-6883 | (O.4.5) | (O.2.4) |
| B1-6884 | (O.4.7) | (O.2.4) |
| B1-6885 | (O.4.8) | (O.2.4) |
| B1-6886 | (O.5.1) | (O.2.4) |
| B1-6887 | (O.26.2) | (O.2.4) |
| B1-6888 | (O.27.17) | (O.2.4) |
| B1-6889 | (A.1.1) | (O.4.5) |
| B1-6890 | (A.1.4) | (O.4.5) |
| B1-6891 | (A.1.8) | (O.4.5) |
| B1-6892 | (A.1.10) | (O.4.5) |
| B1-6893 | (A.1.11) | (O.4.5) |
| B1-6894 | (A.1.12) | (O.4.5) |
| B1-6895 | (A.1.14) | (O.4.5) |
| B1-6896 | (A.1.17) | (O.4.5) |
| B1-6897 | (A.1.19) | (O.4.5) |
| B1-6898 | (A.1.25) | (O.4.5) |
| B1-6899 | (A.1.34) | (O.4.5) |
| B1-6900 | (A.1.35) | (O.4.5) |
| B1-6901 | (A.1.38) | (O.4.5) |
| B1-6902 | (A.2.6) | (O.4.5) |
| B1-6903 | (A.3.2) | (O.4.5) |
| B1-6904 | (A.3.3) | (O.4.5) |
| B1-6905 | (A.3.4) | (O.4.5) |

| | | |
|---|---|---|
| B1-6906 | (A.3.7) | (O.4.5) |
| B1-6907 | (A.3.8) | (O.4.5) |
| B1-6908 | (A.3.9) | (O.4.5) |
| B1-6909 | (A.3.10) | (O.4.5) |
| B1-6910 | (A.3.11) | (O.4.5) |
| B1-6911 | (A.3.12) | (O.4.5) |
| B1-6912 | (A.3.15) | (O.4.5) |
| B1-6913 | (A.3.16) | (O.4.5) |
| B1-6914 | (A.3.17) | (O.4.5) |
| B1-6915 | (A.3.19) | (O.4.5) |
| B1-6916 | (A.3.21) | (O.4.5) |
| B1-6917 | (A.3.22) | (O.4.5) |
| B1-6918 | (A.3.23) | (O.4.5) |
| B1-6919 | (A.3.28) | (O.4.5) |
| B1-6920 | (A.3.31) | (O.4.5) |
| B1-6921 | (A.4.5) | (O.4.5) |
| B1-6922 | (B.1.4) | (O.4.5) |
| B1-6923 | (B.1.5) | (O.4.5) |
| B1-6924 | (B.1.8) | (O.4.5) |
| B1-6925 | (B.1.10) | (O.4.5) |
| B1-6926 | (B.1.12) | (O.4.5) |
| B1-6927 | (B.1.15) | (O.4.5) |
| B1-6928 | (B.1.17) | (O.4.5) |
| B1-6929 | (B.1.18) | (O.4.5) |
| B1-6930 | (B.1.21) | (O.4.5) |
| B1-6931 | (B.1.22) | (O.4.5) |
| B1-6932 | (B.1.23) | (O.4.5) |
| B1-6933 | (B.1.25) | (O.4.5) |

| | | |
|---|---|---|
| B1-6934 | (B.1.26) | (O.4.5) |
| B1-6935 | (B.1.29) | (O.4.5) |
| B1-6936 | (B.1.38) | (O.4.5) |
| B1-6937 | (B.1.44) | (O.4.5) |
| B1-6938 | (B.1.46) | (O.4.5) |
| B1-6939 | (B.2.4) | (O.4.5) |
| B1-6940 | (B.3.1) | (O.4.5) |
| B1-6941 | (C.1.4) | (O.4.5) |
| B1-6942 | (C.1.5) | (O.4.5) |
| B1-6943 | (C.2.1) | (O.4.5) |
| B1-6944 | (D.1.4) | (O.4.5) |
| B1-6945 | (D.1.5) | (O.4.5) |
| B1-6946 | (D.2.3) | (O.4.5) |
| B1-6947 | (D.2.5) | (O.4.5) |
| B1-6948 | (D.2.6) | (O.4.5) |
| B1-6949 | (E.1.1) | (O.4.5) |
| B1-6950 | (E.1.3) | (O.4.5) |
| B1-6951 | (E.2.2) | (O.4.5) |
| B1-6952 | (E.2.3), | (O.4.5) |
| B1-6953 | (F.1.2) | (O.4.5) |
| B1-6954 | (F.1.3) | (O.4.5) |
| B1-6955 | (F.1.5) | (O.4.5) |
| B1-6956 | (G.1.4) | (O.4.5) |
| B1-6957 | (G.3.1) | (O.4.5) |
| B1-6958 | (G.5.1) | (O.4.5) |
| B1-6959 | (H.1.2) | (O.4.5) |
| B1-6960 | (H.1.3) | (O.4.5) |
| B1-6961 | (H.1.4) | (O.4.5) |

| | | |
|---|---|---|
| B1-6962 | (H.1.5) | (O.4.5) |
| B1-6963 | (H.1.6) | (O.4.5) |
| B1-6964 | (H.1.7) | (O.4.5) |
| B1-6965 | (H.2.2) | (O.4.5) |
| B1-6966 | (H.2.3) | (O.4.5) |
| B1-6967 | (H.2.5) | (O.4.5) |
| B1-6968 | (H.2.7) | (O.4.5) |
| B1-6969 | (H.3.2) | (O.4.5) |
| B1-6970 | (H.3.4) | (O.4.5) |
| B1-6971 | (H.3.5) | (O.4.5) |
| B1-6972 | (H.3.10) | (O.4.5) |
| B1-6973 | (H.4.2) | (O.4.5) |
| B1-6974 | (H.4.9) | (O.4.5) |
| B1-6975 | (I.1.1) | (O.4.5) |
| B1-6976 | (I.2.1) | (O.4.5) |
| B1-6977 | (I.2.2) | (O.4.5) |
| B1-6978 | (J.1.2) | (O.4.5) |
| B1-6979 | (J.1.3) | (O.4.5) |
| B1-6980 | (J.1.4) | (O.4.5) |
| B1-6981 | (J.1.5) | (O.4.5) |
| B1-6982 | (J.1.8) | (O.4.5) |
| B1-6983 | (J.1.12) | (O.4.5) |
| B1-6984 | (K.1.13) | (O.4.5) |
| B1-6985 | (K.1.47) | (O.4.5) |
| B1-6986 | (K.1.54) | (O.4.5) |
| B1-6987 | (L.1.5) | (O.4.5) |
| B1-6988 | (L.1.9) | (O.4.5) |
| B1-6989 | (L.1.12) | (O.4.5) |

| | | |
|---|---|---|
| B1-6990 | (L.1.13) | (O.4.5) |
| B1-6991 | (L.1.17) | (O.4.5) |
| B1-6992 | (L.1.23) | (O.4.5) |
| B1-6993 | (L.1.32), | (O.4.5) |
| B1-6994 | (L.1.46) | (O.4.5) |
| B1-6995 | (M.1.6) | (O.4.5) |
| B1-6996 | (M.1.24) | (O.4.5) |
| B1-6997 | (M.1.25) | (O.4.5) |
| B1-6998 | (M.1.28) | (O.4.5) |
| B1-6999 | (M.1.29) | (O.4.5) |
| B1-7000 | (M.1.30) | (O.4.5) |
| B1-7001 | (N.7.3) | (O.4.5) |
| B1-7002 | (N.7.4) | (O.4.5) |
| B1-7003 | (N.7.5) | (O.4.5) |
| B1-7004 | (N.13.13) | (O.4.5) |
| B1-7005 | (O.2.4), | (O.4.5) |
| B1-7006 | (O.4.5) | (O.4.5) |
| B1-7007 | (O.4.7) | (O.4.5) |
| B1-7008 | (O.4.8) | (O.4.5) |
| B1-7009 | (O.5.1) | (O.4.5) |
| B1-7010 | (O.26.2) | (O.4.5) |
| B1-7011 | (O.27.17) | (O.4.5) |
| B1-7012 | (A.1.1) | (O.4.7) |
| B1-7013 | (A.1.4) | (O.4.7) |
| B1-7014 | (A.1.8) | (O.4.7) |
| B1-7015 | (A.1.10) | (O.4.7) |
| B1-7016 | (A.1.11) | (O.4.7) |
| B1-7017 | (A.1.12) | (O.4.7) |

| | | |
|---|---|---|
| B1-7018 | (A.1.14) | (O.4.7) |
| B1-7019 | (A.1.17) | (O.4.7) |
| B1-7020 | (A.1.19) | (O.4.7) |
| B1-7021 | (A.1.25) | (O.4.7) |
| B1-7022 | (A.1.34) | (O.4.7) |
| B1-7023 | (A.1.35) | (O.4.7) |
| B1-7024 | (A.1.38) | (O.4.7) |
| B1-7025 | (A.2.6) | (O.4.7) |
| B1-7026 | (A.3.2) | (O.4.7) |
| B1-7027 | (A.3.3) | (O.4.7) |
| B1-7028 | (A.3.4) | (O.4.7) |
| B1-7029 | (A.3.7) | (O.4.7) |
| B1-7030 | (A.3.8) | (O.4.7) |
| B1-7031 | (A.3.9) | (O.4.7) |
| B1-7032 | (A.3.10) | (O.4.7) |
| B1-7033 | (A.3.11) | (O.4.7) |
| B1-7034 | (A.3.12) | (O.4.7) |
| B1-7035 | (A.3.15) | (O.4.7) |
| B1-7036 | (A.3.16) | (O.4.7) |
| B1-7037 | (A.3.17) | (O.4.7) |
| B1-7038 | (A.3.19) | (O.4.7) |
| B1-7039 | (A.3.21) | (O.4.7) |
| B1-7040 | (A.3.22) | (O.4.7) |
| B1-7041 | (A.3.23) | (O.4.7) |
| B1-7042 | (A.3.28) | (O.4.7) |
| B1-7043 | (A.3.31) | (O.4.7) |
| B1-7044 | (A.4.5) | (O.4.7) |
| B1-7045 | (B.1.4) | (O.4.7) |
| B1-7046 | (B.1.5) | (O.4.7) |
| B1-7047 | (B.1.8) | (O.4.7) |
| B1-7048 | (B.1.10) | (O.4.7) |
| B1-7049 | (B.1.12) | (O.4.7) |
| B1-7050 | (B.1.15) | (O.4.7) |
| B1-7051 | (B.1.17) | (O.4.7) |
| B1-7052 | (B.1.18) | (O.4.7) |
| B1-7053 | (B.1.21) | (O.4.7) |
| B1-7054 | (B.1.22) | (O.4.7) |
| B1-7055 | (B.1.23) | (O.4.7) |
| B1-7056 | (B.1.25) | (O.4.7) |
| B1-7057 | (B.1.26) | (O.4.7) |
| B1-7058 | (B.1.29) | (O.4.7) |
| B1-7059 | (B.1.38) | (O.4.7) |
| B1-7060 | (B.1.44) | (O.4.7) |
| B1-7061 | (B.1.46) | (O.4.7) |
| B1-7062 | (B.2.4) | (O.4.7) |
| B1-7063 | (B.3.1) | (O.4.7) |
| B1-7064 | (C.1.4) | (O.4.7) |
| B1-7065 | (C.1.5) | (O.4.7) |
| B1-7066 | (C.2.1) | (O.4.7) |
| B1-7067 | (D.1.4) | (O.4.7) |
| B1-7068 | (D.1.5) | (O.4.7) |
| B1-7069 | (D.2.3) | (O.4.7) |
| B1-7070 | (D.2.5) | (O.4.7) |
| B1-7071 | (D.2.6) | (O.4.7) |
| B1-7072 | (E.1.1) | (O.4.7) |
| B1-7073 | (E.1.3) | (O.4.7) |

| | | |
|---|---|---|
| B1-7074 | (E.2.2) | (O.4.7) |
| B1-7075 | (E.2.3), | (O.4.7) |
| B1-7076 | (F.1.2) | (O.4.7) |
| B1-7077 | (F.1.3) | (O.4.7) |
| B1-7078 | (F.1.5) | (O.4.7) |
| B1-7079 | (G.1.4) | (O.4.7) |
| B1-7080 | (G.3.1) | (O.4.7) |
| B1-7081 | (G.5.1) | (O.4.7) |
| B1-7082 | (H.1.2) | (O.4.7) |
| B1-7083 | (H.1.3) | (O.4.7) |
| B1-7084 | (H.1.4) | (O.4.7) |
| B1-7085 | (H.1.5) | (O.4.7) |
| B1-7086 | (H.1.6) | (O.4.7) |
| B1-7087 | (H.1.7) | (O.4.7) |
| B1-7088 | (H.2.2) | (O.4.7) |
| B1-7089 | (H.2.3) | (O.4.7) |
| B1-7090 | (H.2.5) | (O.4.7) |
| B1-7091 | (H.2.7) | (O.4.7) |
| B1-7092 | (H.3.2) | (O.4.7) |
| B1-7093 | (H.3.4) | (O.4.7) |
| B1-7094 | (H.3.5) | (O.4.7) |
| B1-7095 | (H.3.10) | (O.4.7) |
| B1-7096 | (H.4.2) | (O.4.7) |
| B1-7097 | (H.4.9) | (O.4.7) |
| B1-7098 | (I.1.1) | (O.4.7) |
| B1-7099 | (I.2.1) | (O.4.7) |
| B1-7100 | (I.2.2) | (O.4.7) |
| B1-7101 | (J.1.2) | (O.4.7) |

| | | |
|---|---|---|
| B1-7102 | (J.1.3) | (O.4.7) |
| B1-7103 | (J.1.4) | (O.4.7) |
| B1-7104 | (J.1.5) | (O.4.7) |
| B1-7105 | (J.1.8) | (O.4.7) |
| B1-7106 | (J.1.12) | (O.4.7) |
| B1-7107 | (K.1.13) | (O.4.7) |
| B1-7108 | (K.1.47) | (O.4.7) |
| B1-7109 | (K.1.54) | (O.4.7) |
| B1-7110 | (L.1.5) | (O.4.7) |
| B1-7111 | (L.1.9) | (O.4.7) |
| B1-7112 | (L.1.12) | (O.4.7) |
| B1-7113 | (L.1.13) | (O.4.7) |
| B1-7114 | (L.1.17) | (O.4.7) |
| B1-7115 | (L.1.23) | (O.4.7) |
| B1-7116 | (L.1.32), | (O.4.7) |
| B1-7117 | (L.1.46) | (O.4.7) |
| B1-7118 | (M.1.6) | (O.4.7) |
| B1-7119 | (M.1.24) | (O.4.7) |
| B1-7120 | (M.1.25) | (O.4.7) |
| B1-7121 | (M.1.28) | (O.4.7) |
| B1-7122 | (M.1.29) | (O.4.7) |
| B1-7123 | (M.1.30) | (O.4.7) |
| B1-7124 | (N.7.3) | (O.4.7) |
| B1-7125 | (N.7.4) | (O.4.7) |
| B1-7126 | (N.7.5) | (O.4.7) |
| B1-7127 | (N.13.13) | (O.4.7) |
| B1-7128 | (O.2.4), | (O.4.7) |
| B1-7129 | (O.4.5) | (O.4.7) |

| | | |
|---|---|---|
| B1-7130 | (O.4.7) | (O.4.7) |
| B1-7131 | (O.4.8) | (O.4.7) |
| B1-7132 | (O.5.1) | (O.4.7) |
| B1-7133 | (O.26.2) | (O.4.7) |
| B1-7134 | (O.27.17) | (O.4.7) |
| B1-7135 | (A.1.1) | (O.4.8) |
| B1-7136 | (A.1.4) | (O.4.8) |
| B1-7137 | (A.1.8) | (O.4.8) |
| B1-7138 | (A.1.10) | (O.4.8) |
| B1-7139 | (A.1.11) | (O.4.8) |
| B1-7140 | (A.1.12) | (O.4.8) |
| B1-7141 | (A.1.14) | (O.4.8) |
| B1-7142 | (A.1.17) | (O.4.8) |
| B1-7143 | (A.1.19) | (O.4.8) |
| B1-7144 | (A.1.25) | (O.4.8) |
| B1-7145 | (A.1.34) | (O.4.8) |
| B1-7146 | (A.1.35) | (O.4.8) |
| B1-7147 | (A.1.38) | (O.4.8) |
| B1-7148 | (A.2.6) | (O.4.8) |
| B1-7149 | (A.3.2) | (O.4.8) |
| B1-7150 | (A.3.3) | (O.4.8) |
| B1-7151 | (A.3.4) | (O.4.8) |
| B1-7152 | (A.3.7) | (O.4.8) |
| B1-7153 | (A.3.8) | (O.4.8) |
| B1-7154 | (A.3.9) | (O.4.8) |
| B1-7155 | (A.3.10) | (O.4.8) |
| B1-7156 | (A.3.11) | (O.4.8) |
| B1-7157 | (A.3.12) | (O.4.8) |

| | | |
|---|---|---|
| B1-7158 | (A.3.15) | (O.4.8) |
| B1-7159 | (A.3.16) | (O.4.8) |
| B1-7160 | (A.3.17) | (O.4.8) |
| B1-7161 | (A.3.19) | (O.4.8) |
| B1-7162 | (A.3.21) | (O.4.8) |
| B1-7163 | (A.3.22) | (O.4.8) |
| B1-7164 | (A.3.23) | (O.4.8) |
| B1-7165 | (A.3.28) | (O.4.8) |
| B1-7166 | (A.3.31) | (O.4.8) |
| B1-7167 | (A.4.5) | (O.4.8) |
| B1-7168 | (B.1.4) | (O.4.8) |
| B1-7169 | (B.1.5) | (O.4.8) |
| B1-7170 | (B.1.8) | (O.4.8) |
| B1-7171 | (B.1.10) | (O.4.8) |
| B1-7172 | (B.1.12) | (O.4.8) |
| B1-7173 | (B.1.15) | (O.4.8) |
| B1-7174 | (B.1.17) | (O.4.8) |
| B1-7175 | (B.1.18) | (O.4.8) |
| B1-7176 | (B.1.21) | (O.4.8) |
| B1-7177 | (B.1.22) | (O.4.8) |
| B1-7178 | (B.1.23) | (O.4.8) |
| B1-7179 | (B.1.25) | (O.4.8) |
| B1-7180 | (B.1.26) | (O.4.8) |
| B1-7181 | (B.1.29) | (O.4.8) |
| B1-7182 | (B.1.38) | (O.4.8) |
| B1-7183 | (B.1.44) | (O.4.8) |
| B1-7184 | (B.1.46) | (O.4.8) |
| B1-7185 | (B.2.4) | (O.4.8) |

| | | |
|---|---|---|
| B1-7186 | (B.3.1) | (O.4.8) |
| B1-7187 | (C.1.4) | (O.4.8) |
| B1-7188 | (C.1.5) | (O.4.8) |
| B1-7189 | (C.2.1) | (O.4.8) |
| B1-7190 | (D.1.4) | (O.4.8) |
| B1-7191 | (D.1.5) | (O.4.8) |
| B1-7192 | (D.2.3) | (O.4.8) |
| B1-7193 | (D.2.5) | (O.4.8) |
| B1-7194 | (D.2.6) | (O.4.8) |
| B1-7195 | (E.1.1) | (O.4.8) |
| B1-7196 | (E.1.3) | (O.4.8) |
| B1-7197 | (E.2.2) | (O.4.8) |
| B1-7198 | (E.2.3), | (O.4.8) |
| B1-7199 | (F.1.2) | (O.4.8) |
| B1-7200 | (F.1.3) | (O.4.8) |
| B1-7201 | (F.1.5) | (O.4.8) |
| B1-7202 | (G.1.4) | (O.4.8) |
| B1-7203 | (G.3.1) | (O.4.8) |
| B1-7204 | (G.5.1) | (O.4.8) |
| B1-7205 | (H.1.2) | (O.4.8) |
| B1-7206 | (H.1.3) | (O.4.8) |
| B1-7207 | (H.1.4) | (O.4.8) |
| B1-7208 | (H.1.5) | (O.4.8) |
| B1-7209 | (H.1.6) | (O.4.8) |
| B1-7210 | (H.1.7) | (O.4.8) |
| B1-7211 | (H.2.2) | (O.4.8) |
| B1-7212 | (H.2.3) | (O.4.8) |
| B1-7213 | (H.2.5) | (O.4.8) |

| | | |
|---|---|---|
| B1-7214 | (H.2.7) | (O.4.8) |
| B1-7215 | (H.3.2) | (O.4.8) |
| B1-7216 | (H.3.4) | (O.4.8) |
| B1-7217 | (H.3.5) | (O.4.8) |
| B1-7218 | (H.3.10) | (O.4.8) |
| B1-7219 | (H.4.2) | (O.4.8) |
| B1-7220 | (H.4.9) | (O.4.8) |
| B1-7221 | (I.1.1) | (O.4.8) |
| B1-7222 | (I.2.1) | (O.4.8) |
| B1-7223 | (I.2.2) | (O.4.8) |
| B1-7224 | (J.1.2) | (O.4.8) |
| B1-7225 | (J.1.3) | (O.4.8) |
| B1-7226 | (J.1.4) | (O.4.8) |
| B1-7227 | (J.1.5) | (O.4.8) |
| B1-7228 | (J.1.8) | (O.4.8) |
| B1-7229 | (J.1.12) | (O.4.8) |
| B1-7230 | (K.1.13) | (O.4.8) |
| B1-7231 | (K.1.47) | (O.4.8) |
| B1-7232 | (K.1.54) | (O.4.8) |
| B1-7233 | (L.1.5) | (O.4.8) |
| B1-7234 | (L.1.9) | (O.4.8) |
| B1-7235 | (L.1.12) | (O.4.8) |
| B1-7236 | (L.1.13) | (O.4.8) |
| B1-7237 | (L.1.17) | (O.4.8) |
| B1-7238 | (L.1.23) | (O.4.8) |
| B1-7239 | (L.1.32), | (O.4.8) |
| B1-7240 | (L.1.46) | (O.4.8) |
| B1-7241 | (M.1.6) | (O.4.8) |

| | | |
|---|---|---|
| B1-7242 | (M.1.24) | (O.4.8) |
| B1-7243 | (M.1.25) | (O.4.8) |
| B1-7244 | (M.1.28) | (O.4.8) |
| B1-7245 | (M.1.29) | (O.4.8) |
| B1-7246 | (M.1.30) | (O.4.8) |
| B1-7247 | (N.7.3) | (O.4.8) |
| B1-7248 | (N.7.4) | (O.4.8) |
| B1-7249 | (N.7.5) | (O.4.8) |
| B1-7250 | (N.13.13) | (O.4.8) |
| B1-7251 | (O.2.4), | (O.4.8) |
| B1-7252 | (O.4.5) | (O.4.8) |
| B1-7253 | (O.4.7) | (O.4.8) |
| B1-7254 | (O.4.8) | (O.4.8) |
| B1-7255 | (O.5.1) | (O.4.8) |
| B1-7256 | (O.26.2) | (O.4.8) |
| B1-7257 | (O.27.17) | (O.4.8) |
| B1-7258 | (A.1.1) | (O.5.1) |
| B1-7259 | (A.1.4) | (O.5.1) |
| B1-7260 | (A.1.8) | (O.5.1) |
| B1-7261 | (A.1.10) | (O.5.1) |
| B1-7262 | (A.1.11) | (O.5.1) |
| B1-7263 | (A.1.12) | (O.5.1) |
| B1-7264 | (A.1.14) | (O.5.1) |
| B1-7265 | (A.1.17) | (O.5.1) |
| B1-7266 | (A.1.19) | (O.5.1) |
| B1-7267 | (A.1.25) | (O.5.1) |
| B1-7268 | (A.1.34) | (O.5.1) |
| B1-7269 | (A.1.35) | (O.5.1) |

| | | |
|---|---|---|
| B1-7270 | (A.1.38) | (O.5.1) |
| B1-7271 | (A.2.6) | (O.5.1) |
| B1-7272 | (A.3.2) | (O.5.1) |
| B1-7273 | (A.3.3) | (O.5.1) |
| B1-7274 | (A.3.4) | (O.5.1) |
| B1-7275 | (A.3.7) | (O.5.1) |
| B1-7276 | (A.3.8) | (O.5.1) |
| B1-7277 | (A.3.9) | (O.5.1) |
| B1-7278 | (A.3.10) | (O.5.1) |
| B1-7279 | (A.3.11) | (O.5.1) |
| B1-7280 | (A.3.12) | (O.5.1) |
| B1-7281 | (A.3.15) | (O.5.1) |
| B1-7282 | (A.3.16) | (O.5.1) |
| B1-7283 | (A.3.17) | (O.5.1) |
| B1-7284 | (A.3.19) | (O.5.1) |
| B1-7285 | (A.3.21) | (O.5.1) |
| B1-7286 | (A.3.22) | (O.5.1) |
| B1-7287 | (A.3.23) | (O.5.1) |
| B1-7288 | (A.3.28) | (O.5.1) |
| B1-7289 | (A.3.31) | (O.5.1) |
| B1-7290 | (A.4.5) | (O.5.1) |
| B1-7291 | (B.1.4) | (O.5.1) |
| B1-7292 | (B.1.5) | (O.5.1) |
| B1-7293 | (B.1.8) | (O.5.1) |
| B1-7294 | (B.1.10) | (O.5.1) |
| B1-7295 | (B.1.12) | (O.5.1) |
| B1-7296 | (B.1.15) | (O.5.1) |
| B1-7297 | (B.1.17) | (O.5.1) |

| | | |
|---|---|---|
| B1-7298 | (B.1.18) | (O.5.1) |
| B1-7299 | (B.1.21) | (O.5.1) |
| B1-7300 | (B.1.22) | (O.5.1) |
| B1-7301 | (B.1.23) | (O.5.1) |
| B1-7302 | (B.1.25) | (O.5.1) |
| B1-7303 | (B.1.26) | (O.5.1) |
| B1-7304 | (B.1.29) | (O.5.1) |
| B1-7305 | (B.1.38) | (O.5.1) |
| B1-7306 | (B.1.44) | (O.5.1) |
| B1-7307 | (B.1.46) | (O.5.1) |
| B1-7308 | (B.2.4) | (O.5.1) |
| B1-7309 | (B.3.1) | (O.5.1) |
| B1-7310 | (C.1.4) | (O.5.1) |
| B1-7311 | (C.1.5) | (O.5.1) |
| B1-7312 | (C.2.1) | (O.5.1) |
| B1-7313 | (D.1.4) | (O.5.1) |
| B1-7314 | (D.1.5) | (O.5.1) |
| B1-7315 | (D.2.3) | (O.5.1) |
| B1-7316 | (D.2.5) | (O.5.1) |
| B1-7317 | (D.2.6) | (O.5.1) |
| B1-7318 | (E.1.1) | (O.5.1) |
| B1-7319 | (E.1.3) | (O.5.1) |
| B1-7320 | (E.2.2) | (O.5.1) |
| B1-7321 | (E.2.3), | (O.5.1) |
| B1-7322 | (F.1.2) | (O.5.1) |
| B1-7323 | (F.1.3) | (O.5.1) |
| B1-7324 | (F.1.5) | (O.5.1) |
| B1-7325 | (G.1.4) | (O.5.1) |

| | | |
|---|---|---|
| B1-7326 | (G.3.1) | (O.5.1) |
| B1-7327 | (G.5.1) | (O.5.1) |
| B1-7328 | (H.1.2) | (O.5.1) |
| B1-7329 | (H.1.3) | (O.5.1) |
| B1-7330 | (H.1.4) | (O.5.1) |
| B1-7331 | (H.1.5) | (O.5.1) |
| B1-7332 | (H.1.6) | (O.5.1) |
| B1-7333 | (H.1.7) | (O.5.1) |
| B1-7334 | (H.2.2) | (O.5.1) |
| B1-7335 | (H.2.3) | (O.5.1) |
| B1-7336 | (H.2.5) | (O.5.1) |
| B1-7337 | (H.2.7) | (O.5.1) |
| B1-7338 | (H.3.2) | (O.5.1) |
| B1-7339 | (H.3.4) | (O.5.1) |
| B1-7340 | (H.3.5) | (O.5.1) |
| B1-7341 | (H.3.10) | (O.5.1) |
| B1-7342 | (H.4.2) | (O.5.1) |
| B1-7343 | (H.4.9) | (O.5.1) |
| B1-7344 | (I.1.1) | (O.5.1) |
| B1-7345 | (I.2.1) | (O.5.1) |
| B1-7346 | (I.2.2) | (O.5.1) |
| B1-7347 | (J.1.2) | (O.5.1) |
| B1-7348 | (J.1.3) | (O.5.1) |
| B1-7349 | (J.1.4) | (O.5.1) |
| B1-7350 | (J.1.5) | (O.5.1) |
| B1-7351 | (J.1.8) | (O.5.1) |
| B1-7352 | (J.1.12) | (O.5.1) |
| B1-7353 | (K.1.13) | (O.5.1) |

| | | |
|---|---|---|
| B1-7354 | (K.1.47) | (O.5.1) |
| B1-7355 | (K.1.54) | (O.5.1) |
| B1-7356 | (L.1.5) | (O.5.1) |
| B1-7357 | (L.1.9) | (O.5.1) |
| B1-7358 | (L.1.12) | (O.5.1) |
| B1-7359 | (L.1.13) | (O.5.1) |
| B1-7360 | (L.1.17) | (O.5.1) |
| B1-7361 | (L.1.23) | (O.5.1) |
| B1-7362 | (L.1.32), | (O.5.1) |
| B1-7363 | (L.1.46) | (O.5.1) |
| B1-7364 | (M.1.6) | (O.5.1) |
| B1-7365 | (M.1.24) | (O.5.1) |
| B1-7366 | (M.1.25) | (O.5.1) |
| B1-7367 | (M.1.28) | (O.5.1) |
| B1-7368 | (M.1.29) | (O.5.1) |
| B1-7369 | (M.1.30) | (O.5.1) |
| B1-7370 | (N.7.3) | (O.5.1) |
| B1-7371 | (N.7.4) | (O.5.1) |
| B1-7372 | (N.7.5) | (O.5.1) |
| B1-7373 | (N.13.13) | (O.5.1) |
| B1-7374 | (O.2.4), | (O.5.1) |
| B1-7375 | (O.4.5) | (O.5.1) |
| B1-7376 | (O.4.7) | (O.5.1) |
| B1-7377 | (O.4.8) | (O.5.1) |
| B1-7378 | (O.5.1) | (O.5.1) |
| B1-7379 | (O.26.2) | (O.5.1) |
| B1-7380 | (O.27.17) | (O.5.1) |
| B1-7381 | (A.1.1) | (O.26.2) |

| | | |
|---|---|---|
| B1-7382 | (A.1.4) | (O.26.2) |
| B1-7383 | (A.1.8) | (O.26.2) |
| B1-7384 | (A.1.10) | (O.26.2) |
| B1-7385 | (A.1.11) | (O.26.2) |
| B1-7386 | (A.1.12) | (O.26.2) |
| B1-7387 | (A.1.14) | (O.26.2) |
| B1-7388 | (A.1.17) | (O.26.2) |
| B1-7389 | (A.1.19) | (O.26.2) |
| B1-7390 | (A.1.25) | (O.26.2) |
| B1-7391 | (A.1.34) | (O.26.2) |
| B1-7392 | (A.1.35) | (O.26.2) |
| B1-7393 | (A.1.38) | (O.26.2) |
| B1-7394 | (A.2.6) | (O.26.2) |
| B1-7395 | (A.3.2) | (O.26.2) |
| B1-7396 | (A.3.3) | (O.26.2) |
| B1-7397 | (A.3.4) | (O.26.2) |
| B1-7398 | (A.3.7) | (O.26.2) |
| B1-7399 | (A.3.8) | (O.26.2) |
| B1-7400 | (A.3.9) | (O.26.2) |
| B1-7401 | (A.3.10) | (O.26.2) |
| B1-7402 | (A.3.11) | (O.26.2) |
| B1-7403 | (A.3.12) | (O.26.2) |
| B1-7404 | (A.3.15) | (O.26.2) |
| B1-7405 | (A.3.16) | (O.26.2) |
| B1-7406 | (A.3.17) | (O.26.2) |
| B1-7407 | (A.3.19) | (O.26.2) |
| B1-7408 | (A.3.21) | (O.26.2) |
| B1-7409 | (A.3.22) | (O.26.2) |

| | | |
|---|---|---|
| B1-7410 | (A.3.23) | (O.26.2) |
| B1-7411 | (A.3.28) | (O.26.2) |
| B1-7412 | (A.3.31) | (O.26.2) |
| B1-7413 | (A.4.5) | (O.26.2) |
| B1-7414 | (B.1.4) | (O.26.2) |
| B1-7415 | (B.1.5) | (O.26.2) |
| B1-7416 | (B.1.8) | (O.26.2) |
| B1-7417 | (B.1.10) | (O.26.2) |
| B1-7418 | (B.1.12) | (O.26.2) |
| B1-7419 | (B.1.15) | (O.26.2) |
| B1-7420 | (B.1.17) | (O.26.2) |
| B1-7421 | (B.1.18) | (O.26.2) |
| B1-7422 | (B.1.21) | (O.26.2) |
| B1-7423 | (B.1.22) | (O.26.2) |
| B1-7424 | (B.1.23) | (O.26.2) |
| B1-7425 | (B.1.25) | (O.26.2) |
| B1-7426 | (B.1.26) | (O.26.2) |
| B1-7427 | (B.1.29) | (O.26.2) |
| B1-7428 | (B.1.38) | (O.26.2) |
| B1-7429 | (B.1.44) | (O.26.2) |
| B1-7430 | (B.1.46) | (O.26.2) |
| B1-7431 | (B.2.4) | (O.26.2) |
| B1-7432 | (B.3.1) | (O.26.2) |
| B1-7433 | (C.1.4) | (O.26.2) |
| B1-7434 | (C.1.5) | (O.26.2) |
| B1-7435 | (C.2.1) | (O.26.2) |
| B1-7436 | (D.1.4) | (O.26.2) |
| B1-7437 | (D.1.5) | (O.26.2) |

| | | |
|---|---|---|
| B1-7438 | (D.2.3) | (O.26.2) |
| B1-7439 | (D.2.5) | (O.26.2) |
| B1-7440 | (D.2.6) | (O.26.2) |
| B1-7441 | (E.1.1) | (O.26.2) |
| B1-7442 | (E.1.3) | (O.26.2) |
| B1-7443 | (E.2.2) | (O.26.2) |
| B1-7444 | (E.2.3), | (O.26.2) |
| B1-7445 | (F.1.2) | (O.26.2) |
| B1-7446 | (F.1.3) | (O.26.2) |
| B1-7447 | (F.1.5) | (O.26.2) |
| B1-7448 | (G.1.4) | (O.26.2) |
| B1-7449 | (G.3.1) | (O.26.2) |
| B1-7450 | (G.5.1) | (O.26.2) |
| B1-7451 | (H.1.2) | (O.26.2) |
| B1-7452 | (H.1.3) | (O.26.2) |
| B1-7453 | (H.1.4) | (O.26.2) |
| B1-7454 | (H.1.5) | (O.26.2) |
| B1-7455 | (H.1.6) | (O.26.2) |
| B1-7456 | (H.1.7) | (O.26.2) |
| B1-7457 | (H.2.2) | (O.26.2) |
| B1-7458 | (H.2.3) | (O.26.2) |
| B1-7459 | (H.2.5) | (O.26.2) |
| B1-7460 | (H.2.7) | (O.26.2) |
| B1-7461 | (H.3.2) | (O.26.2) |
| B1-7462 | (H.3.4) | (O.26.2) |
| B1-7463 | (H.3.5) | (O.26.2) |
| B1-7464 | (H.3.10) | (O.26.2) |
| B1-7465 | (H.4.2) | (O.26.2) |

| | | |
|---|---|---|
| B1-7466 | (H.4.9) | (O.26.2) |
| B1-7467 | (I.1.1) | (O.26.2) |
| B1-7468 | (I.2.1) | (O.26.2) |
| B1-7469 | (I.2.2) | (O.26.2) |
| B1-7470 | (J.1.2) | (O.26.2) |
| B1-7471 | (J.1.3) | (O.26.2) |
| B1-7472 | (J.1.4) | (O.26.2) |
| B1-7473 | (J.1.5) | (O.26.2) |
| B1-7474 | (J.1.8) | (O.26.2) |
| B1-7475 | (J.1.12) | (O.26.2) |
| B1-7476 | (K.1.13) | (O.26.2) |
| B1-7477 | (K.1.47) | (O.26.2) |
| B1-7478 | (K.1.54) | (O.26.2) |
| B1-7479 | (L.1.5) | (O.26.2) |
| B1-7480 | (L.1.9) | (O.26.2) |
| B1-7481 | (L.1.12) | (O.26.2) |
| B1-7482 | (L.1.13) | (O.26.2) |
| B1-7483 | (L.1.17) | (O.26.2) |
| B1-7484 | (L.1.23) | (O.26.2) |
| B1-7485 | (L.1.32), | (O.26.2) |
| B1-7486 | (L.1.46) | (O.26.2) |
| B1-7487 | (M.1.6) | (O.26.2) |
| B1-7488 | (M.1.24) | (O.26.2) |
| B1-7489 | (M.1.25) | (O.26.2) |
| B1-7490 | (M.1.28) | (O.26.2) |
| B1-7491 | (M.1.29) | (O.26.2) |
| B1-7492 | (M.1.30) | (O.26.2) |
| B1-7493 | (N.7.3) | (O.26.2) |
| B1-7494 | (N.7.4) | (O.26.2) |
| B1-7495 | (N.7.5) | (O.26.2) |
| B1-7496 | (N.13.13) | (O.26.2) |
| B1-7497 | (O.2.4), | (O.26.2) |
| B1-7498 | (O.4.5) | (O.26.2) |
| B1-7499 | (O.4.7) | (O.26.2) |
| B1-7500 | (O.4.8) | (O.26.2) |
| B1-7501 | (O.5.1) | (O.26.2) |
| B1-7502 | (O.26.2) | (O.26.2) |
| B1-7503 | (O.27.17) | (O.26.2) |
| B1-7504 | (A.1.1) | (O.27.17) |
| B1-7505 | (A.1.4) | (O.27.17) |
| B1-7506 | (A.1.8) | (O.27.17) |
| B1-7507 | (A.1.10) | (O.27.17) |
| B1-7508 | (A.1.11) | (O.27.17) |
| B1-7509 | (A.1.12) | (O.27.17) |
| B1-7510 | (A.1.14) | (O.27.17) |
| B1-7511 | (A.1.17) | (O.27.17) |
| B1-7512 | (A.1.19) | (O.27.17) |
| B1-7513 | (A.1.25) | (O.27.17) |
| B1-7514 | (A.1.34) | (O.27.17) |
| B1-7515 | (A.1.35) | (O.27.17) |
| B1-7516 | (A.1.38) | (O.27.17) |
| B1-7517 | (A.2.6) | (O.27.17) |
| B1-7518 | (A.3.2) | (O.27.17) |
| B1-7519 | (A.3.3) | (O.27.17) |
| B1-7520 | (A.3.4) | (O.27.17) |
| B1-7521 | (A.3.7) | (O.27.17) |

| | | |
|---|---|---|
| B1-7522 | (A.3.8) | (O.27.17) |
| B1-7523 | (A.3.9) | (O.27.17) |
| B1-7524 | (A.3.10) | (O.27.17) |
| B1-7525 | (A.3.11) | (O.27.17) |
| B1-7526 | (A.3.12) | (O.27.17) |
| B1-7527 | (A.3.15) | (O.27.17) |
| B1-7528 | (A.3.16) | (O.27.17) |
| B1-7529 | (A.3.17) | (O.27.17) |
| B1-7530 | (A.3.19) | (O.27.17) |
| B1-7531 | (A.3.21) | (O.27.17) |
| B1-7532 | (A.3.22) | (O.27.17) |
| B1-7533 | (A.3.23) | (O.27.17) |
| B1-7534 | (A.3.28) | (O.27.17) |
| B1-7535 | (A.3.31) | (O.27.17) |
| B1-7536 | (A.4.5) | (O.27.17) |
| B1-7537 | (B.1.4) | (O.27.17) |
| B1-7538 | (B.1.5) | (O.27.17) |
| B1-7539 | (B.1.8) | (O.27.17) |
| B1-7540 | (B.1.10) | (O.27.17) |
| B1-7541 | (B.1.12) | (O.27.17) |
| B1-7542 | (B.1.15) | (O.27.17) |
| B1-7543 | (B.1.17) | (O.27.17) |
| B1-7544 | (B.1.18) | (O.27.17) |
| B1-7545 | (B.1.21) | (O.27.17) |
| B1-7546 | (B.1.22) | (O.27.17) |
| B1-7547 | (B.1.23) | (O.27.17) |
| B1-7548 | (B.1.25) | (O.27.17) |
| B1-7549 | (B.1.26) | (O.27.17) |

| | | |
|---|---|---|
| B1-7550 | (B.1.29) | (O.27.17) |
| B1-7551 | (B.1.38) | (O.27.17) |
| B1-7552 | (B.1.44) | (O.27.17) |
| B1-7553 | (B.1.46) | (O.27.17) |
| B1-7554 | (B.2.4) | (O.27.17) |
| B1-7555 | (B.3.1) | (O.27.17) |
| B1-7556 | (C.1.4) | (O.27.17) |
| B1-7557 | (C.1.5) | (O.27.17) |
| B1-7558 | (C.2.1) | (O.27.17) |
| B1-7559 | (D.1.4) | (O.27.17) |
| B1-7560 | (D.1.5) | (O.27.17) |
| B1-7561 | (D.2.3) | (O.27.17) |
| B1-7562 | (D.2.5) | (O.27.17) |
| B1-7563 | (D.2.6) | (O.27.17) |
| B1-7564 | (E.1.1) | (O.27.17) |
| B1-7565 | (E.1.3) | (O.27.17) |
| B1-7566 | (E.2.2) | (O.27.17) |
| B1-7567 | (E.2.3), | (O.27.17) |
| B1-7568 | (F.1.2) | (O.27.17) |
| B1-7569 | (F.1.3) | (O.27.17) |
| B1-7570 | (F.1.5) | (O.27.17) |
| B1-7571 | (G.1.4) | (O.27.17) |
| B1-7572 | (G.3.1) | (O.27.17) |
| B1-7573 | (G.5.1) | (O.27.17) |
| B1-7574 | (H.1.2) | (O.27.17) |
| B1-7575 | (H.1.3) | (O.27.17) |
| B1-7576 | (H.1.4) | (O.27.17) |
| B1-7577 | (H.1.5) | (O.27.17) |

| | | |
|---|---|---|
| B1-7578 | (H.1.6) | (O.27.17) |
| B1-7579 | (H.1.7) | (O.27.17) |

| | | |
|---|---|---|
| B1-7580 | (H.2.2) | (O.27.17) |
| B1-7581 | (H.2.3) | (O.27.17) |
| B1-7582 | (H.2.5) | (O.27.17) |
| B1-7583 | (H.2.7) | (O.27.17) |
| B1-7584 | (H.3.2) | (O.27.17) |
| B1-7585 | (H.3.4) | (O.27.17) |
| B1-7586 | (H.3.5) | (O.27.17) |
| B1-7587 | (H.3.10) | (O.27.17) |
| B1-7588 | (H.4.2) | (O.27.17) |
| B1-7589 | (H.4.9) | (O.27.17) |
| B1-7590 | (I.1.1) | (O.27.17) |
| B1-7591 | (I.2.1) | (O.27.17) |
| B1-7592 | (I.2.2) | (O.27.17) |
| B1-7593 | (J.1.2) | (O.27.17) |
| B1-7594 | (J.1.3) | (O.27.17) |
| B1-7595 | (J.1.4) | (O.27.17) |
| B1-7596 | (J.1.5) | (O.27.17) |
| B1-7597 | (J.1.8) | (O.27.17) |
| B1-7598 | (J.1.12) | (O.27.17) |
| B1-7599 | (K.1.13) | (O.27.17) |
| B1-7600 | (K.1.47) | (O.27.17) |
| B1-7601 | (K.1.54) | (O.27.17) |
| B1-7602 | (L.1.5) | (O.27.17) |
| B1-7603 | (L.1.9) | (O.27.17) |
| B1-7604 | (L.1.12) | (O.27.17) |
| B1-7605 | (L.1.13) | (O.27.17) |

| | | |
|---|---|---|
| B1-7606 | (L.1.17) | (O.27.17) |
| B1-7607 | (L.1.23) | (O.27.17) |
| B1-7608 | (L.1.32), | (O.27.17) |
| B1-7609 | (L.1.46) | (O.27.17) |
| B1-7610 | (M.1.6) | (O.27.17) |
| B1-7611 | (M.1.24) | (O.27.17) |
| B1-7612 | (M.1.25) | (O.27.17) |
| B1-7613 | (M.1.28) | (O.27.17) |
| B1-7614 | (M.1.29) | (O.27.17) |
| B1-7615 | (M.1.30) | (O.27.17) |
| B1-7616 | (N.7.3) | (O.27.17) |
| B1-7617 | (N.7.4) | (O.27.17) |
| B1-7618 | (N.7.5) | (O.27.17) |
| B1-7619 | (N.13.13) | (O.27.17) |
| B1-7620 | (O.2.4), | (O.27.17) |
| B1-7621 | (O.4.5) | (O.27.17) |
| B1-7622 | (O.4.7) | (O.27.17) |
| B1-7623 | (O.4.8) | (O.27.17) |
| B1-7624 | (O.5.1) | (O.27.17) |
| B1-7625 | (O.26.2) | (O.27.17) |
| B1-7626 | (O.27.17) | (O.27.17) |

The binary and ternary mixtures and agrochemical compositions thereof according to the invention can, in the use form as fungicides, also be present together with further active substances, e. g. with herbicides, insecticides, growth regulators, fungicides or else with fertilizers, as pre-mix or, if appropriate, not until immediately prior to use (tank mix).

Mixing the active compounds I, II and III and the compositions comprising the mixtures, respectively, in the use form as fungicides with other fungicides results in many cases in an expansion of the fungicidal spectrum of activity being obtained or in a prevention of fungicide resistance development. Furthermore, in many cases, synergistic effects are obtained.

The compounds of the formula I or compositions comprising said compounds according to the invention and the mixtures comprising said compounds and compositions, respectively, are suitable as fungicides. They are distinguished by an outstanding effectiveness against a broad spectrum of phytopathogenic fungi, including soil-borne fungi, which derive especially from the following classes or are closely related to any of them: *Ascomycota (Ascomycetes),* for example,

but not limited to the genus Cocholiobolus, Colletotrichum, Fusarium, Microdochium, Penicillium, Phoma, Magnaporte, Zymoseptoria, and Pseudocercosporella; *Basdiomycota (Basidiomycetes),* for example, but not limited to the genus Phakospora, Puccinia, Rhizoctonia, Sphacelotheca, Tilletia, Typhula, and Ustilago; *Chytridiomycota (Chytridiomycetes),* for example, but not limited to the genus Chytridiales, and Synchytrium; *Deuteromycetes* (syn. Fungi imperfecti), for example, but not limited to the genus *Ascochyta, Diplodia, Erysiphe, Fusarium, Phomopsis, and Pyrenophora; Peronosporomycetes* (syn. Oomycetes), for example but not limited to the genus Peronospora, Pythium, Phytophthora; *Plasmodiophoromycetes,* for example but not limited to the genus Plasmodiophora; *Zygomycetes,* for example, but not limited to the genus Rhizopus.

Some of the compounds of the formula I and the compositions according to the invention are systemically effective and they can be used in crop protection as foliar fungicides, fungicides for seed dressing and soil fungicides. Moreover, they are suitable for controlling harmful fungi, which inter alia occur in wood or roots of plants.

The compounds I and the compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, compounds I and compositions thereof, respectively are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with compounds I and compositions thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein).

The compounds I, and mixtures comprising them, and agrochemical compositions thereof, respectively, are particularly suitable for controlling the following plant diseases:

*Albugo* spp. (white rust) on ornamentals, vegetables (e. g. *A. candida)* and sunflowers (e. g. A. *tragopogonis*); *Alternaria* spp. (Alternaria leaf spot) on vegetables, rape (*A. brassicola* or *brassicae*), sugar beets (*A. tenuís*), fruits, rice, soybeans, potatoes (e. g. A. *solani* or A. *alternata),* tomatoes (e. g. A. *solani* or A. *alternata)* and wheat; *Aphanomyces* spp. on sugar beets and vegetables; *Ascochyta* spp. on cereals and vegetables, e. g. A. *tritici* (anthracnose) on wheat and *A. hordei* on barley; *Bipolaris* and *Drechslera* spp. (teleomorph: *Cochliobolus* spp.), e. g. Southern leaf blight (*D. maydis*) or Northern leaf blight (*B. zeicola)* on corn, e. g. spot blotch (*B. sorokiniana*) on cereals and e. g. *B. oryzae* on rice and turfs; *Blumeria* (formerly *Erysiphe) graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystís* (syn. *Ophiostoma)* spp. (rot or wilt) on broad-leaved trees and evergreens, e. g. *C. ulmi* (Dutch elm disease) on elms; *Cercospora* spp. (Cercospora leaf spots) on corn (e. g. Gray leaf spot: *C. zeae-maydis),* rice, sugar beets (e. g. *C. beticola*), sugar cane, vegetables, coffee, soybeans (e. g. *C. sojina* or *C. kikuchii*) and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*), corn (e. g. *C. graminicola:* Anthracnose stalk rot), soft fruits, potatoes (e. g. *C. coccodes:* black dot), beans (e. g. *C. lindemuthianum)* and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline,

teleomorph: Nectria or *Neonectria* spp.) on fruit trees, vines (e. g. *C. liriodendri,* teleomorph: *Neonectria liriodendri*: Black Foot Disease) and ornamentals; *Dematophora* (teleomorph: *Rosellinia*) *necatrix* (root and stem rot) on soybeans; *Diaporthe* spp., e. g. *D. phaseolorum* (damping off) on soybeans; *Drechs*lera (syn. *Helminthosporium,* teleomorph: *Pyrenophora)* spp. on corn, cereals, such as barley (e. g. *D. teres,* net blotch) and wheat (e. g. *D. tritici-repentis*: tan spot), rice and turf; Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum*), *Phaeoacremonium aleophilum* and/or *Botryosphaeria obtusa; Elsinoe* spp. on pome fruits (*E. pyri*), soft fruits (*E. veneta:* anthracnose) and vines (*E. ampelina:* anthracnose); *Entyloma oryzae* (leaf smut) on rice; *Epicoccum* spp. (black mold) on wheat; *Erysiphe* spp. (powdery mildew) on sugar beets (*E. betae*)*,* vegetables (e. g. *E. pisi*)*,* such as cucurbits (e. g. *E. cichoracearum*), cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. furcicum*); *Fusarium* (teleomorph: Gibberella) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme)* and *F. tucumaniae* and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. *G.* zeae) and rice (e. g. *G. fujikuroi:* Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium) nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M. fijiensis* (black Sigatoka disease) on bananas; *Peronospora* spp. (downy mildew) on cabbage (e. g. *P. brassicae*)*,* rape (e. g. *P. parasitica*)*,* onions (e. g. *P. destructor*)*,* tobacco (*P. tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli,* teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*)*,* potatoes and tomatoes (e. g. *P. infestans:* late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis)* and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ‚rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum); Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum*); *Septoria* spp. on various plants, e. g. S. *glycines* (brown spot) on soybeans, *S. tritici* (Septoria blotch) on wheat and *S*. (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana*: head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. S. *nodorum* (Stagonospora blotch, teleomorph: *Leptosphaeria* [syn. *Phaeosphaeria*] *nodorum*) on wheat; *Synchytrium endobioficum* on potatoes (potato wart disease); *Taphrina* spp., e. g. *T.*

*deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula íncarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago* spp. (loose smut) on cereals (e. g. *U. nuda* and *U. avaenae*)*,* corn (e. g. *U. maydis:* corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

In a preferred embodiment the compounds I, their mixtures with other active compounds as defined herein and compositions thereof, respectively, are particularly suitable for controlling the following plant diseases: *Puccinia* spp. (rusts) on various plants, for example, but not limited to *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye and *Phakopsoraceae* spp. on various plants, in particular *Phakopsora pachyrhizi* and *P. meibomiae* (soybean rust) on soybeans.

The compounds I, and mixtures comprising them, and agrochemical compositions thereof, respectively, are particularly suitable for controlling the following plant diseases relating especially to seed:

*Alternaria* spp. (seed borne diseases) on corn and wheat; *Aspergillus* ssp. (seed borne diseases) on corn; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus*); *Colletotrichum* (teleomorph: *Glomerella*) spp. (anthracnose) on corn; *Fusarium* (teleomorph: Gibberella) spp. (wilt, root or stem rot) such as *F. graminearum* or *F. culmorum* (root rot, scab or head blight) on cereals (e. g. wheat or barley), *F. avenacuem* on corn and wheat, *F. oxysporum* on corn, *F. proliferatum* on corn, *F. subglutians* on corn, *F. temperatum* on corn, *F. solani* (f. sp. *glycines* now syn. *F. virguliforme)* causing sudden death syndrome on soybeans, and *F. verticillioides* on corn; *Gaeumannomyces graminis* (take-all) on cereals (e. g. wheat or barley) and corn; *Helminthosporium* spp. (syn. Drechslera, teleomorph: *Cochliobolus*) on corn; *Microdochium* (syn. *Fusarium) nivale* (pink snow mold) on cereals (e. g. wheat or barley); *Penicillum* ssp. (seed borne diseases) on corn; *Phoma lingam* (root and stem rot) on rape and cabbage; *Phomopsis* spp. on soybeans (e. g. stem rot: *P. phaseoli,* teleomorph: *Diaporthe phaseolorum*); *Phytophthora* spp. (wilt, root, leaf, fruit and stem root) soybeans (e. g. *P. sojae*); *Puccinia* spp. (rusts) e. g. *P. striiformis* (stripe or yellow rust), *P. graminis* (stem or black rust) on cereals, such as e. g. wheat, barley or rye; *Pyrenophora* (anamorph: *Drechslera*) *graminea* (barley leaf stripe) on barley or *P. teres* (net blotch) on barley; *Pythium* spp. (damping-off) e. g. *P. ultimum* on corn, *P. aphanidermatum* on soybean, *P. arrhenomanes* on wheat *P. irregular* on wheat; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Sclerotinia* spp. (stem rot or white mold) on soybeans (e. g. *S. rolfsii* or *S. sclerotíorum*); *Sphacelotheca* spp. (smut) on corn, (e. g. *S. reiliana*: head smut); *Tilletia* ssp. Such as *Tilletia caries* (wheat bunt) and *T. controversa* (dwarf bunt) on wheat; *Typhula íncarnata* (grey snow mold) on barley or wheat; *Urocystis* spp., e. g. *U. occulfa* (stem smut) on rye; *Ustilago* spp. (loose smut) on cereals (e. g. *U. nuda*)*,* wheat (e.g. *U. lingam*).

In a preferred embodiment the compounds I, their mixtures with other active compounds as defined herein and compositions thereof, respectively, are particularly suitable for controlling the following plant diseases:

*Alternaria* spp. (seed borne diseases) on corn and wheat; *Aspergillus* ssp. (seed borne diseases) on corn; *Fusarium* (teleomorph: Gibberella) spp. (wilt, root or stem rot) such as *F. graminearum* or *F. culmorum* (root rot, scab or head blight) on cereals (e. g. wheat or barley), *F. avenacuem* on corn and wheat, *F. oxysporum* on corn, *F. proliferatum* on corn, *F. subglutians* on corn, *F. solani* (f. sp. *glycines* now syn. *F. virguliforme)* causing sudden death syndrome on soybeans, and *F. verticillioides* on corn; *Gaeumannomyces graminis* (take-all) on cereals (e. g. wheat or barley) and corn; *Microdochium* (syn. *Fusarium) nivale* (pink snow mold) on cereals (e. g. wheat or barley); *Penicillum* ssp. (seed borne diseases) on corn; *Phoma lingam* (root and stem rot) on rape and cabbage; *Phytophthora* spp. (wilt, root, leaf, fruit and stem root) soybeans (e. g. *P. sojae*); *Pyrenophora* (anamorph: *Drechslera*) *graminea* (barley leaf stripe) on barley or *Pythium* spp. (damping-off) e. g. *P. ultimum* on corn, *P. aphanidermatum* on soybean, *P. arrhenomanes* on wheat *P. irregular on* wheat; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Sclerotinia* spp. (stem rot or white mold) on soybeans (e. g. *S. rolfsii* or *S. sclerotiorum*); *Sphacelotheca* spp. (smut) on corn, (e. g. *S. reiliana*: head smut); *Tilletia* ssp. Such as *Tilletia caries* (wheat bunt) and *T. controversa* (dwarf bunt) on wheat; *Ustilago* spp. (loose smut) on cereals (e. g. *U. nuda*)*,* wheat (e.g. *U. lingam*).

In a most preferred embodiment the compounds I, their mixtures with other active compounds as defined herein and compositions thereof, respectively, are particularly suitable for controlling the following plant diseases:

*Fusarium* (teleomorph: Gibberella) spp. (wilt, root or stem rot) such as *F. graminearum* or *F. culmorum* (root rot, scab or head blight) on cereals (e. g. wheat or barley), *F. solani* (f. sp. *glycines* now syn. *F. virguliforme)* causing sudden death syndrome on soybeans; *Microdochium* (syn. *Fusarium) nivale* (pink snow mold) on cereals (e. g. wheat or barley); *Pythium* spp. (damping-off) e. g. *P. ultimum* on corn; *Rhizoctonia* spp. on cotton, rice, potatoes, turf, corn, rape, potatoes, sugar

beets, vegetables and various other plants, e. g. *R. solani* (root and stem rot) on soybeans, *R. solani* (sheath blight) on rice or *R. cerealis* (Rhizoctonia spring blight) on wheat or barley; *Sphacelotheca* spp. (smut) on corn, (e. g. *S. reiliana*: head smut); *Tilletia* ssp. Such as *Tilletia caries* (wheat bunt) and *T. controversa* (dwarf bunt) on wheat.

Mixtures A1-1 to A1-807 as defined above are suitable for controlling grey mold und white mold diseases especially Botrytis species (*Botrytis spp.*) and Sclerotinia species (*Sclerotinia spp.*).

Mixtures A1-1 to A1-807 as defined above are suitable for controlling rice leaf, neck, collar and panicle blast especially *Pyricularia grisae formerly oryzae* as well as Brown spot (*Cochliobolus miyabeanus formerly Helminthosporium oryzae; Drechslera oryzae; Bipolaris oryzae*), Dirty Panicle comprising *Cercopsora oryzae; Curvularia lunata, Trichoconis padwickii, Sarocladium oryzae, Fusarium semitectum,* Sheath Blight (*Rhizoctonia solani = Thanatephorus cucumeris (aka Corticium sasakii*), Bakanae disease (*Fusarium fujikuroi = Giberella fujikuroi*).

Mixtures A1-1 to A1-807 as defined above are suitable for controlling pomefruit and stonefruit diseases especially *Venturia spp., Monilinia spp., Monilia spp., Alternaria spp., Diplocarpon mali = Marssonina coronaria.*

Mixtures A1-1 to A1-807 as defined above are suitable for controlling Rhizoctonia diseases especially *Rhizoctonia solani* in several crops like turf, cereals, as well as potato and leafy vegetables.

Mixtures A1-1 to A1-807 as defined above are suitable for controlling storage disease complexes in pome and stonefruits especially *Gloeosporium spp., Penicillium spp., Botrytis spp., Monilia and Monilinia spp., Sphaeropsis spp., Neofabraea spp., Mucor spp..*

Mixtures A1-1 to A1-807 as defined above are suitable for controlling different soil and seedborne pathogen especially like Fusarium species (Fusarium spp. Like F. culmorum, F. graminearum), snow mold Microdochium nivale, Cochliobolus spp., Ustilago spp., Septoria spp., Pyrenophora spp., Cladosporium spp., Rhynchosporium spp., Tilletia spp. and Rhizoctonia solani).

Mixtures B1-1 to B1-7503 as defined above are suitable for controlling grey mold und white mold diseases especially Botrytis species *(Botrytis spp.)* and Sclerotinia species (*Sclerotinia spp.).*

Mixtures B1-1 to B1-7503 as defined above are suitable for controlling rice leaf, neck, collar and panicle blast especially *Pyricularia grisae formerly oryzae* as well as Brown spot *(Cochliobolus miyabeanus formerly Helminthosporium oryzae; Drechslera oryzae; Bipolaris oryzae),* Dirty Panicle comprising *Cercopsora oryzae; Curvularia lunata, Trichoconis padwickii, Sarocladium oryzae, Fusarium semitectum,* Sheath Blight *(Rhizoctonia solani = Thanatephorus cucumeris (aka Corticium sasakii),* Bakanae disease *(Fusarium fujikuroi = Giberella fujikuroj).*

Mixtures B1-1 to B1-7503 as defined above are suitable for controlling pomefruit and stonefruit diseases especially *Venturia spp., Monilinia spp., Monilia spp., Alternaria spp., Diplocarpon mali = Marssonina coronaria.*

Mixtures B1-1 to B1-7503 as defined above are suitable for controlling Rhizoctonia diseases especially *Rhizoctonia solani* in several crops like turf, cereals, as well as potato and leafy vegetables.

Mixtures B1-1 to B1-7503 as defined above are suitable for controlling storage disease complexes in pome and stonefruits especially *Gloeosporium spp., Penicillium spp., Botrytis spp., Monilia and Monilinia spp., Sphaeropsis spp., Neofabraea spp., Mucor spp..*

Mixtures B1-1 to B1-7503 as defined above are suitable for controlling different soil and seedborne pathogen especially like Fusarium species (Fusarium spp. Like F. culmorum, F. graminearum), snow mold Microdochium nivale, Cochliobolus spp., Ustilago spp., Septoria spp., Pyrenophora spp., Cladosporium spp., Rhynchosporium spp., Tilletia spp. and Rhizoctonia solani).

The compounds I and compositions thereof, respectively, are also suitable for controlling harmful fungi in the protection of stored products or harvest and in the protection of materials.

The term "protection of materials" is to be understood to denote the protection of technical and non-living materials, such as adhesives, glues, wood, paper and paperboard, textiles, leather, paint dispersions, plastics, cooling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichoderma* spp., *Alternaria* spp., *Paecilomyces* spp. and Zygomycetes such as *Mucor* spp., and in addition in the protection of stored products and harvest the following yeast fungi are worthy of note: *Candida* spp. and *Saccharomyces cerevisae.*

The method of treatment according to the invention can also be used in the field of protecting stored products or harvest against attack of fungi and microorganisms. According to the present invention, the term "stored products" is understood to denote natural substances of plant or animal origin and their processed forms, which have been taken from the natural life cycle and for which long-term protection is desired. Stored products of crop plant origin, such as plants or parts thereof, for example stalks, leafs, tubers, seeds, fruits or grains, can be protected in the freshly harvested state or in processed form, such as pre-dried, moistened, comminuted, ground, pressed or roasted, which process is also known as post-harvest treatment. Also falling under the definition of stored products is timber, whether in the form of crude timber,

such as construction timber, electricity pylons and barriers, or in the form of finished articles, such as furniture or objects made from wood. Stored products of animal origin are hides, leather, furs, hairs and the like. The combinations according the present invention can prevent disadvantageous effects such as decay, discoloration or mold. Preferably "stored products" is understood to denote natural substances of plant origin and their processed forms, more preferably fruits and their processed forms, such as pomes, stone fruits, soft fruits and citrus fruits and their processed forms.

The compounds I and compositions thereof, respectively, may be used for improving the health of a plant. The invention also relates to a method for improving plant health by treating a plant, its propagation material and/or the locus where the plant is growing or is to grow with an effective amount of compounds I and compositions thereof, respectively.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress. The above identified indicators for the health condition of a plant may be interdependent or may result from each other.

The compounds of formula I can be present in different crystal modifications whose biological activity may differ. They are likewise subject matter of the present invention.

The compounds I are employed as such or in form of compositions by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

Plant propagation materials may be treated with compounds I as such or a composition comprising at least one compound I prophylactically either at or before planting or transplanting.

The invention also relates to agrochemical compositions comprising an auxiliary and at least one compound I according to the invention.

An agrochemical composition comprises a fungicidally effective amount of a compound I. The term "effective amount" denotes an amount of the composition or of the compounds I, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific compound I used.

The compounds I, their N-oxides and salts can be converted into customary types of agrochemical compositions, e. g. solutions, emulsions, suspensions, dusts, powders, pastes, granules, pressings, capsules, and mixtures thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

The binary or ternary mixtures of active compounds described herein can be prepared as compositions comprising besides the active ingredients at least one inert ingredient (auxiliary) by usual means, e. g. by the means given herein for the compositions of compounds I. Concerning usual ingredients of such compositions reference is made to the explanations given for the compositions containing compounds I.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e. g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e. g. ethanol, propanol, butanol, benzyl alcohol, cyclohexanol; glycols; DMSO; ketones, e. g. cyclohexanone; esters, e. g. lactates, carbonates, fatty acid esters, gamma-butyrolactone; fatty acids; phosphonates; amines; amides, e. g. N-methyl pyrrolidone, fatty acid dimethyl amides; and mixtures thereof.

Suitable solid carriers or fillers are mineral earths, e. g. silicates, silica gels, talc, kaolins, limestone, lime, chalk, clays, dolomite, diatomaceous earth, bentonite, calcium sulfate, magnesium sulfate, magnesium oxide; polysaccharides, e. g. cellulose, starch; fertilizers, e. g. ammonium sulfate, ammonium phosphate, ammonium nitrate, ureas; products of vegetable origin, e. g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol. 1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylaryl sulfonates, diphenyl sulfonates, alpha-olefin sulfonates, lignin sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinyl pyrrolidone, vinyl alcohols, or vinyl acetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinyl amines or polyethylene amines.

Suitable adjuvants are compounds, which have a negligible or even no pesticidal activity themselves, and which improve the biological performance of the compound I on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e. g. xanthan gum, carboxymethyl cellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e. g. in red, blue, or green) are pigments of low water solubility and water-soluble dyes. Examples are inorganic colorants (e. g. iron oxide, titan oxide, iron hexacyanoferrate) and organic colorants (e. g. alizarin-, azo- and phthalocyanine colorants).

Suitable tackifiers or binders are polyvinyl pyrrolidones, polyvinyl acetates, polyvinyl alcohols, polyacrylates, biological or synthetic waxes, and cellulose ethers.

Examples for composition types and their preparation are:

i) Water-soluble concentrates (SL, LS)
10-60 wt% of a compound I and 5-15 wt% wetting agent (e. g. alcohol alkoxylates) are dissolved in water and/or in a water-soluble solvent (e. g. alcohols) ad 100 wt%. The active compound dissolves upon dilution with water.

ii) Dispersible concentrates (DC)
5-25 wt% of a compound I and 1-10 wt% dispersant (e. g. polyvinyl pyrrolidone) are dissolved in organic solvent (e. g. cyclohexanone) ad 100 wt%. Dilution with water gives a dispersion.

iii) Emulsifiable concentrates (EC)
15-70 wt% of a compound I and 5-10 wt% emulsifiers (e. g. calcium dodecylbenzenesulfonate and castor oil ethoxylate) are dissolved in water-insoluble organic solvent (e. g. aromatic hydrocarbon) ad 100 wt%. Dilution with water gives an emulsion.

iv) Emulsions (EW, EO, ES)
5-40 wt% of a compound I and 1-10 wt% emulsifiers (e. g. calcium dodecylbenzenesulfonate and castor oil ethoxylate) are dissolved in 20-40 wt% water-insoluble organic solvent (e. g. aromatic hydrocarbon). This mixture is introduced into water ad 100 wt% by means of an emulsifying machine and made into a homogeneous emulsion. Dilution with water gives an emulsion.

v) Suspensions (SC, OD, FS)

In an agitated ball mill, 20-60 wt% of a compound I are comminuted with addition of 2-10 wt% dispersants and wetting agents (e. g. sodium lignosulfonate and alcohol ethoxylate), 0.1-2 wt% thickener (e. g. xanthan gum) and water ad 100 wt% to give a fine active compound suspension. Dilution with water gives a stable suspension of the active substance. For FS type composition up to 40 wt% binder (e. g. polyvinyl alcohol) is added.

vi) Water-dispersible granules and water-soluble granules (WG, SG)

50-80 wt% of a compound I are ground finely with addition of dispersants and wetting agents (e. g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% of a compound I are ground in a rotor-stator mill with addition of 1-5 wt% dispersants (e. g. sodium lignosulfonate), 1-3 wt% wetting agents (e. g. alcohol ethoxylate) and solid carrier (e. g. silica gel) ad 100 wt%. Dilution with water gives a stable dispersion or solution of the active substance.

viii) Gel (GW, GF)

In an agitated ball mill, 5-25 wt% of a compound I are comminuted with addition of 3-10 wt% dispersants (e. g. sodium lignosulfonate), 1-5 wt% thickener (e. g. carboxymethyl cellulose) and water ad 100 wt% to give a fine suspension of the active substance. Dilution with water gives a stable suspension of the active substance.

ix) Microemulsion (ME)

5-20 wt% of a compound I are added to 5-30 wt% organic solvent blend (e. g. fatty acid dimethyl amide and cyclohexanone), 10-25 wt% surfactant blend (e. g. alcohol ethoxylate and arylphenol ethoxylate), and water ad 100 %. This mixture is stirred for 1 h to produce spontaneously a thermodynamically stable microemulsion.

x) Microcapsules (CS)

An oil phase comprising 5-50 wt% of a compound I, 0-40 wt% water insoluble organic solvent (e. g. aromatic hydrocarbon), 2-15 wt% acrylic monomers (e. g. methylmethacrylate, methacrylic acid and a di- or triacrylate) are dispersed into an aqueous solution of a protective colloid (e. g. polyvinyl alcohol). Radical polymerization results in the formation of poly(meth)acrylate microcapsules. Alternatively, an oil phase comprising 5-50 wt% of a compound I according to the invention, 0-40 wt% water insoluble organic solvent (e. g. aromatic hydrocarbon), and an isocyanate monomer (e. g. diphenylmethene-4,4'-diisocyanatae) are dispersed into an aqueous solution of a protective colloid (e. g. polyvinyl alcohol). The addition of a polyamine (e. g. hexamethylenediamine) results in the formation of polyurea microcapsules. The monomers amount to 1-10 wt%. The wt% relate to the total CS composition.

xi) Dustable powders (DP, DS)

1-10 wt% of a compound I are ground finely and mixed intimately with solid carrier (e. g. finely divided kaolin) ad 100 wt%.

xii) Granules (GR, FG)

0.5-30 wt% of a compound I is ground finely and associated with solid carrier (e. g. silicate) ad 100 wt%. Granulation is achieved by extrusion, spray-drying or fluidized bed.

xiii) Ultra-low volume liquids (UL)

1-50 wt% of a compound I are dissolved in organic solvent (e. g. aromatic hydrocarbon) ad 100 wt%.

The compositions types i) to xiii) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, more preferably between 1 and 70%, and in particular between 10 and 60%, by weight of active substance. The active substances are employed in a purity of from 90% to 100%, preferably from 95% to 100% (according to NMR spectrum).

For the purposes of treatment of plant propagation materials, particularly seeds, solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC), and gels (GF) are usually employed. The compositions in question give, after two-to-tenfold dilution, active compound concentrations of from 0.01 to 60% by weight, preferably from 0.1 to 40%, in the ready-to-use preparations. Application can be carried out before or during sowing. Methods for applying compound I and compositions thereof, respectively, onto plant propagation material, especially seeds, include dressing, coating, pelleting, dusting, and soaking as well as in-furrow application methods. Preferably, compound I or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.

In treatment of plant propagation materials such as seeds, e. g. by dusting, coating or drenching seed, amounts of

active compound of from 0.1 to 1000 g, preferably from 1 to 1000 g, more preferably from 1 to 100 g and most preferably from 5 to 100 g, per 100 kilogram of plant propagation material (preferably seeds) are generally required.

When used in the protection of materials or stored products, the amount of active compound applied depends on the kind of application area and on the desired effect. Amounts customarily applied in the protection of materials are 0.001 g to 2 kg, preferably 0.005 g to 1 kg, of active compound per cubic meter of treated material.

Various types of oils, wetters, adjuvants, fertilizer, or micronutrients, and further pesticides (e. g. herbicides, insecticides, fungicides, growth regulators, safeners, biopesticides) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

A pesticide is generally a chemical or biological agent (such as pestidal active ingredient, compound, composition, virus, bacterium, antimicrobial or disinfectant) that through its effect deters, incapacitates, kills or otherwise discourages pests. Target pests can include insects, plant pathogens, weeds, mollusks, birds, mammals, fish, nematodes (roundworms), and microbes that destroy property, cause nuisance, spread disease or are vectors for disease. The term "pesticide" includes also plant growth regulators that alter the expected growth, flowering, or reproduction rate of plants; defoliants that cause leaves or other foliage to drop from a plant, usually to facilitate harvest; desiccants that promote drying of living tissues, such as unwanted plant tops; plant activators that activate plant physiology for defense of against certain pests; safeners that reduce unwanted herbicidal action of pesticides on crop plants; and plant growth promoters that affect plant physiology e.g. to increase plant growth, biomass, yield or any other quality parameter of the harvestable goods of a crop plant.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary or ternary mixture may be mixed by the user himself in a spray tank or any other kind of vessel used for applications (e. g. seed treater drums, seed pelleting machinery, knapsack sprayer) and further auxiliaries may be added, if appropriate.

Consequently, one embodiment of the invention is a kit for preparing a usable pesticidal composition, the kit comprising a) a composition comprising component 1) as defined herein and at least one auxiliary; and b) a composition comprising component 2) as defined herein and at least one auxiliary; and optionally c) a composition comprising at least one auxiliary and optionally a further active component 3) as defined herein.

Mixing the compounds I or the compositions comprising them in the use form as fungicides with other fungicides results in many cases in an expansion of the fungicidal spectrum of activity being obtained or in a prevention of fungicide resistance development. Furthermore, in many cases, synergistic effects are obtained.

The present invention furthermore relates to agrochemical compositions comprising a mixture of at least one compound I (component 1) and at least one further active compound useful for plant protection, e. g. selected from the groups A) to O) (component 2), in particular one further fungicide, e. g. one or more fungicide from the groups A) to K), as described above, and if desired one suitable solvent or solid carrier. Those mixtures are of particular interest, since many of them at the same application rate show higher efficiencies against harmful fungi.

Furthermore, combating harmful fungi with a mixture of compounds I and at least one fungicide from groups A) to K), as described above, is more efficient than combating those fungi with individual compounds I or individual fungicides from groups A) to K).

By applying compounds I together with at least one active compound from groups A) to O) a synergistic effect can be obtained, i.e. more than simple addition of the individual effects is obtained (synergistic mixtures).

This can be obtained by applying the compounds I and at least one further active compound simultaneously, either jointly (e. g. as tank-mix) or seperately, or in succession, wherein the time interval between the individual applications is selected to ensure that the active compound applied first still occurs at the site of action in a sufficient amount at the time of application of the further active substance(s). The order of application is not essential for working of the present invention.

When applying compound I and a pesticide II sequentially the time between both applications may vary e. g. between 2 hours to 7 days. Also a broader range is possible ranging from 0.25 hour to 30 days, preferably from 0.5 hour to 14 days, particularly from 1 hour to 7 days or from 1.5 hours to 5 days, even more preferred from 2 hours to 1 day.

In the binary mixtures and compositions according to the invention the weight ratio of the component 1) and the component 2) generally depends from the properties of the active components used, usually it is in the range of from 1:10000 to 10000:1, often it is in the range of from 1:100 to 100:1, regularly in the range of from 1:50 to 50:1, preferably in the range of from 1:20 to 20:1, more preferably in the range of from 1:5 to 5:1 and in particular in the range of from 1:2 to 2:1.

According to a further embodiment of the binary mixtures and compositions, the weight ratio of the component 1)

and the component 2) usually is in the range of from 1000:1 to 1:1, often in the range of from 100: 1 to 1:1, regularly in the range of from 50:1 to 1:1, preferably in the range of from 20:1 to 1:1, more preferably in the range of from 5:1 to 1:1 and in particular in the range of from 2:1 to 1:1.

According to a further embodiments of the binary mixtures and compositions, the weight ratio of the component 1) and the component 2) usually is in the range of from 1:1 to 1:1000, often in the range of from 1:1 to 1:100, regularly in the range of from 1:1 to 1:50, preferably in the range of from 1:1 to 1:20, more preferably in the range of from 1:1 to 1:5 and in particular in the range of from 1:1 to 1:2.

In the ternary mixtures, i.e. compositions according to the invention comprising the component 1) and component 2) and a compound III (component 3), the weight ratio of component 1) and component 2) is in the range of from 1:100 to 100:1, regularly in the range of from 1:50 to 50:1, preferably in the range of from 1:20 to 20:1, more preferably in the range of from 1:5 to 5:1 and in particular in the range of from 1:2 to 2:1, and the weight ratio of component 1) and component 3) is in the range of from 1:100 to 100:1, regularly in the range of from 1:50 to 50:1, preferably in the range of from 1:20 to 20:1, more preferably in the range of from 1:5 to 5:1 and in particular in the range of from 1:2 to 2:1.

Any further active components are, if desired, added in a ratio of from 20:1 to 1:20 to the component 1).

These ratios are also suitable for inventive mixtures applied by seed treatment.

The fungicidal action of the mixtures according to the invention can be shown by the tests described below.

The visually determined percentages of infected leaf areas are converted into efficacies in % of the untreated control.

The efficacy (E) is calculated as follows using Abbot's formula:

$$E = (1 - \alpha/\beta) \cdot 100$$

$\alpha$ corresponds to the fungicidal infection of the treated plants in % and

$\beta$ corresponds to the fungicidal infection of the untreated (control) plants in %

An efficacy of 0 means that the infection level of the treated plants corresponds to that of the untreated control plants; an efficacy of 100 means that the treated plants were not infected.

The expected efficacies of active compound combinations may be determined using Colby's formula (Colby, S.R. "Calculating synergistic and antagonistic responses of herbicide combinations", Weeds, 15, pp. 20-22, 1967) and compared with the observed efficacies.

Colby's formula:

$$E = x + y - x \cdot y/100$$

E expected efficacy, expressed in % of the untreated control, when using the mixture of the active compounds A and B at the concentrations a and b

x efficacy, expressed in % of the untreated control, when using the active compound A at the concentration a

y efficacy, expressed in % of the untreated control, when using the active compound B at the concentration b.

<u>Microtest</u>

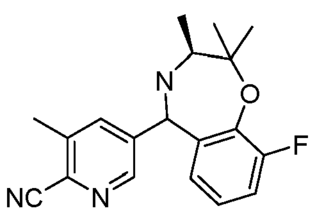

Compound 1-1

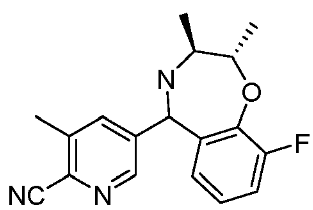

Compound 1-2

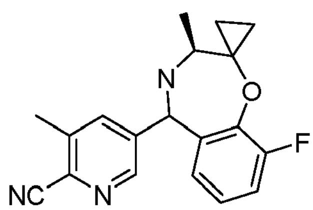

Compound 1-3

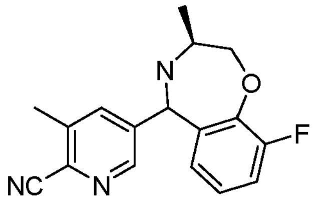

Compound 1-4

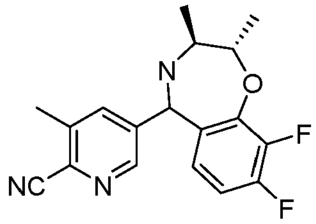

Compound 1-5

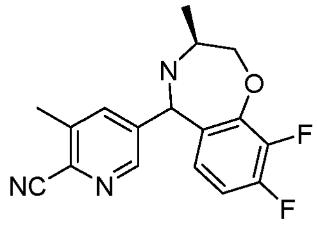

Compound 1-6

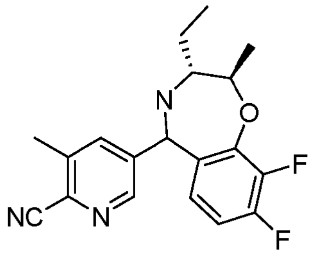

Compound 1-7

**Example 1** - **Activity against *Pyricularia* oryzae in the microtiterplate test**

The active compounds were formulated separately as a stock solution having a concentration of 10000 ppm in dimethyl sulfoxide.

The stock solutions were mixed according to the ratio, pipetted onto a micro titer plate (MTP) and diluted with water to the stated concentrations. A spore suspension of *Pyricularia oryzae* in an aqueous biomalt or yeast-bactopeptone-sodiumacetate solution was then added. The plates were placed in a water vapor-saturated chamber at a temperature of 18°C. Using an absorption photometer, the MTPs were measured at 405 nm 7 days after the inoculation.

| Active compound / active mixture | Concentration (ppm) | Mixture | Observed efficacy | Calculated efficacy according to Colby (%) |
|---|---|---|---|---|
| Compound 1-1 | 1<br>0.25<br>0.063<br>0.016 | -<br>-<br>-<br>- | 57<br>17<br>11<br>6 | |
| Compound 1-2 | 1<br>0.25<br>0.063 | -<br>-<br>- | 32<br>12<br>10 | |
| Compound 1-3 | 1<br>0.25<br>0.063<br>0.016 | -<br>-<br>-<br>- | 34<br>16<br>11<br>5 | |
| Azoxystrobin | 0.016 | - | 49 | |
| Dimoxystrobin | 0.016 | - | 35 | |
| Florylpicoxamid | 0.004 | - | 43 | |
| Fludioxonil | 0.016 | - | 44 | |
| Iprodion | 4 | - | 44 | |
| Isofetamid | 4 | - | 13 | |
| Prothioocnazol | 4 | - | 20 | |
| Thiadinil | 4 | - | 17 | |

(continued)

| Active compound / active mixture | Concentration (ppm) | Mixture | Observed efficacy | Calculated efficacy according to Colby (%) |
|---|---|---|---|---|
| Compound 1-1<br>Azoxystrobin | 0.25<br>0.016 | 16: 1 | 72 | 53 |
| Compound 1-1<br>Dimoxystrobin | 0.016<br>0.016 | 1:1 | 65 | 39 |
| Compound 1-1<br>Florylpicoxamid | 0.063<br>0.004 | 16: 1 | 69 | 49 |
| Compound 1-1<br>Fludioxonil | 0.063<br>0.016 | 4: 1 | 98 | 50 |
| Compound 1-1<br>Iprodion | 1<br>4 | 1 : 4 | 97 | 76 |
| Compound 1-2<br>Azoxystrobin | 0.25<br>0.016 | 16: 1 | 66 | 50 |
| Compound 1-2<br>Fludioxonil | 0.063<br>0.016 | 4: 1 | 99 | 50 |
| Compound 1-2<br>Iprodion | 1<br>4 | 1 : 4 | 98 | 62 |
| Compound 1-2<br>Isofetamid | 1<br>4 | 1.4 | 57 | 41 |
| Compound 1-2<br>Prothioocnazol | 1<br>4 | 1 : 4 | 64 | 45 |
| Compound 1-2<br>Thiadinil | 1<br>4 | 1 : 4 | 71 | 44 |
| Compound 1-3<br>Azoxystrobin | 0.25<br>0.016 | 16: 1 | 73 | 52 |
| Compound 1-3<br>Dimoxystrobin | 0.016<br>0.016 | 1:1 | 69 | 38 |
| Compound 1-3<br>Florylpicoxamid | 0.063<br>0.004 | 16: 1 | 65 | 49 |
| Compound 1-3<br>Fludioxonil | 0.063<br>0.016 | 4: 1 | 98 | 50 |
| Compound 1-3<br>Iprodion | 1<br>4 | 1 : 4 | 98 | 63 |
| Compound 1-3<br>Isofetamid | 1<br>4 | 1 : 4 | 70 | 42 |
| Compound 1-3<br>Prothioocnazol | 1<br>4 | 1 : 4 | 68 | 47 |
| Compound 1-3<br>Thiadinil | 1<br>4 | 1 : 4 | 72 | 45 |

**Example 2 - Activity against *Septoria tritici* in the microtiterplate test**

The active compounds were formulated separately as a stock solution having a concentration of 10000 ppm in dimethyl sulfoxide.

The stock solutions were mixed according to the ratio, pipetted onto a micro titer plate (MTP) and diluted with

water to the stated concentrations. A spore suspension of *Septoria tritici* in an aqueous biomalt or yeast-bactopeptone-sodiumacetate solution was then added. The plates were placed in a water vapor-saturated chamber at a temperature of 18°C. Using an absorption photometer, the MTPs were measured at 405 nm 7 days after the inoculation.

| Active compound / active mixture | Concentration (ppm) | Mixture | Observed efficacy | Calculated efficacy according to Colby (%) |
|---|---|---|---|---|
| Compound 1-2 | 0.063 | - | 10 | |
| Compound 1-3 | 1<br>0.004 | -<br>- | 8<br>0 | |
| Dimoxystrobin | 0.004 | - | 20 | |
| Fludioxonil | 0.016 | - | 0 | |
| Tricyclazol | 4 | - | 9 | |
| Compound 1-2<br>Fludioxonil | 0.063<br>0.016 | 4: 1 | 26 | 10 |
| Compound 1-3<br>Dimoxystrobin | 0.004<br>0.004 | 1:1 | 47 | 20 |
| Compound 1-3<br>Tricyclazol | 1<br>4 | 1 : 4 | 34 | 17 |

**Example** 3 - **Activity against *Sclerotinia sclerotiorum* in the microtiterplate test**

The active compounds were formulated separately as a stock solution having a concentration of 10000 ppm in dimethyl sulfoxide.

The stock solutions were mixed according to the ratio, pipetted onto a micro titer plate (MTP) and diluted with water to the stated concentrations. A spore suspension of *Sclerotinia sclerotiorum* in an aqueous biomalt or yeast-bactopeptone-sodiumacetate solution was then added. The plates were placed in a water vapor-saturated chamber at a temperature of 18°C. Using an absorption photometer, the MTPs were measured at 405 nm 7 days after the inoculation.

| Active compound / active mixture | Concentration (ppm) | Mixture | Observed efficacy | Calculated efficacy according to Colby (%) |
|---|---|---|---|---|
| Compound 1-2 | 1<br>0.025<br>0.063 | -<br>-<br>- | 13<br>5<br>5 | |
| Compound 1-3 | 0.063 | - | 3 | |
| Cyclobutrifuram | 0.25 | - | 40 | |
| Iprodion | 0.25 | - | 3 | |
| Tebuconazol | 1 | - | 40 | |
| Compound 1-2<br>Cyclobutrifuram | 0.25<br>0.25 | 1:1 | 57 | 43 |
| Compound 1-2<br>Iprodion | 0.063<br>0.25 | 1 : 4 | 32 | 8 |
| Compound 1-2<br>Tebuconazol | 1<br>1 | 1:1 | 62 | 48 |
| Compound 1-3<br>Iprodion | 0.063<br>0.25 | 1 : 4 | 26 | 5 |

The measured parameters were compared to the growth of the active compound-free control variant (100%) and the fungus-free and active compound-free blank value to determine the relative growth in % of the pathogens in the

respective active compounds.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

## Claims

**1.** A fungicidal mixture comprising as active components

at least one active compound of the formula I, or an N-oxide, or an agriculturally useful salt thereof,

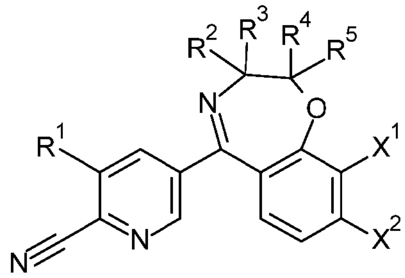

wherein

$R^1$ is selected from $C_1$-$C_6$-alkyl, O-$C_1$-$C_6$-alkyl, S-$C_1$-$C_6$-alkyl, halogen, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, $C_3$-$C_6$-cycloalkyl;

$R^2$ is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics, wherein the moieties are unsubstituted or substituted by one to three groups $R^{2a}$, which independently of one another are selected from:

halogen, CN, $C_1$-$C_6$-alkyl, $C_1$-$C_6$-halogenalkyl, O-$C_1$-$C_6$-alkyl;

$R^3$ is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics, wherein the moieties are unsubstituted or substituted by one to three groups $R^{3a}$, which independently of one another are selected from:

halogen, CN, $C_1$-$C_6$-alkyl, $C_1$-$C_6$-halogenalkyl, O-$C_1$-$C_6$-alkyl;

or

$R^2$ and $R^3$ form together with the C atoms to which they are bound C=O;

or

$R^2$ and $R^3$ form together with the C atoms to which they are bound a a 3-, 4-, 5- or 6-membered saturated carbocyclic ring or a 3-, 4-, 5- or 6-membered saturated heterocyclic ring containing 1, 2 or 3 heteroatoms selected from O, N and S as ring members,

wherein the moieties are unsubstituted or substituted by 1, 2 or 3 substituents $R^{23}$ which independently of one another are selected from: halogen, $C_1$-$C_6$-alkyl or $C_1$-$C_6$-halogenalkyl;

$R^4$ is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics, wherein the moieties are unsubstituted or substituted by one to three groups $R^{4a}$, which independently of one another are selected from:

halogen, CN, $C_1$-$C_6$-alkyl, $C_1$-$C_6$-halogenalkyl, O-$C_1$-$C_6$-alkyl;

$R^5$ is selected from H, $C_1$-$C_6$-alkyl, $C_1$-$C_6$-halogenalkyl, $C_2$-$C_6$-alkenyl, $C_2$-$C_6$-halogenalkenyl, $C_2$-$C_6$-alkynyl, $C_2$-$C_6$-halogenalkynyl, phenyl, benzyl, heterocyclic aromatics and $CH_2$-heterocyclic aromatics, wherein the moieties are unsubstituted or substituted by one to three groups $R^{5a}$, which independently of one another are selected from:

halogen, CN, $C_1$-$C_6$-alkyl, $C_1$-$C_6$-halogenalkyl, O-$C_1$-$C_6$-alkyl;

or

$R^4$ and $R^5$ form together with the C atoms to which they are bound =O;

or

$R^4$ and $R^5$ form together with the C atoms to which they are bound a a 3-, 4-, 5- or 6-membered saturated

carbocyclic ring or a 3-, 4-, 5- or 6-membered saturated heterocyclic ring containing 1, 2 or 3 heteroatoms selected from O, N and S as ring members,
wherein the moieties are unsubstituted or substituted by 1, 2 or 3 substituents $R^{45}$ which independently of one another are selected from: halogen, $C_1$-$C_6$-alkyl or $C_1$-$C_6$-halogenalkyl;
$X^1$ is selected from H, halogen, CN, $C_1$-$C_6$-alkyl, $C_1$-$C_6$-halogenalkyl, O-$C_1$-$C_6$-alkyl, S-$C_1$-$C_6$-alkyl, O-$C_1$-$C_6$-halogenalkyl, $C_2$-$C_6$-alkenyl, $C_2$-$C_6$-alkynyl, $C_3$-$C_6$-cycloalkyl, phenyl, benzyl, O-phenyl, O-benzyl , S-phenyl, S-benzyl,
wherein the cyclic moieties are unsubstituted or substituted by one to three groups $R^{X1}$, which independently of one another are selected from:
halogen, CN, $C_1$-$C_6$-alkyl, $C_1$-$C_6$-halogenalkyl, O-$C_1$-$C_6$-alkyl;
$X^2$ is in each case independently selected from H, halogen, CN, $C_1$-$C_6$-alkyl, $C_1$-$C_6$-halogenalkyl, O-$C_1$-$C_6$-alkyl, S-$C_1$-$C_6$-alkyl, O-$C_1$-$C_6$-halogenalkyl, $C_2$-$C_6$-alkenyl, $C_2$-$C_6$-alkynyl, $C_3$-$C_6$-cycloalkyl, phenyl, benzyl, O-phenyl, O-benzyl , S-phenyl, S-benzyl;
wherein the cyclic moieties are unsubstituted or substituted by one to three groups $R^{X2}$, which independently of one another are selected from:
halogen, CN, $C_1$-$C_6$-alkyl, $C_1$-$C_6$-halogenalkyl, O-$C_1$-$C_6$-alkyl;

and the N-oxides and the agriculturally acceptable salts thereof as fungicides
and as component
2) at least one active compound II selected from groups A) to O), or an N-oxide, or an agriculturally useful salt thereof:

A) Respiration (C)

- complex III at $Q_o$ site (QoI, C3): azoxystrobin (A.1.1), bifemetstrobin (A.1.24), bifujunzhi (A.1.37), coumethoxy-strobin (A.1.2), coumoxystrobin (A.1.3), dimoxystrobin (A.1.4), enestroburin (A.1.5), famoxadone (A.1.21), fenamidone (A.1.23), fenaminstrobin (A.1.6), flufenoxystrobin (A.1.7), fluoxastrobin (A.1.8), kresoxim-methyl (A.1.9), mandestrobin (A.1.10), metominostrobin (A.1.11), metyltetraprole (A.1.25; member of MoA subgroup A), orysastrobin (A.1.12), picoxystrobin (A.1.13), pyraclostrobin (A.1.14), pyrametostrobin (A.1.15), pyraoxystrobin (A.1.16), pyribencarb (A.1.19), pyriminostrobin (A.1.36), triclopyricarb (A.1.20), trifloxystrobin (A.1.17), 2-(2-(3-(2,6-dichlorophenyl)-1-methyl-allylideneaminooxymethyl)-phenyl)-2-methoxyimino-*N*-methyl-acetamide (A.1.18), methyl-N-[2-[(1,4-dimethyl-5-phenyl-pyrazol-3-yl)oxylmethyl]phenyl]-*N*-methoxy-carbamate (A.1.22), (*Z*,2*E*)-5-[1-(2,4-dichlorophenyl)pyrazol-3-yl]-oxy-2-methoxyimino-*N*,3-dimethyl-pent-3-enamide (A.1.34), (*Z*,2*E*)-5-[1-(4-chlorophenyl)pyrazol-3-yl]oxy-2-methoxyimino-*N*,3-dimethyl-pent-3-enamide (A.1.35), 2-(ortho-((2,5-dimethylphenyl-oxymethylen)phenyl)-3-methoxy-acrylic acid methylester (A.1.38), methyl (Z)-3-methoxy-2-[2-methyl-5-(3-propylpyrazol-1-yl)phenoxy]prop-2-enoate, methyl (*Z*)-2-[5-(3-isopropylpyrazol-1-yl)-2-methylphenoxy]-3-methoxy-prop-2-enoate, methyl (*Z*)-3-methoxy-2-[2-methyl-5-[3-(trifluoromethyl)pyrazol-1-yl]phenoxy]prop-2-enoate, methyl (*Z*)-3-methoxy-2-[2-methyl-5-(4-propyltriazol-2-yl)phenoxy]prop-2-enoate, methyl (*Z*)-3-methoxy-2-[2-methyl-5-[4-(trifluoromethyl)triazol-2-yl]phenoxy]prop-2-enoate, methyl (*Z*)-2-[5-(4-isopropyl-triazol-2-yl)-2-methyl-phenoxy]-3-methoxy-prop-2-enoate, methyl (*Z*)-2-(5-cyclobutyl-2-methyl-phenoxy)-3-methoxy-prop-2-enoate, methyl (*Z*)-2-(5-cyclopentyl-2-methyl-phenoxy)-3-methoxy-prop-2-enoate, methyl (*Z*)-2-(5-cyclopropyl-2-methyl-phenoxy)-3-methoxy-prop-2-enoate, methyl (*Z*)-2-(5-cyclohexyl-2-methyl-phenoxy)-3-methoxy-prop-2-enoate, methyl (*E*)-3-methoxy-2-[(2-methyl-5-phenyl-phenyl)methyl]prop-2-enoate, methyl (*E*)-3-methoxy-2-[[5-[(*E*)-*N*-methoxy-C-methyl-carbonimidoyl]-2,4-dimethyl-phenyl]methyl]prop-2-enoate; methyl (*E*)-2-[[5-(2-cyclopropylethynyl)-2,4-dimethyl-phenyl]methyl]-3-methoxy-prop-2-enoate; methyl (*E*)-3-methoxy-2-(2-phenyl-1,3-benzoxazol-4-yl)prop-2-enoate; methyl (*E*)-3-methoxy-2-(2-phenyl-1,3-benzothiazol-4-yl)prop-2-enoate; methyl (*E*)-3-methoxy-2-(2-phenyl-1,3-benzoxazol-7-yl)prop-2-enoate; methyl (*Z*)-2-[6-(2-cyclopropyl-ethynyl)benzimidazol-1-yl]-3-methoxy-prop-2-enoate; methyl (*Z*)-3-methoxy-2-(6-phenylbenzimidazol-1-yl)prop-2-enoate; methyl (*Z*)-2-(3-chloro-6-phenyl-indol-1-yl)-3-methoxy-prop-2-enoate; methyl (*Z*)-2-(2,3-dichloro-6-phenyl-indol-1-yl)-3-methoxy-prop-2-enoate; methyl (*Z*)-3-methoxy-2-[6-[(*E*)-methoxyiminomethyl]indol-1-yl]prop-2-enoate; methyl (*Z*)-3-methoxy-2-[6-[(*E*)-*N*-methoxy-C-methyl-carbonimidoyl]indol-1-yl]prop-2-enoate, methyl *N*-[[5-[1-(2,6-difluoro-4-isopropyl-phenyl)pyrazol-3-yl]-2-methyl-phenyl]methyl]carbamate, methyl *N*-[[5-[1-(4-cyclopropyl-2,6-difluoro-phenyl)pyrazol-3-yl]-2-methyl-phenyl]methyl]carbamate, methyl *N*-[[5-[1-(4-chloro-2,6-difluoro-phenyl)pyrazol-3-yl]-2-methyl-phenyl]methyl]carbamate, methyl *N*-[[5-[1-[2,6-di-fluoro-4-(trifluoromethyl)phenyl]pyrazol-3-yl]-2-methyl-phenyl]methyl]carbamate;

- complex III at $Q_i$ site (QiI, C4): cyazofamid (A.2.1), amisulbrom (A.2.2), [(6S,7R,8R)-8-benzyl-3-[(3-hydroxy-4-methoxy-pyridine-2-carbonyl)amino]-6-methyl-4,9-dioxo-1,5-dioxonan-7-yl]-2-methylpropanoate (A.2.3), fenpicoxamid (A.2.4), florylpicoxamid (A.2.5), metarylpicoxamid (A.2.6);
- complex II (SDHI, C2): benodanil (A.3.1), benzovindiflupyr (A.3.2), bixafen (A.3.3), boscalid (A.3.4), carboxin (A.3.5), cyclobutrifluram (A.3.24), fenfuram (A.3.6), fluopyram (A.3.7), flutolanil (A.3.8), fluxapyroxad (A.3.9), furametpyr (A.3.10), inpyrfluxam (A.3.22), isofetamid (A.3.11), isoflucypram (A.3.31), isopyrazam (A.3.12), mepronil (A.3.13), oxycarboxin (A.3.14), penflufen (A.3.15), penthiopyrad (A.3.16), pydiflumetofen (A.3.17), pyrapropoyne (A.3.23), pyraziflumid (A.3.18), sedaxane (A.3.19), tecloftalam (A.3.20), thifluzamide (A.3.21), fluindapyr (A.3.28), N-[2-[2-chloro-4-(trifluoromethyl)phenoxy]phenyl]-3-(difluoromethyl)-5-fluoro-1-methylpyrazole-4-carboxamide (A.3.29), methyl (E)-2-[2-[(5-cyano-2-methyl-phenoxy)methyl]phenyl]-3-methoxy-prop-2-enoate (A.3.30), 2-(difluoromethyl)-*N*-(1,1,3-trimethyl-indan-4-yl)pyridine-3-carboxamide (A.3.32), 2-(difluoromethyl)-*N*-[(3*R*)-1,1,3-trimethylindan-4-yl]pyridine-3-carboxamide (A.3.33), 2-(difluoromethyl)-*N*-(3-ethyl-1,1-dimethyl-indan-4-yl)pyridine-3-carboxamide (A.3.34), 2-(difluoromethyl)-*N*-[(3R)-3-ethyl-1,1-dimethyl-indan-4-yl]pyridine-3-carboxamide (A.3.35), 2-(difluoromethyl)-*N*-(1,1-dimethyl-3-propyl-indan-4-yl)-pyridine-3-carboxamide (A.3.36), 2-(difluoromethyl)-*N*-[(3R)-1,1-dimethyl-3-propyl-indan-4-yl]pyridine-3-carboxamide (A.3.37), 2-(difluoromethyl)-*N*-(3-isobutyl-1,1-dimethyl-indan-4-yl) pyridine-3-carboxamide (A.3.38), 2-(difluoromethyl)-*N*-[(3R)-3-isobutyl-1,1-dimethyl-indan-4-yl]pyridine-3-carboxamide (A.3.39);
- complex I NADH oxido-reductase (C1): diflumetorim (A.4.1);
- uncouplers (C5): binapacryl (A.4.2), dinobuton (A.4.3), dinocap (A.4.4), fluazinam (A.4.5), meptyldinocap (A.4.6), ferimzone (A.4.7);
- inhibitors of ox. phosphorylation (C6): fentin salts, e.g. fentin-acetate (A.4.8), fentin chloride (A.4.9) or fentin hydroxide (A.4.10);
- ATP transport: silthiofam (A.4.11);
- quinone inside and outside inhibitor stigmatellin binding type (QioSi; C8): ametoctradin (A.5.1);

B) Sterol biosynthesis (G)

- C14 demethylase (DMI, G1): triazoles: azaconazole (B.1.1), bitertanol (B.1.2), bromuconazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluoxytioconazole (B.1.33), fluquinconazole (B.1.10), flusilazole (B.1.11), flutriafol (B.1.12), hexaconazole (B.1.13), imibenconazole (B.1.14), ipconazole (B.1.15), ipfentrifluconazole (B.1.37), mefentrifluconazole (B.1.38), metconazole (B.1.17), myclobutanil (B.1.18), oxpoconazole (B.1.19), paclobutra-zole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), 2-(2,4-difluorophenyl)-1,1-difluoro-3-(tetrazol-1-yl)-1-[5-[4-(2,2,2-trifluoroethoxy)phenyl]-2-pyridyl]propan-2-ol (B.1.31), 2-(2,4-difluorophenyl)-1,1-difluoro-3-(tetrazol-1-yl)-1-[5-[4-(trifluoromethoxy)-phenyl]-2-pyridyl]propan-2-ol (B.1.32), 2-(chloromethyl)-2-methyl-5-(p-tolylmethyl)-1-(1,2,4-triazol-1-ylmethyl)-cyclopentanol (B.1.43), 4-[[6-[2-(2,4-difluorophenyl)-1,1-difluoro-2-hydroxy-3-(1,2,4-triazol-1-yl)propyl]-3-pyridyl]oxy]benzonitrile (B.1.53), 2-[6-(4-bromophenoxy)-2-(trifluoromethyl)-3-pyridyl]-1-(1,2,4-triazol-1-yl)-propan-2-ol (B.1.54), 2-[6-(4-chlorophenoxy)-2-(trifluoromethyl)-3-pyridyl]-1-(1,2,4-triazol-1-yl)propan-2-ol (B.1.55), (2R)-2-[4-(4-chlorophenoxy)-2-(trifluoromethyl)phenyl]-1-(1,2,4-triazol-1-yl)propan-2-ol, (2S)-2-[4-(4-chlorophenoxy)-2-(trifluoromethyl)phenyl]-1-(1,2,4-triazol-1-yl)propan-2-ol, methyl 2-[2-chloro-4-(4-chlorophenoxy)phenyl]-2-hydroxy-3-(1,2,4-triazol-1-yl)propanoate (B.1.56), 2-[2-chloro-4-(4-chlorophenoxy)-phenyl]-2-hydroxy-3-(1,2,4-triazol-1-yl)propanoic acid (B.1.57); imidazoles: imazalil (B.1.44), pefurazoate (B.1.45), prochloraz (B.1.46), triflumizole (B.1.47); pyrimidines, pyridines, piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52);
- delta14-reductase (G2): aldimorph (B.2.1), dodemorph (B.2.2), dodemorph-acetate (B.2.3), fenpropidin (B.2.6), fenpropimorph (B.2.4), piperalin (B.2.7), spiroxamine (B.2.8), tridemorph (B.2.5);
- 3-keto reductase (G3): fenhexamid (B.3.1), fenpyrazamine (B.3.2);
- other: chlorphenomizole (B.4.1);

C) Nucleic acids metabolism (A)

- RNA polymerase I (A1): benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
- adenosine deaminase (A2): bupirimate (C.2.4), 5-fluoro-2-(p-tolylmethoxy)pyrimidin-4-amine (C.2.6), 5-fluoro-2-(4-fluorophenylmethoxy)pyrimidin-4-amine (C.2.7), 5-fluoro-2-(4-chlorophenylmethoxy)pyrimidin-4-amine (C.2.8);
- DNA/RNA synthesis (A3): 5-fluorocytosine (C.2.5), hymexazole (C.2.1), octhilinone (C.2.2),
- gyrase (A4): oxolinic acid (C.2.3);
- dihydroorotate dehydrogenase (DHODH; A5): ipflufenoquin (C.5.1), quinofumelin (C.5.2), feneptamidoquin (C.5.3);

D) Cytoskeleton and motor protein (B)

- tubulin polymerization (MBC; B1): benomyl (D.1.1), carbendazim (D.1.2), fuberidazole (D.1.3), pyridachlometyl (D.1.6), thiabendazole (D.1.4), thiophanate-methyl (D.1.5), *N*-ethyl-2-[(3-ethynyl-8-methyl-6-quinolyl)oxy]butanamide (D.1.8), *N*-ethyl-2-[(3-ethynyl-8-methyl-6-quinolyl)oxy]-2-methylsulfanyl-acetamide (D.1.9), 2-[(3-ethynyl-8-methyl-6-quinolyl)oxy]-*N*-(2-fluoroethyl)butanamide (D.1.10), 2-[(3-ethynyl-8-methyl-6-quinolyl)oxy]-*N*-(2-fluoroethyl)-2-methoxy-acetamide (D.1.11), 2-[(3-ethynyl-8-methyl-6-quinolyl)oxy]-*N*-propyl-butanamide (D.1.12), 2-[(3-ethynyl-8-methyl-6-quinolyl)oxy]-2-methoxy-*N*-propyl-acetamide (D.1.13), 2-[(3-ethynyl-8-methyl-6-quinolyl)-oxy]-2-methylsulfanyl-*N*-propyl-acetamide (D.1.14), 2-[(3-ethynyl-8-methyl-6-quinolyl)oxy]-*N*-(2-fluoroethyl)-2-methylsulfanyl-acetamide (D.1.15), 4-(2-bromo-4-fluoro-phenyl)-N-(2-chloro-6-fluoro-phenyl)-2,5-dimethylpyrazol-3-amine (D.1.16), 4-(2-bromo-4-fluorophenyl)-*N*-(2-fluoro-6-nitrophenyl)-1,3-dimethyl-1H-pyrazol-5-amine, 4-(2-chloro-4,6-difluorophenyl)-*N*-(2-fluoro-6-nitrophenyl)-1,3-dimethyl-1H-pyrazol-5-amine, 4-(2-chloro-4-fluorophenyl)-*N*-(2-fluoro-6-nitrophenyl)-3-ethyl-1-methyl-1*H*-pyrazol-5-amine, 4-(2-chloro-4-fluorophenyl)-*N*-(2-fluoro-4-methyl-6-nitrophenyl)-1,3-dimethyl-*1*H-pyrazol-5-amine, 4-(2-chloro-4-fluorophenyl)-*N*-(2-fluoro-6-nitrophenyl)-1,3-dimethyl-1*H*-pyrazol-5-amine, 4-(2,4-difluorophenyl)-*N*-(2-fluoro-6-nitrophenyl)-1,3-dimethyl-1*H*-pyrazol-5-amine;
- tubulin polymerization (B2): diethofencarb (D.2.1),
- tubulin polymersation (B3): ethaboxam (D.2.2), zoxamide (D.2.5);
- cell division (B4): pencycuron (D.2.3);
- spectrin-like proteins (B5): fluopicolide (D.2.4), fluopimomide (D.2.9);
- actin/myosin/fimbrin function (B6): metrafenone (D.2.6), phenamacril (D.2.8), pyriofenone (D.2.7);

E) Amino acids and protein synthesis (D)

- methionine synthesis (D1): cyprodinil (E.1.1), mepanipyrim (E.1.2), pyrimethanil (E.1.3);
- ribosome, termination step (D2): blasticidin-S (E.2.1);
- ribosome initiation step (D3): kasugamycin (E.2.2), kasugamycin hydrochloride-hydrate (E.2.3);
- ribosome initiation step (D4): streptomycin (E.2.5);
- ribosome elongation step (D5): mildiomycin (E.2.4), oxytetracyclin (E.2.6);

F) Signal transduction

- mechanism unknown (E1): proquinazid (F.2.2), quinoxyfen (F.2.1);
- MAP/histidine kinase os-2 (E2): fludioxonil (F.1.5);
- MAP/histidine kinase os-1 (E3): iprodione (F.1.2), procymidone (F.1.3), vinclozolin (F.1.4);

G) Lipid synthesis or transport / membrane (F)

- methyl transferase (F2): edifenphos (G.1.1), iprobenfos (G.1.2), isoprothiolane (G.1.4); pyrazophos (G.1.3);
- cell peroxidation (F3): biphenyl (G.2.5), chloroneb (G.2.6), dicloran (G.2.1), etridiazole (G.2.7), quintozene (G.2.2), tecnazene (G.2.3), tolclofos-methyl (G.2.4);
- cell membrane permeability (F4): propamocarb (G.4.1);
- ergosterol binding (F8): natamycin;
- oxysterol binding protein (F9): fluoxapiprolin (G.5.3), oxathiapiprolin (G.5.1), 4-[1-[2-[3-(difluoromethyl)-5-methyl-pyrazol-1-yl]acetyl]-4-piperidyl]-*N*-tetralin-1-yl-pyridine-2-carboxamide (G.5.4), 4-[1-[2-[3,5-bis(difluoromethyl)-pyrazol-1-yl]acetyl]-4-piperidyl]-*N*-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-*N*-tetralin-1-yl-pyridine-2-carboxamide (G.5.6), 4-[1-[2-[5-cyclopropyl-3-(difluoromethyl)pyrazol-1-yl]acetyl]-4-piperidyl]-*N*-tetralin-1-yl-pyridine-2-carboxamide (G.5.7), 4-[1-[2-[5-methyl-3-(trifluoromethyl)pyrazol-1-yl]acetyl]-4-piperidyl]-*N*-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-*N*-tetralin-1-yl-pyridine-2-carboxamide (G.5.9), 4-[1-[2-[3,5-bis(trifluoromethyl)pyrazol-1-yl]acetyl]-4-piperidyl]-*N*-tetralin-1-yl-pyridine-2-carboxamide (G.5.10), (4-[1-[2-[5-cyclopropyl-3-(trifluoromethyl)pyrazol-1-yl]acetyl]-4-piperidyl]-*N*-tetralin-1-yl-pyridine-2-carboxamide (G.5.11), (1-(4-(4-(5-(2,6-dichlorophenyl)-4,5-dihydroisoxazol-3-yl)thiazol-2-yl)piperidin-1-yl)-2-((3-trifluoromethyl)pyrazin-2-yl)oxy)ethan-1-one, 1-(4-(4-(5-(2-chloro-6-fluorophenyl)-4,5-dihydroisoxazol-3-yl)thiazol-2-yl)piperidin-1-yl)-2-((3-trifluoromethyl)pyridin-2-yl)oxy)ethan-1-one, *tert*-butyl 4-(4-(5-(2-bromo-6-fluorophenyl)-4,5-dihydroisoxazol-3-yl)thiazol-2-yl)piperidin-1-carboxylate, ((2-(3-(2-(1-(2-(3,5-bis(trifluoromethyl)-1*H*-pyrazol-1-yl)acetyl)piperidin-4-yl)thiazol-4-yl)-4,5-dihydroisoxazo-5-yl)-3-fluorophenyl)imino)dimethyl-$\lambda^6$-sulfanone, ((2-(3-(2-(1-(2-(3,5-bis(difluoromethyl)-1*H*-pyrazol-1-yl)acetyl)piperidin-4-yl)thiazol-4-yl)-4,5-di-hydroisoxazo-5-yl)-3-fluorophenyl)imino)dimethyl-$\lambda^6$-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-chorophenyl)imino)(isopropyl)(methyl)-$\lambda^6$-sulfanone, ((2-(3-(2-(1-(2-(3,5-bis(trifluoromethyl)-1*H*-pyrazol-1-yl)acetyl)piperidin-4-yl)thiazol-4-yl)-4,5-di-hydroisoxazo-5-yl)-3-fluorophenyl)imino)(isopropyl)(methyl)-$\lambda^6$-sulfanone, ((2-(3-(2-(1-(2-(3,5-bis(difluoromethyl)-1*H*-pyrazol-1-yl)acetyl)piperidin-4-yl)thiazol-4-yl)-4,5-dihydroisoxazo-5-yl)-3-(trifluoromethyl)phenyl)imino)dimethyl-$\lambda^6$-sulfanone, ((3-fluoro-2-(3-(2-(1-(2-(5-methyl-3-(trifluoromethyl)-1*H*-pyrazol-1-yl)acetyl)piperidin-4-yl)thiazol-4-yl)-4,5-dihydroisoxazo-5-yl)-phenyl)imino)dimethyl-$\lambda^6$-sulfanone;

H) Multi Site Activity (M)

- inorganics (M01): Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
- dithiocarbamates and relatives: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9), zinc thiazole (H.2.10);
- organochlorine compounds (M04, M05, M06, M08): anilazine (H.3.1), captafol (H.3.3), captan (H.3.4), chlorothalonil (H.3.2), dichlofluanid (H.3.6), dichlorophen (H.3.7), folpet (H.3.5), hexachlorobenzene (H.3.8), pentachlorphenole (H.3.9) and its salts, phthalide (H.3.10), tolylfluanid (H.3.11);
- guanidines, quinones, quinoxalines, maleimides, thiocarbamates (M07, M09, M10, M11, M12): chinomethionat (H.4.13), dithianon (H.4.9), fluoroimide (H.4.11), guanidine (H.4.1), guazatine (H.4.4), guazatine-acetate (H.4.5), iminoctadine (H.4.6), iminoctadine-triacetate (H.4.7), iminoctadine-tris(albesilate) (H.4.8), methasulfocarb (H.4.12), 2,6-dimethyl-1*H*,5*H*-[1,4]dithiino[2,3-c:5,6-c']dipyrrole-1,3,5,7(2*H*,6*H*)-tetraone (H.4.10),

I) Cell wall biosynthesis (H) and melanin synthesis in cell wall (I)

- chitin synthase (H4): polyoxin B (I.1.2);
- cellulose synthase (H5): benthiavalicarb (I.3.5), dimethomorph (I.3.1), flumorph (I.3.2), iprovalicarb (I.3.6), mandipropamid (i.3.3), pyrimorph (I.3.4), valifenalate (i.3.7);
- reductase in melanin synthesis (MBI-R; i1) pyroquilon (I.2.1), tricyclazole (i.2.2);
- dehydratase in melanin synthesis (MBI-D, I2); carpropamid (I.2.3), dicyclomet (I.2.4), fenoxanil (I.2.5);
- polyketide synthase in melanin synthesis (MBI-P, I3): tolprocarb (i.2.6);

J) Plant defence induction (P1 to P8)

- salicylate-related (P01-P03, P08): acibenzolar-S-methyl (J.1.1), probenazole (J.1.2), isotianil (J.1.3), tiadinil (J.1.4), dichlobentiazox (J.1.13); phosphonates (P07): fosetyl (J.1.6), fosetyl-aluminum (J.1.7), phosphorous acid and its salts (J.1.8), calcium phosphonate (J.1.11), potassium phosphonate (J.1.12); others: potassium or sodium bicarbonate (J.1.9), 4-cyclopropyl-*N*-(2,4-di¬methoxy¬phenyl)thiadiazole-5-carboxamide (J.1.10);

K) Unknown mode of action (U)

- aminopyrifen (K.1.54), benziothiazolinone (K.1.48), bromothalonil (K.1.49), bronopol (K.1.1), cyflufenamid (K.1.3), cymoxanil (K.1.4), dazomet (K.1.5), debacarb (K.1.6), diclomezine (K.1.8), difenzoquat (K.1.9),

difenzoquat-methylsulfate (K.1.10), diphenylamin (K.1.11), dodine, dodine free base (K.1.18), fenitropan (K.1.12), flufenoxadiazam (K.1.58) [MoA proposed: class II histone deacetylase inhibitor], flumetover (K.1.14), flumetyl-sulforim (K.1.60), flusulfamide (K.1.15), flutianil (K.1.16), harpin (K.1.17), nitrapyrin (K.1.19), nitrothal-isopropyl (K.1.20), oxine-copper (K.1.22), picarbutrazox (K.1.41), pyrisoxazole (K.1.37), seboctylamine (K.1.61), tebu-floquin (K.1.24), tecloftalam (K.1.25), triazoxide (K.1.26), validamycin (K.1.2); *N*'-(4-(4-chloro-3-trifluoromethyl-phenoxy)-2,5-dimethyl-phenyl)-*N*-ethyl-*N*-methyl formamidine (K.1.27), *N*'-(4-(4-fluoro-3-trifluoromethyl-phenoxy)-2,5-dimethyl-phenyl)-*N*-ethyl-*N*-methyl formamidine (K.1.28), *N*'-[4-[[3-[(4-chlorophenyl)methyl]-1,2,4-thiadiazol-5-yl]oxy]-2,5-dimethyl-phenyl]-*N*-ethyl-*N*-methyl-formamidine (K.1.29), *N*'-(5-bromo-6-indan-2-yloxy-2-methyl-3-pyridyl)-*N*-ethyl-*N*-methyl-formamidine (K.1.30), *N*'-[5-bromo-6-[1-(3,5-difluorophenyl)ethoxy]-2-methyl-3-pyridyl]-*N*-ethyl-*N*-methyl-formamidine (K.1.31), *N*'-[5-bromo-6-(4-isopropylcyclohexoxy)-2-methyl-3-pyridyl]-N-ethyl-N-methyl-formamidine (K.1.32), N'-[5-bromo-2-methyl-6-(1-phenylethoxy)-3-pyridyl]-*N*-ethyl-*N*-methyl-formamidine (K.1.33), *N*'-(2-methyl-5-trifluoromethyl-4-(3-trimethylsilanyl-propoxy)-phenyl)-N-ethyl-N-methyl formamidine (K.1.34), *N*'-(5-difluoromethyl-2-methyl-4-(3-trimethylsilanyl-propoxy)-phenyl)-N-ethyl-N-methyl formamidine (K.1.35), 2-(4-chloro-phenyl)-*N*-[4-(3,4-dimethoxy-phenyl)-isoxazol-5-yl]-2-prop-2-ynyloxy-acetamide (K.1.36), 3-[5-(4-methylphenyl)-2,3-dimethyl-isoxazolidin-3-yl]-pyridine (K.1.38), 5-chloro-1-(4,6-dimethoxy-pyrimidin-2-yl)-2-methyl-1*H*-benzoimidazole (K.1.39), ethyl (*Z*)-3-amino-2-cyano-3-phenyl-prop-2-enoate (K.1.40), pentyl *N*-[6-[[(Z)-[(1-methyltetrazol-5-yl)-phenyl-methylene]amino]oxymethyl]-2-pyridyl]carbamate (K.1.42), but-3-ynyl *N*-[6-[[(Z)-[(1-methyltetrazol-5-yl)-phenyl-methylene]amino]oxymethyl]-2-pyridyl]carbamate (K.1.43), 2-(6-benzyl-2-pyridyl)quinazoline (K.1.50), 2-[6-(3-fluoro-4-methoxy-phenyl)-5-methyl-2-pyridyl]-quinazoline (K.1.51), *N*'-(2,5-dimethyl-4-phenoxy-phenyl)-N-ethyl-N-methyl-formamidine (K.1.53), *N*'-[5-bromo-2-methyl-6-(1-methyl-2-propoxy-ethoxy)-3-pyridyl]-*N*-ethyl-*N*-methyl-formamidine (K.1.56), *N*'-[4-(4,5-dichlorothi-azol-2-yl)oxy-2,5-dimethyl-phenyl]-*N*-ethyl-*N*-methyl-formamidine (K.1.57), *N*-methyl-4-[5-(trifluoromethyl)-1,2,4-oxadiazol-3-yl]benzenecarbothioamide (K.1.59), *N*-methoxy-*N*-[[4-[5-(trifluoromethyl)-1,2,4-oxadiazol-3-yl]phenyl]methyl]cyclopropanecarboxamide (K.1.61), *N*-((4-[5-(trifluoromethyl)-1,2,4-oxadiazol-3-yl]phenyl)-methyl)propanamide (K.1.62), 3,3,3-trifluoro-*N*-[[3-fluoro-4-[5-(trifluoromethyl)-1,2,4-oxadiazol-3-yl]phenyl]methyl]propanamide (K.1.63), 3,3,3-trifluoro-*N*-[[2-fluoro-4-[5-(trifluoromethyl)-1,2,4-oxadiazol-3-yl]phenyl]methyl]-propanamide (K.1.64), *N*-[2,3-difluoro-4-[5-(trifluoromethyl)-1,2,4-oxadiazol-3-yl]benzyl]butanamide (K.1.65), *N*-[[2,3-difluoro-4-[5-(trifluoromethyl)-1,2,4-oxadiazol-3-yl]phenyl]methyl]-3,3,3-trifluoro-propanamide (K.1.66), 1-methoxy-1-methyl-3-[[4-[5-(trifluoromethyl)-1,2,4-oxadiazol-3-yl]phenyl]methyl]urea (K.1.67), 1,1-diethyl-3-[[4-[5-[trifluoromethyl]-1,2,4-oxadiazol-3-yl]phenyl]methyl]urea (K.1.68), *N*,2-dimethoxy-*N*-[[4-[5-(trifluoromethyl)-1,2,4-oxadiazol-3-yl]phenyl]methyl]propanamide (K.1.69), *N*-ethyl-2-methyl-N-[[4-[5-(trifluoromethyl)-1,2,4-oxadiazol-3-yl]phenyl]methyl]propanamide (K.1.70), 1-methoxy-3-methyl-1-[[4-[5-(trifluoromethyl)-1,2,4-oxadiazol-3-yl]phenyl]methyl]urea (K.1.71), 1-[[4-[5-(trifluoromethyl)-1,2,4-oxadiazol-3-yl]phenyl]methyl]pyrrolidin-2-one (K.1.72), 1-[[4-[5-(trifluoromethyl)-1,2,4-oxadiazol-3-yl]phenyl]methyl]piperidin-2-one (K.1.73), 4-[[4-[5-(trifluoromethyl)-1,2,4-oxadiazol-3-yl]phenyl] methyl]morpholin-3-one (K.1.74), 4,4-dimethyl-2-[[4-[5-(trifluoromethyl)-1,2,4-oxadiazol-3-yl]phenyl] methyl]isoxazolidin-3-one (K.1.75), 2-[[4-[5-(trifluoromethyl)-1,2,4-oxadiazol-3-yl]phenyl]methyl]isoxazolidin-3-one (K.1.76), 5,5-dimethyl-2-[[4-[5-(trifluoromethyl)-1,2,4-oxadiazol-3-yl]phenyl]methyl]isoxazolidin-3-one (K.1.77), 3,3-dimethyl-1-[[4-[5-(trifluoromethyl)-1,2,4-oxadiazol-3-yl]phenyl]methyl]piperidin-2-one (K.1.78), 2-[[4-[5-(trifluoromethyl)-1,2,4-oxadiazol-3-yl]phenyl]methyl]oxazinan-3-one (K.1.79), 1-[[3-fluoro-4-[5-(trifluoromethyl)-1,2,4-oxadiazol-3-yl]phenyl]methyl]azepan-2-one (K.1.80), 4,4-dimethyl-1-[[4-[5-(trifluoromethyl)-1,2,4-oxadiazol-3-yl]phenyl]methyl]pyrrolidin-2-one (K.1.81), 5-methyl-1-[[4-[5-(trifluoromethyl)-1,2,4-oxadiazol-3-yl]phenyl]methyl]pyrrolidin-2-one (K.1.82), ethyl 1-[[4-[5-(trifluoromethyl)-1,2,4-oxadiazol-3-yl]phenyl]methyl]pyrazole-4-carboxylate (K. 1.83), *N*-methyl-1-[[4-[5-(trifluoromethyl)-1,2,4-oxadiazol-3-yl]phenyl]methyl]pyrazole-4-carboxamide (K.1.84), *N,N*-dimethyl-1-[4-[5-(trifluoromethyl)-1,2,4-oxadiazol-3-yl]benzyl]-1*H*-1,2,4-triazol-3-amine (K.1.85), *N*-methoxy-*N*-methyl-1-[[4-[5-(trifluoromethyl)-1,2,4-oxadiazol-3-yl]phenyl]methyl]pyrazole-4-carboxamide (K.1.86), propyl-1-[[4-[5-(trifluoromethyl)-1,2,4-oxadiazol-3-yl]phenyl]methyl]pyrazole-4-carboxamide (K.1.87), *N*-methoxy-1-[[4-[5-(trifluoromethyl)-1,2,4-oxadiazol-3-yl]phenyl]methyl]pyrazole-4-carboxamide (K.1.88), *N*-allyl-*N*-[[4-[5-(trifluoromethyl)-1,2,4-oxadiazol-3-yl]phenyl]methyl]propanamide (K.1.89), 3-ethyl-1-methoxy-1-[[4-[5-(trifluoromethyl)-1,2,4-oxadiazol-3-yl]phenyl]methyl]-urea (K.1.90), 1,3-dimethoxy-1-[[4-[5-(trifluoromethyl)-1,2,4-oxadiazol-3-yl]phenyl]methyl]urea (K.1.91), *N*-allyl-*N*-[[4-[5-(trifluoromethyl)-1,2,4-oxadiazol-3-yl]phenyl]methyl]acetamide (K.1.92), *N*-[4-[5-(trifluoromethyl)-1,2,4-oxadiazol-3-yl]benzyl]cyclopropanecarboxamide (K.1.93), 1-methyl-3-[[4-[5-(trifluoromethyl)-1,2,4-oxadiazol-3-yl]phenyl]methyl]urea (K.1.94), *N*'-[2-chloro-4-(2-fluorophenoxy)-5-methyl-phenyl]-*N*-ethyl-*N*-methylformamidine (K.1.95), *N*'-[2-chloro-4-[(4-methoxy-phenyl)methyl]-5-methyl-phenyl]-*N*-ethyl-*N*-methyl-formamidine (K.1.96), *N*'-[2-chloro-4-[(4-cyano-phenyl)methyl]-5-methyl-phenyl]-*N*-ethyl-*N*-methyl-formamidine (K.1.97), *N*'-[2,5-dimethyl-4-(o-tolylmethyl)phenyl]-N-ethyl-N-methyl-formamidine (K.1.98), 6-chloro-3-(3-cyclopropyl-2-fluoro-phenoxy)-*N*-[2-(2,4-dimethylphenyl)-2,2-difluoro-ethyl]-5-methyl-pyridazine-4-carboxamide (K.1.99), 3-(3-bromo-2-fluoro-phenoxy)-6-chloro-*N*-[2-(2-chloro-4-methyl-phenyl)-2,2-difluoro-ethyl]-5-methylpyridazine-4-carboxamide (K.1.100), 6-chloro-*N*-[2-(2-chloro-4-methyl-phenyl)-2,2-difluoro-ethyl]-3-(3-cyclopropyl-2-fluoro-phenoxy)-5-methyl-pyridazine-4-carboxamide (K.1.101), 6-chloro-3-(3-cyclopropyl-2-fluoro-phenoxy)-*N*-[2-(3,4-dimethylphenyl)-2,2-difluoro-ethyl]-5-methyl-pyridazine-4-carboxamide (K.1.102), 6-chloro-3-(3-chloro-2-fluoro-phenoxy)-*N*-[2-(2,4-dimethylphenyl)-2,2-difluoro-ethyl]-5-methyl-pyridazine-4-carboxamide (K.1.103), *N*-[2-(2-bromo-4-methyl-phenyl)-2,2-difluoro-ethyl]-6-chloro-3-(3-cyclopropyl-2-fluoro-phenoxy)-5-methyl-pyridazine-4-carboxamide (K.1.104), 2-[cyano-(2,6-difluoro-4-pyridyl)amino]-5-methyl-*N*-spiro[3.4]octan-3-yl-thiazole-4-carboxamide, 2-[acetyl-(2,6-difluoro-4-pyridyl)amino]-*N*-(2,2-dimethylcyclobutyl)-5-methyl-thiazole-4-carboxamide, 2-[(2,6-difluoro-4-pyridyl)-(2-methoxyacetyl)amino]-*N*-(2,2-dimethylcyclobutyl)-5-methyl-thiazole-4-carboxamide, 2-[cyano-(2,6-difluoro-4-pyridyl)amino]-*N*-(2,2-dimethylcyclobutyl)-5-methyl-thiazole-4-carboxamide, *N*-[1-[[3-[2-(5-fluoro-2-methoxy-phenyl)-2-hydroxy-ethyl]-5-[(*Z*)-*N*-isopropoxy-*C*-methyl-carbon-imidoyl]-2,6-dioxo-pyrimidin-1-yl]methyl]-2-methyl-propyl]-2-methyl-propanamide, *N*-[1-[[3-[2-(5-fluoro-2-methoxyphenyl)-2-hydroxy-ethyl]-5-[(Z)-*N*-isopropoxy-C-methyl-carbonimidoyl]-2,6-dioxo-pyrimidin-1-yl]methyl]-2-methylpropyl]-2,2-dimethyl-propanamide, *N*-[2-[3-[2-(5-fluoro-2-methoxy-phenyl)-2-hydroxy-ethyl]-5-[(Z)-N-isopropoxy-C-methyl-carbonimidoyl]-2,6-dioxo-pyrimidin-1-yl]-1-methyl-ethyl]-2-methyl-propanamide, *N*-[2-[3-[2-hydroxy-2-(2-methoxyphenyl)ethyl]-5-[(*Z*)-*N*-isopropoxy-*C*-methyl-carbonimidoyl]-2,6-dioxo-pyrimidin-1-yl]-1-methyl-ethyl]-2-methyl-propanamide, N-[2-[3-[2-(2-cyanoethoxy)-2-(5-fluoro-2-methoxy-phenyl)ethyl]-5-[(Z)-*N*-isopropoxy-C-methyl-carbonimidoyl]-2,6-dioxo-pyrimidin-1-yl]-1-methyl-ethyl]-2-methyl-propanamide, *rac*-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*S*)-3-[3-(3-chloro-2-fluoro-phenoxy)-6-methyl-pyridazin-4-yl]-5-[(2-chloro-4-methyl-phenyl)methyl]-5,6-dihydro-4*H*-1,2,4-oxadiazine, (5*R*)-3-[3-(3-chloro-2-fluoro-phenoxy)-6-methyl-pyridazin-4-yl]-5-[(2-chloro-4-methylphenyl)methyl]-5,6-dihydro-4*H*-1,2,4-oxadiazine, 2-(4-fluorophenoxy)-1-[4-[5-(trifluoromethyl)-1,2,4-oxadiazol-3-yl]phenyl] ethanone, 2-[(6-fluoro-3-pyridyl)oxy]-1-[4-[5-(trifluoromethyl)-1,2,4-oxadiazol-3-yl]phenyl]ethanone, 2-(4-fluoroanilino)-1-[4-[5-(trifluoromethyl)-1,2,4-oxadiazol-3-yl]phenyl]ethenone, ethyl 1-[[4-[[2-(trifluoromethyl)-1,3-dioxolan-2-yl]methoxy]phenyl]methyl]-1*H*-pyrazole-4-carboxylate, ethyl 1-[[4-[[(1Z)-2-ethoxy-3,3,3-trifluoro-1-propen-1-yl]oxy]phenyl]methyl]-1*H*-pyrazole-4-carboxylate;

L) Biopesticides

L1) Microbial pesticides with fungicidal, bactericidal, viricidal and/or plant defense activator activity: *Ampelomyces quisqualis, Aspergillus flavus, Aureobasidium pullulans, Bacillus altitudinis, B. amyloliquefaciens, B. amyloliquefaciens* ssp. *plantarum* (also referred to as *B. velezensis*), *B. megaterium, B. moja-vensis, B. mycoides, B. pumilus, B. simplex, B. solisalsi, B. subtilis, B. subfilis* var. *amyloliquefaciens, B. velezensis, Candida oleophila, C. saitoana, Clavibacter michiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum*), *Gliocladium roseum, Lysobacter antibioticus, L. enzymogenes, Metschnikowia fructicola, Microdochium dimerum, Microsphaeropsis ochracea, Muscodor albus, Paenibacillus alvei, Paenibacillus epiphyticus, P. polymyxa, Pantoea vagans, Penicillium bilaiae, Phlebiopsis gigantea, Pseudomonas* sp., *Pseudomonas chloraphis, Pseudozyma flocculosa, Pichia anomala, Pythium oligandrum, Sphaerodes mycoparasitica, Streptomyces griseoviridis, S. lydicus, S. violaceusniger, Talaromyces flavus, Trichoderma asperelloides, T. asperellum, T. atroviride, T. fertile, T. gamsii, T. harmatum, T. harzianum, T. polysporum, T. stromatícum, T. virens, T. viride, Typhula phacorrhiza, Ulocladium oudemansii, Verticillium dahliae,* zucchini yellow mosaic virus (avirulent strain);

L2) Biochemical pesticides with fungicidal, bactericidal, viricidal and/or plant defense activator activity: harpin protein, plant oils (BM3): tea tree oil, orange oil (L.2.1), eugenol, limonene (L.2.2), geraniol (L.2.3), thymol (L.2.4); Reynoutria sachalinensis extract, aureobasidin (in particular aureobasidin A (L.2.5)), ambruticin (L.2.6), bafilomycin (L.2.7) (in particular bafilomycin A1, B1 and C1), chlorflavonin (L.2.8), cinnamaldehyde (L.2.9), natamycin (L.2.10; F8);

L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *fenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Helicov-*

*erpa zea* nucleopolyhedrovirus (HzNPV), *Helicoverpa zea* single capsid nucleopolyhedrovirus (HzSNPV), *Heterorhabditis bacteriophora, Isaria fumosorosea, Lecanicillium longisporum, L. muscarium, Metarhizium anisopliae, M. anisopliae* var. *anisopliae, M. anisopliae* var. *acridum, Nomuraea rileyi, Paecilomyces fumosoroseus, P. lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus;*

L4) Biochemical pesticides with insecticidal, acaricidal, molluscidal, pheromone and/or nematicidal activity: L-carvone, citral, (*E,Z*)-7,9-dodecadien-1-yl acetate, ethyl formate, (*E,Z*)-2,4-ethyl decadienoate (pear ester), (*Z,Z,E*)-7,11,13-hexadecatrienal, heptyl butyrate, isopropyl myristate, lavanulyl senecioate, cis-jasmone, 2-methyl-1-butanol, methyl eugenol, methyl jasmonate, (*E,Z*)-2,13-octadecadien-1-ol, (*E,Z*)-2,13-octadecadien-1-ol acetate, (*E,Z*)-3,13-octadecadien-1-ol, (*R*)-1-octen-3-ol, pentatermanone, (*E,Z,Z*)-3,8,11-tetradecatrienyl acetate, (*Z,E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract;

L5) Microbial pesticides with plant stress reducing, plant growth regulator, plant growth promoting and/or yield enhancing activity: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. I.* bv. *trifolii, R. I.* bv. *viciae, R. tropici, Sinorhizobium meliloti*;

O) Insecticides from classes O.1 to O.29, and O.UN (IRAC classes 1 to 37, and UN (incl. UNA to UNV)):

O.1 Acetylcholine esterase (AChE) inhibitors: carbamates (1A): aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb; organophosphates (1B): acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;

O.2 GABA-gated chloride channel blockers: (2A): chlordane, endosulfan; (2B): ethiprole, fipronil, flufiprole, nicofluprole, pyrafluprole, pyriprole;

O.3 Sodium channel modulators: pyrethroids (3A): acrinathrin, allethrin, *d*-cis-trans allethrin, d-*trans* allethrin, bifenthrin, *kappa*-bifenthrin, bioallethrin, bioallethrin *S*-cylclopentenyl, bioresmethrin, cycloprothrin, cyfluthrin, *beta*-cyfluthrin, cyhalothrin, *lambda*-cyhalothrin, *gamma*-cyhalothrin, cypermethrin, *alpha*-cypermethrin, *beta*-cypermethrin, *theta*-cypermethrin, zeta-cypermethrin, cyphenothrin, deltamethrin, empenthrin, esfenvalerate, etofenprox, fenpropathrin, fenvalerate, flucythrinate, flumethrin, fau-fluvalinate, halfenprox, heptafluthrin, imiprothrin, meperfluthrin, metofluthrin, momfluorothrin, *epsilon*-momfluorothrin, permethrin, phenothrin, prallethrin, profluthrin, pyrethrins (pyrethrum), resmethrin, silafluofen, tefluthrin, kappa-tefluthrin, tetramethylfluthrin, tetramethrin, tralomethrin, transfluthrin; (3B): DDT, methoxychlor;

O.4 Nicotinic acetylcholine receptor (nAChR) competitive modulators: neonicotinoids (4A): acetamiprid, clothianidin, cycloxaprid, dinotefuran, imidacloprid, nitenpyram, thiacloprid, thiamethoxam; 4,5-dihydro-*N*-nitro-1-(2-oxiranyl-methyl)-1*H*-imidazol-2-amine, (2*E*)-1-[(6-chloropyridin-3-yl)methyl]-*N*'-nitro-2-pentylidenehydrazinecarboximidamide; 1-[(6-chloropyridin-3-yl)methyl]-7-methyl-8-nitro-5-propoxy-1,2,3,5,6,7-hexahydroimidazo[1,2-a]pyridine; (4B) nicotine; sufoximines (4C): sulfoxaflor; butenolindes (4D): flupyradifurone; mesionics (4E): dicloromezotiaz, fenmezoditiaz, triflumezopyrim, pyridylidenes (4F): flupyrimin, 1-[(2-chlorothiazol-5-yl)methyl]-3-(3,5-dimethyl-isoxazol-4-yl)pyrido[1,2-a]pyrimidine-2,4-dione;

O.5 nAChR allosteric modulators: spinetoram, spinosad;

O.6 Glutamate gated chloride channel allosteric modulators: abamectin, emamectin benzoate, ivermectin, lepimectin, milbemectin;

O.7 Juvenile hormone receptor modulators: hormone analogs (7A): hydroprene, kinoprene, methoprene; fenoxycarb (7B), pyriproxyfen (7C);

O.8 miscellaneous non-specific (multi-site) inhibitors: methyl bromide and other alkyl halides; chloropicrin,

cryolite, sulfuryl fluoride, borax, tartar emetic;

O.9 Chordotonal organ TRPV channel modulators: afidopyropen, pymetrozine, pyrifluquinazon;

O.10 Mite growth inhibitors: clofentezine, diflovidazin, hexythiazox; etoxazole;

O.11 Microbial disruptors of midgut membranes: *Bacillus thuringiensis* subsp. *israelensis, B. t.* subsp. *aizawai, B. t.* subsp. *kurstaki, B. t.* subsp. *tenebrionis, B. sphaericus; B.t.* crop proteins: Cry1Ab, Cry1Ac, Cry1Fa, Cry2Ab, mCry3A, Cry3Ab, Cry3Bb, Cry34/35Ab1;

0.12 Inhibitors of mitochondrial ATP synthase: diafenthiuron; azocyclotin, cyhexatin, fenbutatin oxide, propargite, tetradifon;

0.13 Uncouplers of oxidative phosphorylation via disruption of the proton gradient: chlorfenapyr, DNOC, sulfluramid;

0.14 nAChR channel blockers: bensultap, cartap hydrochloride, thiocyclam, thiosultap-sodium;

0.15 Inhibitors of the chitin biosynthesis CHS1: bistrifluron, chlorfluazuron, diflubenzuron, flucycloxuron, flufenoxuron, hexaflumuron, lufenuron, novaluron, noviflumuron, teflubenzuron, triflumuron;

0.16 Inhibitors of the chitin biosynthesis type 1: buprofezin;

0.17 Moulting disruptors: cyromazine;

0.18 Ecdyson receptor agonists: methoxyfenozide, tebufenozide, halofenozide, fufenozide, chromafenozide;

0.19 Octopamin receptor agonists: amitraz;

O.20 Mitochondrial complex III electron transport inhibitors - Qo site: hydramethylnon, acequinocyl, fluacrypyrim, flupyroxystrobin, bifenazate;

0.21 Mitochondrial complex I electron transport inhibitors: fenazaquin, fenpyroximate, pyrimidifen, pyridaben, tebufenpyrad, tolfenpyrad; rotenone;

O.22 Voltage-dependent sodium channel blockers: indoxacarb, metaflumizone, *N*-(3-chloro-2-methylphenyl)-2-[(4-chlorophenyl)-[4-[methyl(methylsulfonyl)amino]phenyl]methylene]-hydrazinecarboxamide, *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide, 2-[2-(4-cyanophenyl)-1-[3-(trifluoromethyl)phenyl]ethylidene]-*N*-[4-(difluoromethoxy)phenyl]-hydrazinecarboxamide;

O.23 Inhibitors of the of acetyl CoA carboxylase: spidoxamat, spirodiclofen, spiromesifen, spirotetramat, spiropidion, spirobudifen, 11-(4-chloro-2,6-dimethylphenyl)-12-hydroxy-1,4-dioxa-9-azadispiro[4.2.4.2]tetradec-11-en-10-one;

O.24 Mitochondrial complex IV electron transport inhibitors: aluminium phosphide, calcium phosphide, phosphine, zinc phosphide, cyanide;

O.25 Mitochondrial complex II electron transport inhibitors: cyclobutrifluram, cyenopyrafen, cyflumetofen, cyetpyrafen, pyflubumide;

O.28 Ryanodine receptor-modulators: chlorantraniliprole, cyantraniliprole, cyclaniliprole, cyhalodiamide, flubendiamide, pixoaniliprole, fluchlodiniliprole, tetrachlorantraniliprole, tetraniliprole, tiorantraniliprole, (*R*)-3-chloro-$N^1$-{2-methyl-4-[1,2,2,2-tetrafluoro-1-(trifluoromethyl)ethyl]phenyl}-$N^2$-(1-methyl-2-methylsulfonylethyl)phthalamide, (*S*)-3-chloro-$N^1$-{2-methyl-4-[1,2,2,2-tetrafluoro-1-(trifluoromethyl)ethyl]phenyl}-$N^2$-(1-methyl-2-methylsulfonylethyl)phthalamide, methyl-2-[3,5-dibromo-2-({[3-bromo-1-(3-chloropyridin-2-yl)-1*H*-pyrazol-5-yl]-carbonyl}amino)benzoyl]-1,2-dimethylhydrazinecarboxylate; *N*-[4,6-dichloro-2-[(diethyl-lambda-4-sulfanylidene)-carbamoyl]-phenyl]-2-(3-chloro-2-pyridyl)-5-(trifluoromethyl)pyrazole-3-carboxamide; *N*-[4-chloro-2-[(diethyl-*lambda*-4-sulfanylidene)carbamoyl]-6-methyl-phenyl]-2-(3-chloro-2-pyridyl)-5-(trifluoromethyl)pyrazole-3-carboxamide; N-[2-(5-amino-1,3,4-thiadiazol-2-yl)-4-chloro-6-methylphenyl]-3-bromo-1-(3-chloro-2-pyridinyl)-1*H*-pyrazole-5-carboxamide; 3-chloro-1-(3-chloro-2-pyridinyl)-*N*-[2,4-dichloro-6-[[(1-cyano-1-methylethyl)amino]-carbonyl]phenyl]-1*H*-pyrazole-5-carboxamide; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide;

O.29 Chordotonal organ modulators: flonicamid, flumetnicam;

O.30 GABA-gated chloride channel allosteric modulators: broflanilide, cyproflanilide, fluralaner, fluxametamide, isocycloseram, lotilaner, piperflanilide, sarolaner, tigolaner, umifoxolaner;

O.33 Calcium-activated potassium channel modulators: acynonapyr;

O.34 Mitochondrial complex III electron transport inhibitors - Qi site: flometoquin;

O.35 RNA interference mediated target suppressors: ledprona, vadescana;

O.36: Chordotonal organ modulators: dimpropyridaz;

O.37: Vesicular AchT inhibitors: cybenzoxasuflyl, oxazosulfyl;

O.UN Unknown or uncertain mode of action: afoxolaner, azadirachtin, amidoflumet, bentioflumin, benzoximate, benzpyrimoxan, bromopropylate, bisulfufen, chinomethionat, dicofol, fluazaindolizine, flufenerim,

fluensulfone, fluhexafon, flupentiofenox, galquin, indazapyroxamet, isoflualanam, metaldehyde, metoxadiazone, piperonyl butoxide, pyridalyl, sulfiflumin, tiapyrachlor, tioxazafen, trifluenfuronate, tyclopyrazoflor; 11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-azaspiro[4.5]dec-3-en-2-one, 1-[2-fluoro-4-methyl-5-[(2,2,2-trifluoroethyl)sulfinyl]phenyl]-3-(trifluoromethyl)-1*H*-1,2,4-triazole-5-amine, *N*-[5-[[2-bromo-6-chloro-4-[1,2,2,3,3,3-hexafluoro-1-(trifluoromethyl)-propyl]phenyl]carbamoyl]-2-cyano-phenyl]-4-cyano-2-methyl-benzamide; 4-cyano-*N*-[2-cyano-5-[[2,6-dichloro-4-[1,2,2,3,3,3-hexafluoro-1-(trifluoromethyl)-propyl]phenyl]carbamoyl]phenyl]-2-methyl-benzamide; 4-cyano-*N*-[2-cyano-5-[[2,6-dichloro-4-[1,2,2,2-tetrafluoro-1-(trifluoromethyl)ethyl]phenyl]carbamoyl]¬phenyl]-2-methyl-benzamide; *N*-[5-[[2-bromo-6-chloro-4-[1,2,2,2-tetrafluoro-1-(trifluoromethyl)ethyl]phenyl]carba¬moyl]-2-cyanophenyl]-4-cyano-2-methyl-benzamide; 1-[(6-chloro-3-pyridinyl)methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimid-azo[1,2-a]pyridin-5-ol; 1-[(6-chloro-3-pyridinyl)methyl]-1,2,3,5,6,7-hexahydro-5-methoxy-7-methyl-8-nitro-imid-azo[1,2-a]pyridine; 2-(3-pyridinyl)-*N*-(2-pyrimidinylmethyl)-2H-indazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; *N*-[4-chloro-3-[[(phenylmethyl)amino]carbonyl]phenyl]-1-methyl-3-(1,1,2,2,2-pentafluoroethyl)-4-(trifluoromethyl)-1*H*-pyrazole-5-carboxamide; 2-(3-ethylsulfonyl-2-pyridyl)-3-methyl-6-(trifluoromethyl)imid-azo[4,5-b]pyridine, 2-[3-ethylsulfonyl-5-(trifluoromethyl)-2-pyridyl]-3-methyl-6-(trifluoromethyl)imidazo[4,5-b]pyridine; *N*-[4-chloro-3-(cyclopropylcarbamoyl)phenyl]-2-methyl-5-(1,1,2,2,2-pentafluoroethyl)-4-(trifluoromethyl)-pyrazole-3-carboxamide, *N*-[4-chloro-3-[(1-cyanocyclopropyl)carbamoyl]phenyl]-2-methyl-5-(1,1,2,2,2-pentafluoroethyl)-4-(trifluoromethyl)pyrazole-3-carboxamide; [(2*S*,3*R*,4*R*,5*S*,6*S*)-3,5-dimethoxy-6-methyl-4-propoxy-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,4,5-trimethoxy-6-methyl-tetrahydropyran-2-yl]-*N*-[4-[1-[4-(trifluoromethoxy)phenyl]-1,2,4-triazol-3-yl]phenyl]carbamate; [(2*S*,3*R*,4*R*,5*S*,6*S*)-3,5-dimethoxy-6-methyl-4-propoxy-tetrahydropyran-2-yl]-*N*-[4-[1-[4-(1,1,2,2,2-pentafluoroethoxy)phenyl]-1,2,4-triazol-3-yl]phenyl]carbamate; [(2*S*,3*R*,4*R*,5*S*,6*S*)-3,4,5-tri-methoxy-6-methyl-tetrahydropyran-2-yl]-*N*-[4-[1-[4-(1,1,2,2,2-pentafluoroethoxy)phenyl]-1,2,4-triazol-3-yl]phenyl]-carbamate; (2*Z*)-3-(2-isopropylphenyl)-2-[(*E*)-[4-[1-[4-(trifluoromethoxy)phenyl]-1,2,4-triazol-3-yl]phenyl]-methylenehydrazono]thiazolidin-4-one, (2Z)-3-(2-isopropylphenyl)-2-[(E)-[4-[1-[4-(1,1,2,2,2-pentafluoroethoxy)-phenyl]-1,2,4-triazol-3-yl]phenyl]methylenehydrazono] thiazolidin-4-one, (2*Z*)-3-(2-isopro¬pyl¬phenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(3-ethylsulfonyl-7-iodo-imidazo[1,2-a]pyridin-2-yl)-3-methyl-6-(trifluoromethyl)imidazo[4,5-b]pyridine, 3-ethylsulfonyl-6-iodo-2-[3-methyl-6-(trifluoromethyl)imidazo[4,5-b]pyridin-2-yl]imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo[4,5-b]pyridine, 2-[3-ethylsulfonyl-7-(trifluoromethyl)imidazo[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo [4,5-c]pyridine, 2-(6-bromo-3-ethylsulfonyl-imidazo[1,2-a]pyridin-2-yl)-6-(trifluoromethyl)pyrazolo[4,3-c] pyridine; *N*-[[2-fluoro-4-[(2*S*,3*S*)-2-hydroxy-3-(3,4,5-trichlorophenyl)-3-(trifluoromethyl)pyrrolidin-1-yl]phenyl]methyl]cyclopropanecarboxamide, *N*-[3-chloro-1-(3-pyridyl)pyrazol-4-yl]-2-methylsulfonyl-propanamide, *N*-[4-chloro-3-[(1-cyano-cyclopropyl)carbamoyl]phenyl]-2-methyl-4-methylsulfonyl-5-(1,1,2,2,2-pentafluoroethyl)pyrazole-3-carboxamide, 1,4-dimethyl-2-[2-(pyridin-3-yl)-2*H*-indazol-5-yl]-1,2,4-triazolidine-3,5-dione, *N*-[4-chloro-2-(3-pyridyl)thiazol-5-yl]-*N*-ethyl-3-methylsulfonyl-propanamide, *N*-cyclopropyl-5-[(5*S*)-5-(3,5-dichloro-4-fluoro-phenyl)-5-(trifluoromethyl)-4H-isoxazol-3-yl]isoquinoline-8-carboxamide, 5-[(5*S*)-5-(3,5-dichloro-4-fluoro-phenyl)-5-(trifluoromethyl)-4H-isoxazol-3-yl]-*N*-(pyrimidin-2-ylmethyl)isoquinoline-8-carboxamide, *N*-[1-(2,6-difluorophenyl)pyrazol-3-yl]-2-(trifluoromethyl)benzamide, 5-((1*R*,3*R*)-3-(3,5-bis(trifluoromethyl)phenyl)-2,2-dichlorocyclopropane-1-carboxamido)-2-chloro-*N*-(3-(2,2-difluoroacetamido)-2,4-difluorophenyl)benzamide, 1-[6-(2,2-difluoro-7-methyl-[1,3]di-oxolo[4,5-f]benzimidazol-6-yl)-5-ethylsulfonyl-3-pyridyl]cyclopropanecarbonitrile, 6-(5-cyclopropyl-3-ethylsulfonyl-2-pyridyl)-2,2-difluoro-7-methyl-[1,3]dioxolo[4,5-f]benzimidazole, 3,5-bis(trifluoromethyl)-*N*-[(1*S*)-1-[1-[6-(trifluoromethyl)-4-pyrimidinyl]-1*H*-1,2,4-triazol-5-yl]ethyl]-benzamide, 2-(3-ethylsulfonyl-2-pyridyl)-5-(2,2,3,3,3-penta-fluoropropoxy)pyrazine, 2-[3-ethylsulfonyl-6-(trifluoromethyl)pyrazolo[1,5-a]pyridin-2-yl]-3-methyl-6-(trifluoromethyl)imidazo[4,5-b]pyridine, 9-(methoxymethyl)-5-(3-pyridyl)-2-oxa-5,6,9,14-tetrazatricyclo[8.4.0.0^{3,7}]tetra-deca-1(10),3,6,11,13-pentaen-8-one, 2-[5-[(*E*)-2-chloro-3,3,3-trifluoro-prop-1-enyl]-1-methyl-imidazol-2-yl]-5-cyclopropyl-3-ethylsulfonyl-pyridine, 3Z)-1-[2-fluoro-4-[1-[4-(trifluoromethoxy)phenyl]-1,2,4-triazol-3-yl]phenyl]-3-[3-[5-methyl-2-(2,2,2-trifluoroethoxymethyl)phenyl]-4-oxo-thiazolidin-2-ylidene]urea, 1-[6-(2,2-difluoro-8-oxo-[1,3]dioxolo[4,5-g]chromen-7-yl)-5-ethylsulfonyl-3-pyridyl]cyclopropanecarbonitrile, 2-chloro-*N*-[(1*S*)-2-ethyl-1-methyl-butyl]furan-3-carboxamide, [5-cyclopropyl-2-[3-methyl-6-(trifluoromethyl)imidazo[4,5-b]pyridin-2-yl]-3-pyridyl]-ethyl-hydroxy-oxo-$\lambda^6$-sulfane, 4-[5-(3,5-dichloro-4-fluoro-phenyl)-5-(trifluoromethyl)-4*H*-isoxazol-3-yl]-2-methyl-*N*-[1-(2,2,2-trifluoroethylcarbamoyl)cyclopropyl]benzamide, 3-[3-ethylsulfonyl-7-(trifluoromethyl)imidazo[1,2-a]pyridin-2-yl]-7-(trifluoromethyl)chromen-4-one

in a weight ratio of from 100:1 to 1:100

**2.** The fungicidal mixture comprising as active components

1) at least one active compound I as defined in claim 1, or an N-oxide, or an agriculturally useful salt thereof; and as component
2) at least one active compound II selected from groups A) to O) as defined for component 2) in claim 1, or an N-oxide, or an agriculturally useful salt thereof;
and as component
3) at least one active compound III selected from groups A) to O) as defined for component 2) in claim 1, or an N-oxide, or an agriculturally useful salt thereof;

wherein the at least one active compound III of component 3) is not identical with the at least one active compound II of component 2).

**3.** The mixture according to claim 2, comprising a compound I and a compound II and a further active compound III in a synergistically effective amount.

**4.** The mixture according to any one of claims 2 or 3, comprising a compound I and a compound II in a weight ratio of from 100:1 to 1:100, and a compound I and compound III in a weight ratio of from 100:1 to 1:100.

**5.** The mixture according to any one of claims 1 to 4, wherein

$R^1$ is $C_1$-$C_6$-alkyl;
$R^2$ is H or $C_1$-$C_6$-alkyl;
$R^3$ is H or $C_1$-$C_6$-alkyl;
$R^4$ is H or $C_1$-$C_6$-alkyl;
$R^5$ is $C_1$-$C_6$-alkyl;
$R^4$ and $R^5$ form together with the C atoms to which they are bound a $C_3$-$C_6$-cycloalkyl
$X^1$ is H or halogen,
$X^2$ is halogen.

**6.** The mixture according to any one of claims 1 to 5, wherein

$R^1$ is $CH_3$;
$R^2$ is H, $CH_3$ or $CH_2CH_3$;
$R^3$ is H or $CH_3$;
$R^4$ is H or $CH_3$;
$R^5$ is $CH_3$ or $CH_2CH_3$;
$R^4$ and $R^5$ form together with the C atoms to which they are bound a $C_3$-$C_6$-cycloalkyl,
$X^1$ is H or F,
$X^2$ is H or F.

**7.** An agrochemical composition, comprising a solvent or solid carrier and a composition according to any of claims 1 to 6.

**8.** Use of the mixture as defined in any of the claims 1 to 7 or of the agrochemical composition as defined in claim 7 for controlling phytopathogenic harmful fungi.

**9.** Use according to claim 8, against grey mold und white mold diseases.

**10.** Use according to claim 8, against rice leaf, neck, collar and panicle blast.

**11.** Use according to claim 8, against pomefruit and stonefruit diseases.

**12.** Use according to claim 8, against *Rhizoctonia* diseases (Rhizoctonia solani) in several crops like turf, cereals, as well as potato and leafy vegetables.

**13.** Use according to claim 8, against storage disease complexes in pome and stonefruits.

**14.** Use according to claim 8, against different soil and seedborne pathogen.

**15.** Use according to claim 8, against Altenaria diseases on vegetables such as: *Alternaria* spp. (Alternaria leaf spot) on vegetables, rape (*A. brassicola* or *brassicae*), sugar beets (*A. tenuis*), fruits, rice, soybeans, potatoes (e. g. A. *solani* or A. *alternata),* tomatoes (e. g. A. *solani* or A. *alternata)* and wheat.

Europäisches Patentamt
European Patent Office
Office européen des brevets

# EUROPEAN SEARCH REPORT

Application Number
EP 25 15 4417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 314 583 A1 (NIPPON SODA CO [JP]) 27 April 2011 (2011-04-27)<br>* claims 1-8 *<br>* paragraphs [0144] - [0146]; compounds A-15 *<br>----- | 1-15 | INV.<br>A01N43/72<br>A01P3/00<br>A01N43/54<br>A01N37/50<br>A01N43/40<br>A01N43/36<br>A01N47/38<br>A01N43/10<br>A01N43/653<br>A01N43/82 |
| E | WO 2025/031842 A1 (BASF SE [DE]) 13 February 2025 (2025-02-13)<br>* pages 77-85; examples Ex-1 to EX-81 *<br>* claims 1-15 *<br>* microtest examples 1-18; green house examples 1-5; pages 86-93 *<br>----- | 1,5,6, 8-15 | |
| A | WO 2022/243111 A1 (BASF SE [DE]) 24 November 2022 (2022-11-24)<br>* claims 1-15 *<br>----- | 1-15 | |

TECHNICAL FIELDS SEARCHED (IPC)

A01N
A01P

The present search report has been drawn up for all claims

1

| Place of search | Date of completion of the search | Examiner |
|---|---|---|
| Munich | 3 June 2025 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 4417

This annex lists the patent family members relating to the patent documents cited in the above-mentioned European search report. The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| EP 2314583 A1 | 27-04-2011 | EP 2314583 A1 | 27-04-2011 |
| | | JP 5303561 B2 | 02-10-2013 |
| | | JP 5696177 B2 | 08-04-2015 |
| | | JP 2013209411 A | 10-10-2013 |
| | | JP WO2010018686 A1 | 26-01-2012 |
| | | KR 20110036611 A | 07-04-2011 |
| | | US 2011136782 A1 | 09-06-2011 |
| | | WO 2010018686 A1 | 18-02-2010 |
| WO 2025031842 A1 | 13-02-2025 | NONE | |
| WO 2022243111 A1 | 24-11-2022 | AR 125907 A1 | 23-08-2023 |
| | | AU 2022279357 A1 | 30-11-2023 |
| | | BR 112023024005 A2 | 30-01-2024 |
| | | CA 3218900 A1 | 24-11-2022 |
| | | CL 2023003418 A1 | 26-04-2024 |
| | | CN 117355519 A | 05-01-2024 |
| | | CO 2023015529 A2 | 30-11-2023 |
| | | EP 4341258 A1 | 27-03-2024 |
| | | IL 308529 A | 01-01-2024 |
| | | JP 2024519815 A | 21-05-2024 |
| | | KR 20240008856 A | 19-01-2024 |
| | | US 2024270727 A1 | 15-08-2024 |
| | | WO 2022243111 A1 | 24-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2024071402 W
- WO 2009119089 A1
- WO 2022243111 A
- US 20110136782 A1
- US 2019375728 A
- EP 141317 A
- EP 152031 A
- EP 226917 A
- EP 243970 A
- EP 256503 A
- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 0483193 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 10139271 A
- WO 11028657 A
- WO 12168188 A
- WO 07006670 A
- WO 1177514 A
- WO 13047749 A
- WO 10069882 A
- WO 13047441 A
- WO 0316303 A
- WO 0990181 A
- WO 13007767 A
- WO 13010862 A
- WO 13127704 A
- WO 13024009 A
- WO 1324010 A
- WO 13162072 A
- WO 13092224 A
- WO 11135833 A
- CN 1907024
- CN 1456054
- CN 103387541
- CN 1309897
- WO 1284812 A
- WO 09094442 A
- WO 1460177 A
- WO 13116251 A
- WO 08013622 A
- WO 1565922 A
- WO 9401546 A
- EP 2865265 A
- WO 07129454 A
- WO 12165511 A
- WO 11081174 A
- WO 1347441 A


### Non-patent literature cited in the description


- *J. Med. Chem.*, 1998, vol. 41 (1), 96-101
- *Can. J. Plant Sci.*, 1968, vol. 48 (6), 587-94

- Catalogue of pesticide formulation types and international coding system. Technical Monograph No. 2. CropLife International, 2008
- **MOLLET** ; **GRUBEMANN**. Formulation technology. Wiley VCH, 2001
- New developments in crop protection product formulation. **KNOWLES**. Agrow Reports DS243. T&F Informa, 2005
- Emulsifiers & Detergents, McCutcheon's Directories. McCutcheon's. 2008, vol. 1
- Adjuvants and additives. **KNOWLES**. Agrow Reports DS256. T&F Informa, 2006
- **COLBY, S.R.** Calculating synergistic and antagonistic responses of herbicide combinations. *Weeds*, 1967, vol. 15, 20-22
- **R.S. COLBY**. Calculating synergistic and antagonistic responses of herbicide combinations. *Weeds*, 1967, vol. 15, 20-22